(19) Europäisches Patentamt
European Patent Office
Office européen des brevets

(11) EP 4 654 718 A1

(12) **EUROPEAN PATENT APPLICATION**
published in accordance with Art. 153(4) EPC

(43) Date of publication:
26.11.2025 Bulletin 2025/48

(21) Application number: 24757171.4

(22) Date of filing: 13.02.2024

(51) International Patent Classification (IPC):
H04W 72/21 (2023.01)    H04W 72/23 (2023.01)
H04B 7/06 (2006.01)    H04L 5/00 (2006.01)
H04W 24/10 (2009.01)

(52) Cooperative Patent Classification (CPC):
H04B 7/06; H04L 5/00; H04W 24/10; H04W 72/21;
H04W 72/23

(86) International application number:
PCT/KR2024/001996

(87) International publication number:
WO 2024/172444 (22.08.2024 Gazette 2024/34)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 16.02.2023 KR 20230021015

(71) Applicant: Samsung Electronics Co., Ltd.
Suwon-si, Gyeonggi-do 16677 (KR)

(72) Inventors:
• JUNG, Euichang
Suwon-si, Gyeonggi-do 16677 (KR)
• JANG, Youngrok
Suwon-si, Gyeonggi-do 16677 (KR)
• MYUNG, Seho
Suwon-si, Gyeonggi-do 16677 (KR)

(74) Representative: Nederlandsch Octrooibureau
P.O. Box 29720
2502 LS The Hague (NL)

(54) **METHOD AND DEVICE FOR CONFIGURING UNIFIED TCI STATE FOR CSI-RS RECEPTION IN WIRELESS COMMUNICATION SYSTEM**

(57)    The disclosure relates to a 5G or 6G communication system for supporting higher data transmission rates. An embodiment of the disclosure provides a device and a method capable of effectively providing a service in a mobile communication system. Specifically, an embodiment of the disclosure provides a method for determining a TCI state to be applied when aperiodic CSI reporting is performed.

FIG. 36

**Description**

[Technical Field]

The disclosure relates to operations of a terminal and a base station in a wireless communication system. For example, the disclosure relates to a method for determining a downlink control information transmit/receive beam in a wireless communication system and a device capable of performing the same.

[Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 preprocessing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

As described above and with the development of wireless communication systems, various services have become available, and methods for providing these services smoothly are required.

[Disclosure]

[Technical Problem]

Embodiments of the disclosure provide a device and method capable of effectively providing a service in a mobile communication system. For example, embodiments of the disclosure provide a method for determining a TCI state to be applied when performing aperiodic CSI reporting.

[Technical Solution]

According to an example embodiment, the disclosure provides a method performed by a terminal in a wireless communication system. The method includes: receiving a radio resource control (RRC) message including a configuration for a channel state information-reference signal (CSI-RS) resource set, a CSI-RS configuration, a configuration for an aperiodic CSI trigger state, and a unified TCI state list; receiving a downlink control information (DCI) including a CSI request for triggering an aperiodic CSI report; receiving an aperiodic CSI-RS based on a TCI state determined from the unified TCI state list, in a CSI-RS resource set indicated by an aperiodic CSI trigger state corresponding to the CSI request; and transmitting a CSI report generated based on the aperiodic CSI-RS to a base station.

According to an example embodiment, the disclosure provides a method performed by a base station in a wireless communication system. The method includes: transmitting a radio resource control (RRC) message including a configuration for a channel state information-reference signal (CSI-RS) resource set, a CSI-RS configuration, a configuration for an aperiodic CSI trigger state, and a unified TCI state list; transmitting a downlink control information (DCI) including a CSI request for triggering an aperiodic CSI report; transmitting an aperiodic CSI-RS in a CSI-RS resource set indicated by an aperiodic CSI trigger state corresponding to the CSI request, wherein a TCI state determined from the unified TCI state list is applied to the aperiodic CSI-RS; and receiving a CSI report generated based on the aperiodic CSI-RS.

According to an example embodiment, the disclosure provides a terminal in a wireless communication system. The terminal includes: a transceiver and a controller coupled with the transceiver. The controller is configured to cause the terminal to: receive a radio resource control (RRC) message including a configuration for a channel state information-reference signal (CSI-RS) resource set, a CSI-RS configuration, a configuration for an aperiodic CSI trigger state, and a unified TCI state list, to receive a downlink control information (DCI) including a CSI request for triggering an aperiodic CSI report, receive an aperiodic CSI-RS based on a TCI state determined from the unified TCI state list, in a CSI-RS resource set indicated by an aperiodic CSI trigger state corresponding to the CSI request, and transmit a CSI report generated based on the aperiodic CSI-RS to a base station.

According to an example embodiment, the disclosure provides a base station in a wireless communication system. The base station is configured to: transmit a radio resource control (RRC) message including a configuration for a channel state information-reference signal (CSI-RS) resource set, a CSI-RS configuration, a configuration for an aperiodic CSI trigger state, and a unified TCI state list, transmit a downlink control information (DCI) including a CSI request for triggering an aperiodic CSI report, transmit an aperiodic CSI-RS in a CSI-RS resource set indicated by an aperiodic CSI trigger state corresponding to the CSI request, wherein a TCI state determined from the unified TCI state list is applied to the aperiodic CSI-RS, and receive a CSI report generated based on the aperiodic CSI-RS.

[Advantageous Effects]

Various example embodiments of the disclosure allow effectively providing a service in a mobile communication system. For example, example embodiments of the disclosure allow efficiently performing aperiodic CSI reporting.

[Description of Drawings]

FIG. 1 is a diagram illustrating a basic structure of a time-frequency domain in a wireless communication system according to various embodiments;
FIG. 2 is a diagram illustrating example structures of a frame, a subframe, and a slot in a wireless communication system according to various embodiments;

FIG. 3 is a diagram illustrating an example of a configuration of a bandwidth part (BWP) in a wireless communication system according to various embodiments;

FIG. 4 is a graph illustrating an example of a configuration of a control resource set of a downlink control channel in a wireless communication system according to various embodiments;

FIG. 5A is a diagram illustrating an example structure of a downlink control channel in a wireless communication system according to various embodiments;

FIG. 5B is a diagram illustrating, through a span, a case where a UE may have a plurality of PDCCH monitoring occasions within a slot in a wireless communication system according to various embodiments;

FIG. 6 is a diagram illustrating an example discontinuous reception (DRX) operation in a wireless communication system according to various embodiments;

FIG. 7 is a diagram illustrating an example of base station beam allocation based on TCI state configuration in a wireless communication system according to various embodiments;

FIG. 8 is a diagram illustrating an example of a TCI state allocation method for a PDCCH in a wireless communication system according to various embodiments;

FIG. 9 is a diagram illustrating an example TCI indication MAC CE signaling structure for a PDCCH DMRS in a wireless communication system according to various embodiments;

FIG. 10 is a diagram illustrating an example of control resource set and search space beam configuration in a wireless communication system according to various embodiments;

FIG. 11 is a diagram illustrating an example method in which a base station and a UE perform data transmission/reception by considering a downlink data channel and a rate matching resource according to various embodiments;

FIG. 12 is a diagram illustrating an example method in which a UE selects a receivable control resource set by considering a priority when receiving a downlink control channel in a wireless communication system according to various embodiments;

FIG. 13 is a diagram illustrating an example of frequency-domain resource allocation of a PDSCH in a wireless communication system according to various embodiments;

FIG. 14 is a diagram illustrating an example of time-domain resource allocation of a PDSCH in a wireless communication system according to various embodiments;

FIG. 15 is a diagram illustrating an example of time-domain resource allocation based on subcarrier spacings of a data channel and a control channel in a wireless communication system according to various embodiments;

FIG. 16 is a diagram illustrating an example procedure for beam configuration and activation of a PDSCH according to various embodiments;

FIG. 17 is a diagram illustrating an example of PUSCH repetitive transmission type B in a wireless communication system according to various embodiments;

FIG. 18 is a diagram illustrating example radio protocol structures of a base station and a UE in single cell, carrier aggregation, and dual connectivity situations in a wireless communication system according to various embodiments;

FIG. 19 is a diagram illustrating an example of an antenna port configuration and resource allocation for cooperative communication in a wireless communication system according to various embodiments;

FIG. 20 is a diagram illustrating an example of downlink control information (DCI) configuration for cooperative communication in a wireless communication system according to various embodiments;

FIG. 21 is a diagram illustrating an example enhanced PDSCH TCI state activation/deactivation MAC-CE structure according to various embodiments;

FIG. 22 is a diagram illustrating an example RLM RS selection process according to various embodiments;

FIG. 23 is a diagram illustrating an example MAC-CE structure for joint TCI state activation and indication in a wireless communication system according to various embodiments;

FIG. 24 is a diagram illustrating an example MAC-CE structure for joint TCI state activation and indication in a wireless communication system according to various embodiments;

FIG. 25 is a diagram illustrating an example MAC-CE structure for joint TCI state activation and indication in a wireless communication system according to various embodiments

FIG. 26 is a diagram illustrating an example MAC-CE structure for separate TCI state activation and indication in a wireless communication system according to various embodiments;

FIG. 27 is a diagram illustrating an example MAC-CE structure for separate TCI state activation and indication in a wireless communication system according to various embodiments;

FIG. 28 is a diagram illustrating an example MAC-CE structure for separate TCI state activation and indication in a wireless communication system according to various embodiments;

FIG. 29 is a diagram illustrating an example MAC-CE structure for separate TCI state activation and indication in a wireless communication system according to various embodiments;

FIG. 30 is a diagram illustrating an example MAC-CE structure for joint and separate TCI state activation and indication in a wireless communication system according to various embodiments;

FIG. 31 is a diagram illustrating an example MAC-CE structure for joint and separate TCI state activation and indication in a wireless communication system according to various embodiments;

FIG. 32 is a diagram illustrating a beam application time in case of using a unified TCI scheme in a wireless communication system according to various embodiments;

FIG. 33 is a diagram illustrating an example MAC-CE structure for activation and indication of a plurality of joint TCI states in a wireless communication system according to various embodiments;

FIG. 34 is a diagram illustrating an example MAC-CE structure for activation and indication of a plurality of separate TCI states in a wireless communication system according to various embodiments;

FIG. 35 is a diagram illustrating an example MAC-CE structure for activation and indication of a plurality of separate TCI states in a wireless communication system according to various embodiments;

FIG. 36 is a diagram illustrating an example method for determining a TCI state of a downlink control channel to minimize/reduce the number of beam changes within a slot in a wireless communication system according to various embodiments;

FIG. 37 is a diagram illustrating an example CMRs configuration operation according to various embodiments;

FIG. 38 is a diagram illustrating an example method for a base station to configure a single or plural unified TCI state(s) to a UE in a wireless communication system according to various embodiments;

FIG. 39 is a block diagram illustrating an example configuration of a UE in a wireless communication system according to various embodiments; and

FIG. 40 is a block diagram illustrating an example configuration of a base station in a wireless communication system according to various embodiments.

[Mode for Disclosure]

Hereinafter, various example embodiments of the disclosure will be described in greater detail with reference to the accompanying drawings.

In describing example embodiments of the disclosure, descriptions of technical contents well-known in the art and not directly related to the disclosure may be omitted. This is to more clearly convey the subject matter of the disclosure without obscuring it by omitting unnecessary description.

For the same reason, some elements are exaggerated, omitted, or schematically illustrated in the accompanying drawings. In addition, the depicted size of each element does not completely reflect the actual size. In the drawings, the same or corresponding elements are assigned the same reference numerals.

The advantages and features of the disclosure and ways to achieve them will be apparent by making reference to the various example embodiments as described below in detail in conjunction with the accompanying drawings. However, the disclosure is not limited to the example embodiments set forth below, but may be implemented in various different forms. The following example embodiments are provided to inform those skilled in the art of the scope of the disclosure, and the disclosure is defined only by the scope of the appended claims. Throughout the description herein, the same or like reference numerals designate the same or like elements. Further, in describing the disclosure, a detailed description of known functions or configurations incorporated herein may be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the entire description herein.

Hereinafter, a base station may refer to an entity that allocates resources to terminals, and may be at least one of a gNode B, an eNode B, a Node B, a base station (BS), a wireless access unit, a BS controller, and a node on a network. A terminal may include a user equipment (UE), a mobile station (MS), a cellular phone, a smartphone, a computer, or a multimedia system capable of performing communication functions. In the disclosure, a downlink (DL) refers to a radio link via which a base station transmits a signal to a terminal, and an uplink (UL) refers to a radio link via which a terminal transmits a signal to a base station. Further, in the following description, LTE or LTE-A systems may be described by way of example, but the various example embodiments of the disclosure may also be applied to other communication systems having similar technical backgrounds or channel types. Examples of such communication systems may include 5th generation mobile communication technologies (5G, new radio, and NR) developed beyond LTE-A, and in the following description, the 5G covers the existing LTE, LTE-A, or other similar services. In addition, based on determinations by those skilled in the art, the various example embodiments of the disclosure may also be applied to other communication systems through some modifications without significantly departing from the scope of the disclosure.

It will be understood that each block of the flowchart illustrations, and combinations of blocks in the flowchart illustrations, may be implemented by computer program instructions. These computer program instructions may be provided to a processor of a general purpose computer, special purpose computer, or other programmable data processing apparatus to produce a machine, such that the instructions, which are executed via the processor of the computer or other programmable data processing apparatus, generate means for implementing the functions specified in the flowchart block(s). These computer program instructions may also be stored in a computer usable or computer-readable memory that may direct a computer or other programmable data processing apparatus to function in a particular manner, such that the instructions stored in the computer usable or computer-readable memory produce an article of manufacture including instruction means that implement the function specified in the flowchart block(s). The computer program instructions may also be loaded onto a computer or other programmable data processing apparatus to cause a series of operational steps to be performed on the computer or other programmable apparatus to produce a computer implemented process such that the instructions that are executed on the computer or other programmable apparatus provide steps for implementing the functions specified in the flowchart block(s).

Each block of the flowchart illustrations may represent a module, segment, or portion of code, which comprises one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

The term 'unit' used in various embodiments refers to a software or hardware component such as a field programmable gate array (FPGA) or application specific integrated circuit (ASIC), and the 'unit' performs certain tasks. However, the 'unit' is not limited to software or hardware. The 'unit' may reside on an addressable storage medium and configured to execute on one or more processors. Thus, the 'unit' may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and 'units' may be combined into fewer components and 'units' or further separated into additional components and 'units'. In addition, the components and 'units' may be implemented to operate one or more central processing units (CPUs) in a device or a secure multimedia card. Also, in embodiments, the 'unit' may include one or more processors.

Wireless communication systems have expanded beyond the original role of providing a voice-oriented service and have evolved into wideband wireless communication systems that provide a high-speed and high-quality packet data service according to, for example, communication standards such as high-speed packet access (HSPA), long-term evolution (LTE or evolved universal terrestrial radio access (E-UTRA)), and LTE-advanced (LTE-A) of 3GPP, high-rate packet data (HRPD) and a ultra-mobile broadband (UMB) of 3GPP2, and 802.16e of IEEE.

As an example of the broadband wireless communication system, an LTE system employs an orthogonal frequency division pluralxing (OFDM) scheme in a downlink (DL) and employs a single carrier frequency division plural access (SC-FDMA) scheme in an uplink (UL). The uplink indicates a radio link through which a user equipment (UE) or a mobile station (MS) transmits data or control signals to a base station (BS or eNode B), and the downlink indicates a radio link through which the base station transmits data or control signals to the UE. The above plural access scheme may separate data or control information of respective users by allocating and operating time-frequency resources for transmitting the data or control information for each user so as to avoid overlapping each other, that is, so as to establish orthogonality.

Since a 5G communication system, which is a communication system subsequent to LTE, should freely reflect various requirements of users, service providers, and the like, services satisfying various requirements should be supported. The services considered in the 5G communication system include enhanced Mobile Broadband (eMBB) communication, massive Machine Type Communication (mMTC), Ultra-Reliability Low-Latency Communication (URLLC), and the like.

The eMBB aims at providing a data rate higher than that supported by existing LTE, LTE-A, or LTE-Pro. For example, in the 5G communication system, the eMBB should provide a peak data rate of 20Gbps in the downlink and a peak data rate of 10Gbps in the uplink for a single base station. Furthermore, the 5G communication system should provide an increased user-perceived data rate to the UE, as well as the maximum data rate. In order to satisfy such requirements, transmission/reception technologies including a further enhanced Multi-Input Multi-Output (MIMO) transmission technique are required to be improved. In addition, the data rate required for the 5G communication system may be obtained using a frequency bandwidth more than 20MHz in a frequency band of 3 to 6GHz or 6GHz or more, instead of transmitting signals using a transmission bandwidth up to 20MHz in a band of 2GHz used in LTE.

The mMTC is being considered to support application services such as the Internet of things (IoT) in the 5G communication system. The mMTC has requirements, such as support of connection of a large number of UEs in a cell, enhancement coverage of UEs, improved battery time, a reduction in the cost of a UE, and the like, in order to effectively provide the IoT. Since the IoT provides communication functions while being provided to various sensors and various devices, it should support a large number of UEs (e.g., 1,000,000 UEs/km$^2$) in a cell. In addition, the UEs supporting the mMTC may require wider coverage than those of other services provided by the 5G communication system because the UEs are likely to be located in a shadow area, such as a basement of a building, which is not covered by the cell due to the nature of the service. The UE supporting the mMTC should be configured to be inexpensive, and may require a very long battery life-time such as 10 to 15 years because it is difficult to frequently replace the battery of the UE.

The URLLC, which may refer to a cellular-based mission-critical wireless communication service, may be used for remote control for robots or machines, industrial automation, unmanned aerial vehicles, remote health care, emergency alert, and the like. Thus, the URLLC should provide communication with ultra-low latency and ultra-high reliability. For example, a service supporting the URLLC should satisfy an air interface latency of less than 0.5ms, and also requires a packet error rate of $10^{-5}$ or less. Therefore, for the services supporting the URLLC, a 5G system should provide a transmit time interval (TTI) shorter than those of other services, and also may require a design for assigning a large number of resources in a frequency band in order to secure reliability of a communication link.

Three services in 5G, that is, the eMBB, the URLLC, and the mMTC, may be pluralxed and transmitted in a single system. In this case, different transmission/reception techniques and transmission/reception parameters may be used between services in order to satisfy different requirements of the respective services. Of course, 5G is not limited to the three services described above.

[NR Time-Frequency Resource]

Hereinafter, the frame structure of a 5G system will be described in greater detail with reference to the drawings.

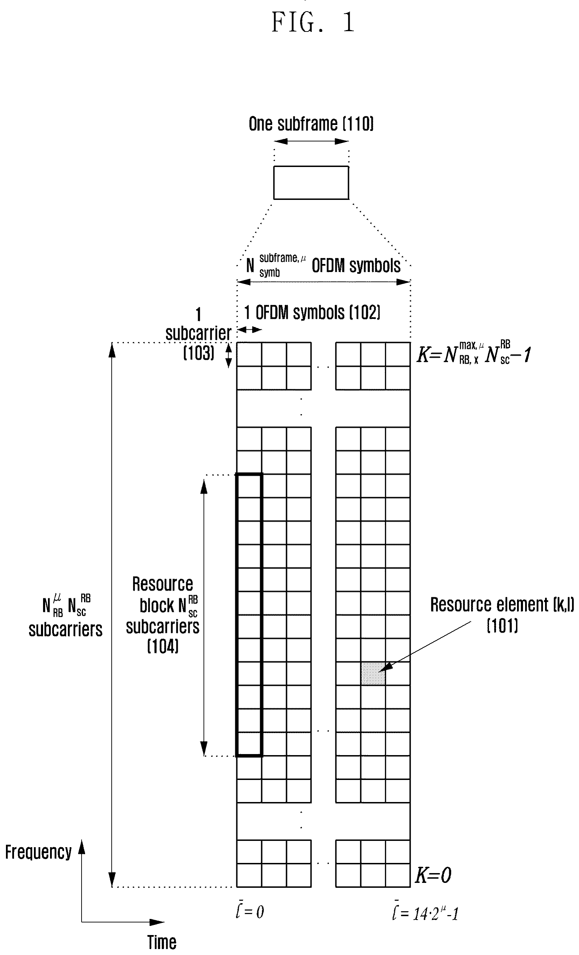

FIG. 1 is a diagram illustrating an example structure of a time-frequency domain which is a radio resource domain in which a data or control channel is transmitted in a 5G system according to various embodiments.

In FIG. 1, the horizontal axis represents a time domain, and the vertical axis represents a frequency domain. A basic unit of resources in the time-frequency domain is a resource element (RE) 101, which may be defined as one OFDM symbol 102 in the time domain and one subcarrier 103 in the frequency domain. In the frequency domain, $N_{SC}^{RB}$ (for example, 12) consecutive REs may include one resource block (RB) 104.

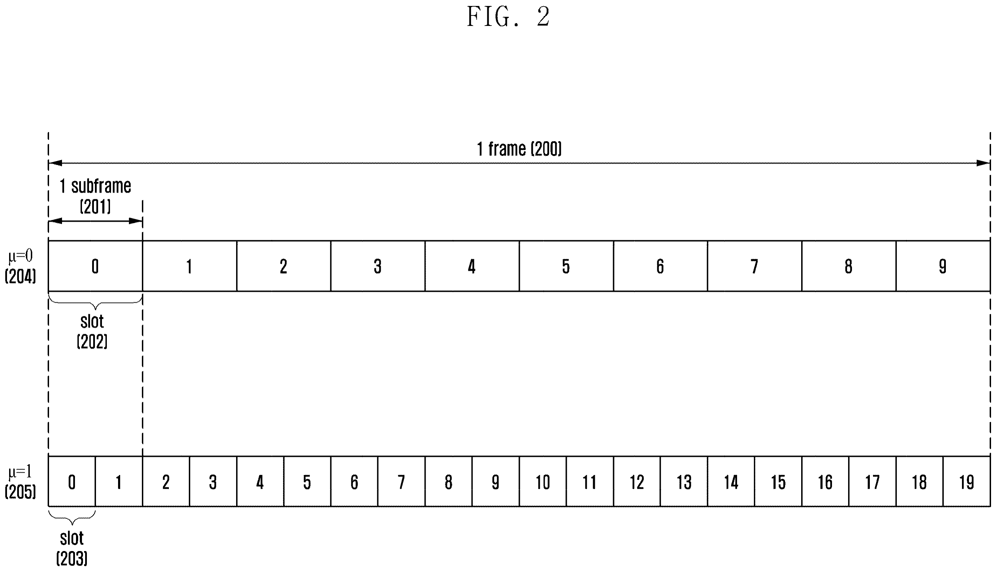

FIG. 2 is a diagram illustrating example structures of a frame, a subframe, and a slot in a wireless communication system according to various embodiments.

In FIG. 2, an example of structures of a frame 200, a subframe 201, and a slot 202 is illustrated. One frame 200 may be defined as 10ms. One subframe 201 may be defined as 1ms, and thus the one frame 200 may comprise ten subframes 201 in total. One slot 202 or 203 may be defined as fourteen OFDM symbols (e.g., the number of symbols per slot, $N_{symb}^{slot}=14$). One subframe 201 may be include one or plural slots 202 and 203, and the number of slots 202 and 203 per one subframe 201 may differ according to a configuration value $\mu$ 204 or 205 for a subcarrier spacing. In the example of FIG. 2, a case 204 of $\mu=0$ and a case 205 of $\mu=1$ are illustrated as the subcarrier spacing configuration value. In the case 204 of $\mu=0$, one subframe 201 may include one slot 202, and in the case 205 of $\mu=1$, the one subframe 201 may include two slots 203. That is, the number of slots per one subframe ( $N_{slot}^{subframe,\mu}$ ) may differ according to the subcarrier spacing configuration value $\mu$, and accordingly, the number of slots per one frame ( $N_{slot}^{frame,\mu}$ ) may differ. $N_{slot}^{subframe,\mu}$ and $N_{slot}^{frame,\mu}$ according to each subcarrier spacing configuration $\mu$ may be defined as in Table 1 below.

[Table 1]

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |
| 2 | 14 | 40 | 4 |
| 3 | 14 | 80 | 8 |
| 4 | 14 | 160 | 16 |
| 5 | 14 | 320 | 32 |

[Bandwidth Part (BWP)]

The BWP configuration in a 5G communication system will be described in greater detail with reference to the drawings.

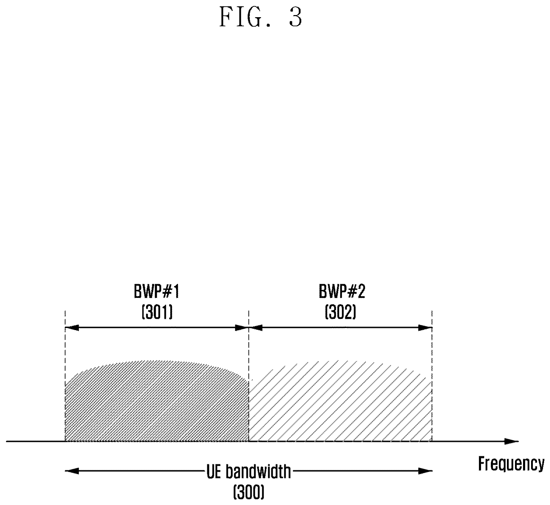

FIG. 3 is a diagram illustrating an example of the BWP configuration in a wireless communication system according to various embodiments.

In FIG. 3, an example is shown in which a UE bandwidth 300 is configured as two BWPs, that is, BWP#1 301 and BWP#2 302. The base station may configure one or plural BWPs for the UE, and may configure the following information for each BWP.

[Table 2]

| BWP ::= | SEQUENCE { |
| --- | --- |
| bwp-Id<br>(bandwidth part identifier) | BWP-Id, |
| locationAndBandwidth<br>(bandwidth part location) | INTEGER (1..65536), |
| subcarrierSpacing<br>(subcarrier spacing) | ENUMERATED {n0, n1, n2, n3, n4, n5}, |
| cyclicPrefix<br>(cyclic prefix) | ENUMERATED { extended } |
| } | |

The above example is not a limitation, and various parameters related to the BWP may be configured for the UE in addition to the above configuration information. The above information may be transmitted by the base station to the UE via higher layer signaling, for example, radio resource control (RRC) signaling. At least one BWP among the configured one or plural BWPs may be activated. Whether to activate the configured BWP may be quasi-statically transmitted from the base station to the UE via RRC signaling or may be dynamically transmitted through downlink control information (DCI).

According to various embodiments, the UE before RRC connected may be configured with an initial BWP for initial access from the base station through a master information block (MIB). For example, the UE may receive configuration information about a search space and a control resource set (CORESET) through which a PDCCH for reception of system information (which may correspond to remaining system information (RMSI) or system information block 1 (SIB1)) required for initial access may be transmitted through the MIB in an initial access stage. The CORESET and search space, which are configured through the MIB, may be regarded as identity (ID) 0, respectively. The base station may notify the UE of configuration information, such as frequency allocation information, time allocation information, and numerology for CORESET#0 through the MIB. In addition, the base station may notify the UE of configuration information regarding the monitoring periodicity and occasion for CORESET#0, that is, configuration information regarding search space#0, through the MIB. The UE may regard the frequency domain configured as CORESET#0, obtained from the MIB, as the initial BWP for initial access. The ID of the initial BWP may be regarded as 0.

The BWP configuration supported by the 5G may be used for various purposes.

According to various embodiments, in the case where a bandwidth supported by the UE is less than a system bandwidth, this may be supported through the BWP configuration. For example, the base station may configure a frequency location (configuration information 2) of the BWP to the UE so that the UE may transmit or receive data at a specific frequency location within the system bandwidth.

According to various embodiments, the base station may configure plural BWPs to the UE for the purpose of supporting different numerologies. For example, to support data transmission/reception using both a subcarrier spacing of 15kHz and a subcarrier spacing of 30kHz to a certain UE, two BWPs may be configured with a subcarrier spacing of 15kHz and a subcarrier spacing of 30kHz, respectively. Different BWPs may be frequency division pluralxed, and in the case of desiring to transmit or receive data at a specific subcarrier spacing, the BWP configured with the corresponding subcarrier spacing may be activated.

According to various embodiments, the base station may configure, to the UE, the BWPs having bandwidths of different sizes for the purpose of reducing power consumption of the UE. For example, when the UE supports a very large bandwidth, for example, a bandwidth of 100MHz, and always transmits or receives data at that bandwidth, it may cause very high power consumption in the UE. For example, even when there is no traffic, monitoring an unnecessary downlink control channel with a large bandwidth of 100MHz may be very inefficient in terms of power consumption. Therefore, in order to reduce power consumption of the UE, the base station may configure, to the UE, a BWP of a relatively small bandwidth, for example, a BWP of 20MHz. In a situation without traffic, the UE may perform a monitoring operation in a BWP of 20MHz, and when data occurs, the UE may transmit or receive data in a BWP of 100MHz according to an indication of the base station.

In a method of configuring the BWP, the UEs before RRC connected may receive configuration information about the initial BWP through the MIB in the initial access stage. For example, the UE may be configured with a CORESET for a downlink control channel, in which downlink control information (DCI) for scheduling a system information block (SIB) may be transmitted, from the MIB of a physical broadcast channel (PBCH). The bandwidth of the CORESET configured through the MIB may be regarded as the initial BWP, and the UE may receive, through the configured initial BWP, a physical downlink shared channel (PDSCH) in which the SIB is transmitted. The initial BWP may be used for other system information (OSI), paging, and random access as well as for the reception of the SIB.

[Bandwidth Part (BWP) Switch]

In the case where one or more BWPs have been configured to the UE, the base station may indicate a switch (or switching, transition) of the BWP to the UE using a BWP indicator field in DCI. As an example, in FIG. 3, when the currently activated BWP of the UE is BWP#1 301, the base station may indicate BWP#2 302 to the UE using the BWP indicator in DCI, and the UE may perform the BWP switch to the BWP#2 302 indicated by the BWP indicator in the received DCI.

As described above, since the DCI-based BWP switch may be indicated by the DCI that schedules the PDSCH or the PUSCH, when receiving a request to switch the BWP, the UE should smoothly receive or transmit the PDSCH or the PUSCH, which is scheduled by the DCI, without difficulty in the switched BWP. To this end, the standard specifies requirements for a delay time ($T_{BWP}$) required when switching the BWP, which may be defined, for example, as follows.

[Table 3]

| $\mu$ | NR Slot length (ms) | BWP switch delay $T_{BWPswitchDelay}$ (slots) | |
| --- | --- | --- | --- |
| | | Type 1[Note 1] | Type 2[Note 1] |
| 0 | 1 | 1 | 3 |
| 1 | 0.5 | 2 | 5 |
| 2 | 0.25 | 3 | 9 |
| 3 | 0.125 | 6 | 18 |
| Note 1: Depends on UE capability. | | | |
| Note 2: If the BWP switch involves changing of SCS, the BWP switch delay is determined by the larger one between the SCS before BWP switch and the SCS after BWP switch. | | | |

The requirements for the BWP switch delay time support type 1 or type 2 depending on UE capability. The UE may report a supportable type of BWP delay time to the base station.

When the UE receives the DCI including the BWP switch indicator in slot n according to the requirements for the BWP switch delay time, the UE may complete a switch to a new BWP indicated by the BWP switch indicator at a time not later than slot n+$T_{BWP}$, and may perform transmission and reception of a data channel scheduled by the corresponding DCI in the switched new BWP. When the base station intends to schedule the data channel to the new BWP, the base station may determine a time domain resource allocation for the data channel by considering the BWP switch delay time ($T_{BWP}$) of the UE. For example, when the base station schedules the data channel to the new BWP, the base station may schedule the data channel after the BWP switch delay time in a method for determining time domain resource allocation for the data channel. Therefore, the UE may not expect the DCI indicating the BWP switch to indicate a slot offset (K0 or K2) value smaller than the BWP switch delay time ($T_{BWP}$).

If the UE has received the DCI (for example, DCI format 1_1 or 0_1) indicating the BWP switch, the UE may not perform any transmission or reception during a time interval from the third symbol of a slot in which the PDCCH including the DCI is received to the start time of a slot indicated by the slot offset (K0 or K2) value indicated by the time domain resource allocation indicator field in the DCI. For example, if the UE has received the DCI indicating the BWP switch in slot n, and if the slot offset value indicated by the DCI is K, the UE may not perform any transmission or reception from the third symbol of slot n to the symbol prior to slot n+K (e.g., the last symbol of slot n+K-1).

[SS/PBCH Block]

A synchronization signal (SS)/PBCH block in the 5G will be described in greater detail below.
The SS/PBCH block may refer to a physical layer channel block including a primary SS (PSS), a secondary SS (SSS), and a PBCH. Specifically, the SS/PBCH block is as follows.

- PSS: may refer to a signal that serves as a reference for downlink time/frequency synchronization and provides some information of a cell ID.
- SSS: may refer to a signal that serves as a reference for downlink time/frequency synchronization and provides the remaining cell ID information not provided by the PSS. In addition, it may serve as a reference signal for demodulation of the PBCH.
- PBCH: may provide essential system information required for transmission or reception of a data channel and a control channel of the UE. The essential system information may include search space related control information indicating radio resource mapping information of a control channel, scheduling control information for a separate data channel for transmission of system information, and the like.
- SS/PBCH block: may include a combination of the PSS, the SSS, and the PBCH. One or plural SS/PBCH blocks may be transmitted within 5ms, and each SS/PBCH block transmitted may be distinguished by an index.

The UE may detect the PSS and the SSS in the initial access stage and may decode the PBCH. The UE may obtain the MIB from the PBCH and may be configured with CORESET#0 (which may correspond to a CORESET having a CORESET index of 0) therefrom. The UE may perform monitoring on the CORESET#0, assuming that the selected SS/PBCH block and a demodulation reference signal (DMRS) transmitted in the CORESET#0 are quasi-co-located (QCLed). The UE may receive system information through downlink control information transmitted in the CORESET#0. The UE may obtain, from the received system information, configuration information related to a random access channel (RACH) required for initial access. The UE may transmit a physical RACH (PRACH) to the base station by considering the selected SS/PBCH index, and the base station receiving the PRACH may obtain information on the SS/PBCH block index selected by the UE. The base station may know which block is selected among the SS/PBCH blocks by the UE, and may know that the CORESET#0 associated therewith is monitored.

[Discontinuous Reception (DRX)]

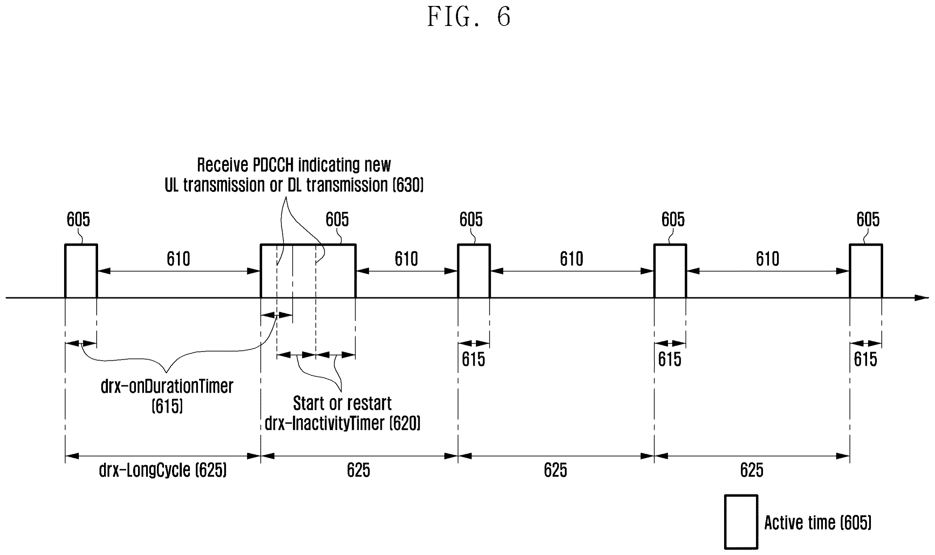

FIG. 6 is a diagram illustrating example discontinuous reception (DRX) according to various embodiments.
The DRX is an operation in which the UE using a service discontinuously receives data in an RRC connected state where a radio link is established between the base station and the UE. When the DRX is applied, the UE turns on a receiver at a specific time point to monitor a control channel, and if no data is received for a certain period of time, the UE turns off the receiver to reduce the power consumption of the UE. The DRX operation may be controlled by a MAC layer device based on various parameters and timers.
Referring to FIG. 6, an active time 605 is a time when the UE wakes up every DRX cycle and monitors the PDCCH. The active time 605 may be defined as follows.

- drx-onDurationTimer or drx-InactivityTimer or drx-RetransmissionTimerDL or drx-RetransmissionTimerUL or ra-ContentionResolutionTimer is running; or
- a Scheduling Request is sent on PUCCH and is pending; or
- a PDCCH indicating a new transmission addressed to the C-RNTI of the MAC entity has not been received after successful reception of a random access response for the random access preamble not selected by the MAC entity among the contention-based random access preamble

drx-onDurationTimer, drx-Inactivity Timer, drx-RetransmissionTimerDL, drx-RetransmissionTimerUL, ra-ContentionResolutionTimer, etc. are timers, the values of which are configured by the base station, and have a function of configuring the UE to monitor the PDCCH in a situation that a predetermined condition is satisfied.
The drx-onDurationTimer 615 is a parameter for configuring the minimum time for which the UE is awake in a DRX cycle. The drx-InactivityTimer 620 is a parameter for configuring a time for which the UE is additionally awake in the case 630 of receiving a PDCCH indicating new UL transmission or DL transmission. The drx-RetransmissionTimerDL is a parameter for configuring the maximum time for which the UE is awake so as to receive DL retransmission in a DL HARQ procedure. The drx-RetransmissionTimerUL is a parameter for configuring the maximum time for which the UE is awake so as to receive an UL retransmission grant in an UL HARQ procedure. The drx-onDurationTimer, the drx-InactivityTimer, the drx-RetransmissionTimerDL, and the drx-RetransmissionTimerUL may be configured as, for example, a time, the number of subframes, the number of slots, etc. The ra-ContentionResolutionTimer is a parameter for monitoring the PDCCH in a random access procedure.

The inActive time 610 is a time configured not to monitor the PDCCH during the DRX operation and/or a time configured not to receive the PDCCH, and the remaining time excluding the active time 605 from the entire time of performing the DRX operation may become the inActive time 610. When the PDCCH is not monitored for the active time 605, the UE may enter a sleep or inActive state to reduce power consumption.

The DRX cycle refers to the period during which the UE wakes up and monitors the PDCCH. That is, the DRX cycle refers to the time interval between when the UE monitors a PDCCH and when it monitors the next PDCCH, or the occurrence cycle of on-duration. There are two types of DRX cycles, that is, short DRX cycle and long DRX cycle. The short DRX cycle may be optionally applied.

The long DRX cycle 625 is the longer of the two DRX cycles configured in the UE. While operating in long DRX, the UE restarts the drx-onDurationTimer 615 when the long DRX cycle 625 has elapsed from the start point (e.g., starting symbol) of the drx-onDurationTimer 615. When operating in the long DRX cycle 625, the UE may start the drx-onDurationTimer 615 in a slot at an offset of drx-SlotOffset within a subframe satisfying Equation 1 below. The drx-SlotOffset refers to a delay to the start of the drx-onDurationTimer 615. The drx-SlotOffset may be configured as, for example, a time, the number of slots, etc.

[Equation 1]

$$[(SFN \times 10) + \text{subframe number}] \text{ modulo } (\text{drx-LongCycle}) = \text{drx-StartOffset}$$

Here, drx-LongCycleStartOffset includes the long DRX cycle 625 and the drx-StartOffset which may be used to define a subframe to start the long DRX cycle 625. The drx-LongCycleStartOffset may be configured as, for example, a time, the number of subframes, the number of slots, etc.

[PDCCH: DCI Related]

Downlink control information (DCI) in the 5G system will be described in detail.

In the 5G system, scheduling information about uplink data (or physical uplink shared channel (PUSCH)) or downlink data (or physical downlink shared channel (PDSCH)) is transmitted from the base station to the UE through the DCI. The UE may monitor a fallback DCI format and a non-fallback DCI format for the PUSCH or the PDSCH. The fallback DCI format may include a fixed field, predefined between the base station and the UE, and the non-fallback DCI format may include a configurable field.

The DCI may be transmitted through a physical downlink control channel (PDCCH) after a channel coding and modulation process is performed. A cyclic redundancy check (CRC) may be attached to a DCI message payload, and the CRC may be scrambled by a radio network temporary identifier (RNTI) corresponding to the identity of the UE. Different RNTIs may be used according to the purpose of the DCI message, for example, a UE-specific data transmission, a power control command, or a random access response. For example, the RNTI is not explicitly transmitted, but is included in a CRC calculation process and then transmitted. Upon receiving the DCI message transmitted through the PDCCH, the UE may check the CRC using an assigned RNTI. When a CRC check result is correct, the UE may know that the message has been transmitted to the UE.

For example, the DCI for scheduling the PDSCH for system information (SI) may be scrambled by an SI-RNTI. The DCI for scheduling the PDSCH for a random access response (RAR) message may be scrambled by an RA-RNTI. The DCI for scheduling the PDSCH for a paging message may be scrambled by a P-RNTI. The DCI for notifying of a slot format indicator (SFI) may be scrambled by an SFI-RNTI. The DCI for notifying of transmit power control (TPC) may be scrambled by a TPC-RNTI. The DCI for scheduling UE-specific PDSCH or PUSCH may be scrambled by a cell RNTI (C-RNTI).

DCI format 0_0 may be used as a fallback DCI for scheduling the PUSCH. The CRC may be scrambled by a C-RNTI. The DCI format 0_0 in which the CRC is scrambled by the C-RNTI may include, for example, the following information.

[Table 4]

| |
|---|
| - Identifier for DCI formats - [1] bit |
| - Frequency domain resource assignment - $\left[\left\lceil \log_2 (N_{RB}^{UL, BWP} (N_{RB}^{UL, BWP} +1)/2) \right\rceil\right]$ bits |
| - Time domain resource assignment - X bits |

(continued)

> - Frequency hopping flag - 1 bit.
> - Modulation and coding scheme - 5 bits
> - New data indicator - 1 bit
> - Redundancy version - 2 bits
> - HARQ process number - 4 bits
> - TPC command for scheduled PUSCH - [2] bits
> - UL/supplementary UL (SUL) indicator - 0 or 1 bit

DCI format 0_1 may be used as a non-fallback DCI for scheduling the PUSCH. Here, the CRC may be scrambled by a C-RNTI. The DCI format 0_1 in which the CRC is scrambled by the C-RNTI may include, for example, the following information.

[Table 5]

> - Carrier indicator - 0 or 3 bits
> - UL/SUL indicator - 0 or 1 bit
> - Identifier for DCI formats - [1] bits
> - Bandwidth part indicator - 0, 1 or 2 bits
> - Frequency domain resource assignment
>
> > • For resource allocation type 0, $\left\lceil N_{\mathrm{RB}}^{\mathrm{UL.\,BWP}} / P \right\rceil$ bits
>
> > • For resource allocation type 1, $\left\lceil \log_2(N_{\mathrm{RB}}^{\mathrm{UL.\,BWP}}(N_{\mathrm{RB}}^{\mathrm{UL.\,BWP}}+1)/2) \right\rceil$ bits
>
> - Time domain resource assignment -1, 2, 3, or 4 bits
> - Virtual resource block (VRB)-to-physical resource block (PRB) mapping - 0 or 1 bit, only for resource allocation type 1.
>
> > • 0 bit if only resource allocation type 0 is configured;
> > • 1 bit otherwise.
>
> - Frequency hopping flag - 0 or 1 bit, only for resource allocation type 1.
>
> > • 0 bit if only resource allocation type 0 is configured;
> > • 1 bit otherwise.
>
> - Modulation and coding scheme - 5 bits
> - New data indicator - 1 bit
> - Redundancy version - 2 bits
> - HARQ process number - 4 bits
> - 1st downlink assignment index - 1 or 2 bits
>
> > • 1 bit for semi-static HARQ-ACK codebook;
> > • 2 bits for dynamic HARQ-ACK codebook with single HARQ-ACK codebook.
>
> - 2nd downlink assignment index - 0 or 2 bits
>
> > • 2 bits for dynamic HARQ-ACK codebook with two HARQ-ACK sub-codebooks;
> > • 0 bit otherwise.
>
> - TPC command for scheduled PUSCH - 2 bits
>
> - SRS resource indicator - $\left\lceil \log_2\left( \sum_{k=1}^{L_{\max}} \binom{N_{\mathrm{SRS}}}{k} \right) \right\rceil$ or $\left\lceil \log_2(N_{\mathrm{SRS}}) \right\rceil$ bits
>
> > • $\left\lceil \log_2\left( \sum_{k=1}^{L_{\max}} \binom{N_{\mathrm{SRS}}}{k} \right) \right\rceil$ bits for non-codebook based PUSCH transmission;
>
> > • $\left\lceil \log_2(N_{\mathrm{SRS}}) \right\rceil$ bits for codebook based PUSCH transmission.

(continued)

> - Precoding information and number of layers -up to 6 bits
> - Antenna ports - up to 5 bits
> - SRS request - 2 bits
> - CSI request - 0, 1, 2, 3, 4, 5, or 6 bits
> - Code block group (CBG) transmission information - 0, 2, 4, 6, or 8 bits
> - Phase tracking reference signal (PTRS)-demodulation reference signal (DMRS) association - 0 or 2 bits.
> - beta_offset indicator - 0 or 2 bits
> - DMRS sequence initialization - 0 or 1 bit

DCI format 1_0 may be used as a fallback DCI for scheduling the PDSCH. The CRC may be scrambled by a C-RNTI. The DCI format 1_0 in which the CRC is scrambled by the C-RNTI may include, for example, the following information.

[Table 6]

> - Identifier for DCI formats - [1] bit
>
> - Frequency domain resource assignment $\left\lceil \log_2 (N_{RB}^{DL.BWP} (N_{RB}^{DL.BWP} + 1)/2) \right\rceil$ bits
>
> - Time domain resource assignment - X bits
> - VRB-to-PRB mapping - 1 bit.
> - Modulation and coding scheme - 5 bits
> - New data indicator - 1 bit
> - Redundancy version - 2 bits
> - HARQ process number - 4 bits
> - Downlink assignment index - 2 bits
> - TPC command for scheduled PUCCH - [2] bits
> - PUCCH resource indicator - 3 bits
> - PDSCH-to-HARQ feedback timing indicator - [3] bits

DCI format 1_1 may be used as a non-fallback DC for scheduling the PDSCH. Here, the CRC may be scrambled by a C-RNTI. The DCI format 1_1 in which the CRC is scrambled by the C-RNTI may include, for example, the following information.

[Table 7]

> - Carrier indicator - 0 or 3 bits
> - Identifier for DCI formats - [1] bits
> - Bandwidth part indicator - 0, 1 or 2 bits
> - Frequency domain resource assignment
>
>   • For resource allocation type 0, $\left\lceil N_{RB}^{DL.BWP} / P \right\rceil$ bits
>
>   • For resource allocation type 1,
>
>   $\left\lceil \log_2 (N_{RB}^{DL.BWP} (N_{RB}^{DL.BWP} + 1)/2) \right\rceil$ bits
>
> - Time domain resource assignment -1, 2, 3, or 4 bits
> - VRB-to-PRB mapping - 0 or 1 bit, only for resource allocation type 1.
>
>   • 0 bit if only resource allocation type 0 is configured;
>   • 1 bit otherwise.
>
> - PRB bundling size indicator - 0 or 1 bit
> - Rate matching indicator - 0, 1, or 2 bits
> - ZP CSI-RS trigger - 0, 1, or 2 bits
> For transport block 1:
> - Modulation and coding scheme - 5 bits

(continued)

> - New data indicator - 1 bit
> - Redundancy version - 2 bits
> For transport block 2:
> - Modulation and coding scheme - 5 bits
> - New data indicator - 1 bit
> - Redundancy version - 2 bits
> - HARQ process number - 4 bits
> - Downlink assignment index - 0 or 2 or 4 bits
> - TPC command for scheduled PUCCH - 2 bits
> - PUCCH resource indicator - 3 bits
> - PDSCH-to-HARQ_feedback timing indicator - 3 bits
> - Antenna ports - 4, 5 or 6 bits
> - Transmission configuration indication - 0 or 3 bits
> - SRS request - 2 bits
> - CBG transmission information - 0, 2, 4, 6, or 8 bits
> - CBG flushing out information - 0 or 1 bit
> - DMRS sequence initialization - 1 bit

[PDCCH: CORESET, REG, CCE, Search Space]

Hereinafter, a downlink control channel in the 5G communication system will be described in greater detail with reference to the drawings.

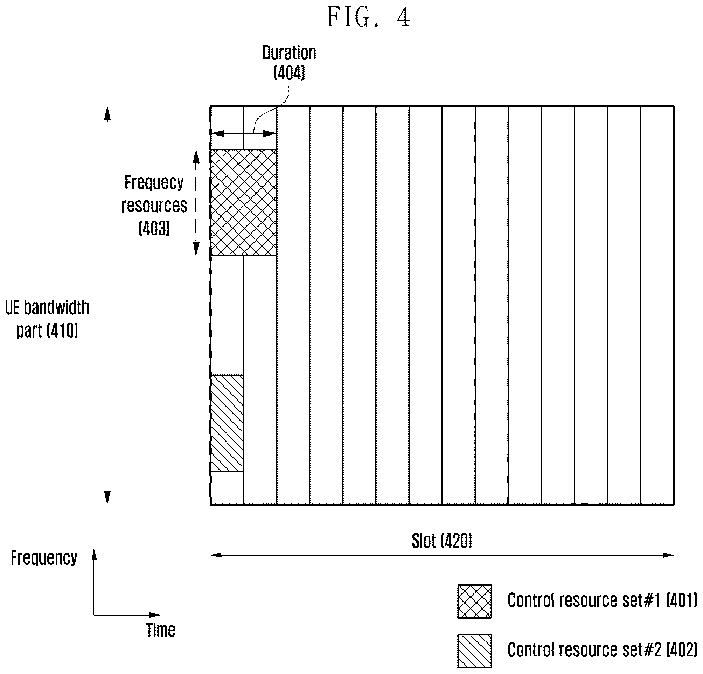

FIG. 4 is a diagram illustrating an example of a control resource set (CORESET) where a downlink control channel is transmitted in the 5G communication system according to various embodiments. FIG. 4 shows an example in which two CORESETs (CORESET#1 401 and CORESET#2 402) are configured within a UE BWP 410 in the frequency domain and within one slot 420 in the time domain. The CORESETs 401 and 402 may be configured to specific frequency resources 403 within the entire UE BWP 410 in the frequency domain. One or plural OFDM symbols may be configured in the time domain and defined as a CORESET duration 404. In an example shown in FIG. 4, the CORESET#1 401 is configured with the CORESET duration of two symbols, and the CORESET#2 402 is configured with the CORESET duration of one symbol.

The above described CORESET in the 5G may be configured to the UE by the base station via higher layer signaling (e.g., system information (SI), master information block (MIB), radio resource control (RRC) signaling). Configuring the CORESET to the UE refers to providing information such as a CORESET identity, a frequency location of the CORESET, a symbol length of the CORESET, etc. For example, it may include the following information.

[Table 8]

| ControlResourceSet ::=                          SEQUENCE { |
| --- |
| -- Corresponds to L1 parameter 'CORESET-ID' |

```
controlResourceSetId                ControlResourceSetId,
(CORESET identity)
frequencyDomainResources            BIT STRING (SIZE (45)),
(Frequency domain resource allocation information)
duration                            INTEGER
    (1..maxCoReSetDuration),
(Time domain resource allocation information)
cce-REG-MappingType                     CHOICE {
(CCE-to-REG mapping scheme)
    interleaved                     SEQUENCE {

        reg-BundleSize              ENUMERATED {n2, n3, n6},
        (REG bundle size)

        precoderGranularity         ENUMERATED
        {sameAsREG-bundle, allContiguousRBs},

        interleaverSize             ENUMERATED {n2, n3, n6}

        (Interleaver size)

        shiftIndex
        INTEGER(0..maxNrofPhysicalResourceBlocks-1)
        OPTIONAL
        (Interleaver shift)
    },
    nonInterleaved                  NULL
    },
tci-StatesPDCCH                     SEQUENCE(SIZE
    (1..maxNrofTCI-StatesPDCCH)) OF TCI-StateId
        OPTIONAL,
        (QCL configuraiton information)
```

| tci-PresentInDCI | ENUMERATED {enabled} |
|---|---|
| OPTIONAL,   -- Need S | |
| } | |

In Table 8, tci-StatesPDCCH (simply referred to as transmission configuration indication (TCI) state) configuration information may include information about one or plural synchronization signal/physical broadcast channel (SS/PBCH) block indices or channel state information reference signal (CSI-RS) indices having a QCL relationship with a DMRS transmitted in the corresponding CORESET.

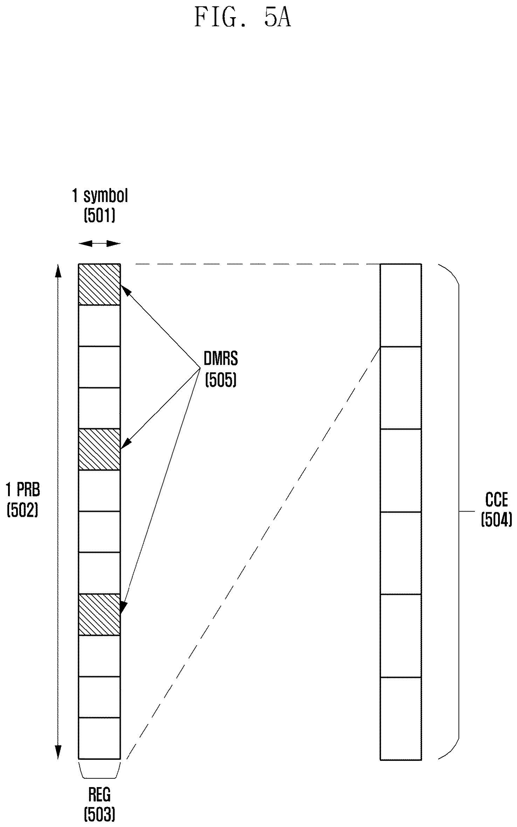

FIG. 5A is a diagram illustrating an example of the basic unit of time and frequency resources of a downlink control channel that can be used in 5G according to various embodiments. According to FIG. 5A, the basic unit of time and frequency resources including a control channel may be referred to as a resource element group (REG) 503, which may be defined as one OFDM symbol 501 in the time domain and one physical resource block (PRB) 502, e.g., 12 subcarriers, in the frequency domain. The base station may concatenate the REGs 503 to include a downlink control channel allocation unit.

As shown in FIG. 5A, when a basic unit to which a downlink control channel is allocated in the 5G is referred to as a control channel element (CCE) 504, one CCE 504 may include plural REGs 503. In the example shown in FIG. 5A, the REG 503 may include 12 REs, and when one CCE 504 may include six REGs 503, one CCE 504 may include 72 REs. When the downlink CORESET is configured, it may include plural CCEs 504. A specific downlink control channel may be transmitted while being mapped to one or more CCEs 504 according to an aggregation level (AL) in the CORESET. The CCEs 504 in the CORESET are distinguished by numbers. Here, the numbers of the CCEs 504 may be assigned according to a logical mapping scheme.

The basic unit of the downlink control channel shown in FIG. 5A, that is, the REG 503 may include both REs to which DCI is mapped and a region to which a DMRS 505, which is a reference signal for decoding the DCI, is mapped. As shown in FIG. 5A, three DMRSs 505 may be transmitted in one REG 503. The number of CCEs required for transmission of the PDCCH may be 1, 2, 4, 8, or 16 depending on the AL. A different number of CCEs may be used to implement link adaptation of the downlink control channel. For example, if AL=L, one downlink control channel may be transmitted through L CCEs. The UE needs to detect a signal in a state in which the UE does not know information about the downlink control channel, and a search space representing a set of CCEs has been defined for blind decoding. The search space is a set of downlink control channel candidates including CCEs that the UE has to attempt to decode at a given AL. Since there are various ALs that make one bundle of 1, 2, 4, 8, or 16 CCEs, the UE may have plural search spaces. A search space set may be defined as a set of search spaces at all configured ALs.

The search space may be classified into a common search space and a UE-specific search space. A certain group of UEs or all the UEs may examine the common search space of the PDCCH so as to receive cell common control information such as dynamic scheduling of system information or a paging message. For example, PDSCH scheduling allocation information for transmission of the SIB including cell operator information, etc. may be received by examining the common search space of the PDCCH. In the case of the common search space, since a certain group of UEs or all the UEs need to receive the PDCCH, the common search space may be defined as a set of pre-arranged CCEs. Scheduling allocation information about the UE-specific PDSCH or PUSCH may be received by examining the UE-specific search space of the PDCCH. The UE-specific search space may be UE-specifically defined as a function of the UE identity and various system parameters.

In 5G, parameter for the search space of the PDCCH may be configured to the UE by the base station via higher layer signaling (e.g., SIB, MIB, RRC signaling, etc.). For example, the base station may configure, to the UE, the number of PDCCH candidates at each aggregation level L, the monitoring periodicity for the search space, the monitoring occasion of symbol units in the slots for the search space, the search space type (common search space or UE-specific search space), the combination of RNTI and DCI format to be monitored in the search space, the CORESET index to monitor the search space, etc. For example, it may include the following information.

[Table 9]

| SearchSpace ::=                                      SEQUENCE { |
| --- |
| -- Identity of the search space. SearchSpaceId = 0 identifies the SearchSpace |
| configured via PBCH (MIB) or ServingCellConfigCommon. |
| searchSpaceId                              SearchSpaceId, |
| (Search space ID) |

| | |
|---|---|
| controlResourceSetId (CORESET ID) | ControlResourceSetId, |
| monitoringSlotPeriodicityAndOffset (Monitoring slot level periodicity) | CHOICE { |
| sl1 | NULL, |
| sl2 | INTEGER (0..1), |
| sl4 | INTEGER (0..3), |
| sl5 | INTEGER (0..4), |
| sl8 | INTEGER (0..7), |
| sl10 | INTEGER (0..9), |
| sl16 | INTEGER (0..15), |
| sl20 | INTEGER (0..19) |
| } | |
| | OPTIONAL, |
| duration (Monitoring duration) | INTEGER (2..2559) |
| monitoringSymbolsWithinSlot (Monitoring system within slot) | BIT STRING (SIZE (14)) |
| nrofCandidates (Number of PDCCH candidates per AL) | SEQUENCE { |
| aggregationLevel1 | ENUMERATED {n0, n1, n2, n3, n4, n5, n6, n8}, |
| aggregationLevel2 | ENUMERATED {n0, n1, n2, n3, n4, n5, n6, n8}, |
| aggregationLevel4 | ENUMERATED {n0, n1, n2, n3, n4, n5, n6, n8}, |
| aggregationLevel8 | ENUMERATED {n0, n1, n2, n3, n4, n5, n6, n8}, |
| aggregationLevel16 | ENUMERATED {n0, n1, n2, n3, n4, n5, n6, n8} |
| }, | |
| searchSpaceType (Search space type) | CHOICE { |

```
        -- Configures this search space as common search space (CSS) and DCI
        formats to monitor.
    common                          SEQUENCE {
    (Common search space)
}
    ue-Specific                     SEQUENCE {
    (UE-specific search space)
        -- Indicates whether the UE monitors in this USS for DCI formats 0-0
        and 1-0 or for formats 0-1 and 1-1.
        formats                     ENUMERATED {formats0-0-
        And-1-0, formats0-1-And-1-1},
        ...
}
```

The base station may configure one or more search space sets to the UE according to configuration information. According to various embodiments, the base station may configure search space set 1 and search space set 2 to the UE. The base station may configure to monitor DCI format A scrambled by X-RNTI in the common search space within the search space set 1, and to monitor DCI format B scrambled by Y-RNTI in the UE-specific search space within the search space set 2.

According to the configuration information, one or plural search space sets may exist in the common search space or the UE-specific search space. For example, search space set#1 and search space set#2 may be configured as the common search space, and search space set#3 and search space set#4 may be configured as the UE-specific search space.

In the common search space, the following combinations of the DCI format and the RNTI may be monitored. However, the disclosure is not limited to the following example.

- DCI format 0_0/1_0 with CRC scrambled by C-RNTI, CS-RNTI, SP-CSI-RNTI, RA-RNTI, TC-RNTI, P-RNTI, SI-RNTI
- DCI format 2_0 with CRC scrambled by SFI-RNTI
- DCI format 2_1 with CRC scrambled by INT-RNTI
- DCI format 2_2 with CRC scrambled by TPC-PUSCH-RNTI, TPC-PUCCH-RNTI
- DCI format 2_3 with CRC scrambled by TPC-SRS-RNTI

In the UE-specific search space, the following combinations of the DCI format and the RNTI may be monitored. However, the disclosure is not limited to the following example.

- DCI format 0_0/1_0 with CRC scrambled by C-RNTI, CS-RNTI, TC-RNTI
- DCI format 1_0/1_1 with CRC scrambled by C-RNTI, CS-RNTI, TC-RNTI

The specified RNTIs may follow the definitions and usages described below.

Cell RNTI (C-RNTI): Used for UE-specific PDSCH scheduling
Temporary Cell RNTI (TC-RNTI): Used for UE-specific PDSCH scheduling
Configured Scheduling RNTI (CS-RNTI): Used for quasi-statically configured UE-specific PDSCH scheduling
Random Access RNTI (RA-RNTI): Used for PDSCH scheduling at random access stage
Paging RNTI (P-RNTI): Used for PDSCH scheduling where paging is transmitted
System Information RNTI (SI-RNTI): Used for PDSCH scheduling where system information is transmitted
Interruption RNTI (INT-RNTI): Used for notifying of whether PDSCH is punctured
Transmit Power Control for PUSCH RNTI (TPC-PUSCH-RNTI): Used for indicating power control command for PUSCH

Transmit Power Control for PUCCH RNTI (TPC-PUCCH-RNTI): Used for indicating power control command for PUCCH

Transmit Power Control for SRS RNTI (TPC-SRS-RNTI): Used for indicating power control command for SRS

The above-described specified DCI formats may follow the definition below.

[Table 10]

| DCI format | Usage |
|---|---|
| 0_0 | Scheduling of PUSCH in one cell |
| 0_1 | Scheduling of PUSCH in one cell |
| 1_0 | Scheduling of PDSCH in one cell |
| 1_1 | Scheduling of PDSCH in one cell |
| 2_0 | Notifying a group of UEs of the slot format |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

In the 5G, the search space of the aggregation level $L$ in the CORESET $p$ and the search space set s may be expressed by Equation 2 below.

[Equation 2]

$$L \cdot \left\{ \left( Y_{p,n_{s,f}^\mu} + \left\lfloor \frac{m_{s,n_{CI}} \cdot N_{\mathrm{CCE},p}}{L \cdot M_{p,s,\mathrm{max}}^{(L)}} \right\rfloor + n_{CI} \right) \bmod \left\lfloor N_{\mathrm{CCE},p} / L \right\rfloor \right\} + i$$

- $L$: Aggregation level
- $n_{CI}$: Carrier index
- $N_{CCE,p}$: Total number of CCEs existing in the CORESET $p$
- $n^\mu_{s,f}$: Slot index
- $M^{(L)}_{p,s,max}$: Number of PDCCH candidates of aggregation level $L$
- $m_{s,nCI}=0, \cdots, M^{(L)}_{p,s,max}-1$: PDCCH candidate group index of aggregation level $L$ - $i=0, \cdots, L-1$
-

$$Y_{p,n_{s,f}^\mu} = \left( A_p \cdot Y_{p,n_{s,f}^\mu -1} \right) \bmod D ,$$

$Y_{p,-1} = n_{\mathrm{RNTI}} \neq 0$, $A_0 = 39827$ , $A_1 = 39829$, $A_2 = 39839$, $D=65537$
- $n_{RNTI}$: UE identifier

The $Y_{p,n_{s,f}^\mu}$ value may correspond to zero in the common search space.

In the case of the UE-specific search space, the $Y_{p,n_{s,f}^\mu}$ value may correspond to a value that varies depending on the UE identity (C-RNTI or ID configured by the base station to the UE) and the time index.

In the 5G, plural search space sets may be configured with different parameters (e.g., parameters in Table 9), and accordingly, the search space set monitored by the UE may differ at each time point. For example, if search space set#1 is configured with the X-slot period, search space set#2 is configured with the Y-slot period, and X and Y are different, the UE may monitor both search space set#1 and space set#2 in a specific slot, and may monitor one of search space set#1 and search space set#2 in a specific slot.

[PDCCH: Span]

The UE may perform, for each subcarrier spacing, UE capability reporting for a case of having plural PDCCH monitoring occasions in a slot, and in this case, the term span may be used. The span refers to consecutive symbols in the slot where the UE can monitor the PDCCH, and each PDCCH monitoring occasion is located within one span. The span may be expressed as (X,Y), where x denotes the minimum number of symbols that should be separated between the first symbols of two consecutive spans, and Y denotes the number of consecutive symbols where the UE can monitor the PDCCH within one span. In this case, the UE may monitor the PDCCH within the span in the duration from the first symbol of the span up to Y symbols.

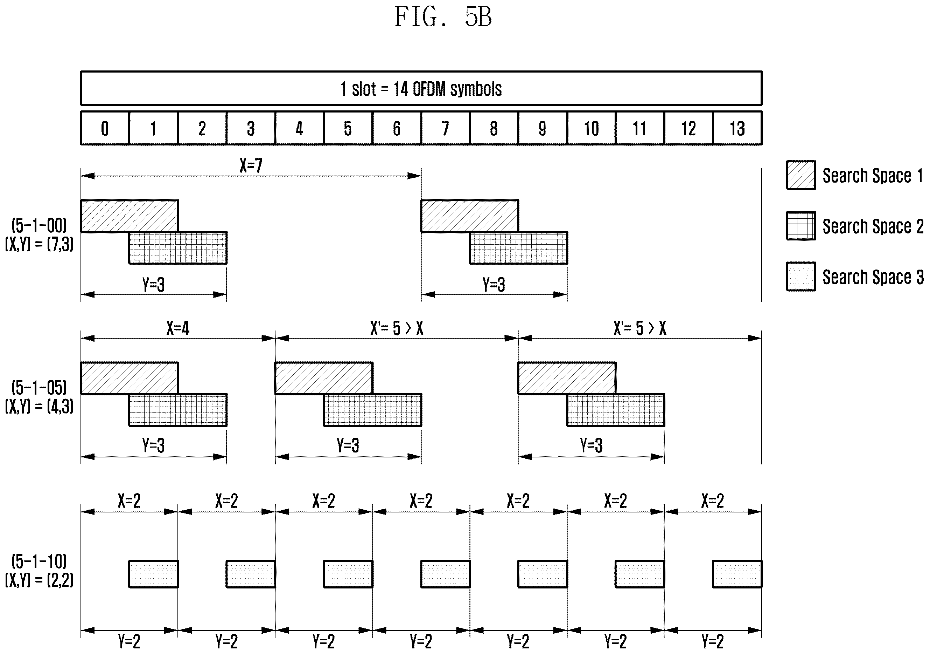

FIG. 5B is a diagram illustrating, through a span, a case where a UE may have a plurality of PDCCH monitoring occasions within a slot in a wireless communication system according to various embodiments. The span may be (X,Y)= (7,3), (4,3), (2,2), each of which is denoted by 5-1-00, 5-1-05, 5-1-10 in FIG. 5B. For example, 5-1-00 represents a case in which two spans that can be expressed by (7,4) exist in a slot. The interval between the first symbols of two spans is expressed as X=7, PDCCH monitoring occasions may exist within a total of Y symbols (Y=3) from the first symbol of each span, and search spaces 1 and 2 exist within Y symbols (Y=3). In another example, 5-1-05 represents a case in which a total of three spans that can be expressed by (4,3) exist in a slot, and the interval between the second and third spans is shown as X' symbols (X'=5) greater than X=4.

[PDCCH: UE Capability Report]

The slot position where the above-described common search space and UE-specific search space are located is indicated by monitoringSymbolsWitninSlot parameter in Table 11-1, and the symbol position within the slot is indicated with a bitmap through monitoringSymbolsWithinSlot parameter in Table 9. On the other hand, the symbol position within the slot where the UE can monitor the search space may be reported to the base station through the following UE capabilities. - UE capability 1 (hereinafter, referred to as FG 3-1). This UE capability refers to the ability to monitor a monitoring occasion (MO) if there is one MO for a type 1 and type 3 common search space or a UE-specific search space within a slot, provided that the MO is located within the first 3 symbols of that slot, as shown in Table 9a below. This UE capability is mandatory for all UEs supporting NR and whether this UE capability is supported is not explicitly reported to the base station.

[Table 11-1]

| Index | Feature group | Components | Field name in TS 38.331 [2] |
|---|---|---|---|
| 3-1 | Basic DL control channel | 1) One configured CORESET per BWP per cell in addition to CORESET0 <br><br> - CORESET resource allocation of 6RB bit-map and duration of 1 <br> - 3 OFDM symbols for FR1 <br> - For type 1 CSS without dedicated RRC configuration and for type 0, 0A, and 2 CSSs. CORESET resource allocation of 6RB bit-map and duration 1-3 OFDM symbols for FR2 <br> - For type 1 CSS with dedicated RRC configuration and for type 3 CSS, UE specific SS, CORESET resource allocation of 6RB bit-map and duration 1-2 OFDM symbols for FR2 <br> - REG-bundle sizes of 2/3 RBs or 6 RBs <br> - Interleaved and non-interleaved CCE-to-REG mapping <br> - Precoder-granularity of REG-bundle size <br> - PDCCH DMRS scrambling determination <br> - TCI state(s) for a CORESET configuration | nla |

(continued)

| Index | Feature group | Components | Field name in TS 38.331 [2] |
|---|---|---|---|
| | | 2) CSS and UE-SS configurations for unicast PDCCH transmission per BWP per cell<br>- PDCCH aggregation levels 1, 2, 4, 8, 16<br>- UP to 3 search space sets in a slot for a scheduled SCell per BWP<br>This search space limit is before applying all dropping rules.<br>- For type 1 CSS with dedicated RRC configuration, type 3 CSS, and UE-SS, the monitoring occasion is within the first 3 OFDM symbols of a slot<br>- For type 1 CSS without dedicated RRC configuration and for type 0, 0A, and 2 CSS, the monitoring occasion can be any OFDM symbol(s) of a slot, with the monitoring occasions for any of Type 1- CSS without dedicated RRC configuration, or Types 0, 0A, or 2 CSS configurations within a single span of three consecutive OFDM symbols within a slot<br>3) Monitoring DCI formats 0_0, 1_0, 0_1, 1_1<br>4) Number of PDCCH blind decodes per slot with a given SCS follows Case 1-1 table<br>5) Processing one unicast DCI scheduling DL and one unicast DCI scheduling UL per slot per scheduled CC for FDD<br>6) Processing one unicast DCI scheduling DL and 2 unicast DCI scheduling UL per slot per scheduled CC for TDD | |

- UE capability 2 (hereinafter, referred to as FG 3-2). This UE capability refers to the ability to monitor a monitoring occasion (MO) if there is one MO for a common search space or a UE-specific search space within a slot, regardless of the location of the starting symbol of the MO, as shown in Table 11-2 below. This UE capability is optional for UEs to support, and whether this capability is supported is explicitly reported to the base station.

[Table 11-2]

| Index | Feature group | Components | Field name in TS 38.331 [2] |
|---|---|---|---|
| 3-2 | PDCCH monitoring on any span of up to 3 consecutive OFDM symbols of a slot | For a given UE, all search space configurations are within the same span of 3 consecutive OFDM symbols in the slot | *pdcchMonitoringSingleOccasion* |

- UE capability 3 (hereinafter, referred to as FG 3-5, 3-5a, and 3-5b). As shown in Table 11-3 below, this UE capability indicates a pattern of a monitoring occasion (MO) that the UE can monitor, if there are plural MOs for a common search space or a UE-specific search space within a slot. The above-described pattern includes an interval X between starting symbols of different MOs, and a maximum symbol length Y for one MO. A combination of (X,Y) supported by the UE may be one or more among {(2,2), (4,3), and (7,3)}. This UE capability is optional for UEs to support, and whether this capability is supported and the above-described combination of (X, Y) are explicitly reported to the base station.

[Table 11-3]

| Index | Feature group | Components | Field name in TS 38.331 [2] |
|---|---|---|---|
| 3-5 | For type 1 CSS with dedicated RRC configuration, type 3 CSS, and UE-SS, monitoring occasion can be any OFDM symbol(s) of a slot for Case 2 | For type 1 CSS with dedicated RRC configuration, type 3 CSS, and UE-SS, monitoring occasion can be any OFDM symbol(s) of a slot for Case 2 | *pdcch-MonitoringAnyOccasions* { 3-5. *withoutDCI-Gap* 3-5a. *withDCI-Gap* } |
| 3-5a | For type 1 CSS with dedicated RRC configuration, type 3 CSS, and UE-SS, monitoring occasion can be any OFDM symbol(s) of a slot for Case 2 with a DCI gap | For type 1 CSS with dedicated RRC configuration, type 3 CSS and UE-SS, monitoring occasion can be any OFDM symbol(s) of a slot for Case 2, with minimum time separation (inducing the cross-slot boundary case) between two DL unicast DCIs, between two UL unicast DCIs, or between a DL and an UL unicast DCI in different monitoring occasions where at least one of them is not the monitoring occasions of FG-3-1, for a same UE as - 20FDM symbols for 15kHz - 40FDM symbols for 30kHz - 70FDM symbols for 60kHz with NCP - 11OFDM symbols for 120kHz Up to one unicast DL DCI and up to one unicast UL DCI in a monitoring occasion except for the monitoring occasions of FG 3-1. In addition for TDD the minimum separation between the first two UL unicast DCIs within the first 3 OFDM symbols of a slot can be zero OFDM symbols. | |
| 3-5b | All PDCCH monitoring occasion can be any OFDM symbol(s) of a slot for Case 2 with a span gap | PDCCH monitoring occasions of FG-3-1, plus additional PDCCH monitoring occasion(s) can be any OFDM symbol(s) of a slot for Case 2, and for any two PDCCH monitoring occasions belonging to different spans, where at least one of them is not the monitoring occasions of FG-3-1, in same or different search spaces, there is a minimum time separation of X OFDM symbols (inducing the cross-slot boundary case) between the start of two spans, where each span is of length up to Y consecutive OFDM symbols of a slot. Spans do not overlap. | |

EP 4 654 718 A1

23

| Index | Feature group | Components | Field name in TS 38.331 [2] |
|---|---|---|---|
| EP 4 654 718 A1 | | Every span is contained in a single slot. The same span pattern repeats in every slot. The separation between consecutive spans within and across slots may be unequal but the same (X, Y) limit must be satisfied by all spans. Every monitoring occasion is fully contained in one span. In order to determine a suitable span pattern, first a bitmap b(I), 0<=I<=13 is generated, where b(I)=1 if symbol I of any slot is part of a monitoring occasion, b(I)=0 otherwise. The first span in the span pattern begins at the smallest I for which b(I)=1. The next span in the span pattern begins at the smallest I not included in the previous span(s) for which b(I)=1. The span duration is max{maximum value of all CORESET durations, minimum value of Y in the UE reported candidate value} except possibly the last span in a slot which can be of shorter duration. A particular PDCCH monitoring configuration meets the UE capability limitation if the span arrangement satisfies the gap separation for at least one (X, Y) in the UE reported candidate value set in every slot, including cross slot boundary.<br><br>For the set of monitoring occasions which are within the same span:<br><br>• Processing one unicast DCI scheduling DL and one unicast DCI scheduling UL per scheduled CC across this set of monitoring occasions for FDD<br><br>• Processing one unicast DCI scheduling DL and two unicast DCI scheduling UL per scheduled CC across this set of monitoring occasions for TDD<br><br>• Processing two unicast DCI scheduling DL and one unicast DCI scheduling UL per scheduled CC across this set of monitoring occasions for TDD<br><br>The number of different start symbol indices of spans for all PDCCH monitoring occasions per slot, including PDCCH monitoring occasions of FG-3-1, is no more than floor(14/X) (X is minimum among values reported by UE).<br><br>The number of different start symbol indices of PDCCH monitoring occasions per slot inducing PDCCH monitoring occasions of FG-3-1, is no more than 7.<br><br>The number of different start symbol indices of PDCCH monitoring occasions per half-slot including PDCCH monitoring occasions of FG-3-1 is no more than 4 in SCell. | |

The UE may report whether it supports the above-described UE capability 2 and/or UE capability 3, along with related parameters, to the base station. Based on the reported UE capability, the base station may perform time-domain resource allocation for both the common search space and the UE-specific search space. When performing this resource allocation, the base station may the base station may prevent MOs from being placed in locations where the UE cannot monitor them.

[PDCCH: BD/CCE Limit]

When plural search space sets are configured to the UE, the following conditions may be considered in a method for determining a search space set having to be monitored by the UE.

If the UE is configured with r15monitoringcapability as the value of monitoringCapabilityConfig-r16, which is higher layer signaling, the UE defines, per slot, the maximum number of PDCCH candidates to be monitored and the maximum number of CCEs of the entire search space (which refers to the entire CCE set corresponding to a union area of plural search space sets). If the UE is configured with r16monitoringcapability as the value of monitoringCapabilityConfig-r16, the UE defines, per span, the maximum number of PDCCH candidates to be monitored and the maximum number of CCEs of the entire search space (which refers to the entire CCE set corresponding to a union area of plural search space sets).

[Condition 1: Limitation on Maximum Number of PDCCH Candidates]

According to the configuration value of higher layer signaling as above, $M^{\mu}$, which is the maximum number of PDCCH candidates that the UE can monitor, may follow Table 12-1 below if it is defined on a slot basis and follow Table 12-2 below if it is defined on a span basis, in a cell configured with a subcarrier spacing of $15 \cdot 2^{\mu}$ kHz.

[Table 12-1]

| $\mu$ | Maximum number of PDCCH candidates per slo t and per serving cell ($M^{\mu}$) |
|---|---|
| 0 | 44 |
| 1 | 36 |
| 2 | 22 |
| 3 | 20 |

[Table 12-2]

| | Maximum number $M^{\mu}$ of monitored PDCCH candidates per span for combination (X,Y) and per serving cell | | |
|---|---|---|---|
| $\mu$ | (2,2) | (4,3) | (7,3) |
| 0 | 14 | 28 | 44 |
| 1 | 12 | 24 | 36 |

[Condition 2: Limitation on Maximum Number of CCEs]

According to the configuration value of higher layer signaling as above, $C^{\mu}$, which is the maximum number of CCEs of the entire search space (which refers to the entire CCE set corresponding to a union area of plural search space sets), may follow Table 12-3 below if it is defined on a slot basis and follow Table 12-4 below if it is defined on a span basis, in a cell configured with a subcarrier spacing of $15 \cdot 2^{\mu}$ kHz.

[Table 12-3]

| $\mu$ | Maximum number of CCEs per slot and per serving cell ($C^{\mu}$) |
|---|---|
| 0 | 56 |
| 1 | 56 |
| 2 | 48 |

(continued)

| $\mu$ | Maximum number of CCEs per slot and per serving cell (C$^\mu$) |
|---|---|
| 3 | 32 |

[Table 12-4]

| | Maximum number C$^\mu$ of non-overlapped CCEs per span for combination (X,Y) and per serving cell | | |
|---|---|---|---|
| $\mu$ | (2,2) | (4,3) | (7,3) |
| 0 | 18 | 36 | 56 |
| 1 | 18 | 36 | 56 |

For the convenience of description, a situation in which both conditions 1 and 2 are satisfied at a specific time point is defined as "condition A". Therefore, not satisfying the condition A may refer to not satisfying at least one of the above conditions 1 and 2.

[PDCCH: Overbooking]

Depending on the configuration of the search space sets of the base station, there may be a case where the condition A is not satisfied at a certain time point. If the condition A is not satisfied at a certain time point, the UE may select and monitor only some of the search space sets configured to satisfy the condition A at that time point, and the base station may transmit a PDCCH to the selected search space set(s).

The following method may be used to select some search space(s) from among all configured search space sets.

If the condition A for PDCCH is not satisfied at a certain time point (slot), the UE (or base station) may select a search space set in which a search space type is configured as a common search space, from among search space sets existing at that time point, preferentially over a search space set in which a search space type is configured as a UE-specific search space.

If all search space sets configured as common search spaces are selected (e.g., if the condition A is satisfied even after all search spaces configured as common search spaces are selected), the UE (or base station) may select the search space sets configured as UE-specific search spaces. Here, if there are plural search space sets configured as UE-specific search spaces, a search space set having a low search space set index may have a higher priority. In consideration of the priority, the UE-specific search space sets may be selected within a range in which the condition A is satisfied.

[QCL, TCI State]

In a wireless communication system, one or more different antenna ports (which may be replaced by one or more channels, signals, and combinations thereof, but in the description below, this will be collectively referred to as different antenna ports for convenience of explanation) may be associated with each other by a quasi-co-location (QCL) configuration as shown in Table 10 below. The TCI state is for announcing a QCL relationship between a PDCCH (or PDCCH DMRS) and another RS or channel. When a certain reference antenna port A (reference RS #A) and another target antenna port B (target RS #B) are QCLed, may refer, for example, to the UE being allowed to apply some or all of the large-scale channel parameters estimated at the antenna port A to the channel measurement from the antenna port B. The QCL is required to correlate different parameters, depending on situations, such as 1) time tracking affected by average delay and delay spread, 2) frequency tracking affected by Doppler shift and Doppler spread, 3) radio resource management (RRM) affected by average gain, and 4) beam management (BM) affected by spatial parameters. Accordingly, the NR supports four types of QCL relationships as shown in Table 13 below.

[Table 13]

| QCL type | Large-scale characteristics |
|---|---|
| A | Doppler shift, Doppler spread, average delay, delay spread |
| B | Doppler shift, Doppler spread |
| C | Doppler shift, average delay |
| D | Spatial Rx parameter |

The spatial RX parameter may collectively refer to some or all of various parameters, such as angle of arrival (AoA), power angular spectrum (PAS) of AoA, angle of departure (AoD), PAS of AoD, transmit/receive channel correlation, transmit/receive beamforming, and spatial channel correlation.

The QCL relationship may be configured to the UE through RRC parameter TCI-State and QCL-Info as shown in Table 14 below. Referring to Table 14, the base station may configure one or more TCI states to the UE and inform the UE of up to two QCL relationships (qcl-Type1, qcl-Type2) for RS referring to the ID of the TCI state, that is, target RS. Here, each QCL information (QCL-Info) included in each TCI state includes the serving cell index and BWP index of the reference RS indicated by the corresponding QCL information, the type and ID of the reference RS, and the QCL type as shown in Table 13 above.

[Table 14]

| |
|---|
| TCI-State ::=                    SEQUENCE { <br><br> tci-StateId                    TCI-StateId, <br><br> (ID of the corresponding TCI state) <br><br> qcl-Type1                    QCL-Info, <br><br> (QCL information of the first reference RS of the RS (target RS) referring to the corresponding TCI state ID) <br><br> qcl-Type2                    QCL-Info                    OPTIONAL, <br> -- Need R <br><br> (QCL information of the second reference RS of the RS (target RS) referring to the corresponding TCI state ID) <br><br> ... <br><br> } <br><br><br> QCL-Info ::=                    SEQUENCE { <br><br> cell                    ServCellIndex                    OPTIONAL,    -- Need R <br><br> (Serving cell index of the reference RS indicated by the corresponding QCL information) <br><br> bwp-Id                    BWP-Id <br> OPTIONAL, -- Cond CSI-RS-Indicated <br><br> (BWP index of the reference RS indicated by the relevant QCL information) <br><br> referenceSignal                    CHOICE { |

```
        csi-rs                          NZP-CSI-RS-ResourceId,

        ssb                             SSB-Index

        (One of the CSI-RS ID or SSB ID indicated by the relevant QCL

information)

        },

        qcl-Type                        ENUMERATED {typeA, typeB, typeC,

typeD},

        ...

}
```

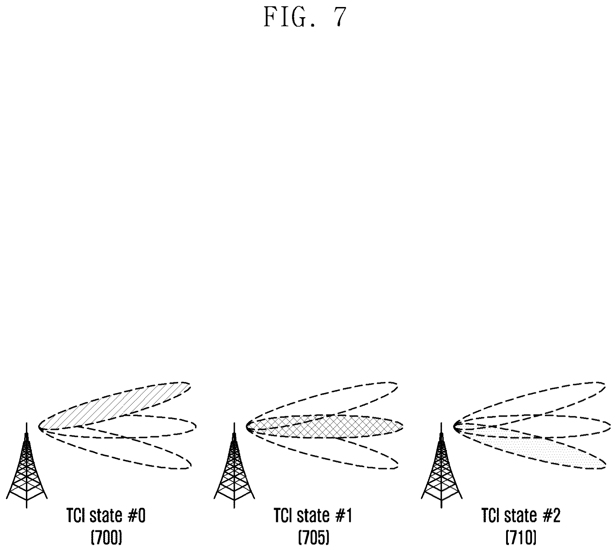

FIG. 7 is a diagram illustrating an example of base station beam allocation based on TCI state configuration according to various embodiments. Referring to FIG. 7, the base station may transmit information on N different beams to the UE through N different TCI states. For example, if N=3 as shown in FIG. 7, the base station may notify that the antenna ports referring to the different TCI states 700, 705 and 710 are associated with different spatial Rx parameters, e.g., different beams, by ensuring that the qcl-Type2 parameters included in three TCI states 700, 705 and 710 are associated with CSI-RS or SSB corresponding to different beams and are configured as QCL type D.

Tables 15-1 to 15-5 below show valid TCI state configurations according to target antenna port types.

Table 15-1 shows valid TCI state configurations when the target antenna port is CSI-RS for tracking (TRS). The TRS refers to an NZP CSI-RS, in which a repetition parameter is not configured and trs-Info is configured to be true, from among CSI-RSs. Configuration 3 in Table 15-1 may be used for aperiodic TRS.

[Table 15-1] Valid TCI state configurations when the target antenna port is CSI-RS for tracking (TRS)

| Valid TCI state Configuration | DL RS 1 | qcl-Type1 | DL RS 2 (if configured) | qcl-Type2 (if configured) |
|---|---|---|---|---|
| 1 | SSB | QCL-TypeC | SSB | QCL-TypeD |
| 2 | SSB | QCL-TypeC | CSI-RS (BM) | QCL-TypeD |
| 3 | TRS (periodic) | QCL-TypeA | TRS (same as DL RS 1) | QCL-TypeD |

Table 15-2 shows valid TCI state configurations when the target antenna port is CSI-RS for CSI. The CSI-RS for CSI refers to an NZP CSI-RS, in which a parameter indicating repetition (e.g., a repetition parameter) is not configured and trs-Info is not configured to be true, from among CSI-RSs.

[Table 15-2] Valid TCI state configurations when the target antenna port is CSI-RS for CSI

| Valid TCI state Configuration | DL RS 1 | qcl-Type1 | DL RS 2 (if configured) | qcl-Type2 (if configured) |
|---|---|---|---|---|
| 1 | TRS | QCL-TypeA | SSB | QCL-TypeD |
| 2 | TRS | QCL-TypeA | CSI-RS for BM | QCL-TypeD |
| 3 | TRS | QCL-TypeA | TRS (same as DL RS 1) | QCL-TypeD |
| 4 | TRS | QCL-TypeB | | |

Table 15-3 shows valid TCI state configurations when the target antenna port is CSI-RS for beam management (BM, which has the same meaning as CSI-RS for L1 RSRP reporting). The CSI-RS for BM refers to an NZP CSI-RS, in which a repetition parameter is configured to have the value of On or Off and trs-Info is not configured to be true, from among CSI-RSs.

[Table 15-3] Valid TCI state configurations when the target antenna port is CSI-RS for BM (for L1 RSRP reporting)

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | SS/PBCH Block | QCL-TypeC | SS/PBCH Block | QCL-TypeD |

Table 15-4 shows valid TCI state configurations when the target antenna port is a PDCCH DMRS.

[Table 15-4] Valid TCI state configurations when the target antenna port is a PDCCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS (same as DL RS 1) | QCL-TypeD |
| 2 | TRS | QCL-TypeA | CSI-RS (BM) | QCL-TypeD |
| 3 | CSI-RS (CSI) | QCL-TypeA | CSI-RS (same as DL RS 1) | QCL-TypeD |

Table 15-5 shows valid TCI state configurations when the target antenna port is a PDSCH DMRS.

[Table 15-5] Valid TCI state configurations when the target antenna port is a PDSCH DMRS

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | CSI-RS (CSI) | QCL-TypeD |

A representative QCL configuring method according to Tables 15-1 to 15-5 above is to operate by configuring the target antenna port and reference antenna port for each stage as "SSB" -> "TRS" -> "CSI-RS for CSI, or CSI-RS for BM, PDCCH DMRS, or PDSCH DMRS". Through this, it is possible to link the statistical characteristics that can be measured from the SSB and the TRS to each of antenna ports to assist the UE's reception operation.

[PDCCH: TCI State Related]

For example, TCI state combinations applicable to a PDCCH DMRS antenna port are shown in Table 16 below. In Table 16, the fourth row is a combination assumed by the UE before RRC configuration, and configuration after RRC is not possible.

[Table 16]

| Valid TCI state Configuration | DL RS 1 | qcl-Type1 | DL RS 2 (if configured) | qcl-Type2 (if configured) |
|---|---|---|---|---|
| 1 | TRS | QCL-TypeA | TRS | QCL-TypeD |
| 2 | TRS | QCL-TypeA | CSI-RS (BM) | QCL-TypeD |
| 3 | CSI-RS (CSI) | QCL-TypeA | | |
| 4 | SS/PBCH Block | QCL-TypeA | SS/PBCH Block | QCL-TypeD |

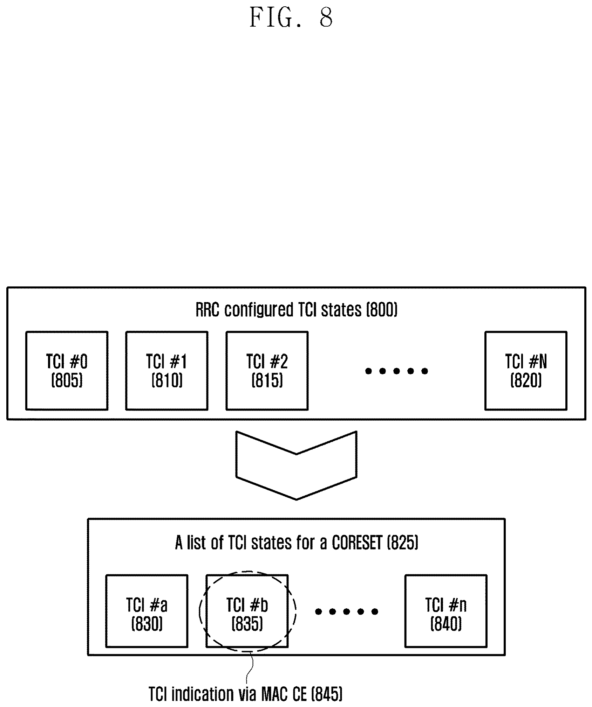

In the NR, for dynamic allocation of a PDCCH beam, a hierarchical signaling method is supported as shown in FIG. 8. Referring to FIG. 8, the base station may configure N TCI states 805, 810, ···, 820 to the UE via RRC signaling 800, and may configure some 825 of them as TCI states for a CORESET. Thereafter, the base station may indicate one of the TCI states 830, 835, and 840 for the CORESET to the UE via MAC CE signaling 845. Thereafter, the UE may receive a PDCCH based on beam information included in the TCI state indicated by the MAC CE signaling.

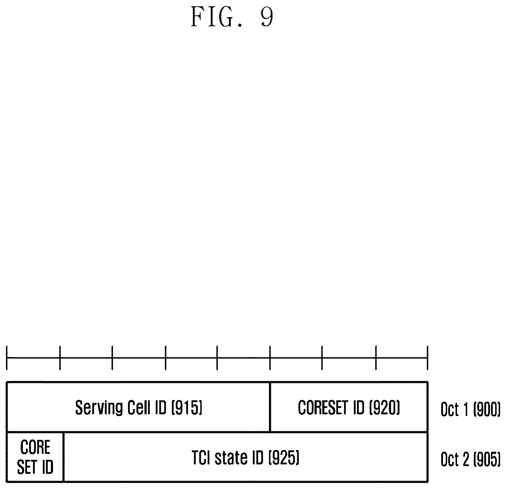

FIG. 9 is a diagram illustrating an example TCI indication MAC CE signaling structure for the PDCCH DMRS according to various embodiments. Referring to FIG. 9, the TCI indication MAC CE signaling for the PDCCH DMRS includes 2 bytes (16 bits) and includes a serving cell ID 915 of 5 bits, a CORESET ID 920 of 4 bits, and a TCI state ID 925 of 7 bits.

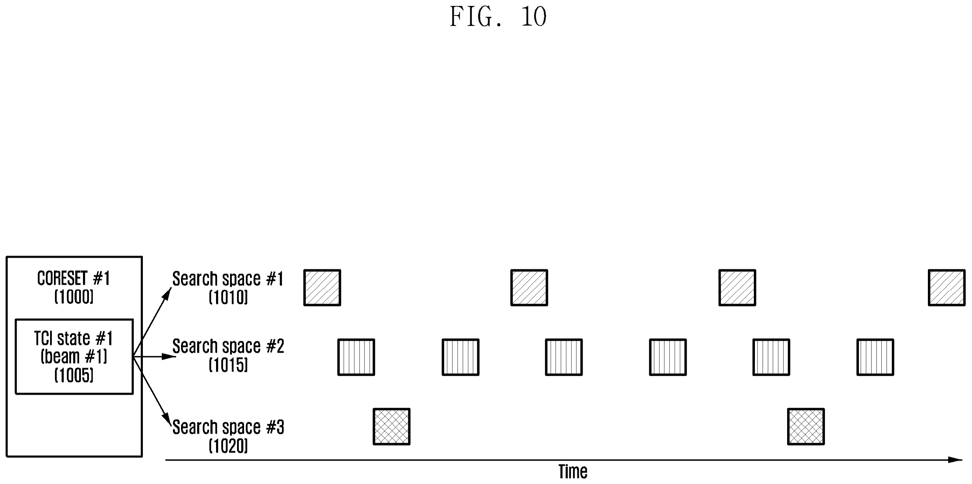

FIG. 10 is a diagram illustrating an example of beam configuration for a control resource set (CORESET) and a search space according to various embodiments. Referring to FIG. 10, the base station may indicate one TCI state 1005 in a list of TCI states included in a CORESET 1000 configuration through MAC CE signaling. Thereafter, before another TCI state is indicated to that CORESET through another MAC CE signaling, the UE considers that the same QCL information (beam #1) 1005 is applied to one or more search spaces 1010, 1015, and 1020 connected to the CORESET. According to the above-described PDCCH beam allocation method, it is difficult to indicate a beam change faster than a MAC CE signaling delay, and there is a problem in that the same beam is collectively applied to all CORESETs regardless of search space characteristics, making flexible PDCCH beam management difficult. Hereinafter, embodiments of the disclosure provide a more flexible PDCCH beam configuration and management method. In the following description of embodiments of the disclosure, several distinct examples are provided for convenience, but these are not mutually exclusive and may be appropriately combined and applied depending on the situation.

The base station may configure one or plural TCI states for a certain CORESET to the UE, and may activate one of the configured TCI states through a MAC CE activation command. For example, {TCI state#0, TCI state#1, TCI state#2} are configured as the TCI state in the CORESET#1, and the base station may transmit a command to the UE via MAC CE to activate the assumption of TCI state#0 as the TCI state for CORESET#1. Based on the activation command for the TCI state received via the MAC CE, the UE may correctly receive a DMRS of the corresponding CORESET according to QCL information in the activated TCI state.

For the CORESET configured with index 0 (CORESET#0), if the UE has not received the MAC CE activation command for the TCI state of CORESET#0, the UE may assume that the DMRS transmitted in the CORESET#0 is QCLed with an SS/PBCH block identified during the initial access procedure or non-contention-based random access procedure that is not triggered by a PDCCH command.

For the CORESET configured with any index other than 0 (CORESET#X), if the UE has been not configured with the TCI state for CORESET#X, or if the UE has been configured with one or more TCI states but has not received the MAC CE activation command for activating one of the TCI states, the UE may assume that the DMRS transmitted in the CORESET#X is QCLed with an SS/PBCH block identified during the initial access procedure.

[PDCCH: QCL Prioritization Rule Related]

Hereinafter, the QCL prioritization operation for the PDCCH will be described in detail.

The UE operates with a single cell or intra-band carrier aggregation. If plural CORESETs existing within an activated BWP of a single or plural cells overlap in time during a specific PDCCH monitoring occasion while having the same or different QCL-TypeD characteristics, the UE may select a specific CORESET based on the QCL prioritization operation and monitor CORESETs having the same QCL-TypeD characteristics as the selected CORESET. That is, when plural CORESETs overlap in time, only one QCL-TypeD characteristic may be received. In this case, the criteria for determining the QCL priority may be as follows.

- Criterion 1. Among cells including a common search space, the CORESET associated with the lowest index common search space within the cell corresponding to the lowest index.
- Criterion 2. Among cells including a UE-specific search space, the CORESET associated with the lowest index UE-specific search space within the cell corresponding to the lowest index.

For the above criteria, if any criterion is not satisfied, another criterion is applied. For example, in the case where CORESETs overlap in time in a certain PDCCH monitoring occasion, if all CORESETs are not associated with a common search space but associated with a UE-specific search space, that is, if the criterion 1 is not satisfied, the UE may omit applying the criterion 1 and apply the criterion 2.

When the UE selects a CORESET according to the above-mentioned criteria, the following two matters may be further considered for QCL information configured in the CORESET. First, if CORESET 1 has CSI-RS 1 as a reference signal having QCL-TypeD relationship, and this CSI-RS 1's reference signal having QCL-TypeD relationship is SSB 1, while another CORESET 2 has SSB 1 as a reference signal having QCL-TypeD relationship, then the UE may consider these two CORESETs 1 and 2 to have different QCL-TypeD characteristics. Second, if CORESET 1 has CSI-RS 1, configured in cell 1, as a reference signal having QCL-TypeD relationship, and this CSI-RS 1's reference signal having QCL-TypeD relationship is SSB 1, while CORESET 2 has CSI-RS 2, configured in cell 2, as a reference signal having QCL-TypeD relationship, and this CSI-RS 2's reference signal having QCL-TypeD relationship is also SSB 1, then the UE may consider these two CORESETs to have the same QCL-TypeD characteristic.

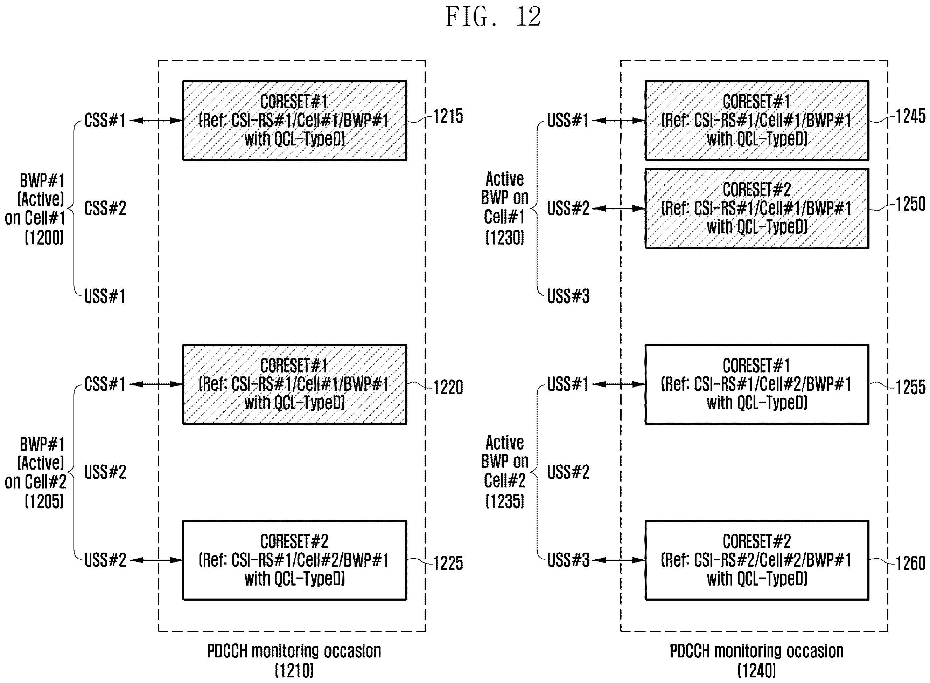

FIG. 12 is a diagram illustrating an example method in which a UE selects a receivable CORESET considering a priority when receiving a downlink control channel in a wireless communication system according to various embodiments. For example, the UE may be configured to receive plural CORESETs overlapping in time in a certain PDCCH monitoring occasion 1210, and these CORESETs may be associated with a common search space or a UE-specific search space for a plurality of cells. In this PDCCH monitoring occasion, within BWP#1 1200 of cell#1, CORESET#1 1215 associated with common search space#1 may exist, and within BWP#1 1205 of cell#2, CORESET#1 1220 associated with common search space#1 and CORESET#2 1225 associated with UE-specific search space#2 may exist. The CORESETs 1215 and 1220 may have a QCL-TypeD relationship with CSI-RS resource#1 configured in BWP#1 of cell#1, and the CORESET 1225 may have a QCL-TypeD relationship with CSI-RS resource#1 configured in BWP#1 of cell#2. Therefore, if the criterion 1 is applied to this PDCCH monitoring occasion 1210, the UE may receive all other CORESETs having the same QCL-TypeD reference signal as the CORESET#1 1215. Accordingly, the UE may receive the CORESETs 1215 and 1220 in that PDCCH monitoring occasion 1210. In another example, the UE may be configured to receive plural CORESETs overlapping in time in a certain PDCCH monitoring occasion 1240, and these CORESETs may be associated with a common search space or a UE-specific search space for a plurality of cells. In this PDCCH monitoring occasion, within BWP#1 1230 of cell#1, CORESET#1 1245 associated with UE-specific search space#1 and CORESET#2 associated with UE-specific search space#2 1250 may exist, and within BWP#1 1235 of cell#2, CORESET#1 1255 associated with UE-specific search space#1 and CORESET#2 1260 associated with UE-specific search space#3 may exist. The CORESETs 1245 and 1250 may have a QCL-TypeD relationship with CSI-RS resource#1 configured in BWP#1 of cell#1, and the CORESET 1255 may have a QCL-TypeD relationship with CSI-RS resource#1 configured in BWP#1 of cell#2, and the CORESET 1260 may have a QCL-TypeD relationship with CSI-RS resource#2 configured in BWP#1 of cell#2. However, if the criterion 1 is applied to that PDCCH monitoring occasion 1240, there is no common search space, and thus the criterion 2 which is the next criterion may be applied. If the criterion 2 is applied to the corresponding PDCCH monitoring occasion 1240, the UE may receive all other CORESETs having the same QCL-TypeD reference signal as the CORESET 1245. Accordingly, the UE may receive the CORESETs 1245 and 1250 in the PDCCH monitoring occasion 1240.

[Rate Matching/Puncturing Related]

Hereinafter, a rate matching operation and a puncturing operation will be described in detail.

When a time and frequency resource A for transmission of a certain symbol sequence A overlaps with a certain time and frequency resource B, a rate matching or puncturing operation may be considered for the transmission/reception operation of a channel A in consideration of a resource C in which the resource A and the resource B overlap. A specific operation may follow the details below.

Rate Matching Operation

- Among the entire resource A for transmission of a symbol sequence A to the UE, the base station may map and transmit a channel A to and in only the remaining resource regions except for a resource C corresponding to a region overlapping with a resource B. For example, if the symbol sequence A includes {symbol #1, symbol #2, symbol #3, symbol 4}, the resource A includes {resource #1, resource #2, resource #3, resource #4}, and the resource B incudes {resource #3, resource #5}, the base station may sequentially map the symbol sequence A to {resource #1, resource #2, resource #4}, which are the remaining resources except for {resource #3} corresponding to the resource C in the resource A. As a result, the base station may map and transmit a symbol sequence {symbol #1, symbol #2, symbol #3} to and in {resource #1, resource #2, resource #4}, respectively.

The UE may determine the resource A and the resource B from scheduling information for the symbol sequence A from the base station, and determine the resource C which is a region where the resource A and the resource B overlap. The UE may receive the symbol sequence A based on the assumption that the symbol sequence A is mapped to and transmitted in the remaining regions except for the resource C in the entire resource A. For example, if the symbol sequence A includes {symbol #1, symbol #2, symbol #3, symbol 4}, the resource A includes {resource #1, resource #2, resource #3, resource #4}, and the resource B includes {resource #3, resource #5}, the UE may receive the symbol sequence A based on the assumption that the symbol sequence A is sequentially mapped to the remaining resources {resource #1, resource #2, resource #4} except for {resource #3} corresponding to the resource C in the resource A. As a result, the UE may perform a subsequent reception operation assuming that a symbol sequence {symbol #1, symbol #2, symbol #3} are mapped to and transmitted in {resource #1, resource #2, resource #4}, respectively.

Puncturing Operation

When there is a resource C corresponding to a region that overlaps with a resource B in the entire resource A for transmission of a symbol sequence A to the UE, the base station may map the symbol sequence A to the entire resource A. However, the base station may not perform transmission in a resource region corresponding to the resource C, and may perform transmission in only the remaining resource regions except for the resource C in the entire resource A. For example, if the symbol sequence A includes {symbol #1, symbol #2, symbol #3, symbol 4}, the resource A includes {resource #1, resource #2, resource #3, resource #4}, and the resource B includes {resource #3, resource #5}, the base station may map the symbol sequence A {symbol #1, symbol #2, symbol #3, symbol #4} to the resource A {resource #1, resource #2, resource #3, resource #4}, respectively. Further, the base station may transmit only a symbol sequence {symbol #1, symbol #2, symbol #4} corresponding to {resource #1, resource #2, resource #4}, which are the remaining resources except for {resource #3} corresponding to the resource C in the resource A, and may not transmit {symbol #3} mapped to {resource #3) corresponding to the resource C. As a result, the base station may map and transmit the symbol sequence {symbol #1, symbol #2, symbol #4} to and in {resource #1, resource #2, resource #4}, respectively.

The UE may determine the resource A and the resource B from scheduling information for the symbol sequence A from the base station, and determine the resource C which is a region where the resource A and the resource B overlap. The UE may receive the symbol sequence A based on the assumption that the symbol sequence A is mapped to the entire resource A but transmitted in only the remaining regions except for the resource C in the resource A. For example, if the symbol sequence A includes {symbol #1, symbol #2, symbol #3, symbol 4}, the resource A includes {resource #1, resource #2, resource #3, resource #4}, and the resource B includes {resource #3, resource #5}, the UE may assume that the symbol sequence A {symbol #1, symbol #2, symbol #3, symbol 4} are mapped to {resource #1, resource #2, resource #3, resource #4}, respectively, but {symbol #3} mapped to {resource #3} corresponding to the resource C is not transmitted, and the UE may receive a symbol sequence {symbol #1, symbol #2, symbol #4} corresponding to {resource #1, resource #2, resource #4}, which are the remaining resources except for {resource #3} corresponding to the resource C in the resource A. As a result, the UE perform a subsequent reception operation assuming that the symbol sequence {symbol #1, symbol #2, symbol #4} are mapped to and transmitted in {resource #1, resource #2, resource #4}, respectively.

Hereinafter, a method for configuring a rate matching resource for the purpose of rate matching in a 5G communication system will be described in greater detail. The rate matching refers to adjusting the size of a signal by considering the amount of resources capable of transmitting the signal. For example, the rate matching of a data channel may refer, for example, to the size of data being adjusted without mapping and transmitting the data channel for a specific time and frequency resource region.

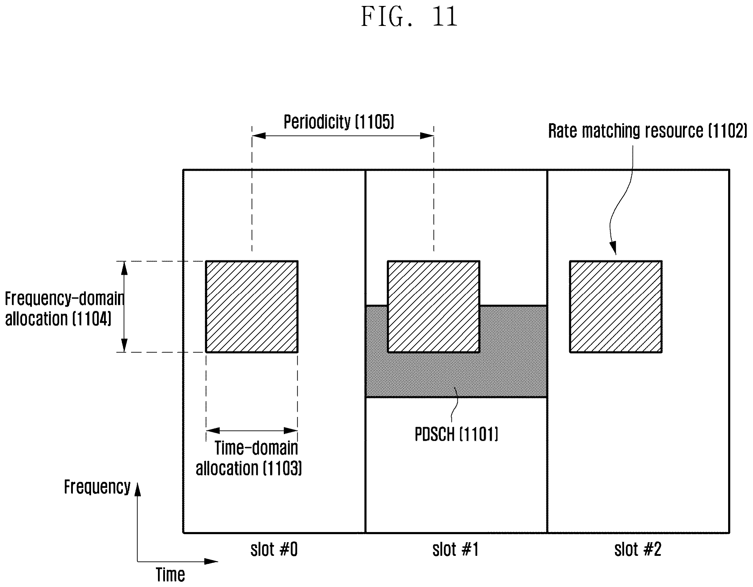

FIG. 11 is a diagram illustrating an example method in which a base station and a UE perform data transmission/reception by considering a downlink data channel and a rate matching resource according to various embodiments.

FIG. 11 shows a downlink data channel (PDSCH) 1101 and a rate matching resource 1102. The base station may configure one or more rate matching resources 1102 to the UE through higher layer signaling (e.g., RRC signaling). The configuration information for the rate matching resource 1102 may include time-domain resource allocation information 1103, frequency-domain resource allocation information 1104, and periodicity information 1105. In the following description, a bitmap corresponding to the frequency-domain resource allocation information 1104 is called a "first bitmap", a bitmap corresponding to the time-domain resource allocation information 1103 is called a "second bitmap", and a bitmap corresponding to the periodicity information 1105 is called a "third bitmap". If some or all of the time and frequency resources of the scheduled data channel 1101 overlap with the configured rate matching resource 1102, the base station may rate-match the data channel 1101 in the rate matching resource 1102 and transmit it. The UE may perform data reception and decoding after assuming that the data channel 1101 has been rate-matched in the rate matching resource 1102.

Through an additional configuration (corresponding to a "rate matching indicator" in the DCI format described above), the base station may dynamically notify the UE of whether the data channel will be rate-matched in the configured rate matching resource via DCI. For example, the base station may select some of the configured rate matching resources to group the selected resources into a rate matching resource group, and may indicate the UE whether to rate-match the data channel for each rate matching resource group through DCI using a bitmap scheme. For example, if four rate matching resources RMR#1, RMR#2, RMR#3 and RMR#4 are configured, the base station may configure RMG#1= {RMR#1, RMR#2} and RMG#2={RMR#3, RMR#4} as rate matching groups, and may indicate whether to perform rate matching in each of RMG#1 and RMG#2 to the UE with a bitmap, using 2 bits of a DCI field. For example, the base station may indicate "1" if rate matching needs to be performed, and may indicate "0" if rate matching does not need to be performed.

The 5G supports the granularity of "RB symbol level" and "RE level" as a method for configuring the above-described rate matching resource to the UE. Specifically, a configuration method below may be followed.

RB Symbol Level

The UE may be configured with a maximum of four RateMatchPatterns per BWP via higher layer signaling, and one RateMatchPattern may include the following information.

- As a reserved resource in the BWP, a resource may be included in which a time and frequency resource region of that reserved resource is configured by a combination of an RB-level bitmap and a symbol-level bitmap in the frequency domain. The reserved resource may span over one or two slots. A time-domain pattern (periodicityAndPattern) in which a time and frequency region including a pair of RB level and symbol level bitmaps are repeated may be additionally configured.
- A time and frequency domain resource region configured as a CORESET in the BWP and a resource region corresponding to a time-domain pattern configured as a search space configuration in which the resource region is repeated may be included.

RE Level

The UE may be configured with the following information through higher layer signaling.

- As configuration information (lte-CRS-ToMatchAround) for RE corresponding to an LTE cell-specific reference signal or common reference signal (CRS) pattern, the number of LTE CRS ports (nrofCRS-Ports) and the value of LTE-CRS-vshift(s) (v-shift), center subcarrier location information (carrierFreqDL) of an LTE carrier from the reference frequency point (e.g., reference point A), the bandwidth size (carrierBandwidthDL) information of the LTE carrier, subframe configuration information (mbsfn-SubframConfigList) corresponding to a multicast-broadcast single-frequency network (MBSFN), etc. may be included. Based on the above-described information, the UE may determine the location of the CRS in the NR slot corresponding to the LTE subframe.
- Configuration information for a resource set corresponding to one or plural zero power (ZP) CSI-RSs in the BWP may be included.

[LTE CRS Rate Match Related]

A rate match process for the above-described LTE CRS will be described in detail. For the coexistence of long term evolution (LTE) and new RAT (NR) (LTE-NR coexistence), the NR provides a function of configuring a cell-specific reference signal (CRS) pattern of LTE to an NR UE. For example, the CRS pattern may be provided by RRC signaling including at least one parameter within ServingCellConfig information element (IE) or ServingCellConfigCommon IE. This parameter may include, for example, lte-CRS-ToMatchAround, lte-CRS-PatternList1-r16, lte-CRS- PatternList2-r16, crs-RateMatch-PerCORESETPoolIndex-r16, etc.

In Rel-15 NR, a function is provided in which one CRS pattern may be configured per serving cell through the lte-CRS-ToMatchAround parameter. In Rel-16 NR, the above function is extended to enable configuration of plural CRS patterns per serving cell. For example, one CRS pattern per one LTE carrier may be configured to a single transmission and reception point (single-TRP) configured UE, and two CRS patterns per one LTE carrier may be configured to a multi-TRP configured UE. For example, in the single-TRP configured UE, up to three CRS patterns per serving cell may be configured through the lte-CRS-PatternList1-r16 parameter. For another example, a CRS may be configured for each TRP in the multi-TRP configured UE. That is, a CRS pattern for TRP1 may be configured through the lte-CRS-PatternList1-r16 parameter, and a CRS pattern for TRP2 may be configured through the lte-CRS-PatternList2-r16 parameter. On the other hand, when two TRPs are configured as described above, whether to apply both the CRS patterns of TRP1 and TRP2 or only the CRS pattern for one TRP to a specific PDSCH is determined through crs-RateMatch-PerCORESETPoolIndex-r16 parameter. When the crs-RateMatch-PerCORESETPoolIndex-r16 parameter is configured as enabled, only one TRP CRS pattern is applied, and in other cases, both TRP CRS patterns are applied.

Table 17 shows the ServingCellConfig IE including the CRS pattern, and Table 18 shows the RateMatchPatternLTE-CRS IE including at least one parameter for the CRS pattern.

[Table 17]

```
ServingCellConfig ::=               SEQUENCE {
    tdd-UL-DL-ConfigurationDedicated    TDD-UL-DL-ConfigDedicated
OPTIONAL,   -- Cond TDD
    initialDownlinkBWP              BWP-DownlinkDedicated
OPTIONAL,   -- Need M
    downlinkBWP-ToReleaseList       SEQUENCE (SIZE (1..maxNrofBWPs)) OF BWP-Id
OPTIONAL,   -- Need N
    downlinkBWP-ToAddModList        SEQUENCE (SIZE (1..maxNrofBWPs)) OF BWP-Downlink
OPTIONAL,   -- Need N
    firstActiveDownlinkBWP-Id       BWP-Id
OPTIONAL,   -- Cond SyncAndCellAdd
    bwp-InactivityTimer             ENUMERATED {ms2, ms3, ms4, ms5, ms6, ms8, ms10, ms20, ms30,
                                        ms40,ms50, ms60, ms80,ms100, ms200,ms300, ms500,
                                        ms750, ms1280, ms1920, ms2560, spare10, spare9,
spare8,
                                        spare7, spare6, spare5, spare4, spare3, spare2,
spare1 }   OPTIONAL,   --Need R
    defaultDownlinkBWP-Id           BWP-Id
OPTIONAL,   -- Need S
    uplinkConfig                    UplinkConfig
OPTIONAL,   -- Need M
    supplementaryUplink             UplinkConfig
OPTIONAL,   -- Need M
    pdcch-ServingCellConfig         SetupRelease { PDCCH-ServingCellConfig }
OPTIONAL,   -- Need M
    pdsch-ServingCellConfig         SetupRelease { PDSCH-ServingCellConfig }
OPTIONAL,   -- Need M
    csi-MeasConfig                  SetupRelease { CSI-MeasConfig }
OPTIONAL,   -- Need M
    sCellDeactivationTimer          ENUMERATED {ms20, ms40, ms80, ms160, ms200, ms240,
                                        ms320, ms400, ms480, ms520, ms640, ms720,
                                        ms840, ms1280, spare2,spare1}     OPTIONAL,   --
Cond ServingCellWithoutPUCCH
    crossCarrierSchedulingConfig    CrossCarrierSchedulingConfig
OPTIONAL,   -- Need M
    tag-Id                          TAG-Id,
    dummy                           ENUMERATED {enabled}
OPTIONAL,   -- Need R
    pathlossReferenceLinking        ENUMERATED {spCell, sCell}
OPTIONAL,   -- Cond SCellOnly
    servingCellMO                   MeasObjectId
OPTIONAL,   -- Cond MeasObject
    ...,
    [[
    lte-CRS-ToMatchAround           SetupRelease { RateMatchPatternLTE-CRS }
OPTIONAL,   -- Need M
    rateMatchPatternToAddModList    SEQUENCE (SIZE (1..maxNrofRateMatchPatterns)) OF
RateMatchPattern    OPTIONAL,   -- Need N
    rateMatchPatternToReleaseList   SEQUENCE (SIZE (1..maxNrofRateMatchPatterns)) OF
RateMatchPatternId   OPTIONAL,   -- Need N
    downlinkChannelBW-PerSCS-List   SEQUENCE (SIZE (1..maxSCSs)) OF SCS-SpecificCarrier
OPTIONAL    -- Need S
    ]],
    [[
    supplementaryUplinkRelease      ENUMERATED {true}
OPTIONAL,   -- Need N
    tdd-UL-DL-ConfigurationDedicated-IAB-MT-r16    TDD-UL-DL-ConfigDedicated-IAB-MT-r16
OPTIONAL,   -- Cond TDD_IAB
    dormantBWP-Config-r16           SetupRelease { DormantBWP-Config-r16 }
OPTIONAL,   -- Need M
```

```
    ca-SlotOffset-r16              CHOICE {
        refSCS15kHz                    INTEGER (-2..2),
        refSCS30KHz                    INTEGER (-5..5),
        refSCS60KHz                    INTEGER (-10..10),
        refSCS120KHz                   INTEGER (-20..20)
    }
OPTIONAL,   -- Cond AsyncCA
    channelAccessConfig-r16            SetupRelease { ChannelAccessConfig-r16 }
OPTIONAL,   -- Need M
    intraCellGuardBandsDL-List-r16     SEQUENCE (SIZE (1..maxSCSs)) OF
IntraCellGuardBandsPerSCS-r16          OPTIONAL,   -- Need S
    intraCellGuardBandsUL-List-r16     SEQUENCE (SIZE (1..maxSCSs)) OF
IntraCellGuardBandsPerSCS-r16          OPTIONAL,   -- Need S
    csi-RS-ValidationWith-DCI-r16      ENUMERATED {enabled}
OPTIONAL,   -- Need R
    lte-CRS-PatternList1-r16           SetupRelease { LTE-CRS-PatternList-r16 }
OPTIONAL,   -- Need M
    lte-CRS-PatternList2-r16           SetupRelease { LTE-CRS-PatternList-r16 }
OPTIONAL,   -- Need M
    crs-RateMatch-PerCORESETPoolIndex-r16  ENUMERATED {enabled}
OPTIONAL,   -- Need R
    enableTwoDefaultTCI-States-r16     ENUMERATED {enabled}
OPTIONAL,   -- Need R
    enableDefaultTCI-StatePerCoresetPoolIndex-r16 ENUMERATED {enabled}
OPTIONAL,   -- Need R
    enableBeamSwitchTiming-r16         ENUMERATED {true}
OPTIONAL,   -- Need R
    cbg-TxDiffTBsProcessingType1-r16   ENUMERATED {enabled}
OPTIONAL,   -- Need R
    cbg-TxDiffTBsProcessingType2-r16   ENUMERATED {enabled}
OPTIONAL   -- Need R
    ]]
}
```

[Table 18]

```
              –    RateMatchPatternLTE-CRS

The IE RateMatchPatternLTE-CRS is used to configure a pattern to rate match
around LTE CRS. See TS 38.214 [19], clause 5.1.4.2.
```

**RateMatchPatternLTE-CRS** information element

```
-- ASN1START
-- TAG-RATEMATCHPATTERNLTE-CRS-START

RateMatchPatternLTE-CRS ::=        SEQUENCE {
    carrierFreqDL                   INTEGER (0..16383),
    carrierBandwidthDL               ENUMERATED {n6, n15, n25, n50, n75, n100, spare2, spare1},
    mbsfn-SubframeConfigList          EUTRA-MBSFN-SubframeConfigList
OPTIONAL,   -- Need M
    nrofCRS-Ports                   ENUMERATED {n1, n2, n4},
    v-Shift                         ENUMERATED {n0, n1, n2, n3, n4, n5}
}

LTE-CRS-PatternList-r16 ::=        SEQUENCE (SIZE (1..maxLTE-CRS-Patterns-r16)) OF
RateMatchPatternLTE-CRS

-- TAG-RATEMATCHPATTERNLTE-CRS-STOP
-- ASN1STOP
```

| RateMatchPatternLTE-CRS field descriptions |
|---|
| **carrierBandwidthDL** <br> BW of the LTE carrier in number of PRBs (see TS 38.214 [19], clause 5.1.4.2). |
| **carrierFreqDL** <br> Center of the LTE carrier (see TS 38.214 [19], clause 5.1.4.2). |
| **mbsfn-SubframeConfigList** <br> LTE MBSFN subframe configuration (see TS 38.214 [19], clause 5.1.4.2). |
| **nrofCRS-Ports** <br> Number of LTE CRS antenna port to rate-match around (see TS 38.214 [19], clause 5.1.4.2). |
| **v-Shift** <br> Shifting value v-shift in LTE to rate match around LTE CRS (see TS 38.214 [19], clause 5.1.4.2). |

[PDSCH: Frequency-Domain Resource Allocation Related]

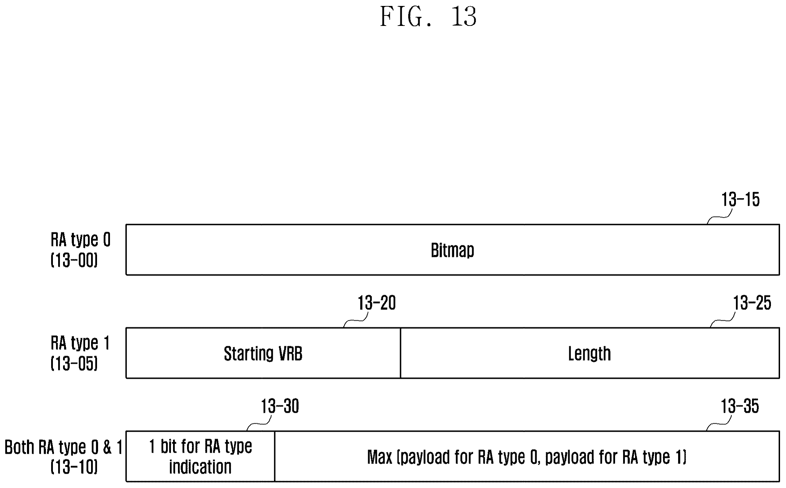

FIG. 13 is a diagram illustrating an example of frequency-domain resource allocation of a PDSCH in a wireless communication system according to various embodiments.

FIG. 13 shows three frequency-domain resource allocation methods of type 0 (13-00), type 1 (13-05), and dynamic switch (13-10), which are configurable through a higher layer in the NR wireless communication system.

Referring to FIG. 13, in the case 13-00 where the UE is configured to use only resource type 0 via higher layer signaling, some DCI for allocation of PDSCH to the UE includes a bitmap including NRBG bits. The conditions for this will be described later. Here, NRBG denotes the number of resource block groups (RBGs) determined as shown in Table 19 below according to a BWP size allocated by a BWP indicator and a higher layer parameter rbg-Size, and data is transmitted in RBG indicated as '1' by the bitmap.

[Table 19]

| Bandwidth Part Size | Configuration 1 | Configuration 2 |
|---|---|---|
| 1 - 36 | 2 | 4 |
| 37 - 72 | 4 | 8 |
| 73 - 144 | 8 | 16 |
| 145 - 275 | 16 | 16 |

In the case 13-05 where the UE is configured to use only resource type 1 via higher layer signaling, some DCI for allocation of PDSCH to the UE includes frequency-domain resource allocation information including $\left\lceil \log_2 (N_{RB}^{DL,BWP} (N_{RB}^{DL,BWP} +1)/2） \right\rceil$ bits. The conditions for this will be described later. Through this information, the base station may configure a starting VRB 13-20 and a length 13-25 of frequency-domain resources continuously allocated therefrom.

In the case 13-10 where the UE is configured to use both resource type 0 and resource type 1 via higher layer signaling, some DCI for allocation of PDSCH to the UE includes frequency-domain resource allocation information including bits of a greater value 13-35 between payload 13-15 for configuring resource type 0 and payload 13-20 and 13-25 for configuring resource type 1. The conditions for this will be described later. Here, one bit may be added to the most significant bit (MSB) of the frequency-domain resource allocation information in the DCI. If the corresponding bit has a value of '0', it indicates that resource type 0 is used, and if the corresponding bit has a value of '1', it indicates that resource type 1 is used.

[PDSCH/PUSCH: Time-Domain Resource Allocation Related]

Hereinafter, a method for time-domain resource allocation for a data channel in a nextgeneration mobile communication system (5G or NR system) will be described in greater detail.

The base station may configure to the UE a table for time-domain resource allocation information on a downlink data channel (PDSCH: physical downlink shared channel) and an uplink data channel (PUSCH: physical uplink shared channel) via higher layer signaling (e.g., RRC signaling). For PDSCH, a table including maxNrofDL-Allocations=16 entries may be configured, and for PUSCH, a table including maxNrofUL-Allocations=16 entries may be configured. In an embodiment, the time-domain resource allocation information may include PDCCH-to-PDSCH slot timing (corresponding to a time interval in slot units between a time point at which a PDCCH is received and a time point at which a PDSCH scheduled by the received PDCCH is transmitted, and denoted by K0), PDCCH-to-PUSCH slot timing (corresponding to a time interval in slot units between a time point at which a PDCCH is received and a time point at which a PUSCH scheduled by the received PDCCH is transmitted, and denoted by K2), information on the position and length of a starting symbol where the PDSCH or PUSCH is scheduled within a slot, a mapping type of the PDSCH or PUSCH, etc. For example, information such as Table 20 or Table 21 below may be transmitted from the base station to the UE.

[Table 20]

PDSCH-TimeDomainResourceAllocationList information element

PDSCH-TimeDomainResourceAllocationList ::= SEQUENCE (SIZE(1..maxNrofDL-Allocations)) OF PDSCH-TimeDomainResourceAllocation

PDSCH-TimeDomainResourceAllocation ::= SEQUENCE {
    k0                             INTEGER(0..32)        OPTIONAL,
-- Need S
      mappingType              ENUMERATED {typeA, typeB},
      startSymbolAndLength      INTEGER (0..127),
}

[Table 21]

| |
|---|
| PUSCH-TimeDomainResourceAllocationList information element |
| PUSCH-TimeDomainResourceAllocationList ::= SEQUENCE (SIZE(1..maxNrofUL-Allocations)) OF PUSCH-TimeDomainResourceAllocation |
| PUSCH-TimeDomainResourceAllocation ::= SEQUENCE { |
|     k2                                         INTEGER(0..32)         OPTIONAL, -- Need S |
|         mappingType                 ENUMERATED {typeA, typeB}, |
|         startSymbolAndLength        INTEGER (0..127), |

The base station may notify one of the entries in the above-described table for the time-domain resource allocation information to the UE via L1 signaling (e.g., DCI) (e.g., it may be indicated by a 'time-domain resource allocation' field in DCI). Based on the DCI received from the base station, the UE may acquire time-domain resource allocation information for PDSCH or PUSCH.

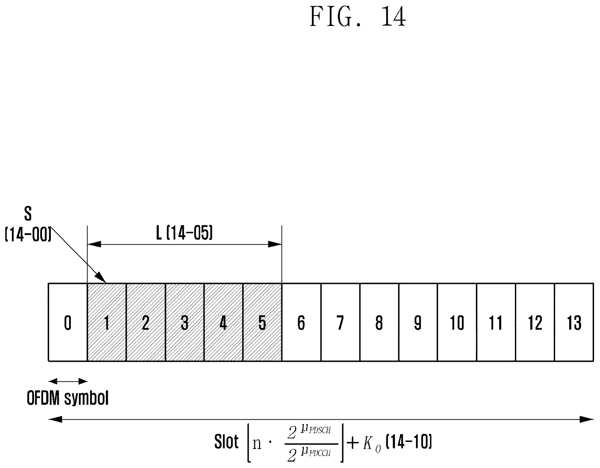

FIG. 14 is a diagram illustrating an example of time-domain resource allocation of a PDSCH in a wireless communication system according to various embodiments.

Referring to FIG. 14, the base station may indicate a time-domain position of a PDSCH resource according to subcarrier spacings (SCSs) ($\mu_{PDSCH}$, $\mu_{PDCCH}$) of a data channel and a control channel and a scheduling offset (K0) value, configured using a higher layer, and a start position 14-00 and a length 14-05 of an OFDM symbol in one slot, dynamically indicated via DCI.

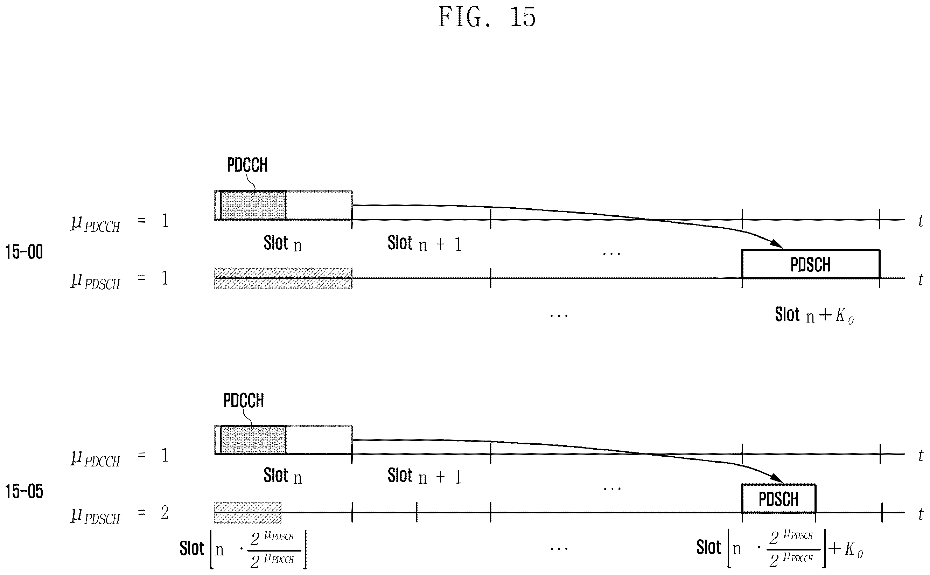

FIG. 15 is a diagram illustrating an example of time-domain resource allocation based on subcarrier spacings of a data channel and a control channel in a wireless communication system according to various embodiments.

Referring to FIG. 15, in the case 15-00 where a data channel and a control channel have the same subcarrier spacing ($\mu_{PDSCH} = \mu_{PDCCH}$), since slot numbers for data and control are the same, the base station and the UE may generate a scheduling offset according to the predetermined slot offset K0. On the other hand, in the case 15-05 that a data channel and a control channel have different subcarrier spacings ($\mu_{PDSCH} \neq \mu_{PDCCH}$), since slot numbers for data and control are different, the base station and the UE may generate a scheduling offset according to the predetermined slot offset K0 based on the subcarrier spacing of a PDCCH.

[PDSCH: Processing Procedure Time]

A PDSCH processing procedure time will be described. When the base station schedules the UE to transmit a PDSCH using DCI format 1_0, 1_1, or 1_2, the UE may require a PDSCH processing procedure time for reception of the PDSCH by applying a transmission method indicated through DCI (modulation/demodulation and coding indication index (MCS), demodulation reference signal related information, time and frequency resource allocation information, etc.) In the NR, the PDSCH processing procedure time is defined in consideration of the above method. The PDSCH processing procedure time of the UE may follow Equation 3 below.

[Equation 3]

$$T_{proc,1} = ( N_1 + d_{1,1} + d_2 )( 2048 + 144 ) \kappa 2^{-\mu} T_c + T_{ext}$$

Each variable in $T_{proc,1}$ described by Equation 3 may have the following meaning.

- $N_1$: This is the number of symbols determined according to numerology $\mu$ and UE processing capability 1 or 2 based on the UE capability. When UE processing capability 1 is reported according to UE capability report, $N_1$ may have values in Table 22, and when UE processing capability 2 is reported and it is configured via higher layer signaling that UE processing capability 2 can be used, $N_1$ may have values in Table 23. The numerology $\mu$ may correspond to the minimum value among $\mu_{PDCCH}$, $\mu_{PDSCH}$, and $\mu_{UL}$ so as to maximize $T_{proc,1}$, and $\mu_{PDCCH}$, $\mu_{PDSCH}$, and $\mu_{UL}$ may refer to the numerology of a PDCCH for scheduling of a PDSCH, the numerology of the scheduled PDSCH, and the numerology of an uplink channel through which HARQ-ACK is to be transmitted, respectively.

[Table 22] PDSCH processing time in case of PDSCH processing capability 1

| $\mu$ | PDSCH decoding time $N_1$ [symbols] | |
|---|---|---|
| | In case that both PDSCH mapping types A and B are dmrs-AdditionalPosition = pos0 in higher layer signaling DMRS-DownlinkConfig | In case that both PDSCH mapping types A and B are not dmrs-AdditionalPosition = pos0 in higher layer signaling DMRS-DownlinkConfig, or that no higher layer parameters are configured |
| 0 | 8 | $N_{1,0}$ |
| 1 | 10 | 13 |
| 2 | 17 | 20 |
| 3 | 20 | 24 |

[Table 23] PDSCH processing time in case of PDSCH processing capability 2

| $\mu$ | PDSCH decoding time $N_1$ [symbols] |
|---|---|
| | In case that both PDSCH mapping types A and B are dmrs-AdditionalPosition = pos0 in higher layer signaling DMRS-DownlinkConfig |
| 0 | 3 |
| 1 | 4.5 |
| 2 | 9 for frequency range 1 |

- $\kappa$: 64
- $T_{ext}$: In the case where the UE uses a shared spectrum channel access scheme, the UE may calculate $T_{ext}$ and apply it to the PUSCH processing time. Otherwise, $T_{ext}$ is assumed to be 0.
- If $l_1$ indicating a PDSCH DMRS position value is 12, $N_{1,0}$ in Table 22 has the value of 14, otherwise it has the value of 13.
- With regard to the PDSCH mapping type A, if the last symbol of a PDSCH is the i-th symbol in a slot where the PDSCH is transmitted, and i < 7, then $d_{1,1}$ is 7-i, otherwise $d_{1,1}$ is 0.
- $d_2$: In the case where a PUCCH having a high priority index and a PUCCH or PUSCH having a low priority index overlap in time, $d_2$ of the PUCCH having a high priority index may be configured as the value reported by the UE. Otherwise, $d_2$ is 0.
- In the case where the PDSCH mapping type B is used for UE processing capability 1, the value of $d_{1,1}$ may be determined according to L, which is the number of symbols of a scheduled PDSCH, and d, which is the number of overlapping symbols between a PDCCH scheduling the PDSCH and the scheduled PDSCH, as follows.

If $L \geq 7$, then $d_{1,1}=0$.
If $L \geq 4$ and $L \leq 6$, then $d_{1,1}=7-L$.
If L=3, then $d_{1,1}=\min(d, 1)$.
If L=2, then $d_{1,1}=3+d$.

- In the case where the PDSCH mapping type B is used for UE processing capability 2, the value of $d_{1,1}$ may be determined according to L, which is the number of symbols of a scheduled PDSCH, and d, which is the number of overlapping symbols between a PDCCH scheduling the PDSCH and the scheduled PDSCH, as follows.

If $L \geq 7$, then $d_{1,1}=0$.
If $L \geq 4$ and $L \leq 6$, then $d_{1,1}=7-L$.
If L=2,

- If the scheduling PDCCH exists in a CORESET including three symbols, and the CORESET and the scheduled PDSCH have the same starting symbol, then $d_{1,1}=3$.
- Otherwise, $d_{1,1}=d$.
- In the case of a UE that supports capability 2 in a given serving cell, the PDSCH processing time according to UE processing capability 2 may be applied when the UE is configured with higher layer signaling, processingType2Enabled, to be enable for that cell.

If the position of the first uplink transmission symbol of the PUCCH including HARQ-ACK information (for that position, $K_1$ defined as the transmission time of HARQ-ACK, a PUCCH resource used for HARQ-ACK transmission, and timing advance effect may be considered) is not started before the first uplink transmission symbol that appears after a time equal to $T_{proc,1}$ from the last symbol of the PDSCH, the UE should transmit a valid HARQ-ACK message. That is, the UE should transmit the PUCCH including HARQ-ACK only when a PDSCH processing time is sufficient. Otherwise, the UE may not provide the base station with valid HARQ-ACK information corresponding to the scheduled PDSCH. The $T_{proc,1}$ may be used for both normal and extended CPs. If the PDSCH including two PDSCH transmission positions in one slot, then $d_{1,1}$ is calculated based on the first PDSCH transmission position in the corresponding slot.

[PDSCH: Reception Preparation Time during Cross-Carrier Scheduling]

In the case where $\mu_{PDCCH}$, which is numerology for transmission of a scheduling PDCCH, and $\mu_{PDSCH}$, which is numerology for transmission of a PDSCH scheduled through the corresponding PDCCH, are different in cross-carrier scheduling, $N_{pdsch}$, which is a PDSCH reception preparation time of the UE defined for a time interval between the PDCCH and the PDSCH, will be described.

If $\mu_{PDCCH} < \mu_{PDSCH}$, the scheduled PDSCH cannot be transmitted earlier than the first symbol of a slot appearing after $N_{pdsch}$ symbols from the last symbol of the PDCCH scheduling that PDSCH. A transmission symbol of the PDSCH may include a DM-RS.

If $\mu_{PDCCH} > \mu_{PDSCH}$, the scheduled PDSCH may be transmitted after $N_{pdsch}$ symbols from the last symbol of the PDCCH scheduling that PDSCH. A transmission symbol of the PDSCH may include a DM-RS.

[Table 24] $N_{pdsch}$ according to the scheduled PDCCH subcarrier spacing

| $\mu_{PDCCH}$ | $N_{pdsch}$ [symbols] |
|---|---|
| 0 | 4 |
| 1 | 5 |
| 2 | 10 |
| 3 | 14 |

[PDSCH: TCI State Activation MAC-CE]

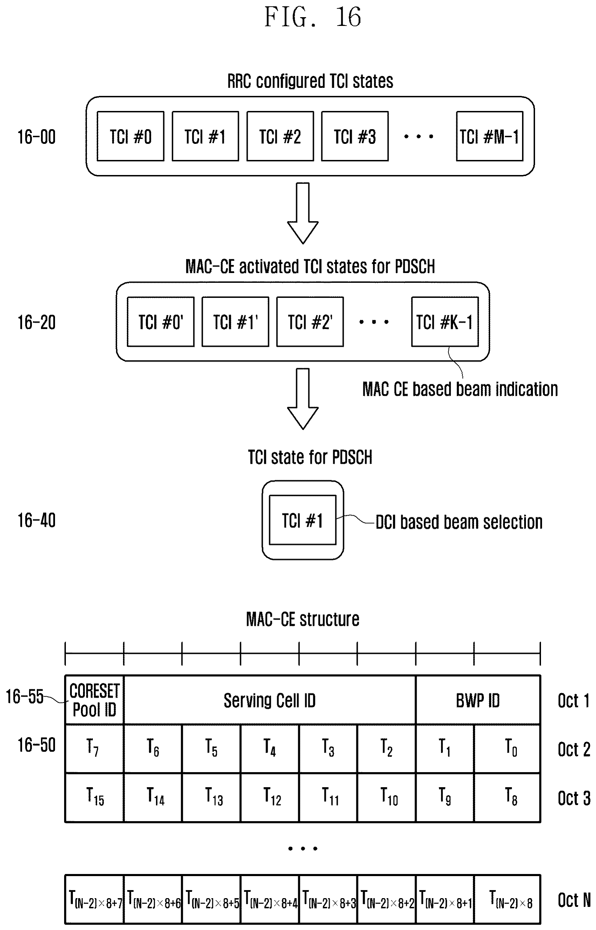

A beam configuration method for a PDSCH will be described. FIG. 16 illustrates a procedure for beam configuration and activation of a PDSCH according to various embodiments. A list of TCI states for a PDSCH may be indicated through a higher layer list such as RRC (16-00). The list of TCI states may be indicated by, for example, tci-StatesToAddModList and/or tci-StatesToReleaseList in PDSCH-Config IE per BWP. Next, a part of the list of TCI states may be activated through MAC-CE (16-20). The maximum number of activated TCI states may be determined according to the capability reported by the UE. Reference numeral 16-50 shows an example of a MAC-CE structure for PDSCH TCI state activation/deactivation.

Each field in MAC CE and values configurable for each field are as follows.

- **Serving Cell ID:** This field indicates the identity of the Serving Cell for which the MAC CE applies. The length of the field is 5 bits. If the indicated Serving Cell is configured as part of a simultaneousTCI-UpdateListl or simultaneousTCI-UpdateList2 as specified in TS 38.331 [5], this MAC CE applies to all the Serving Cells configured in the set simultaneousTCI-UpdateList1 or simultaneousTCI-UpdateList2, respectively;

- **BWP ID**: This field indicates a DL BWP for which the MAC CE applies as the codepoint of the DCI bandwidth part indicator field as specified in TS 38.212 [9]. The length of the BWP ID field is 2 bits. This field is ignored if this MAC CE applies to a set of Serving Cells;

(continued)

- **T$_i$** (TCI state identifier): If there is a TCI state with TCI-StateId i as specified in TS 38.331 [5], this field indicates the activation/deactivation status of the TCI state with TCI-StateId i, otherwise MAC entity shall ignore the Ti field. The Ti field is set to 1 to indicate that the TCI state with TCI-StateId i shall be activated and mapped to the codepoint of the DCI Transmission Configuration Indication field, as specified in TS 38.214 [7]. The Ti field is set to 0 to indicate that the TCI state with TCI-StateId i shall be deactivated and is not mapped to the codepoint of the DCI Transmission Configuration Indication field. The codepoint to which the TCI State is mapped is determined by its ordinal position among all the TCI States with Ti field set to 1, e.g. the first TCI State with T$_i$ field set to 1 shall be mapped to the codepoint value 0, second TCI State with Ti field set to 1 shall be mapped to the codepoint value 1 and so on. The maximum number of activated TCI states is 8;

- **CORESET Pool ID:** This field indicates that mapping between the activated TCI states and the codepoint of the DCI Transmission Configuration Indication set by field Ti is specific to the ControlResourceSetId configured with CORESET Pool ID as specified in TS 38.331 [5]. This field set to 1 indicates that this MAC CE shall be applied for the DL transmission scheduled by CORESET with the CORESET pool ID equal to 1, otherwise, this MAC CE shall be applied for the DL transmission scheduled by CORESET pool ID equal to 0. If the coresetPoolIndex is not configured for any CORESET, MAC entity shall ignore the CORESET Pool ID field in this MAC CE when receiving the MAC CE. If the Serving Cell in the MAC CE is configured in a cell list that contains more than one Serving Cell, the CORESET Pool ID field shall be ignored when receiving the MAC CE.

[SRS Related]

An uplink channel estimation method using a sounding reference signal (SRS) transmission of the UE will be described. The base station may configure at least one SRS configuration for each uplink BWP in order to transfer configuration information for SRS transmission to the UE, and may configure at least one SRS resource set for each SRS configuration. For example, the base station and the UE may exchange higher signaling information as follows in order to transfer information on the SRS resource set.

- srs-ResourceSetId: SRS resource set index
- srs-ResourceIdList: A set of SRS resource indexes referenced in the SRS resource set
- resourceType: It is time-domain transmission configuration of the SRS resource referenced in the SRS resource set, and may be configured as one of 'periodic', 'semi-persistent', and 'aperiodic'. If it is configured as 'periodic' or 'semi-persistent', associated CSI-RS information may be provided according to the usage of the SRS resource set. If it is configured as 'aperiodic', an aperiodic SRS resource trigger list and slot offset information may be provided, and associated CSI-RS information may be provided according to the usage of the SRS resource set.
- usage: It is a configuration for the usage of the SRS resource referenced in the SRS resource set, and may be configured as one of 'beamManagement', 'codebook', 'nonCodebook', and 'antennaSwitching'.
- alpha, p0, pathlossReferenceRS, srs-PowerControlAdjustmentStates: Parameter configurations for adjusting the transmit power of the SRS resource referenced in the SRS resource set are provided.

The UE may understand that the SRS resource included in the set of SRS resource indexes referenced in the SRS resource set follows information configured in the SRS resource set.

In addition, the base station and the UE may transmit/receive higher layer signaling information in order to transfer individual configuration information for the SRS resource. For example, the individual configuration information for the SRS resource may include time-frequency domain mapping information within a slot of the SRS resource, and this may include information on intra-slot or inter-slot frequency hopping of the SRS resource. In addition, the individual configuration information for the SRS resource may include time-domain transmission configuration of the SRS resource, and may be configured as one of 'periodic', 'semi-persistent', and 'aperiodic'. This may be limited to have the same time-domain transmission configuration as the SRS resource set including the SRS resource. If the time-domain transmission configuration of the SRS resource is configured as 'periodic' or 'semi-persistent', an SRS resource transmission periodicity and slot offset (e.g., periodicityAndOffset) may be additionally included in the time-domain transmission configuration.

The base station may activate, deactivate, or trigger SRS transmission to the UE via higher layer signaling including RRC signaling or MAC CE signaling, or L1 signaling (e.g., DCI). For example, the base station may activate or deactivate periodic SRS transmission to the UE via higher layer signaling. The base station may indicate the UE to activate the SRS resource set, in which the resourceType is configured as periodic, via higher layer signaling, and the UE may transmit the SRS resource referenced in the activated SRS resource set. A time-frequency domain resource mapping within a slot of the transmitted SRS resource follows the resource mapping information configured in the SRS resource, and a slot mapping including the transmission periodicity and slot offset follows the periodicityAndOffset configured in the SRS resource. In addition, a spatial domain transmit filter applied to the transmitted SRS resource may refer to spatial relation info configured in the SRS resource, or may refer to associated CSI-RS information configured in the SRS resource set including the SRS resource. The UE may transmit the SRS resource within an uplink BWP activated for the periodic SRS resource activated via higher layer signaling.

For example, the base station may activate or deactivate semi-persistent SRS transmission to the UE via higher layer signaling. The base station may indicate to activate the SRS resource set through MAC CE signaling, and the UE may transmit the SRS resource referenced in the activated SRS resource set. The SRS resource set activated through MAC CE signaling may be limited to the SRS resource set in which the resource Type is configured as semi-persistent. A time-frequency domain resource mapping within a slot of the transmitted SRS resource follows the resource mapping information configured in the SRS resource, and a slot mapping including the transmission periodicity and slot offset follows the periodicityAndOffset configured in the SRS resource. In addition, a spatial domain transmit filter applied to the transmitted SRS resource may refer to spatial relation info configured in the SRS resource, or may refer to associated CSI-RS information configured in the SRS resource set including the SRS resource. If the spatial relation info is configured in the SRS resource, the spatial domain transmit filter may be determined, not based on the configured spatial relation info, but by referring to configuration information for the spatial relation info transferred through MAC CE signaling that activates semi-persistent SRS transmission. The UE may transmit the SRS resource in an uplink BWP activated for the semi-persistent SRS resource activated via higher layer signaling.

For example, the base station may trigger aperiodic SRS transmission to the UE through DCI. The base station may indicate one of aperiodic SRS resource triggers (aperiodicSRS-ResourceTrigger) through an SRS request field of DCI. The UE may understand that the SRS resource set including the aperiodic SRS resource trigger indicated through DCI in the aperiodic SRS resource trigger list, among the configuration information of the SRS resource set, is triggered. The UE may transmit the SRS resource referenced in the triggered SRS resource set. A time-frequency domain resource mapping within a slot of the transmitted SRS resource follows the resource mapping information configured in the SRS resource. In addition, a slot mapping of the transmitted SRS resource may be determined through a slot offset between a PDCCH including DCI and the SRS resource, and this may refer to the value(s) included in a slot offset set configured in the SRS resource set. Specifically, the slot offset between the PDCCH including DCI and the SRS resource may be applied with a value indicated in a time domain resource assignment field of DCI among the offset value(s) included in a slot offset set configured in the SRS resource set. In addition, a spatial domain transmit filter applied to the transmitted SRS resource may refer to spatial relation info configured in the SRS resource, or may refer to associated CSI-RS information configured in the SRS resource set including the SRS resource. The UE may transmit the SRS resource in an uplink BWP activated for the aperiodic SRS resource triggered through DCI.

When the base station triggers aperiodic SRS transmission to the UE through DCI, in order for the UE to transmit the SRS by applying the configuration information for the SRS resource, the minimum time interval between a PDCCH including the DCI for triggering the aperiodic SRS transmission and the transmitted SRS may be required. The time interval for SRS transmission of the UE may be defined as the number of symbols between the last symbol of the PDCCH including the DCI for triggering aperiodic SRS transmission and the first symbol to which the first transmitted SRS resource among the transmitted SRS resource(s) is mapped. The minimum time interval may be determined by making reference to the PUSCH preparation procedure time required for the UE to prepare PUSCH transmission. In addition, the minimum time interval may have different values depending on the usages of the SRS resource set including the transmitted SRS resource. For example, the minimum time interval may be determined as N2 symbols defined in consideration of the UE processing capability according to the UE capability by making reference to the PUSCH preparation procedure time of the UE. In addition, if the usage of the SRS resource set is configured as 'codebook' or 'antennaSwitching' by considering the usage of the SRS resource set including the transmitted SRS resource, the minimum time interval may be determined as N2 symbols, and if the usage of the SRS resource set is configured as 'nonCodebook' or 'beamManagement', the minimum time interval may be determined as N2+14 symbols. If the time interval for the periodic SRS transmission is greater than or equal to the minimum time interval, the UE may transmit the aperiodic SRS, and if the time interval for the aperiodic SRS transmission is less than the minimum time interval, the UE may ignore the DCI for triggering the aperiodic SRS.

[Table 25]

| SRS-Resource ::= SEQUENCE { |
|---|

| | |
|---|---|
| srs-ResourceId | SRS-ResourceId, |
| nrofSRS-Ports | ENUMERATED {port1, ports2, ports4}, |
| ptrs-PortIndex | ENUMERATED {n0, n1 } |
| OPTIONAL, -- Need R | |
| transmissionComb | CHOICE { |
| n2 | SEQUENCE { |
| combOffset-n2 | INTEGER (0..1), |
| cyclicShift-n2 | INTEGER (0..7) |
| }, | |
| n4 | SEQUENCE { |
| combOffset-n4 | INTEGER (0..3), |
| cyclicShift-n4 | INTEGER (0..11) |
| } | |
| }, | |
| resourceMapping | SEQUENCE { |
| startPosition | INTEGER (0..5), |
| nrofSymbols | ENUMERATED {n1, n2, n4}, |
| repetitionFactor | ENUMERATED {n1, n2, n4} |
| }, | |
| freqDomainPosition | INTEGER (0..67), |
| freqDomainShift | INTEGER (0..268), |
| freqHopping | SEQUENCE { |
| c-SRS | INTEGER (0..63), |
| b-SRS | INTEGER (0..3), |
| b-hop | INTEGER (0..3) |
| }, | |
| groupOrSequenceHopping | ENUMERATED { neither, groupHopping, sequenceHopping }, |
| resourceType | CHOICE { |
| aperiodic | SEQUENCE { |

```
                    ...

            },

            semi-persistent                 SEQUENCE {

                    periodicityAndOffset-sp              SRS-
PeriodicityAndOffset,

                    ...

            },

            periodic                        SEQUENCE {

                    periodicityAndOffset-p               SRS-
PeriodicityAndOffset,

                    ...

            }

        },

        sequenceId                          INTEGER (0..1023),

        spatialRelationInfo                 SRS-SpatialRelationInfo
OPTIONAL,     -- Need R

        ...

}
```

The spatial RelationInfo configuration information in Table 25 refers to one reference signal and applies the beam information of the reference signal to a beam used for the corresponding SRS transmission. For example, the configuration of spatialRelationInfo may include information as shown in Table 26 below.

[Table 26]

```
SRS-SpatialRelationInfo ::=       SEQUENCE {

        servingCellId                     ServCellIndex
OPTIONAL,     -- Need S

        referenceSignal                   CHOICE {

            ssb-Index                          SSB-Index,

            csi-RS-Index                       NZP-CSI-RS-ResourceId,

            srs                                SEQUENCE {

                resourceId                         SRS-ResourceId,

                uplinkBWP                          BWP-Id
```

```
            }

        }

    }
```

Referring to the spatialRelationInfo configuration, an SS/PBCH block index, CSI-RS index, or SRS index may be configured as an index of a reference signal to be referenced in order to use beam information of a specific reference signal. The higher layer signaling referenceSignal is configuration information indicating which reference signal beam information is to be referred to for the corresponding SRS transmission, ssb-index denotes the index of the SS/PBCH block, csi-RS-Index denotes the index of the CSI-RS, and srs denotes the index of the SRS. If the value of the higher layer signaling referenceSignal is configured as 'ssb-Index', the UE may apply a receive beam used upon receiving the SS/PBCH block corresponding to the ssb-Index as a transmit beam of the corresponding SRS transmission. If the value of the higher layer signaling referenceSignal is configured as 'csi-RS-Index', the UE may apply a receive beam used upon receiving the CSI-RS corresponding to the csi-RS-Index as a transmit beam of the corresponding SRS transmission. If the value of the higher layer signaling referenceSignal is configured as 'srs', the UE may apply a transmit beam used upon transmitting the SRS corresponding to srs as a transmit beam of the corresponding SRS transmission.

[PUSCH: Transmission Scheme Related]

A scheduling scheme of PUSCH transmission will be described. The PUSCH transmission may be dynamically scheduled by a UL grant in DCI or may be operated by a configured grant Type 1 or Type 2. Dynamic scheduling indication for PUSCH transmission is possible using DCI format 0_0 or 0_1.

The configured grant Type 1 PUSCH transmission does not receive a UL grant in DCI, and may be quasi-statically configured through the reception of configuredGrantConfig including rrc-ConfiguredUplinkGrant of Table 27 via higher layer signaling. The configured grant Type 2 PUSCH transmission may be semipersistently scheduled by a UL grant in DCI after the reception of configuredGrantConfig that does not include rrc-ConfiguredUplinkGrant of Table 27 via higher layer signaling. When PUSCH transmission is operated by a configured grant, parameters applied to the PUSCH transmission are applied through configuredGrantConfig, which is higher layer signaling of Table 27, except for dataScramblingIdentityPUSCH, txConfig, codebookSubset, maxRank, and scaling of UCI-OnPUSCH, which are provided by pusch-Config of Table 28, which is higher layer signaling. If the UE is provided with transformPrecoder in configuredGrantConfig, which is higher layer signaling of Table 27, the UE applies tp-pi2BPSK in the pusch-Config of Table 28 for PUSCH transmission operated by the configured grant.

[Table 27]

```
ConfiguredGrantConfig ::=          SEQUENCE {
       frequencyHopping                 ENUMERATED {intraSlot,
interSlot}                                   OPTIONAL,    -- Need
S,
       cg-DMRS-Configuration            DMRS-UplinkConfig,
       mcs-Table                        ENUMERATED {qam256,
qam64LowSE}                                      OPTIONAL,     --
Need S
       mcs-TableTransformPrecoder       ENUMERATED {qam256,
qam64LowSE}                                      OPTIONAL,     --
Need S
       uci-OnPUSCH                      SetupRelease { CG-UCI-
OnPUSCH }                                        OPTIONAL,     --
Need M
       resourceAllocation               ENUMERATED
{ resourceAllocationType0, resourceAllocationType1, dynamicSwitch },
       rbg-Size                         ENUMERATED {config2}
OPTIONAL,     -- Need S
       powerControlLoopToUse            ENUMERATED {n0, n1},
       p0-PUSCH-Alpha                   P0-PUSCH-AlphaSetId,
       transformPrecoder                ENUMERATED {enabled, disabled}
OPTIONAL,     -- Need S
       nrofHARQ-Processes               INTEGER(1..16),
       repK                             ENUMERATED {n1, n2, n4, n8},
       repK-RV                          ENUMERATED {s1-0231, s2-
0303, s3-0000}                                   OPTIONAL,     -- Need R
```

```
    periodicity                               ENUMERATED {
                                                    sym2, sym7, sym1x14,
sym2x14, sym4x14, sym5x14, sym8x14, sym10x14, sym16x14, sym20x14,
                                                    sym32x14, sym40x14,
sym64x14, sym80x14, sym128x14, sym160x14, sym256x14, sym320x14,
sym512x14,
                                                    sym640x14,
sym1024x14, sym1280x14, sym2560x14, sym5120x14,
                                                    sym6, sym1x12,
sym2x12, sym4x12, sym5x12, sym8x12, sym10x12, sym16x12, sym20x12,
sym32x12,
                                                    sym40x12, sym64x12,
sym80x12, sym128x12, sym160x12, sym256x12, sym320x12, sym512x12,
sym640x12,
                                                    sym1280x12,
sym2560x12
        },
        configuredGrantTimer                      INTEGER (1..64)
OPTIONAL,    -- Need R
        rrc-ConfiguredUplinkGrant                 SEQUENCE {
            timeDomainOffset                          INTEGER (0..5119),
            timeDomainAllocation                      INTEGER   (0..15),
            frequencyDomainAllocation                 BIT STRING (SIZE(18)),
            antennaPort                               INTEGER (0..31),
            dmrs-SeqInitialization                    INTEGER (0..1)
OPTIONAL,    -- Need R
            precodingAndNumberOfLayers                INTEGER (0..63),
            srs-ResourceIndicator                     INTEGER (0..15)
OPTIONAL,    -- Need R
            mcsAndTBS                                 INTEGER (0..31),
            frequencyHoppingOffset                    INTEGER (1..
maxNrofPhysicalResourceBlocks-1)              OPTIONAL,    -- Need
R
```

```
          pathlossReferenceIndex                    INTEGER
(0..maxNrofPUSCH-PathlossReferenceRSs-1),

              ...

          }

OPTIONAL,      -- Need R

          ...

}
```

A PUSCH transmission method will be described. A DMRS antenna port for PUSCH transmission is the same as an antenna port for SRS transmission. The PUSCH transmission may be based on a codebook-based transmission method and a non-codebook-based transmission method, respectively, depending on whether the value of txConfig in pusch-Config of Table 28, which is higher layer signaling, is 'codebook' or 'nonCodebook'.

As described above, the PUSCH transmission may be dynamically scheduled through DCI format 0_0 or 0_1, and may be quasi-statically configured by a configured grant. If scheduling for PUSCH transmission is indicated to the UE through DCI format 0_0, the UE performs beam configuration for PUSCH transmission using pucch-spatialRelationInfoID corresponding to a UE-specific PUCCH resource corresponding to the minimum ID within an uplink BWP activated in a serving cell, and in this case, the PUSCH transmission is based on a single antenna port. The UE does not expect scheduling for PUSCH transmission through DCI format 0_0 within a BWP in which a PUCCH resource including pucch-spatialRelationInfo is not configured. If the UE is not configured with txConfig in pusch-Config of Table 28, the UE does not expect to be scheduled in DCI format 0_1.

[Table 28]

```
PUSCH-Config ::=                          SEQUENCE {
       dataScramblingIdentityPUSCH               INTEGER (0..1023)
OPTIONAL,      -- Need S
       txConfig                          ENUMERATED {codebook,
nonCodebook}                              OPTIONAL,     -- Need S
       dmrs-UplinkForPUSCH-MappingTypeA         SetupRelease { DMRS-
UplinkConfig }                            OPTIONAL,     -- Need
```

```
M
        dmrs-UplinkForPUSCH-MappingTypeB          SetupRelease { DMRS-
UplinkConfig }                                    OPTIONAL,    -- Need
M


        pusch-PowerControl                        PUSCH-PowerControl
OPTIONAL,    -- Need M
        frequencyHopping                          ENUMERATED {intraSlot,
interSlot}                                        OPTIONAL,    -- Need S
        frequencyHoppingOffsetLists               SEQUENCE (SIZE (1..4)) OF
INTEGER (1.. maxNrofPhysicalResourceBlocks-1)


OPTIONAL,    -- Need M
        resourceAllocation                        ENUMERATED
{ resourceAllocationType0, resourceAllocationType1, dynamicSwitch},
        pusch-TimeDomainAllocationList            SetupRelease { PUSCH-
TimeDomainResourceAllocationList }                OPTIONAL,    -- Need M
        pusch-AggregationFactor                   ENUMERATED { n2, n4, n8 }
OPTIONAL,    -- Need S
        mcs-Table                                 ENUMERATED {qam256,
qam64LowSE}                                       OPTIONAL,    --
Need S
        mcs-TableTransformPrecoder                ENUMERATED {qam256,
qam64LowSE}                                       OPTIONAL,    --
Need S
        transformPrecoder                         ENUMERATED {enabled,
disabled}                                         OPTIONAL,    -- Need S
        codebookSubset                            ENUMERATED
{fullyAndPartialAndNonCoherent, partialAndNonCoherent,nonCoherent}


OPTIONAL, -- Cond codebookBased
        maxRank                                   INTEGER (1..4)
OPTIONAL, -- Cond codebookBased
```

| rbg-Size | ENUMERATED { config2} |
| OPTIONAL, -- Need S | |
| uci-OnPUSCH | SetupRelease { UCI- |
| OnPUSCH} | OPTIONAL, -- Need M |
| tp-pi2BPSK | ENUMERATED {enabled} |
| OPTIONAL, -- Need S | |
| ... | |
| } | |

A codebook-based PUSCH transmission will be described. The codebook-based PUSCH transmission may be dynamically scheduled through DCI format 0_0 or 0_1, and may operate quasi-statically by a configured grant. When the codebook-based PUSCH is dynamically scheduled by DCI format 0_1 or is configured quasi-statically by a configured grant, the UE determines a precoder for PUSCH transmission based on an SRS resource indicator (SRI), a transmission precoding matrix indicator (TPMI), and a transmission rank (the number of PUSCH transport layers).

The SRI may be given through a field, SRS resource indicator, in DCI or may be configured through higher layer signaling, srs-ResourceIndicator. The UE is configured with at least one SRS resource upon the codebook-based PUSCH transmission, and may be configured with up to two SRS resources. When the UE is provided with the SRI through DCI, an SRS resource indicated by the SRI denotes an SRS resource corresponding to the SRI among SRS resources transmitted before a PDCCH including that SRI. In addition, the TPMI and the transmission rank may be given through field, precoding information and number of layers, in DCI or may be configured through higher layer signaling, precodingAndNumberOfLayers. The TPMI is used to indicate a precoder applied to PUSCH transmission. If the UE is configured with one SRS resource, the TPMI is used to indicate a precoder to be applied in the configured one SRS resource. If the UE is configured with plural SRS resources, the TPMI is used to indicate a precoder to be applied in the SRS resource indicated through the SRI.

A precoder to be used for PUSCH transmission is selected from an uplink codebook having the same number of antenna ports as the value of nrofSRS-Ports in higher layer signaling, SRS-Config. In the codebook-based PUSCH transmission, the UE determines a codebook subset based on the TPMI and codebookSubset in pusch-Config, which is higher layer signaling. The codebookSubset in pusch-Config, which is higher layer signaling, may be configured with one of 'fullyAndPartialAndNonCoherent', 'partialAndNonCoherent', or 'nonCoherent' based on the UE capability reported by the UE to the base station. If the UE reports 'partialAndNonCoherent' as UE capability, the UE does not expect that the value of codebookSubset, which is higher layer signaling, is configured as 'fullyAndPartialAndNonCoherent'. In addition, if the UE reports 'nonCoherent' as UE capability, the UE does not expect that the value of codebookSubset, which is higher layer signaling, is configured as 'fullyAndPartialAndNonCoherent' or 'partialAndNonCoherent'. When nrofSRS-Ports in SRS-ResourceSet, which is higher layer signaling, indicates two SRS antenna ports, the UE does not expect that the value of codebookSubset, which is higher layer signaling, is configured as 'partialAndNonCoherent'.

The UE may be configured with one SRS resource set in which the value of usage in higher layer signaling, SRS-ResourceSet, is configured as 'codebook', and one SRS resource in the SRS resource set may be indicated through an SRI. If plural SRS resources are configured in the SRS resource set in which the usage value in higher layer signaling, SRS-ResourceSet, is configured as 'codebook', the UE expects that the values of nrofSRS-Ports in higher layer signaling, SRS-Resource, are configured as the same value for all the SRS resources.

The UE transmits, to the base station, one or plural SRS resources included in the SRS resource set in which the value of usage is configured as 'codebook' according to higher layer signaling, and the base station indicates the UE to perform PUSCH transmission by selecting one of the SRS resources transmitted by the UE and using transmit beam information of the corresponding SRS resource. Here, in the codebook-based PUSCH transmission, the SRI is used as information for selecting the index of one SRS resource and is included in DCI. Additionally, the base station includes, in the DCI, information indicating a rank and TPMI to be used by the UE for PUSCH transmission. The UE performs PUSCH transmission using the SRS resource indicated by the SRI and applying a precoder indicated by the rank and TPMI indicated based on the transmit beam of the SRS resource.

A non-codebook-based PUSCH transmission will be described. The non-codebook-based PUSCH transmission may be dynamically scheduled through DCI format 0_0 or 0_1, and may be quasi-statically operated by a configured grant. When at least one SRS resource is configured in the SRS resource set in which the value of usage in SRS-ResourceSet, which is higher layer signaling, is configured as 'nonCodebook', the UE may be scheduled with the non-codebook-based PUSCH transmission through DCI format 0_1.

For the SRS resource set in which the value of usage in SRS-ResourceSet, which is higher layer signaling, is configured as 'nonCodebook', the UE may be configured with one connected non-zero power (NZP) CSI-RS resource. The UE may perform calculation of ae precoder for SRS transmission through measurement on the NZP CSI-RS resource connected to the SRS resource set. If the difference between the last received symbol of the aperiodic NZP CSI-RS resource connected to the SRS resource set and the first symbol of aperiodic SRS transmission in the UE is less than 42 symbols, the UE does not expect information on the precoder for SRS transmission to be updated.

When the value of resource Type in SRS-ResourceSet, which is higher layer signaling, is configured as 'aperiodic', the connected NZP CSI-RS is indicated by SRS request, which is a field in DCI format 0_1 or 1_1. Here, if the connected NZP CSI-RS resource is an aperiodic NZP CSI-RS resource, the connected NZP CSI-RS exists when the value of the SRS request field in DCI format 0_1 or 1_1 is not '00'. In this case, the DCI should not indicate cross carrier or cross BWP scheduling. In addition, if the value of the SRS request indicates the existence of the NZP CSI-RS, the corresponding NZP CSI-RS is located in a slot where a PDCCH including the SRS request field is transmitted. Here, TCI states configured in the scheduled subcarrier are not configured as QCL-TypeD.

If a periodic or semi-persistent SRS resource set is configured, the connected NZP CSI-RS may be indicated through associated CSI-RS in SRS-ResourceSet, which is higher layer signaling. For the non-codebook-based transmission, the UE does not expect that spatialRelation Info, which is higher layer signaling for SRS resource, and associated CSI-RS in SRS-ResourceSet, which is higher layer signaling, are configured together.

When the UE is configured with plural SRS resources, the UE may determine a precoder and a transmission rank to be applied to PUSCH transmission, based on an SRI indicated by the base station. Here, the SRI may be indicated through an SRS resource indicator field in DCI or may be configured through higher layer signaling srs-ResourceIndicator. As in the above-described codebook-based PUSCH transmission, when the UE is provided with the SRI through DCI, an SRS resource indicated by the SRI denotes an SRS resource corresponding to the SRI among SRS resources transmitted before a PDCCH including the SRI. The UE may use one or plural SRS resources for SRS transmission, and the maximum number of SRS resources that can be simultaneously transmitted in the same symbol within one SRS resource set is determined by UE capability reported by the UE to the base station. Here, the SRS resources simultaneously transmitted by the UE occupy the same RB. The UE configures one SRS port per SRS resource. Only one SRS resource set in which the value of usage in higher layer signaling SRS-ResourceSet is configured as 'nonCodebook' may be configured, and up to four SRS resources for the noncodebook-based PUSCH transmission may be configured.

The base station transmits one NZP-CSI-RS connected to the SRS resource set to the UE, and the UE calculates a precoder to be used for transmission of one or plural SRS resources in the SRS resource set, based on a result of measurement upon reception of the NZP-CSI-RS. The UE applies the calculated precoder when transmitting, to the base station, one or plural SRS resources within the SRS resource set where the usage is configured as 'nonCodebook', and the base station selects one or plural SRS resources among the received one or plural SRS resources. In this case, in the noncodebook-based PUSCH transmission, the SRI indicates an index capable of expressing one or a combination of plural SRS resources, and the SRI is included in DCI. The number of SRS resources indicated by the SRI transmitted by the base station may be the number of transmission layers of a PUSCH, and the UE performs PUSCH transmission by applying the precoder applied for SRS resource transmission to each layer.

[PUSCH: Preparation Procedure Time]

A PUSCH preparation procedure time will be described. When the base station schedules PUSCH transmission to the UE using DCI format 0_0, 0_1, or 0_2, the UE may require the PUSCH preparation procedure time for PUSCH transmission by applying a transmission method indicated through DCI (a transmission precoding method of SRS resources, the number of transmission layers, a spatial domain transmit filter). In the NR, the PUSCH preparation procedure time is defined in consideration of this. The PUSCH preparation procedure time of the UE may follow Equation 4 below.

[Equation 4]

$$T_{proc,2} = \max(( N_2 + d_{2,1} + d_2)( 2048 + 144 ) \kappa 2^{-\mu} T_c + T_{ext} + T_{switch}, d_{2,2} )$$

Each variable in $T_{proc,2}$ described in Equation 4 may have the following meaning.

- $N_2$: It is the number of symbols determined according to numerology $\mu$ and UE processing capability 1 or 2 according to UE capability. When the UE processing capability 1 is reported according to a capability report of the UE, it may have values in Table 29. When the UE processing capability 2 is reported and it is configured via higher layer signaling that the UE processing capability 2 can be used, it may have values in Table 30.

[Table 29]

| $\mu$ | PUSCH preparation time $N_2$ [symbols] |
|---|---|
| 0 | 10 |
| 1 | 12 |
| 2 | 23 |
| 3 | 36 |

[Table 30]

| $\mu$ | PUSCH preparation time $N_2$ [symbols] |
|---|---|
| 0 | 5 |
| 1 | 5.5 |
| 2 | 11 for frequency range 1 |

- $d_{2,1}$: It is the number of symbols determined as 0 when all resource elements of the first OFDM symbol of PUSCH transmission are configured to include DM-RS only, or as 1 otherwise.
- $\kappa$: 64
- $\mu$: It follows $\mu_{DL}$ or $\mu_{UL}$, which makes $T_{proc,2}$ larger. Here, the $\mu_{DL}$ denotes numerology of a downlink where a PDCCH including DCI for scheduling a PUSCH is transmitted, and the $\mu_{UL}$ denotes numerology of an uplink where the PUSCH is transmitted.
- $T_c$: It has $1/(\Delta f_{max} \cdot N_f)$, $\Delta f_{max}$ =480 · 10$^3$Hz, $N_f$=4096.
- $d_{2,2}$: It follows a BWP switching time when DCI for scheduling a PUSCH indicates a BWP switching, and otherwise it is 0.
- $d_2$: When OFDM symbols of a PUSCH having a high priority index and a PUCCH having a low priority index overlap in time, a $d_2$ value of the PUSCH having a high priority index is used. Otherwise, $d_2$ is 0.
- $T_{ext}$: When the UE uses a shared spectrum channel access scheme, the UE may calculate $T_{ext}$ and apply it to the PUSCH preparation procedure time. Otherwise, $T_{ext}$ is assumed to be 0.
- $T_{switch}$: When an uplink switching interval is triggered, $T_{switch}$ is assumed to be the switching interval time. Otherwise, it is assumed to be 0.

When considering time-domain resource mapping information of a PUSCH scheduled through DCI and timing advance effect between uplink and downlink, the base station and the UE determine that the PUSCH preparation procedure time is not sufficient in the case where the first symbol of the PUSCH starts earlier than the first uplink symbol where the CP starts after $T_{proc,2}$ from the last symbol of the PDCCH including the DCI for scheduling the PUSCH. Otherwise, the base station and the UE determine that the PUSCH preparation procedure time is sufficient. The UE may transmit the PUSCH only if the PUSCH preparation procedure time is sufficient, and may ignore the DCI for scheduling the PUSCH if the PUSCH preparation procedure time is not sufficient.

[PUSCH: Repetitive Transmission Related]

Hereinafter, repetitive transmission of an uplink data channel in the 5G system will be described in greater detail. In the 5G system, two types of repetitive transmission methods of the uplink data channel are supported: PUSCH repetitive transmission type A and PUSCH repetitive transmission type B. The UE may be configured with one of PUSCH repetitive transmission types A and B via higher layer signaling.

PUSCH Repetitive Transmission Type A

- As described above, the symbol length and starting symbol position of the uplink data channel are determined within one slot by the time-domain resource allocation method, and the base station may notify the UE of the number of repetitive transmissions via higher layer signaling (e.g., RRC signaling) or L1 signaling (e.g., DCI).
- The UE may repetitively transmit an uplink data channel, having the same symbol length and starting symbol as the configured uplink data channel, in consecutive slots, based on the number of repetitive transmissions received from the base station. Here, if at least one symbol in a slot configured for downlink by the base station to the UE or among symbols of an uplink data channel configured for the UE are configured for downlink, the UE omits uplink data channel transmission but counts the number of repetitive transmissions of the uplink data channel.

PUSCH Repetitive Transmission Type B

- As described above, the starting symbol and length of the uplink data channel are determined within one slot by the time-domain resource allocation method, and the base station may notify the UE of the number of repetitive transmissions, numberofrepetitions, via higher layer signaling (e.g., RRC signaling) or L1 signaling (e.g., DCI).
- Based on the configured starting symbol and length of the uplink data channel, nominal repetition of the uplink data channel is determined as follows. A slot where the nth nominal repetition begins is given by $K_s + \lfloor \frac{S + n \cdot L}{N_{symb}^{slot}} \rfloor$, and a starting symbol in that slot is given by $\mathrm{mod}(S + n \cdot L, N_{symb}^{slot})$. A slot where the nth nominal repetition ends is given by $K_s + \lfloor \frac{S + (n+1) \cdot L - 1}{N_{symb}^{slot}} \rfloor$, and an end symbol in that slot is given by $\mathrm{mod}(S + (n+1) \cdot L - 1, N_{symb}^{slot})$. Here, n=0, $\cdots$, numberofrepetitions-1, S is the starting symbol of the configured uplink data channel, and L represents the symbol length of the configured uplink data channel. $K_s$ denotes the slot where PUSCH transmission starts, and $N_{symb}^{slot}$ denotes the number of symbols per slot.
- The UE determines an invalid symbol for the PUSCH repetitive transmission type B. A symbol configured for downlink by tdd-UL-DL-ConfigurationCommon or tdd-UL-DL-ConfigurationDedicated is determined as an invalid symbol for the PUSCH repetitive transmission type B. Additionally, an invalid symbol may be configured using a higher layer parameter (e.g., InvalidSymbolPattern). A higher layer parameter (e.g., InvalidSymbolPattern) provides a symbol-level bitmap spanning one or two slots to configure an invalid symbol. In the bitmap, '1' represents an invalid symbol. The periodicity and pattern of the bitmap may be configured using a higher layer parameter (e.g., periodicityAndPattern). If a higher layer parameter (e.g., InvalidSymbolPattern) is configured and InvalidSymbolPatternIndicator-ForDCIFormat0_1 or InvalidSymbolPatternIndicator-ForDCIFormat0_2 parameter indicates '1', the UE applies an invalid symbol pattern, and if the parameter indicates 0, the UE does not apply the invalid symbol pattern. If a higher layer parameter (e.g., InvalidSymbolPattern) is configured and InvalidSymbolPatternIndicator-ForDCIFormat0_1 or InvalidSymbolPatternIndicator-ForDCIFormat0_2 parameter is not configured, the UE applies the invalid symbol pattern.

After the invalid symbol is determined, the UE may consider, for each nominal repetition, symbols other than the invalid symbol as valid symbols. If one or more valid symbols are included in each nominal repetition, the nominal repetition may include one or more actual repetitions. Here, each actual repetition includes consecutive sets of valid symbols that can be used for the PUSCH repetitive transmission type B within one slot.

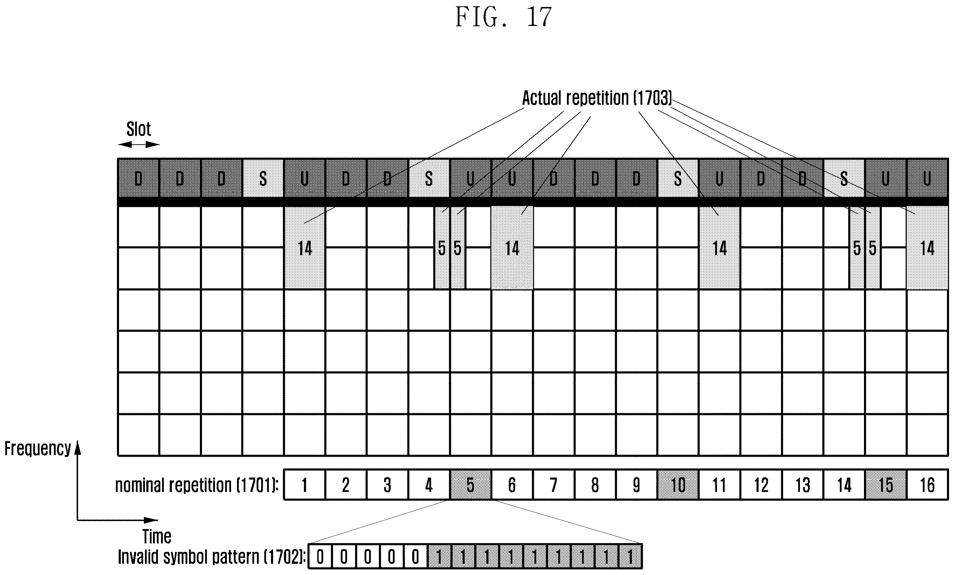

FIG. 17 is a diagram illustrating an example of PUSCH repetitive transmission type B in a wireless communication system according to various embodiments. The UE may be configured with an uplink data channel starting symbol S of 0, an uplink data channel length L of 14, and the number of repetitive transmissions of 16. In this case, nominal repetition 1701 is represented by 16 consecutive slots. Thereafter, the UE may determine a symbol, which is configured as a downlink symbol in each nominal repetition 1701, as an invalid symbol. In addition, the UE determines symbols, which are configured as '1' in an invalid symbol pattern 1702, as invalid symbols. In each nominal repetition, when valid symbols other than invalid symbols including one or more consecutive symbols in one slot, they are configured as actual repetition 1703 and transmitted.

In addition, for the PUSCH repetitive transmission, in NR Release 16, the following additional methods may be defined for configured grant-based PUSCH transmission and UL grant-based PUSCH transmission across slot boundaries.

- Method 1 (mini-slot level repetition): Two or more PUSCH repetitive transmissions are scheduled, through one UL grant, within one slot or across the boundaries of consecutive slots. In addition, for Method 1, time-domain resource allocation information in DCI indicates a resource of the first repetitive transmission. Also, based on time-domain resource information of the first repetitive transmission and the uplink or downlink direction determined for each symbol of each slot, time-domain resource information of the remaining repetitive transmissions may be determined. Each repetitive transmission occupies consecutive symbols.
- Method 2 (multi-segment transmission): Two or more PUSCH repetitive transmissions are scheduled in consecutive slots through one UL grant. In this case, one transmission is designated for each slot, and starting points or repetition lengths may be different for respective transmissions. Additionally, in Method 2, time-domain resource allocation information in DCI indicates the starting points and repetition lengths of all repetitive transmissions. In addition, in the case where repetitive transmission is performed in a single slot through Method 2, if there are plural bundles of consecutive uplink symbols in the corresponding slot, each repetitive transmission is performed for each bundle of uplink symbols. If there is only one bundle of consecutive uplink symbols in the corresponding slot, one PUSCH repetitive transmission is performed according to the method in NR Release 15.
- Method 3: Two or more PUSCH repetitive transmissions are scheduled in consecutive slots through two or more UL grants. In this case, one transmission is designated for each slot, and the nth UL grant may be received before the PUSCH transmission scheduled with the (n-1)th UL grant ends.
- Method 4: One or plural PUSCH repetitive transmissions within a single slot, or two or more PUSCH repetitive transmissions across the boundaries of consecutive slots may be supported through one UL grant or one configured grant. The number of repetitions indicated by the base station to the UE is only a nominal value, and the number of PUSCH repetitive transmissions actually performed by the UE may be greater than the nominal number of repetitions. The time-domain resource allocation information in DCI or in a configured grant denotes a resource of the first repetitive transmission indicated by the base station. The time-domain resource information of the remaining repetitive transmissions may be determined by referring to at least resource information of the first repetitive transmission and the uplink or downlink direction of the symbols. If the time-domain resource information of the repetitive transmission indicated by the base station spans slot boundaries or includes an uplink/downlink switching point, the repetitive transmission may be divided into plural repetitive transmissions. In this case, one repetitive transmission may be included for each uplink duration in one slot.

[PUSCH: Frequency Hopping Procedure]

Hereinafter, frequency hopping of an uplink data channel (PUSCH: physical uplink shared channel) in the 5G system will be described in greater detail.

In the 5G system, as a frequency hopping method of an uplink data channel, two methods are supported for each PUSCH repetition transmission type. First, PUSCH repetitive transmission type A supports intra-slot frequency hopping and inter-slot frequency hopping, and PUSCH repetitive transmission type B supports inter-repetition frequency hopping and inter-slot frequency hopping.

The intra-slot frequency hopping method supported by the PUSCH repetitive transmission type A is a method in which the UE changes the allocated resources of the frequency domain by a configured frequency offset in two hops within one slot and transmits the same. In the intra-slot frequency hopping, the start RB of each hop may be expressed by Equation 5.

[Equation 5]

$$RB_{start} = \begin{cases} RB_{start} & i=0 \\ (RB_{start} + RB_{offset}) \bmod N_{BWP}^{size} & i=1 \end{cases}$$

In Equation 5, i=0 and i=1 indicate the first hop and the second hop, respectively, and $RB_{start}$ denotes the start RB in the UL BWP and is calculated based on the frequency resource allocation method. $RB_{offset}$ indicates the frequency offset between two hops through a higher layer parameter. The number of symbols of the first hop may be represented by $\lfloor N_{symb}^{PUSCH,s}/2 \rfloor$, and the number of symbols of the second hop may be represented by $N_{symb}^{PUSCH,s} - \lfloor N_{symb}^{PUSCH,s}/2 \rfloor$. $N_{symb}^{PUSCH,s}$ is the length of PUSCH transmission within one slot, and is represented by the number of OFDM symbols.

The inter-slot frequency hopping method supported by the PUSCH repetitive transmission types A and B is a method in which the UE changes the allocated resources of the frequency domain for each slot by a configured frequency offset and transmits the same. In the inter-slot frequency hopping, the start RB during $n_s^\mu$ slots may be expressed by Equation 6.

[Equation 6]

$$RB_{start}\left(n_s^\mu\right) = \begin{cases} RB_{start} & n_s^\mu \bmod 2 = 0 \\ (RB_{start} + RB_{offset}) \bmod N_{BWP}^{size} & n_s^\mu \bmod 2 = 1 \end{cases}$$

In Equation 6, $n_s^\mu$ denotes the current slot number in multi-slot PUSCH transmission, and $RB_{start}$ denotes the start RB in the UL BWP and is calculated based on the frequency resource allocation method. $RB_{offset}$ denotes the frequency offset between two hops via a higher layer parameter.

Next, theThe inter-repetition frequency hopping method supported by the PUSCH repetitive transmission type B is to transmit the allocated resources in the frequency domain for one or plural actual repetitions within each nominal repetition by shifting them by a configured frequency offset. $RB_{start}(n)$, which is the index of the start RB in the frequency domain for one or plural actual repetitions within the nth nominal repetition, may follow Equation 7 below.

[Equation 7]

$$RB_{start}(n) = \begin{cases} RB_{start} & n \bmod 2 = 0 \\ (RB_{start} + RB_{offset}) \bmod N_{BWP}^{size} & n \bmod 2 = 1 \end{cases}$$

In Equation 7, 'n' denotes the index of nominal repetition, and $RB_{offset}$ denotes the RB offset between two hops via a higher layer parameter.

[UE Capability Report Related]

In the LTE and the NR systems, the UE may perform a procedure of reporting the UE-supported capability to a serving base station while being connected to that base station. In the description below, this is referred to as a UE capability report.

The base station may transmit a UE capability enquiry message requesting the UE capability report to the UE which is in a connected state. This message may include a UE capability request for each radio access technology (RAT) type of the base station. The request for each RAT type may include supported frequency band combination information, etc. Further, in the case of the UE capability enquiry message, the UE capability for each of plural RAT types may be requested through one RRC message container transmitted by the base station, or the base station may transmit plural UE capability enquiry messages including the UE capability request for each RAT type to the UE. For example, the UE capability enquiry may be repeated plural times in a single message, and the UE may construct a corresponding UE capability information message and report it plural times. In the next generation mobile communication system, the UE capability request may be made for multi-RAT dual connectivity (MR-DC) including NR, LTE, and E-UTRA-NR dual connectivity (EN-DC). In general, the UE capability enquiry message is transmitted initially after the UE is connected to the base station. However, the UE capability enquiry message may be requested under any condition if the base station needs.

In the above step, the UE that has received the UE capability report request from the base station constructs the UE capability according to the RAT type and band information requested by the base station. A method for constructing the UE capability by the UE in the NR system is summarized as follows.

1. If the UE receives a list of LTE and/or NR frequency bands from the base station with a UE capability request, the UE constructs a band combination (BC) for EN-DC and NR stand-alone (SA). That is, the UE constructs a candidate BC list for EN-DC and NR SA, based on bands requested to the base station with FreqBandList. In addition, the bands has priorities in the order described in FreqBandList.

2. If the base station requests the UE capability report by setting "eutra-nr-only" flag or "eutra flag", the UE removes matters relating to NR SA BCs from the above candidate BC list. This operation may occur only if the LTE base station (eNB) requests the "eutra" capability.

3. Thereafter, the UE removes fallback BCs from the candidate BC list constructed in the above step. Here, the fallback BCs refer to BCs obtainable by removing a band corresponding to at least one SCell from an arbitrary BC, and may be omitted because a BC before removing the band corresponding to at least one SCell may already cover the fallback BC. This step is also applied to MR-DC, that is, LTE bands are also applied. The BCs remaining after this step correspond to a final "candidate BC list".

4. The UE selects BCs to be reported by selecting BCs suitable for the requested RAT type from the final "candidate BC list". In this step, the UE constructs supportedBandCombinationList in a predetermined order. That is, the UE constructs the BCs and UE capability to be reported according to a predetermined order of RAT type (nr -> eutra-nr -> eutra). In addition, the UE constructs featureSetCombination for the constructed supportedBandCombinationList, and constructs a list of "candidate feature set combinations" in the candidate BC list from which a list of fallback BCs (including the same or lower level capabilities) has been removed. The "candidate feature set combinations" include all of feature set combinations for the NR and the EUTRA-NA BC, and may be obtained from feature set combinations of containers of UE-NR-Capabilities and UE-MRDC-Capabilities.

5. In addition, if the requested RAT type is EUTRA-NR and makes some influence, featureSetCombinations is included in both containers of UE-MRDC-Capabilities and UE-NR-Capabilities. However, the feature set of the NR includes only UE-NR-Capabilities.

After the UE capability is constructed, the UE transmits a UE capability information message including the UE capability to the base station. Thereafter, based on the UE capability received from the UE, the base station performs suitable scheduling and transmission/reception management for that UE.

[CA/DC Related]

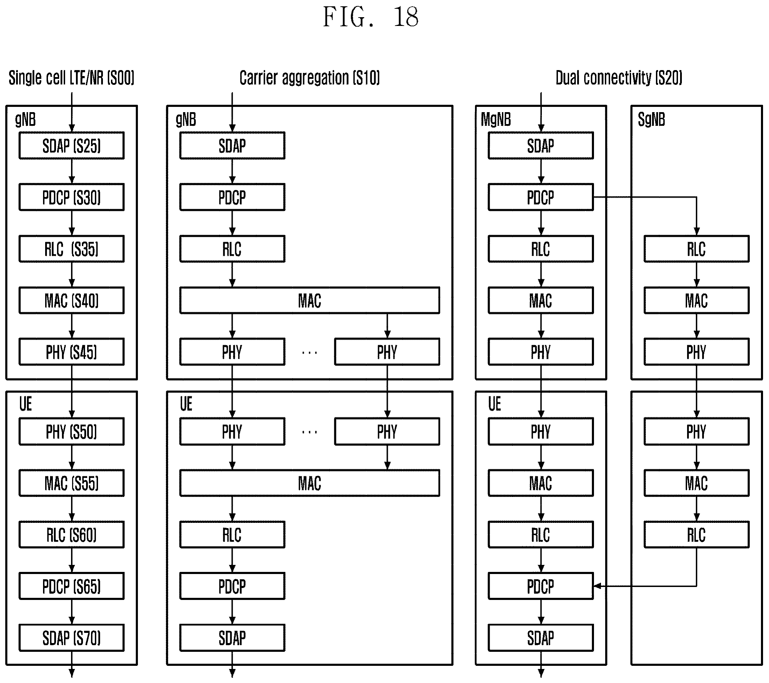

FIG. 18 is a diagram illustrating example radio protocol structures of a base station and a UE in single cell, carrier aggregation, and dual connectivity situations in a wireless communication system according to various embodiments.

Referring to FIG. 18, in each of the UE and the NR base station, the radio protocol of the next generation mobile communication system includes NR service data adaptation protocol (NR SDAP) S25 or S70, NR packet data convergence protocol (NR PDCP) S30 or S65, NR radio link control (NR RLC) S35 or S60, and NR medium access control (NR MAC) S40 or S55.

The main functions of the NR SPAP S25 or S70 may include some of the following functions.

- User data transmission function (Transfer of user plane data)
- Function of mapping QoS flow and a data bearer for uplink and downlink (Mapping between a QoS flow and a DRB for both DL and UL)
- Function of marking a QoS flow ID for uplink and downlink (Marking QoS flow ID in both DL and UL packets)
- Function of mapping reflective QoS flow to a data bearer for uplink SDAP PDUs (Reflective QoS flow to DRB mapping for the UL SDAP PDUs)

With respect to the SDAP layer device, the UE may be configured through an RRC message whether or not to use a header of the SDAP layer device or whether or not to use a function of the SDAP layer device, for each PDCP layer device, each bearer, or each logical channel. If the SDAP header is configured, a 1-bit indicator of NAS reflective QoS of the SDAP header and a 1 bit-indicator of AS reflective QoS may indicate that the UE can update or reconfigure mapping information about QoS flow and a data bearer in uplink and downlink. The SDAP header may include QoS flow ID information indicating the QoS. The QoS information may be used as data processing priority, scheduling information, etc. to support a seamless service.

The main functions of the NR PDCP S30 or S65 may include some of the following functions.

- Header compression and decompression function (Header compression and decompression: ROHC only)
- User data transmission function (Transfer of user data)
- Sequential delivery function (In-sequence delivery of upper layer PDUs)
- Non-sequential delivery function (Out-of-sequence delivery of upper layer PDUs)
- Reordering function (PDCP PDU reordering for reception)
- Duplicate detection function (Duplicate detection of lower layer SDUs)
- Retransmission function (Retransmission of PDCP SDUs)
- Ciphering and deciphering function (Ciphering and deciphering)
- Timer-based SDU removal function (Timer-based SDU discard in uplink)

In the above description, the reordering function of the NR PDCP device refers to a function of sequentially reordering PDCP PDUs received from a lower layer on the basis of a PDCP sequence number (SN). This may include a function of sequentially transferring the reordered data to an upper layer, a function of directly transferring the reordered data without regard to the order, a function of recording lost PDCP PDUs by reordering, a function of reporting the statuses of the lost PDCP PDUs to a transmitting side, or a function of requesting retransmission of the lost PDCP PDUs.

The main functions of the NR RLC S35 or S60 may include some of the following functions.

- Data transmission function (Transfer of upper layer PDUs)
- Sequential delivery function (In-sequence delivery of upper layer PDUs)
- Non-sequential delivery function (Out-of-sequence delivery of upper layer PDUs)
- ARQ function (Error correction through ARQ)
- Concatenation, segmentation, and reassembly function (Concatenation, segmentation and reassembly of RLC SDUs)
- Re-segmentation function (Re-segmentation of RLC data PDUs)
- Reordering function (Reordering of RLC data PDUs)
- Duplicate detection function (Duplicate detection)
- Error detection function (Protocol error detection)
- RLC SDU deletion function (RLC SDU discard)
- RLC re-establishment function (RLC re-establishment)

In the above description, the sequential delivery function (In-sequence delivery) of the NR RLC device refers to a function of sequentially transferring RLC PDUs received from a lower layer to an upper layer. In the case where one original RLC SDU is divided into a plurality of RLC SDUs and received, the sequential delivery function may include a function of reassembling and transmitting the RLC SDUs. The sequential delivery function may include a function of reordering the received RLC PDUs on the basis of an RLC sequence number (SN) or a PDCP SN, a function of recording lost RLC PDUs by reordering, a function of reporting the statuses of the lost RLC PDUs to a transmitting side, and a function of requesting retransmission of the lost RLC PDUs. In the case that there is a lost RLC SDU, the sequential delivery function may include a function of sequentially transferring only RLC SDUs preceding the lost RLC SDU to the upper layer. If a predetermined timer expires even when there is a lost RLC SDU, the sequential delivery function may include a function of sequentially transferring all RLC SDUs received before the timer starts to the upper layer, or a function of sequentially transferring all RLC SDUs received up to that point in time to the upper layer. In addition, the RLC PDUs may be processed in the order in which they are received (in the order of arrival, regardless of the order of sequence numbers) and delivered to the PDCP device out of order (out-of sequence delivery). In the case of segments, the segments stored in the buffer or to be received later may be received, reassembled into a complete one RLC PDU, processed, and delivered to the PDCP device. The NR RLC layer may not include a concatenation function, and this function may be performed in the NR MAC layer or replaced with a pluralxing function of the NR MAC layer.

In the above description, the non-sequential delivery function (Out-of-sequence delivery) of the NR RLC device refers to a function of transferring RLC SDUs received from a lower layer directly to an upper layer regardless of the order of the RLC SDUs. In the case where one original RLC SDU is divided into a plurality of RLC SDUs and received, the non-sequential delivery function may include a function of reassembling and transmitting the RLC SDUs, and a function of storing RLC SNs or PDCP SNs of the received RLC PDUs, reordering them, and recording lost RLC PDUs.

The NR MAC S40 or S55 may be connected to plural NR RLC layer devices included in one UE, and the main functions of the NR MAC may include some of the following functions.

- Mapping function (Mapping between logical channels and transport channels)
- Pluralxing and depluralxing function (Pluralxing/depluralxing of MAC SDUs)
- Scheduling information reporting function (Scheduling information reporting)
- HARQ function (Error correction through HARQ)
- Logical channel priority control function (Priority handling between logical channels of one UE)
- UE priority control function (Priority handling between UEs by means of dynamic scheduling)
- MBMS service identification function (MBMS service identification)
- Transport format selection function (Transport format selection)
- Padding function (Padding)

The NR PHY layer S45 or S50 may perform operations of channel-coding and modulating upper layer data to generate an OFDM symbol and transmitting it through a radio channel or demodulating and channel-decoding an OFDM symbol received through a radio channel and transmitting it to an upper layer.

The detailed structure of the above-described radio protocol structure may be variously changed according to a carrier (or cell) management scheme. For example, when the base station transmits data to the UE based on a single carrier (or cell), the base station and the UE use a protocol structure having a single structure for each layer as in S00. On the other hand, when the base station transmits data to the UE based on carrier aggregation (CA) using plural carriers in a single TRP, the base station and the UE use a protocol structure having a single structure up to RLC but pluralxing PHY layers through a MAC layer as in S10. In another example, when the base station transmits data to the UE based on dual connectivity (DC) using plural carriers in plural TRPs, the base station and the UE use a protocol structure having a single structure up to RLC but pluralxing PHY layers through a MAC layer as in S20.

Referring to the above descriptions related to PDCCH and beam configuration, since PDCCH repetitive transmission is not currently supported in Rel-15 and Rel-16 NRs, it is difficult to achieve the required reliability in scenarios requiring high reliability, such as URLLC. The disclosure provides a PDCCH repetitive transmission method through plural transmission points (TRPs), thereby improving PDCCH reception reliability of the UE. Specific methods are described in detail in the following embodiments.

Various example embodiments of the disclosure will be described in greater detail with reference to the accompanying drawings. The disclosure is applicable to both FDD and TDD systems. Hereinafter, in the disclosure, higher signaling (or higher layer signaling) is a signal transmission method in which data is transmitted from the base station to the UE using a downlink data channel of a physical layer or transmitted from the UE to the base station using an uplink data channel of a physical layer, and may be referred to as RRC signaling, PDCP signaling, or medium access control (MAC) control element (CE) (MAC CE).

In the disclosure, in determining whether to apply coordinated communication, the UE may use various methods such as a method in which PDCCH(s) for allocating PDSCH to which coordinated communication is applied has a specific format, a method in which PDCCH(s) for allocating PDSCH to which coordinated communication is applied includes a specific indicator for informing whether coordinated communication is applied, a method in which PDCCH(s) for allocating PDSCH to which coordinated communication is applied is scrambled by a specific RNTI, or a method in which it is assumed that coordinated communication is applied in a specific section indicated by a higher layer. Hereinafter, for convenience of description, the case where the UE receives a PDSCH to which coordinated communication is applied based on conditions similar to the above will be referred to as an NC-JT case.

In the disclosure, determining a priority between A and B refers to selecting one having a higher priority according to a predetermined priority rule to perform a corresponding operation, or omitting (or dropping) an operation for the other one having a lower priority, etc.

In the disclosure, although the above examples are described through a plurality of embodiments, the examples are not independent and one or more embodiments can be applied at the same time or in combination.

[NC-JT Related]

According to an embodiment of the disclosure, non-coherent joint transmission (NC-JT) may be used for the UE to receive a PDSCH from plural TRPs.

Unlike conventional communication systems, the 5G wireless communication system may support not only a service requiring a high transfer rate, but also a service having a very short transmission delay and a service requiring a high connection density. In the wireless communication network including plural cells, transmission and reception points (TRPs), or beams, the coordinated transmission between respective cells, TRPs, and/or beams may satisfy various service requirements by increasing the strength of a signal received by the UE or efficiently performing interference control between respective cells, TRPs, and/or beams.

Joint transmission (JT), which is a representative transmission technology for the above-described coordinated communication, is a technology that transmits a signal to a single UE through plural different cells, TRPs, and/or beams to increase the strength or processing rate of the signal received by the UE. Here, channels between each cell, TRP, and/or beam and the UE may have significantly different characteristics. In particular, the NC-JT that supports non-coherent precoding between cells, TRPs, and/or beams, individual precoding may require individual precoding, MCS, resource allocation, TCI indication, etc. according to link-specific channel characteristic between each cell, TRP, and/or beam and the UE.

The above-described NC-JT transmission may be applied to at least one channel among a downlink data channel (PDSCH: physical downlink shared channel), a downlink control channel (e.g., PDCCH: physical downlink control channel), an uplink data channel (PUSCH: physical uplink shared channel), and an uplink control channel (PUCCH: physical uplink control channel). During the PDSCH transmission, transmission information such as precoding, MCS, resource allocation, and TCI is indicated via DL DCI, and the transmission information needs to be independently indicated for each cell, TRP, and/or beam for the NC-JT transmission. This is a major factor that increases payload required for DL DCI transmission, which may adversely affect the reception performance of the PDCCH for transmitting DCI. Therefore, it is necessary to carefully design a tradeoff between the amount of DCI information and the control information reception performance for JT support of the PDSCH.

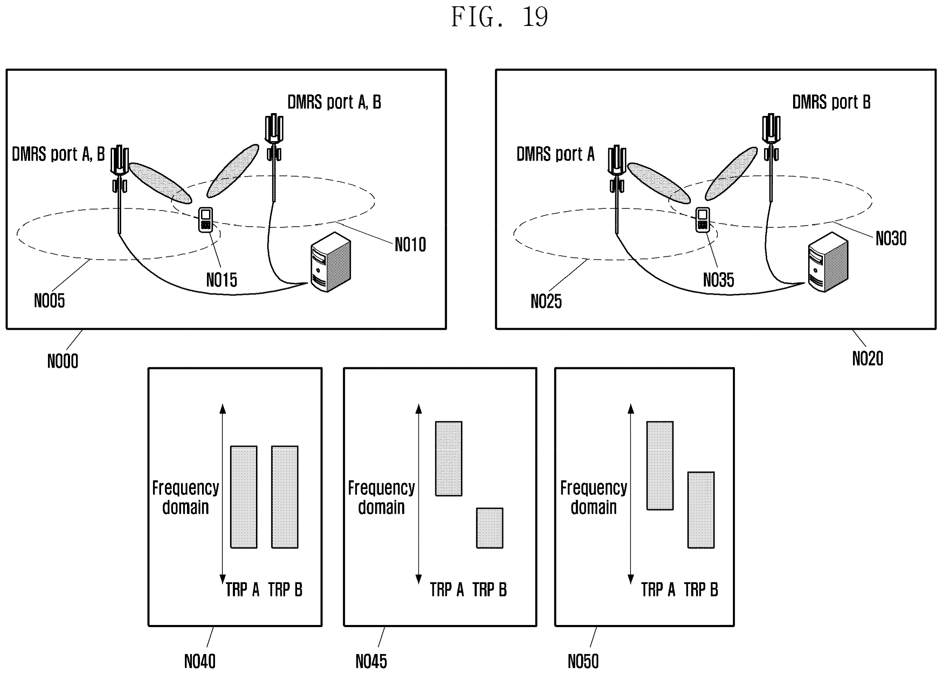

FIG. 19 is a diagram illustrating an example of an antenna port configuration and resource allocation for transmitting a PDSCH using cooperative communication in a wireless communication system according to various embodiments.

Referring to FIG. 19, examples for PDSCH transmission are described for each technique of joint transmission (JT), and examples of radio resource allocation for each TRP are illustrated.

In FIG. 19, an example N000 of coherent joint transmission (C-JT) that supports coherent precoding between cells, TRPs, and/or beams is shown.

In the case of C-JT, TRP A N005 and TRP B N010 transmit single data (PDSCH) to UE N015, and plural TRPs may perform joint precoding. This may refer, for example, to the DMRS being transmitted through the same DMRS ports in order for TRP A N005 and TRP B N010 to transmit the same PDSCH. For example, each of TRP A N005 and TRP B N010 may transmit the DRMS to the UE through DMRS port A and DMRS B. In this case, the UE may receive one DCI information for receiving one PDSCH demodulated based on the DMRS transmitted through the DMRS port A and DMRS B.

In FIG. 19, an example N020 of NC-JT that supports non-coherent precoding between cells, TRPs, and/or beams is shown.

In the case of NC-JT, a PDSCH is transmitted to UE N035 for each cell, TRP, and/or beam, and individual precoding may be applied to each PDSCH. The respective cells, TRPs, and/or beams may be used for transmission of different PDSCHs or different PDSCH layers to the UE, thereby improving throughput compared to a single cell, TRP, and/or beam transmission. In addition, each cell, TRP, and/or beam may repeatedly transmit the same PDSCH to the UE, thereby improving reliability compared to a single cell, TRP, and/or beam transmission. For convenience of explanation, a cell, TRP, and/or beam are collectively referred to as a TRP hereinafter.

Various radio resource allocations may be considered such as a case N040 where all the frequency and time resources used in plural TRPs for PDSCH transmission are the same, a case N045 where the frequency and time resources used in plural TRPs do not overlap at all, and a case N050 where some of the frequency and time resources used in plural TRPs overlap.

In order to simultaneously allocate plural PDSCHs to a single UE for NC-JT support, DCIs of various types, structures, and relationships may be considered.

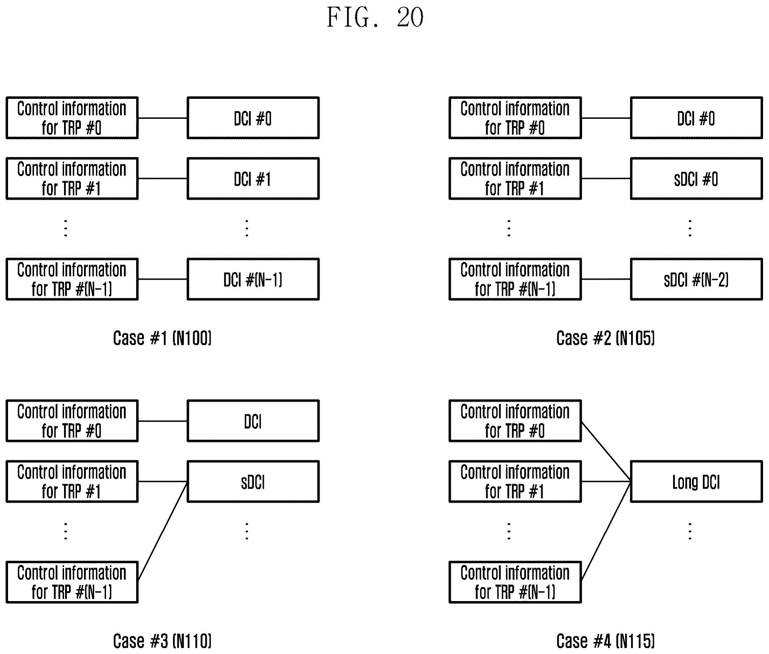

FIG. 20 is a diagram illustrating an example of a configuration of downlink control information (DCI) for NC-JT in which respective TRPs transmit different PDSCHs or different PDSCH layers to a UE in a wireless communication system according to various embodiments.

Referring to FIG. 20, Case #1 N100 is an example that, in a situation where different (N-1) PDSCHs are transmitted from (N-1) additional TRPs (TRP #1 to TRP #(N-1)) in addition to a serving TRP (TRP #0) used for single PDSCH transmission, control information for PDSCHs transmitted from (N-1) additional TRPs is transmitted independently from control information for a PDSCH transmitted from the serving TRP. That is, the UE may acquire control information for PDSCHs transmitted from different TRPs (TRP #0 to TRP #(N-1)) through independent DCIs (DCI #0 to DCI #(N-1)). The format between independent DCIs may be the same or different, and the payload between DCIs may also be the same or different. In the above-described Case #1, the degree of freedom for each PDSCH control or allocation may be completely guaranteed, but when each DCI is transmitted from different TRPs, a coverage difference may occur for each DCI, which may deteriorate reception performance.

Case #2 N105 is an example that, in a situation where different (N-1) PDSCHs are transmitted from (N-1) additional TRPs (TRP #1 to TRP #(N-1)) in addition to a serving TRP (TRP #0) used for single PDSCH transmission, each control information (e.g., DCI) for PDSCHs transmitted from (N-1) additional TRPs is transmitted and each DCI is dependent on control information for a PDSCH transmitted from the serving TRP.

For example, DCI #0, which is control information for the PDSCH transmitted from the serving TRP (TRP #0), includes all information elements of DCI format 1_0, DCI format 1_1, and DCI format 1_2, but shortened DCI (sDCI) (sDCI #0 to sDCI #(N-2)), which is control information for PDSCHs transmitted from cooperative TRPs (TRP #1 to TRP #(N-1)) may include only some of information elements of DCI format 1_0, DCI format 1_1, DCI format 1_2. Therefore, the sDCI that transmits control information for PDSCHs transmitted from cooperative TRPs has smaller payload compared to normal DCI (nDCI) that transmits control information related to PDSCH transmitted from the serving TRP, so it is possible to include reserved bits compared to the nDCI.

In Case #2 described above, the degree of freedom for each PDSCH control or allocation may be limited according to the contents of the information element included in the sDCI, but since the reception performance of the sDCI is superior to that of the nDCI, the probability of occurrence of a coverage difference for each DCI may be lowered.

Case #3 N110 shows an example that, in a situation where different (N-1) PDSCHs are transmitted from (N-1) additional TRPs (TRP #1 to TRP #(N-1)) in addition to a serving TRP (TRP #0) used for single PDSCH transmission, one control information for PDSCHs of (N-1) additional TRPs is transmitted and this DCI is dependent on control information for a PDSCH transmitted from the serving TRP.

For example, DCI #0, which is control information for the PDSCH transmitted from the serving TRP (TRP #0), includes all information elements of DCI format 1_0, DCI format 1_1, and DCI format 1_2, and control information for PDSCHs transmitted from cooperative TRPs (TRP #1 to TRP #(N-1)) may be transmitted by gathering only some of the information elements of DCI format 1_0, DCI format 1_1, and DCI format 1_2 into a single 'secondary' DCI (sDCI). For example, the sDCI may include at least one of HARQ-related information such as frequency domain resource assignment, time domain resource assignment, and MCS of cooperative TRPs. In addition, any information not included in the sDCI, such as a bandwidth part (BWP) indicator or a carrier indicator, may follow DCI (DCI #0, normal DCI, nDCI) of the serving TRP.

In Case #3 N110, the degree of freedom for each PDSCH control or allocation may be limited according to the contents of information element included in the sDCI. However, it is possible to adjust the reception performance of the sDCI, and the complexity of DCI blind decoding of the UE may be reduced compared to Case #1 N100 or Case #2 N105.

Case #4 N115 is an example that, in a situation where different (N-1) PDSCHs are transmitted from (N-1) additional TRPs (TRP #1 to TRP #(N-1)) in addition to a serving TRP (TRP #0) used for single PDSCH transmission, control information for PDSCHs transmitted from (N-1) additional TRPs is transmitted through the same DCI (long DCI) as control information for a PDSCH transmitted from the serving TRP. That is, the UE may acquire control information for PDSCHs transmitted from different TRPs (TRP #0 to TRP #(N-1)) through single DCI. In Case #4 N115, the complexity of DCI blind decoding of the UE may not increase, but the degree of freedom of PDSCH control or allocation may be low, such as the number of cooperative TRPs being limited due to long DCI payload limitation.

In the following descriptions and embodiments, the sDCI may refer to various auxiliary DCIs such as shortened DCI, secondary DCI, or normal DCI (DCI format 1_0 to 1_1 described above) including PDSCH control information transmitted from the cooperative TRP. Unless otherwise specified, the description is similarly applicable to the various auxiliary DCIs described above.

In the following description and embodiments, Case #1 N100, Case #2 N105, and Case #3 N110 in which at least one DCI (PDCCH) is used for NC-JT support may be classified into plural PDCCH-based NC-JT, and Case #4 N115 in which single DCI (PDCCH) is used for NC-JT support may be classified into a single PDCCH-based NC-JT. In plural PDCCH-based PDSCH transmission, a CORESET in which DCI of a serving TRP (TRP #0) is scheduled and a CORESET in which DCI of cooperative TRPs (TRP #1 to TRP #(N-1)) are scheduled may be distinguished. As a method for distinguishing CORESETs, there may be a method for distinguishing them through a higher layer indicator for each CORESET, a method for distinguishing them through a beam configuration for each CORESET, etc. In addition, in a single PDCCH-based NC-JT, single DCI schedules a single PDSCH having a plurality of layers instead of scheduling a plurality of PDSCHs, and the plurality of layers may be transmitted from a plurality of TRPs. An association relationship between a layer and a TRP transmitting the layer may be indicated through a transmission configuration indicator (TCI) indication for the layer.

In various example embodiments of the disclosure, the "cooperative TRP" may be replaced by various terms such as a "cooperative panel" or a "cooperative beam" in practical application.

In various example embodiments of the disclosure, "the case where NC-JT is applied" may be variously interpreted depending on the situation, such as "the case where the UE simultaneously receives one or more PDSCHs in one BWP", "the case where the UE simultaneously receives PDSCHs based on two or more TCIs in one BWP", or "the case where a PDSCH received by the UE is associated with one or more DMRS port groups", but one expression is used for convenience of explanation.

In the disclosure, a radio protocol structure for NC-JT may be variously used depending on TRP deployment scenarios. For example, when there is no or little backhaul delay between cooperative TRPs, a method (CA-like method) using a structure based on MAC layer pluralxing similar to S10 of FIG. 18 is possible. On the other hand, when the backhaul delay between cooperative TRPs is large enough to not be ignored (e.g., when a time of 2 ms or more is required for information exchange such as CSI, scheduling, and HARQ-ACK between cooperative TRPs), a method (DC-like method) using an independent structure for each TRP from the RLC layer to secure delay-robust characteristics is possible similar to S20 of FIG. x4.

The UE that supports C-JT/NC-JT may receive C-JT/NC-JT related parameters or setting values from a higher layer configuration and, based on this, set RRC parameters of the UE. For the higher layer configuration, the UE may utilize a UE capability parameter, for example, tci-StatePDSCH. Here, the UE capability parameter, for example, tci-StatePDSCH, may define TCI states for the purpose of PDSCH transmission. The number of TCI states may be configured as 4, 8, 16, 32, 64, or 128 in FR1 and as 64 or 128 in FR2, and up to eight states which can be indicated by 3 bits of a TCI field in DCI through a MAC CE message may be configured from among the configured numbers. The maximum value of 128 denotes a value indicated by maxNumberConfiguredTCIstatesPerCC in the tci-StatePDSCH parameter included in capability signaling of the UE. As such, a series of configuration processes from higher layer configuration to MAC CE configuration may be applied to a beamforming indication or beamforming change command for at least one PDSCH in one TRP.

[Multi-DCI based Multi-TRP]

According to an embodiment of the disclosure, a multi-DCI based multi-TRP transmission method will be described. The multi-DCI based multi-TRP transmission method may configure a downlink control channel for NC-JT transmission based on multi-PDCCH.

In NC-JT based on plural PDCCHs, when transmitting DCI for PDSCH scheduling of each TRP, there may be a CORESET or search space distinguished for each TRP. The CORSET or search space for each TRP may be configured as in at least one of the following cases.

* Higher layer index configuration per CORESET: The CORESET configuration information configured via a higher layer may include an index value, and a TRP that transmits a PDCCH in that CORESET may be distinguished by the configured index value per CORESET. That is, in the set of CORESETs having the same higher layer index value, it may be considered that the same TRP transmits the PDCCH or that the PDCCH for scheduling a PDSCH of the same TRP is transmitted. The above-described index per CORESET may be referred to as CORESETPoolIndex, and it may be considered that the PDCCH is transmitted from the same TRP with regard to CORESETs in which the same CORESETPoolIndex value is configured. In the case of CORESET in which the CORESETPoolIndex value is not configured, it may be considered that a default value of CORESETPoolIndex has been configured, and the default value may be 0.

- In the disclosure, if the type of CORESETPoolIndex for each of a plurality of CORESETs included in PDCCH-Config, which is higher layer signaling, exceeds one, that is, if respective CORESETs have different CORESETPoolIndexes, the UE may consider that the base station may use the multi-DCI based multi-TRP transmission method.
- In the disclosure, if the type of CORESETPoolIndex for each of a plurality of CORESETs included in PDCCH-Config, which is higher layer signaling, is one, that is, if all CORESETs have the same CORESETPoolIndex of 0 or 1, the UE may consider that the base station performs transmission using single-TRP instead of using the multi-DCI based multi-TRP transmission method.

* Plural PDCCH-Config configurations: Plural PDCCH-Configs are configured in one BWP, and each PDCCH-Config may include PDCCH configuration per TRP. That is, one PDCCH-Config may include a CORESET list per TRP and/or a search space list per TRP, one or more CORESETs and one or more search spaces included in one PDCCH-Config may be considered to correspond to a specific TRP.
* CORESET beam/beam group configuration: A TRP corresponding to a CORESET may be distinguished through a beam or beam group configured for each CORESET. For example, when the same TCI state is configured in plural CORESETs, it may be considered that these CORESETs are transmitted through the same TRP, or that a PDCCH for scheduling a PDSCH of the same TRP is transmitted in these CORESETs.
* Search space beam/beam group configuration: A beam or beam group is configured for each search space, and through this, a TRP per search space may be distinguished. For example, when the same beam/beam group or TCI state is configured in plural search spaces, it may be considered that the same TRP transmits a PDCCH in these search spaces, or that a PDCCH for scheduling a PDSCH of the same TRP is transmitted in these search spaces.

By distinguishing the CORESET or search space per TRP as described above, PDSCH and HARQ-ACK information may be classified for each TRP, and through this, an independent HARQ-ACK codebook generation per TRP and an independent PUCCH resource use are possible.

The above configuration may be independent for each cell or for each BWP. For example, two different CORESETPoolIndex values are configured in PCell, whereas the CORESETPoolIndex value may not be configured in a specific SCell. In this case, it may be considered that NC-JT transmission is configured in PCell, whereas NC-JT transmission is not configured in SCell where the CORESETPoolIndex value is not configured.

A PDSCH TCI state activation/deactivation MAC-CE applicable to the multi-DCI based multi-TRP transmission method may follow FIG. 16. If the UE is not configured with CORESETPoolIndex for each of all CORESETs in higher layer signaling PDCCH-Config, the UE may ignore a CORESET Pool ID field 16-55 in the corresponding MAC-CE 16-50. If the UE can support the multi-DCI based multi-TRP transmission method, that is, if CORESETs in the higher layer signaling PDCCH-Config have different CORESETPoolIndexes, the UE may activate a TCI state within DCI included in a PDCCH transmitted in CORESETs having the same CORESETPoolIndex value as the CORESET Pool ID field 16-55 in the corresponding MAC-CE 16-50. For example, if the CORESET Pool ID field 16-55 in the corresponding MAC-CE 16-50 has the value of 0, the TCI state within the DCI included in the PDCCH transmitted in CORESETs having the CORESETPoolIndex of 0 may follow the activation information of the corresponding MAC-CE.

When the UE is configured to use the multi-DCI based multi-TRP transmission method from the base station, that is, when the type of CORESETPoolIndex for each of a plurality of CORESETs included in higher layer signaling PDCCH-Config exceeds one, or when CORESETs have different CORESETPoolIndexes, the UE may know that the following restrictions exist for PDSCHs scheduled by a PDCCH in each CORESET having two different CORESETPoolIndexes.

1) When PDSCHs, which are indicated by a PDCCH in each CORESET having two different CORESETPoolIndexes, fully or partially overlap, the UE may apply TCI states indicated by each PDCCH to different CDM groups, respectively. That is, two or more TCI states may not be applied to one CDM group.

2) When PDSCHs, which are indicated by a PDCCH in each CORESET having two different CORESETPoolIndexes, fully or partially overlap, the UE may expect that the number of actual front-loaded DMRS symbols, the number of additional DMRS symbols, the position of actual DMRS symbols, and DMRS types will not be different in respective PDSCHs.

3) The UE may expect that the same BWP and the same subcarrier spacing are indicated from a PDCCH within each CORESET having two different CORESETPoolIndexes.

4) The UE may expect that information on a PDSCH scheduled from a PDCCH in each CORESET having two different CORESETPoolIndexes is completely included in each PDCCH.

[Single-DCI based Multi-TRP]

According to an example embodiment of the disclosure, a single-DCI based multi-TRP transmission method will be described. The single-DCI based multi-TRP transmission method may configure a downlink control channel for NC-JT transmission based on single PDCCH.

In the single-DCI based multi-TRP transmission method, one DCI may configure PDSCHs transmitted by plural TRPs. Here, the number of TCI states may be used as a method of indicating the number of TRPs for transmitting the PDSCHs. That is, if the number of TCI states indicated in the DCI for scheduling the PDSCH is two, it may be considered as single PDCCH based NC-JT transmission, and if the number of TCI states is one, it may be considered as single-TRP transmission. The TCI states indicated in the DCI may correspond to one or two TCI states among TCI states activated via MAC-CE. When the TCI states in the DCI correspond to two TCI states activated via MAC-CE, a correspondence relationship between a TCI codepoint indicated in the DCI and the TCI states activated via MAC-CE is established, and there may be two TCI states activated via MAC-CE corresponding to the TCI codepoint.

As another example, if at least one codepoint among all codepoints of the TCI state field in the DCI indicates two TCI states, the UE may consider that the base station may perform transmission based on the single-DCI based multi-TRP method. Here, at least one codepoint indicating two TCI states in the TCI state field may be activated through enhanced PDSCH TCI state activation/deactivation MAC-CE.

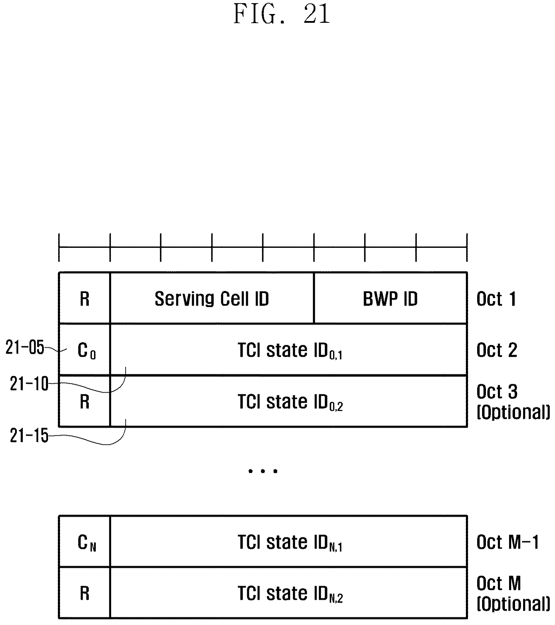

FIG. 21 is a diagram illustrating an example enhanced PDSCH TCI state activation/deactivation MAC-CE structure according to various embodiments. Each field in the MAC CE and the values configurable for each field are as follows.

> **Serving Cell ID**: This field indicates the identity of the Serving Cell for which the MAC CE applies. The length of the field is 5 bits. If the indicated Serving Cell is configured as part of a *simultaneousTCI-UpdateList1* or *simultaneousTCI-UpdateList2* as specified in TS 38.331 [5], this MAC CE applies to all the Serving Cells configured in the set *simultaneousTCI-UpdateList1* or *simultaneousTCI-UpdateList2*, respectively;
>
> - **BWP ID**: This field indicates a DL BWP for which the MAC CE applies as the codepoint of the DCI bandwidth part indicator field as specified in TS 38.212 [9]. The length of the BWP ID field is 2 bits;
>
> - $C_i$: This field indicates whether the octet containing TCI state $ID_{i,2}$ is present. If this field is set to "1", the octet containing TCI state $ID_{i,2}$ is present. If this field is set to "0", the octet containing TCI state $ID_{i,2}$ is not present;
>
> - **TCI state $ID_{i,j}$**: This field indicates the TCI state identified by TCI-StateId as specified in TS 38.331 [5], where i is the index of the codepoint of the DCI Transmission configuration indication field as specified in TS 38.212 [9] and TCI state $ID_{i,j}$ denotes the j-th TCI state indicated for the i-th codepoint in the DCI Transmission Configuration Indication field. The TCI codepoint to which the TCI States are mapped is determined by its ordinal position among all the TCI codepoints with sets of TCI state $ID_{i,j}$ fields, i.e. the first TCI codepoint with TCI state $ID_{0,1}$ and TCI state $ID_{0,2}$ shall be mapped to the codepoint value 0, the second TCI codepoint with TCI state $ID_{1,1}$ and TCI state $ID_{1,2}$ shall be mapped to the codepoint value 1 and so on. The TCI state $ID_{i,2}$ is optional based on the indication of the Ci field. The maximum number of activated TCI codepoint is 8 and the maximum number of TCI states mapped to a TCI codepoint is 2.
>
> - **R**: Reserved bit, set to "0".

In FIG. 21, if a $C_0$ field 21-05 has the value of 1, the corresponding MAC-CE may include a TCI state $ID_{0,2}$ field 21-15 in addition to a TCI state $ID_{0,1}$ field 21-10. This may refer, for example, to TCI state $ID_{0,1}$ and TCI state $ID_{0,2}$ being activated for the 0th codepoint of the TCI state field included in DCI. If the base station indicates the corresponding codepoint to the UE, the UE may be indicated two TCI states. If the $C_0$ field 21-05 has the value of 0, the corresponding MAC-CE may not include the TCI state $ID_{0,2}$ field 21-15, and this may refer, for example, to one TCI state corresponding to TCI state $ID_{0,1}$ being activated for the 0th codepoint of the TCI state field included in DCI.

The above configuration may be independent for each cell or for each BWP. For example, a PCell may have at most two activated TI states corresponding to a single TCI codepoint, whereas a specific SCell may have at most one activated TCI state corresponding to a single codepoint. Here, it may be considered that NC-JT transmission is configured in the PCell, whereas NC-JT transmission is not configured in the above SCell.

[Single-DCI based Multi-TRP PDSCH Repetitive Transmission Scheme (TDM/FDM/SDM) Distinguishing Method]

A method for distinguishing single-DCI based multi-TRP PDSCH repetitive transmission schemes will be described. The UE may be indicated with different single-DCI based multi-TRP PDSCH repetitive transmission schemes (e.g., TDM, FDM, SDM) according to a value indicated by a DCI field and a higher layer signaling configuration from the base station. Table 31 below shows a method for distinguishing between single- or multi-TRP based schemes indicated to the UE according to a specific DCI field value and a higher layer signaling configuration.

[Table 31]

| Combination | Number of TCI states | Number of CDM groups | repetitionNumber configuration and indication condition | repetitionScheme configuration | Transmission scheme indicated to UE |
|---|---|---|---|---|---|
| 1 | 1 | ≥1 | Condition 2 | Not configured | Single-TRP |
| 2 | 1 | ≥1 | Condition 2 | Configured | Single-TRP |
| 3 | 1 | ≥1 | Condition 3 | Configured | Single-TRP |
| 4 | 1 | 1 | Condition 1 | Configured or not configured | Single-TRP TDM scheme B |
| 5 | 2 | 2 | Condition 2 | Not configured | Multi-TRP SDM |
| 6 | 2 | 2 | Condition 3 | Not configured | Multi-TRP SDM |
| 7 | 2 | 2 | Condition 3 | Configured | Multi-TRP SDM |
| 8 | 2 | 1 | Condition 3 | Configured | Multi-TRP FDM scheme A/FDM scheme B/TDM scheme A |
| 9 | 2 | 1 | Condition 1 | Not configured | Multi-TRP TDM scheme B |

In Table 31, each column may be described as follows.

- Number of TCI states (column 2): It refers to the number of TCI states indicated by a TC state field in DCI, and may be one or two.
- Number of CDM groups (column 3): It refers to the number of different CDM groups of DMRS ports indicated by an antenna port field in DCI. It may be 1, 2, or 3.
- repetitionNumber configuration and indication condition (column 4): There may be three conditions according to whether repetitionNumber is configured for all TDRA entries that can be indicated by a time-domain resource allocation field in DCI and whether the indicated TDRA entry actually has a repetitionNumber configuration.

  ■ Condition 1: In the case where at least one of all TDRA entries that can be indicated by the time-domain resource allocation field includes the configuration for repetitionNumber, and the TDRA entry indicated by the time-domain resource allocation field in DCI includes the configuration for repetitionNumber greater than 1.
  ■ Condition 2: In the case where at least one of all TDRA entries that can be indicated by the time-domain resource allocation field includes the configuration for repetitionNumber, and the TDRA entry indicated by the time-domain resource allocation field in DCI does not include the configuration for repetitionNumber.

■ Condition 3: In the case where all TDRA entries that can be indicated by the time-domain resource allocation field do not include the configuration for repetitionNumber.

- repetitionScheme configuration (column 5): It refers to whether a higher layer signaling, repetitionScheme, is configured. The higher layer signaling repetitionScheme may be configured as one of 'tdmSchemeA', 'fdmSchemeA', and 'fdmSchemeB'.
- Transmission scheme indicated to UE (column 6): It refers to single or plural TRP schemes indicated according to each combination (column 1) shown in Table 31 above.

■ Single-TRP: refers to single-TRP based PDSCH transmission. If the UE is configured with pdsch-AggregationFactor in higher layer signaling PDSCH-config, the UE may receive scheduling for single-TRP based PDSCH repetitive transmission by the configured number of times. Otherwise, the UE may receive scheduling for single-TRP based PDSCH single transmission.

■ Single-TRP TDM scheme B: refers to single-TRP based inter-slot time resource division based PDSCH repetitive transmission. According to the above-described repetitionNumber related Condition 1, the UE repeatedly transmits a PDSCH in the time dimension as many times as the number of slots corresponding to repetitionNumber having a value greater than 1, which is configured in the TDRA entry indicated by the time-domain resource allocation field. Here, the starting symbol and symbol length of the PDSCH indicated by the TDRA entry are equally applied to each slot by times of repetitionNumber, and the same TCI state is applied to each PDSCH repetitive transmission. This scheme is similar to a slot aggregation scheme in that an inter-slot PDSCH repetitive transmission is performed in time resources, but it is different from slot aggregation in that it is possible to dynamically determine whether to indicate repetitive transmission based on the time-domain resource allocation field in DCI.

■ Multi-TRP SDM: refers to a multi-TRP based spatial resource division PDSCH transmission scheme. This is a method of receiving divided layers from respective TRPs. Although this is not a repetitive transmission scheme, it is possible to increase the reliability of PDSCH transmission in that it can increase the number of layers and lower the coding rate. The UE may receive the PDSCH by applying two TCI states, indicated through the TCI state field in DCI, to two CDM groups indicated by the base station, respectively.

■ Multi-TRP FDM scheme A: refers to a multi-TRP based frequency resource division PDSCH transmission scheme. This is not a repetitive transmission like multi-TRP SDM because of having one PDSCH transmission occasion, but it is a scheme capable of transmission with high reliability by increasing the frequency resource amount and lowering the coding rate. The multi-TRP FDM scheme A may apply two TCI states, indicated through the TCI state field in DCI, to frequency resources that do not overlap with each other. If the PRB bundling size is determined as wideband, the UE performs reception by applying the first TCI state to the first ceil(N/2) RBs and applying the second TCI state to the remaining floor(N/2) RBs when the number of RBs indicated by the frequency domain resource allocation field is N. Here, ceil(.) and floor(.) are operators for rounding up and rounding down the first digit after decimal point, respectively. If the PRB bundling size is determined as 2 or 4, the UE performs reception by applying the first TCI state to even-numbered PRGs and applying the second TCI state to odd-numbered PRGs.

■ Multi-TRP FDM scheme B: refers to a multi-TRP based frequency resource division PDSCH repetitive transmission scheme, and allows PDSCH repetitive transmission at each of two PDSCH transmission occasions. Like scheme A, the multi-TRP FDM scheme B may also apply two TCI states, indicated through the TCI state field in DCI, to frequency resources that do not overlap with each other. If the PRB bundling size is determined as wideband, the UE performs reception by applying the first TCI state to the first ceil(N/2) RBs and applying the second TCI state to the remaining floor(N/2) RBs when the number of RBs indicated by the frequency domain resource allocation field is N. Here, ceil(.) and floor(.) are operators for rounding up and rounding down the first digit after decimal point, respectively. If the PRB bundling size is determined as 2 or 4, the UE performs reception by applying the first TCI state to even-numbered PRGs and applying the second TCI state to odd-numbered PRGs.

■ Multi-TRP TDM scheme A: refers to a multi-TRP based time resource division intra-slot PDSCH repetitive transmission scheme. The UE has two PDSCH transmission occasions in one slot, and the first reception occasion may be determined based on the starting symbol and symbol length of a PDSCH indicated through the time-domain resource allocation field in DCI. The starting symbol of the second reception occasion of the PDSCH may be a position to which as many symbol offsets as the higher layer signaling StartingSymbolOffsetK are applied from the last symbol of the first transmission occasion, and the transmission occasion may be determined by the indicated symbol length therefrom. If the higher layer signaling StartingSymbolOffsetK is not configured, the symbol offset may be regarded as 0.

■ Multi-TRP TDM scheme B: refers to a multi-TRP based time resource division inter-slot PDSCH repetitive transmission scheme. The UE has one PDSCH transmission occasion in one slot, and may receive repetitive transmission based on the starting symbol and symbol length of the same PDSCH during a slot equal to the times of repetitionNumber indicated through the time domain resource allocation field in DCI. If repetitionNumber is 2, the UE may receive PDSCH repetitive transmissions in the first and second slots by applying the first and second TCI states, respectively. If repetitionNumber is greater than 2, the UE may use different TCI state application schemes depending on which higher layer signaling tciMapping is configured. If tciMapping is configured as cyclicMapping, the first and second TCI states are applied to the first and second PDSCH transmission occasions, respectively, and this TCI state application method is equally applied to the remaining PDSCH transmission occasions. If tciMapping is configured as sequentialMapping, the first TCI state is applied to the first and second PDSCH transmission occasions, the second TCI state is applied to the third and fourth PDSCH transmission occasions, and this TCI state application method is equally applied to the remaining PDSCH transmission occasions.

[RLM RS related]

A method for selecting or determining a radio link monitoring reference signal (RLM RS) when the RLM RS is configured or not configured will be described. The UE may configured with a set of RLM RSs from the base station through RadioLinkMonitoringRS in RadioLinkMonitoringConfig, which is higher layer signaling, for each downlink BWP of SpCell. A specific higher layer signaling structure may follow Table 32 below.

[Table 32]

```
RadioLinkMonitoringConfig ::= SEQUENCE {
    failureDetectionResourcesToAddModList  SEQUENCE
(SIZE(1..maxNrofFailureDetectionResources)) OF RadioLinkMonitoringRS   OPTIONAL, --
Need N
    failureDetectionResourcesToReleaseList SEQUENCE
(SIZE(1..maxNrofFailureDetectionResources)) OF RadioLinkMonitoringRS-Id OPTIONAL, --
Need N
    beamFailureInstanceMaxCount ENUMERATED {n1, n2, n3, n4, n5, n6, n8, n10}
                OPTIONAL, -- Need R
    beamFailureDetectionTimer ENUMERATED {pbfd1, pbfd2, pbfd3, pbfd4, pbfd5, pbfd6,
pbfd8, pbfd10}              OPTIONAL, -- Need R
    ...
}


RadioLinkMonitoringRS ::= SEQUENCE {
    radioLinkMonitoringRS-Id  RadioLinkMonitoringRS-Id,
    purpose         ENUMERATED {beamFailure, rlf, both},
    detectionResource   CHOICE {
        ssb-Index       SSB-Index,
        csi-RS-Index    NZP-CSI-RS-ResourceId
    },
    ...
}
```

Table 33 below may show the configurable or selectable number of RLM RSs for specific purposes according to the maximum number of SSBs ($L_{max}$) per half frame. As shown in Table 33 below, depending on the $L_{max}$ value, $N_{LR\text{-}RLM}$ RSs may be used for link recovery or radio link monitoring, and $N_{RLM}$ RSs among $N_{LR\text{-}RLM}$ RSs may be used for radio link monitoring.

[Table 33]

| Table 5-1: $N_{LR\text{-}RLM}$ and $N_{RLM}$ as a function of maximum number $L_{max}$ of SS/PBCH blocks per half frame | | |
|:---:|:---:|:---:|
| $L_{max}$ | $N_{LR\text{-}RLM}$ | $N_{RLM}$ |
| 4 | 2 | 2 |
| 8 | 6 | 4 |
| 64 | 8 | 8 |

If the UE has not been configured with RadioLinkMonitoringRS, which is a higher layer signaling, and has been configured with a TCI state for receiving a PDCCH in a CORESET, and at least one CSI-RS is included in the TCI state, then the RLM RS may be selected according to the following RLM RS selection methods.

- RLM RS selection method 1) If an activated TCI state to be used for PDCCH reception has one reference RS (e.g., one activated TCI state has only one of QCL-TypeA, B, or C), the UE may select the reference RS of the activated TCI state to be used for PDCCH reception as the RLM RS.
- RLM RS selection method 2) If an activated TCI state to be used for PDCCH reception has two reference RSs (e.g., one activated TCI state has one of QCL-TypeA, B, or C and additionally has QCL-TypeD), the UE may select the reference RS of QCL-TypeD as the RLM RS. The UE does not expect that two QCL-TypeDs are configured for one activated TCI state.
- RLM RS selection method 3) The UE does not expect that an aperiodic or a semi-persistent RS is selected as the RLM RS.
- RLM RS selection method 4) If $L_{max}$ is 4, the UE may select $N_{RLM}$ RSs (since $L_{max}$ is 4, two RSs may be selected). The selection for the RLM RS is performed among the reference RSs of the TCI states configured in the CORESET for PDCCH reception, based on the RLM RS selection methods 1 to 3, and the RLM RS selection is performed starting from the reference RS of the TCI state configured in the CORESET connected to the search space with the shortest periodicity, determining that the search space with a short periodicity connected to the CORESET has a high priority. If there are plural CORESETs connected to plural search spaces with the same periodicity, the RLM RS selection is performed starting from the reference RS of the TCI state configured with a high CORESET index.

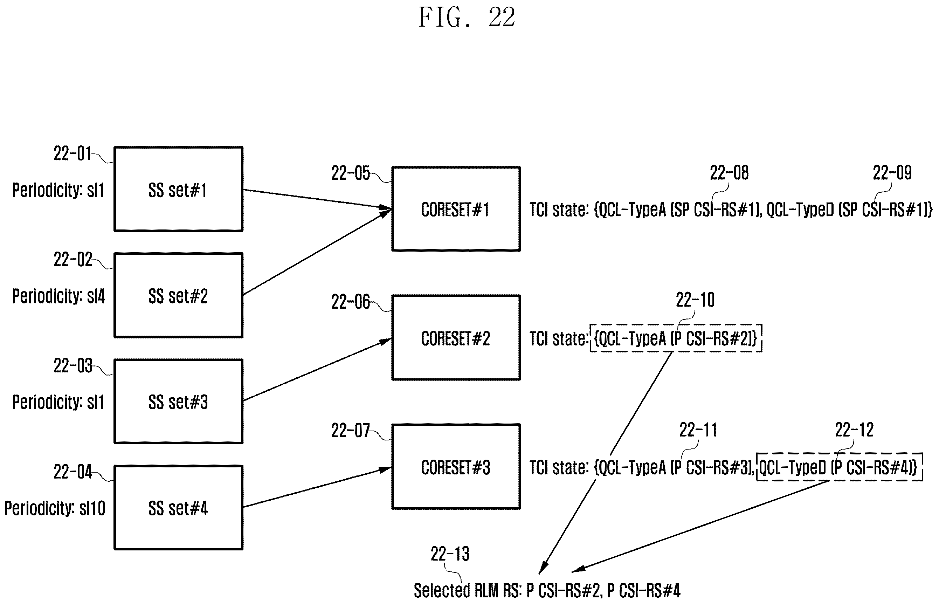

FIG. 22 is a diagram illustrating an example RLM RS selection process according to various embodiments. This diagram illustrates CORESET#1 22-05 to CORESET#3 22-07 connected to search space#1 22-01 to search space#4 22-04 having different periodicities within an activated downlink BWP, and a reference RS of a TCI state configured in each CORESET. Based on the RLM RS selection method 4, the RLM RS selection uses the TCI state configured in the CORESET connected to the search space with the shortest periodicity, but since search space#1 22-01 and search space#3 22-03 have the same periodicity, the reference RS of the TCI state configured in CORESET#2 having a higher index between CORESET#1 22-05 and CORESET#2 22-06 connected to search spaces may be used as the highest priority in the RLM RS selection. In addition, since the TCI state configured in CORESET#2 has only QCL-TypeA and the reference RS is a periodic RS, P CSI-RS#2 22-10 may be selected as the RLM RS first by the RLM RS selection methods 1 and 3. Among the reference RSs of the TCI state configured in CORESET#1 having priority, the reference RS of QCL-TypeD may be a selection candidate by the RLM RS selection method 2, but since the RS is a semi-persistent RS 22-09, it is not selected as the RLM RS by the RLM RS selection method 3. Therefore, the reference RSs of the TCI state configured in CORESET#3 may be considered in the next priority, and the reference RS of QCL-TypeD may be a selection candidate by the RLM RS selection method 2. Since the corresponding reference RS is a periodic RS, P CSI-RS#4 22-12 may be selected as the second RLM RS by the RLM RS selection method 3. Therefore, the finally selected RLM RSs 22-13 may be P CSI-RS#2 and P CSI-RS#4.

In the following description of the disclosure, for convenience, a cell, a transmission reception point (TRP), a panel, a beam, or/and a transmission direction, which can be distinguished through higher layer/L1 parameters such as TCI state or spatial relation information, or indicators such as cell ID, TRP ID, and panel ID, may be described as a TRP, a beam, or a TCI state. Therefore, in actual application, the TRP, the beam, or the TCI state may be appropriately replaced with one of the above terms.

In the disclosure, when determining whether cooperative communication is applied, the UE may use various methods, such as a method in which the PDCCH(s) that allocate the PDSCH to which cooperative communication is applied have a specific format, a method in which the PDCCH(s) that allocate the PDSCH to which cooperative communication is applied include a specific indicator indicating whether cooperative communication is applied, a method in which the PDCCH(s) that allocate the PDSCH to which cooperative communication is applied are scrambled with a specific RNTI, or a method in which cooperative communication is assumed to be applied in a specific section indicated by a higher layer. For the convenience of explanation, the case where the UE receives the PDSCH with cooperative communication applied based on conditions similar to the above will be referred to as the NC-JT case.

Hereinafter, various example embodiments of the disclosure will be described in greater detail with reference to the attached drawings. In the description of the disclosure, a base station refers to an entity performing resource allocation of a terminal, and may be at least one of a gNode B (gNB), an eNode B (eNB), a Node B, a base station (BS), a radio access unit, a base station controller, or a node on a network. Also, a terminal may include a user equipment (UE), a mobile station (MS), a cellular phone, a smart phone, a computer, or a multimedia system capable of performing a communication function. Hereinafter, embodiments of the disclosure will be described using the 5G system as an example, but the various embodiments may also be applied to other communication systems having a similar technical background or channel type, such as LTE or LTE-A mobile communication and mobile communication technologies developed after 5G. Accordingly, various embodiments of the disclosure may be applied to other communication systems through some modifications without significantly departing from the scope of the disclosure as will be apparent to a person skilled in the art. The contents of the disclosure can be applied to FDD and TDD systems.

In the description of the disclosure, a detailed description of known functions or components may be omitted when it may make the subject matter of the disclosure unnecessarily unclear. The terms which will be described below are terms defined in consideration of the functions in the disclosure, and may be varied according to users, intentions of operators, or customs. Therefore, the definitions of the terms should be made based on the contents throughout the description.

In the description of the disclosure, a higher layer signaling may be a signaling corresponding to at least one or a combination of one or more of the following signaling.

- MIB (Master Information Block)
- SIB (System Information Block) or SIB X (X=1, 2, ...)
- RRC (Radio Resource Control)
- MAC (Medium Access Control) CE (Control Element)

In addition, an L1 signaling may be a signaling corresponding to at least one or a combination of one or more of signaling methods using the following physical layer channels or signaling.

- PDCCH (Physical Downlink Control Channel)
- DCI (Downlink Control Information)
- UE-specific DCI
- Group common DCI
- Common DCI
- Scheduling DCI (e.g., DCI used for the purpose of scheduling downlink or uplink data)
- Non-scheduling DCI (e.g., DCI not used for the purpose of scheduling downlink or uplink data)
- PUCCH (Physical Uplink Control Channel)
- UCI (Uplink Control Information)

In the description of the disclosure, determining a priority between A and B refers to selecting one having a higher priority according to a predetermined priority rile to perform a corresponding operation, or omitting (or dropping) an operation for the other one having a lower priority, etc.

The term slot used in the disclosure is a general term that refers to a specific time unit corresponding to a transmit time interval (TTI), and specifically may refer to a slot used in the 5G NR system, or refer to a slot or a subframe used in the 4G LTE system.

In the disclosure, the above examples are described through many embodiments, but they are not independent and two or more embodiments can be applied simultaneously or in combination.

< Single TCI state activation and indication method based on unified TCI scheme>

As an example embodiment of the disclosure, a single TCI state activation and indication method based on a unified TCI scheme is described. The unified TCI scheme may refer to a method of managing transmit and receive beams in a unified manner using TCI states. This consolidates the separate beam management approaches used in Rel-15/16, where downlink reception utilized TCI states and uplink transmission employed spatial relation information. Therefore, upon being indicated the unified TCI scheme by the base station, the UE may perform beam management using the TCI state even for uplink transmission. If the UE is configured with a TCI-State including tci-stateId-r17 through a higher layer signaling from the base station, the UE may perform an operation based on the unified TCI scheme using that TCI-State. The TCI-State may exist in two types: a joint TCI state or a separate TCI state.

The first type is a joint TCI state, and the base station may indicate the UE, through a single TCI-State, the TCI state to be applied to both uplink transmission and downlink reception. If the TCI-State based on the joint TCI state is indicated, the UE may be indicated a parameter to be used for downlink channel estimation using an RS corresponding to qcl-Type1 and a parameter to be used as a downlink receive beam or receive filter using an RS corresponding to qcl-Type2 within the TCI-State based on the joint TCI state. If the TCI-State based on the joint TCI state is indicated, the UE may be indicated a parameter to be used as an uplink transmit beam or transmit filter using an RS corresponding to qcl-Type2 within the TCI-State based on the joint DL/UL TCI state. In this case, if the joint TCI state is indicated, the UE may apply the same beam to both uplink transmission and downlink reception.

The second type is a separate TCI state, and the base station may individually indicate the UE a UL TCI state to be applied to uplink transmission and a DL TCI state to be applied to downlink reception. If the UL TCI state is indicated, the UE may be indicated a parameter to be used as an uplink transmit beam or transmit filter using a reference RS or source RS configured in the UL TCI state. If the DL TCI state is indicated, the UE may be indicated a parameter to be used for downlink channel estimation using an RS corresponding to qcl-Type1, configured in the DL TCI state, and a parameter to be used as a downlink receive beam or receive filter using an RS corresponding to qcl-Type2.

If the UE is indicated both the DL TCI state and the UL TCI state, the UE may be indicated a parameter to be used as an uplink transmit beam or transmit filter using a reference RS or source RS configured in the UL TCI state, and indicated a parameter to be used for downlink channel estimation using an RS corresponding to qcl-Typel, configured in the DL TCI state, and a parameter to be used as a downlink receive beam or receive filter using an RS corresponding to qcl-Type2. In this case, if the reference RSs or source RSs configured in the DL TCI state and the UL TCI state indicated to the UE are different, the UE may individually apply beams to uplink transmission and downlink reception, respectively, based on the indicated UL TCI state and DL TCI state.

The UE may be configured, from the base station, with joint TCI states for each BWP within a specific cell up to 128 via a higher layer signaling, and may be configured with DL TCI states of separate TCI states for each BWP within a specific cell up to 64 or 128 via a higher layer signaling through a UE capability report. The DL TCI state of separate TCI states and the joint TCI state may use the same higher layer signaling structure. For example, if 128 joint TCI states are configured and 64 DL TCI states of separate TCI states are configured, the 64 DL TCI states may be included in the 128 joint TCI states.

UL TCI states of separate TCI states may be configured for each BWP within a specific cell up to 32 or 64 via a higher layer signaling through a UE capability report. Just like the relationship between the DL TCI state of separate TCI states and the joint TCI state, the UL TCI state of separate TCI states and the joint TCI state may use the same higher layer signaling structure, and otherwise the UL TCI state of separate TCI states may use a higher layer signaling structure different from those of the joint TCI state and the DL TCI state of separate TCI states. The use of different or same higher layer signaling structures may be defined in the standard, or may be distinguished through another higher layer signaling configured by the base station based on the UE capability report containing information on whether the UE can support one of the two usage schemes.

The UE may receive an indication related to transmit/receive beams in the unified TCI scheme using one of the joint TCI state and the separate TCI state configured by the base station. The UE may be configured by the base station through a higher layer signaling whether to use either the joint TCI state or the separate TCI state.

The UE receives the indication related to transmit/receive beams using one of the joint TCI state and the separate TCI state selected through a higher layer signaling. At this time, there may be two indication methods from the base station: a MAC-CE-based indication method and a MAC-CE-based activation and DCI-based indication method.

If the UE receives the indication related to transmit/receive beams using the joint TCI state scheme configured through a higher layer signaling, the UE may receive a MAC-CE indicating the joint TCI state from the base station and perform a transmit/receive beam application operation. In addition, the base station may schedule the reception of a PDSCH including that MAC-CE to the UE through a PDCCH. If there is one joint TCI state included in the MAC-CE, the UE may determine an uplink transmit beam or transmit filter and a downlink receive beam or receive filter using the joint TCI state indicated by the MAC-CE starting from 3 ms after transmitting the PUCCH including HARQ-ACK information indicating whether the PDSCH including the MAC-CE has been received successfully. If there are two or more joint TCI states included in the MAC-CE, the UE may activate plural joint TCI states indicated by the MAC-CE in each codepoint of a TCI state field of DCI (e.g., DCI format 1_1 or 1_2) starting from 3 ms after transmitting the PUCCH including HARQ-ACK information indicating whether the PDSCH including the MAC-CE has been received successfully. That is, plural joint TCI states indicated by the MAC-CE are activated, the activated TCI states are mapped to each codepoint of the TCI state field of the DCI, and the UE may apply the beam indicated by the codepoint of the TCI state field included in the DCI. The TCI state may be activated based on the TCI state field included in the DCI in addition to the TCI state activated by the MAC-CE, and the UE may apply the indicated TCI state among the activated TCI states. The above contents may be equally applied to all embodiments of the disclosure.

If the UE receives the indication related to transmit/receive beams using the separate TCI state scheme configured through a higher layer signaling, the UE may receive a MAC-CE indicating the separate TCI state from the base station and perform a transmit/receive beam application operation. In addition, the base station may schedule the reception of a PDSCH including the MAC-CE to the UE through a PDCCH. If a single set of separate TCI states is included in the MAC-CE, the UE may determine an uplink transmit beam or transmit filter and a downlink receive beam or receive filter using the separate TCI states included in the separate TCI state set indicated by the MAC-CE starting from 3 ms after transmitting the PUCCH including HARQ-ACK information indicating whether the PDSCH has been received successfully. At this time, the separate TCI state set may refer to a single or plural separate TCI states that one codepoint of a TCI state field in DCI (e.g., DCI format 1_1, 1_2) can have, and one separate TCI state set may include one DL TCI state, one UL TCI state, or one DL TCI state and one UL TCI state. If there are two or more separate TCI state sets included in the MAC-CE, the UE may activate the plural separate TCI state sets indicated by the MAC-CE in each codepoint of the TCI state field of the DCI (e.g., DCI format 1_1, 1_2) starting from 3 ms after transmitting the PUCCH including HARQ-ACK information indicating whether the PDSCH has been received successfully. At this time, each codepoint in the TCI state field of the DCI may indicate one DL TCI state, one UL TCI state, or one DL TCI state and one UL TCI state.

The above-described MAC-CE used to activate or indicate the single joint TCI state and the separate TCI state may exist for each of the joint and separate TCI state schemes. Using a single MAC-CE, the TCI state may be activated or indicated based on either the joint or separate TCI state scheme. Through the drawings described below, various MAC-CE structures for activating and indicating the joint or separate TCI state may be considered.

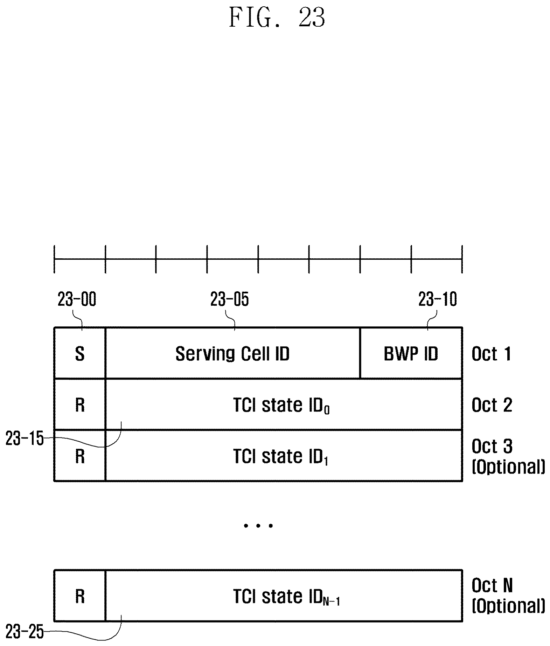

FIG. 23 is a diagram illustrating an example MAC-CE structure for joint TCI state activation and indication in a wireless communication system according to various embodiments.

In FIG. 23, if the value of an S field 23-00 is 1, the corresponding MAC-CE may indicate a single joint TCI state and have a length only up to the second Octet. If the value of the S field 23-00 is 0, the corresponding MAC-CE may include information on two or more joint TCI states and activate each joint TCI state included in the MAC-CE for each codepoint of the TCI state field of the DCI (e.g., DCI format 1_1, 1_2) up to 8 joint TCI states. The TCI states indicated through a TCI state $ID_0$ field 23-15 to a TCI state $ID_{N-1}$ field 23-25 may be activated in the 0th to the N-1th codepoints of the TCI state field of the DCI, respectively. A serving cell ID field 23-05 and a BWP ID field 23-10 may indicate a serving cell ID and a BWP ID, respectively.

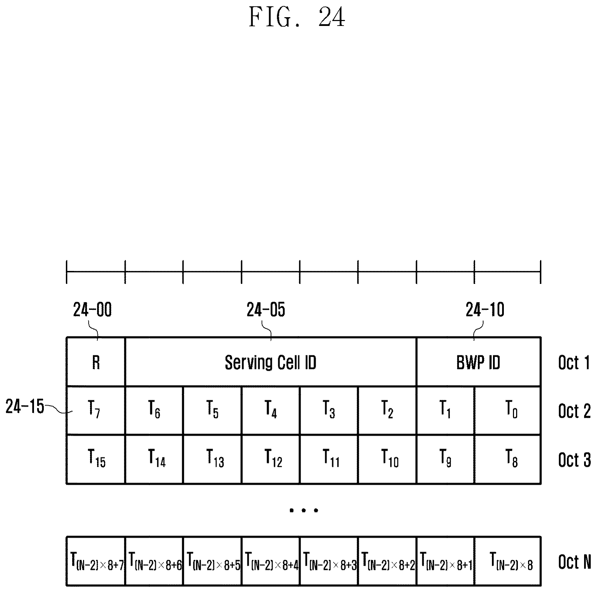

FIG. 24 is a diagram illustrating an example MAC-CE structure for joint TCI state activation and indication in a wireless communication system according to various embodiments.

In FIG. 24, a serving cell ID field 24-05 and a BWP ID field 24-10 may indicate a serving cell ID and a BWP ID, respectively. An R field 24-00 may be a 1-bit reserved field. Each field present in the second to Nth Octets is a bitmap indicating a joint TCI state configured via a higher layer signaling. For example, T7 24-15 may be a field indicating whether the 8th joint TCI state configured via a higher layer signaling is indicated.

If there is one joint TCI state transmitted through the MAC-CE of FIG. 24, the UE may apply the joint TCI state indicated by the MAC-CE to the uplink transmit and downlink receive beams. In addition, if there are two or more joint TCI states transmitted via the MAC-CE, the UE may activate each joint TCI state indicated by the MAC-CE in each codepoint of the TCI state field of DCI (e.g., DCI format 1_1, 1_2), and may sequentially activate the indicated joint TCI states, starting from the joint TCI state with the lowest index, in the codepoints with lower indexes of the TCI state field.

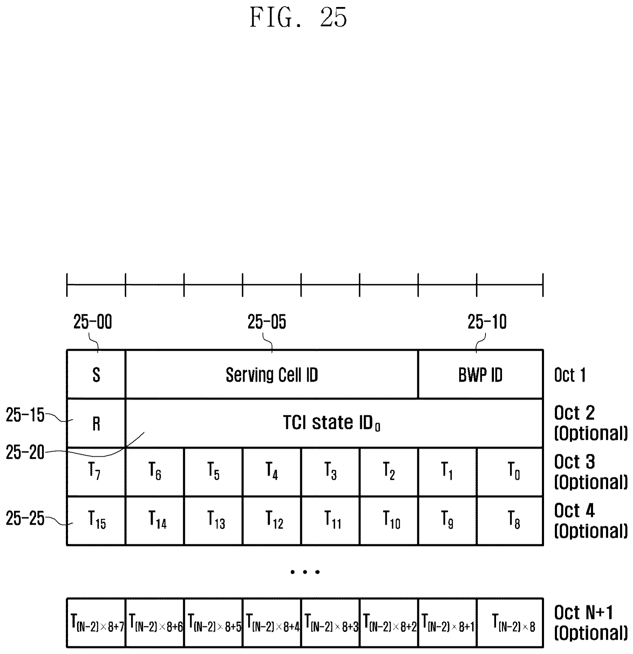

FIG. 25 is a diagram illustrating an example MAC-CE structure for joint TCI state activation and indication in a wireless communication system according to various embodiments.

In FIG. 25, a serving cell ID field 25-05 and a BWP ID field 25-10 may indicate a serving cell ID and a bandwidth part ID, respectively. If the value of an S field 25-00 is 1, the corresponding MAC-CE may indicate one joint TCI state and have a length of only up to the second Octet, and the joint TCI state may be indicated to the UE through a TCI state $ID_0$ field 25-20. If the value of the S field 25-00 is 0, the MAC-CE may include information on two or more joint TCI states and activate each joint TCI state included in the MAC-CE for each codepoint of the TCI state field of the DCI (e.g., DCI format 1_1, 1_2) up to 8 joint TCI states. The second Octet does not exist, and the first Octet and Octets from the third to the N-1th may exist in the MAC-CE structure. Each field existing in the third to the N+1th Octets is a bitmap indicating each joint TCI state configured via a higher layer signaling. For example, $T_{15}$ 25-25 may be a field indicating whether the 16th joint TCI state configured via a higher layer signaling is indicated. If there is one joint TCI state transmitted through the MAC-CE structure of FIG. 25, the UE may apply the joint TCI state indicated by the MAC-CE to the uplink transmit and downlink receive beams, and if there are two or more joint TCI states transmitted through the MAC-CE structure, the UE may activate each joint TCI state indicated by the MAC-CE in each codepoint of the TCI state field of DCI format 1_1, 1_2, and may sequentially activate the indicated joint TCI states, starting from the joint TCI state with the lowest index, in the codepoints with lower indexes of the TCI state field.

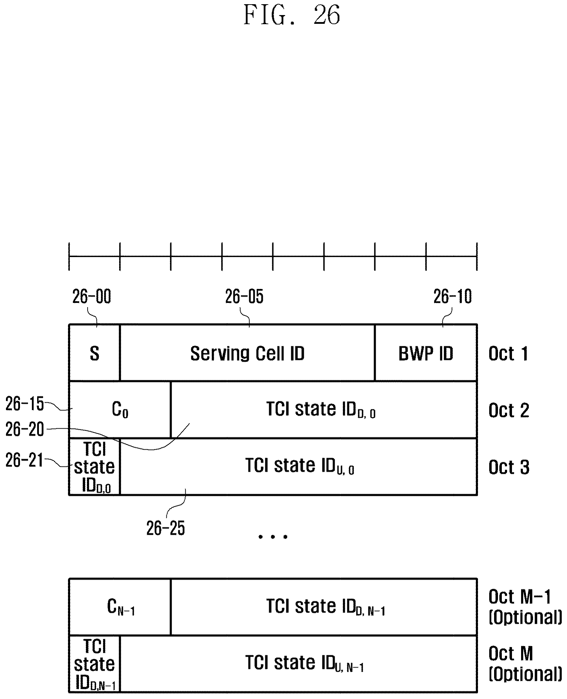

FIG. 26 is a diagram illustrating an example MAC-CE structure for separate TCI state activation and indication in a wireless communication system according to various embodiments.

In FIG. 26, a serving cell ID field 26-05 and a BWP ID field 26-10 may indicate a serving cell ID and a bandwidth part ID, respectively. If the value of an S field 26-00 is 1, the corresponding MAC-CE may indicate one separate TCI state set and have a length of only up to the third Octet.

If the value of the S field 26-00 is 0, the corresponding MAC-CE may include information on two or more separate TCI state sets, and activate each separate TCI state set included in the MAC-CE for each codepoint of the TCI state field of the DCI (e.g., format 1_1, 1_2) up to 8 separate TCI state sets.

A $C_0$ field 26-15 may be a field indicating which separate TCI states are included in the indicated separate TCI state set. If the value of the $C_0$ field is "00", it may refer, for example, to reserve, "01" may refer, for example, to one DL TCI state being indicated, "10" may refer, for example, to one UL TCI state being indicated, and "11" may refer, for example, to one DL TCI state and one UL TCI state being indicated.

A TCI state $ID_{D,0}$ field 26-20 and a TCI state $ID_{U,0}$ field 26-25 may indicate a DL TCI state and a UL TCI state, which may be included and indicated within the 0th separate TCI state set, respectively. If the value of the $C_0$ field is "01", the TCI state $ID_{D,0}$ field 26-20 may indicate a DL TCI state, and the TCI state $ID_{U,0}$ field 26-25 may be ignored. In addition, if the value of the $C_0$ field is "10", the TCI state $ID_{D,0}$ field 26-20 may be ignored, and the TCI state $ID_{U,0}$ field 26-25 may indicate a UL TCI state. Additionally, if the value of the $C_0$ field is "11", the TCI state $ID_{D,0}$ field 26-20 may indicate the DL TCI state, and the TCI state $ID_{U,0}$ field 26-25 may indicate the UL TCI state.

FIG. 26 may refer to an example case where the UL TCI state of the separate TCI states uses the same higher layer signaling structure as the DL TCI state of the separate TCI states and the joint TCI state, and thus the TCI state $ID_{D,0}$ field 26-20 and the TCI state $ID_{U,0}$ field 26-25 may use a length of 7 bits to express up to 128 TCI states. Accordingly, in order for the TCI state $ID_{D,0}$ field 26-20 to use 7 bits, 6 bits 26-20 may be allocated to the second Octet and 1 bit 26-21 may be allocated to the third Octet. In addition, FIG. 26 may refer, for example, to the case where the UL TCI state of the separate TCI states uses a higher layer signaling structure different from the DL TCI state of the separate TCI states and the joint TCI state, and thus the UL TCI state may use 6 bits to express up to 64. Therefore, the first bit of the TCI state $ID_{U,0}$ field 26-25 may be fixed to 0 or 1, and only a total of 6 bits from the second to the seventh bits representing the actual UL TCI state may have meaning.

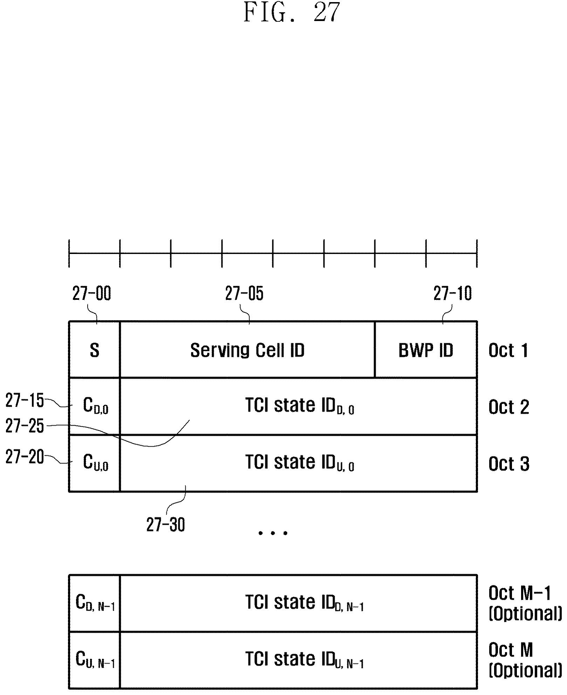

FIG. 27 is a diagram illustrating an example MAC-CE structure for separate TCI state activation and indication in a wireless communication system according to various embodiments.

In FIG. 27, a serving cell ID field 27-05 and a BWP ID field 27-10 may indicate a serving cell ID and a bandwidth part ID, respectively. If the value of an S field 27-00 is 1, the corresponding MAC-CE may indicate one separate TCI state set and have a length of only up to the third Octet. If the value of the S field 27-00 is 0, the MAC-CE may include information on two or more separate TCI state sets, and activate each separate TCI state set included in the MAC-CE for each codepoint of the TCI state field of the DCI (e.g., DCI format 1_1, 1_2) up to 8 separate TCI state sets.

A $C_{D,0}$ field 27-15 may be a field indicating whether the indicated separate TCI state set includes a DL TCI state. If the $C_{D,0}$ field 27-15 value is 1, the DL TCI state is included and the DL TCI state may be indicated through a TCI state $ID_{D,0}$ field 27-25. If the $C_{D,0}$ field 27-15 value is 0, the DL TCI state is not included and the TCI state $ID_{D,0}$ field 27-25 may be ignored.

Similarly, a $C_{U,0}$ field 27-20 may be a field indicating whether the indicated separate TCI state set includes a UL TCI state. If the $C_{U,0}$ field 27-20 value is 1, the UL TCI state is included and the UL TCI state may be indicated through a TCI state $ID_{U,0}$ field 27-30. If the $C_{U,0}$ field 27-20 value is 0, the UL TCI state is not included and the TCI state $ID_{U,0}$ field 27-30 may be ignored.

FIG. 27 may refer to an example case where the UL TCI state of the separate TCI states uses the same higher layer signaling structure as the DL TCI state of the separate TCI states and the joint TCI state, and accordingly, 7 bits may be used for the length of the TCI state $ID_{D,0}$ field 27-25 and the TCI state $ID_{U,0}$ field 27-30 to express up to 128 TCI states. In addition, FIG. 27 may refer, for example, to the case where the UL TCI state of the separate TCI states uses a higher layer signaling structure different from the DL TCI state of the separate TCI states and the joint TCI state, and accordingly, 6 bits may be used for expressing up to 64 UL TCI states. Therefore, the first bit of the TCI state $ID_{D,0}$ field 27-25 may be fixed to 0 or 1, and only a total of 6 bits from the second to the seventh bits may have meaning as bits expressing an actual UL TCI state.

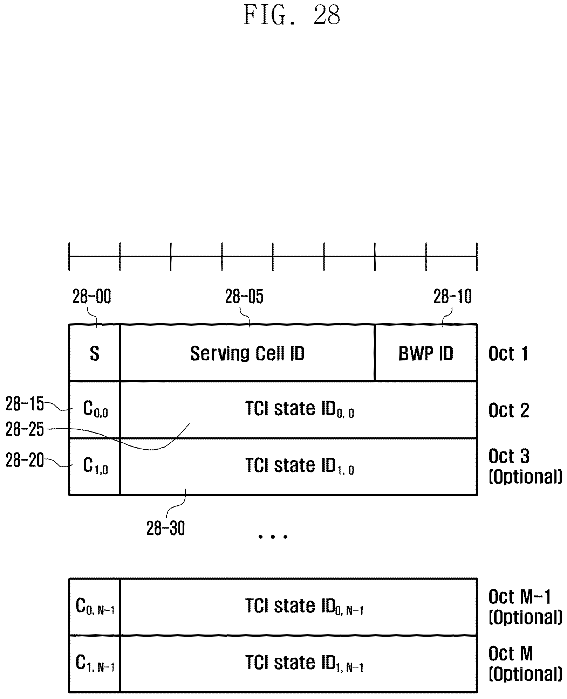

FIG. 28 is a diagram illustrating an example MAC-CE structure for separate TCI state activation and indication in a wireless communication system according to various embodiments.

In FIG. 28, a serving cell ID field 28-05 and a BWP ID field 28-10 may indicate a serving cell ID and a bandwidth part ID, respectively. If the value of an S field 28-00 is 1, the corresponding MAC-CE may indicate one separate TCI state set and have a length of only up to the third Octet. The MAC-CE structure of FIG. 28 may indicate one separate TCI state set using two Octets, and if the corresponding separate TCI state set includes the DL TCI state, the first Octet of the two Octets may always indicate the DL TCI state, and the second Octet may always indicate the UL TCI state.

If the value of the S field 28-00 is 0, the MAC-CE may include information of two or more separate TCI state sets and activate each separate TCI state set included in the MAC-CE for each codepoint of the TCI state field of the DCI (e.g., DCI format 1_1, 1_2) up to eight separate TCI state sets.

A $C_{0,0}$ field 28-15 may have a meaning of distinguishing whether the TCI state indicated by a TCI state $ID_{0,0}$ field 28-25 is a DL TCI state or a UL TCI state. If the value of the $C_{0,0}$ field 28-15 is 1, may refer, for example, to the DL TCI state, and the DL TCI state may be indicated through the TCI state $ID_{0,0}$ field 28-25, and the third octet may exist. If the value of a $C_{1,0}$ field 28-20 is 1, the UL TCI state may be indicated through a TCI state $ID_{1,0}$ field 28-30, and if the value of the $C_{1,0}$ field 28-20 is 0, the TCI state $ID_{1,0}$ field 28-30 may be ignored.

If the value of the $C_{0,0}$ field 28-15 is 0, the UL TCI state may be indicated through the TCI state $ID_{0,0}$ field 28-25, and the third Octet may not be present.

FIG. 28 may refer to an example case where the UL TCI state of the separate TCI states uses the same higher layer signaling structure as the DL TCI state of the separate TCI states and the joint TCI state, and thus the length of the TCI state $ID_{0,0}$ field 28-25 and the TCI state $ID_{1,0}$ field 28-30 may use 7 bits to express up to 128 TCI states. In addition, FIG. 28 may refer, for example, to the case where the UL TCI state of the separate TCI states uses a higher layer signaling structure different from the DL TCI state of the separate TCI states and the joint TCI state, and thus the TCI state $ID_{0,0}$ field 28-25 may use 7 bits to express both 6 bits that can express up to 64 UL TCI states and 7 bits that can express up to 128 DL TCI states.

If the value of the $C_{1,0}$ field 28-20 is 1 and thus the TCI state $ID_{1,0}$ field 28-30 indicates the UL TCI state, the first bit of the TCI state ID$_{1,0}$ field 28-30 may be fixed to 0 or 1, and only a total of 6 bits from the second to the seventh bits representing the actual UL TCI state can have meaning.

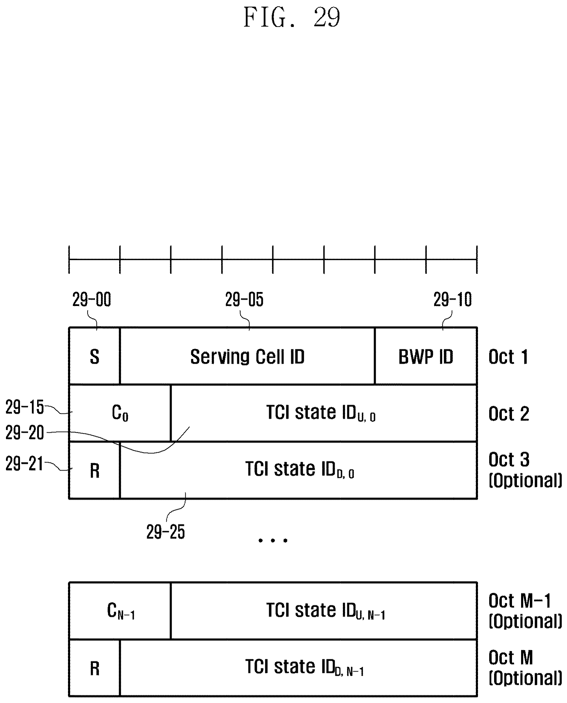

FIG. 29 is a diagram illustrating an example MAC-CE structure for separate TCI state activation and indication in a wireless communication system according to various embodiments.

In FIG. 29, a serving cell ID field 29-05 and a BWP ID field 29-10 may indicate a serving cell ID and a bandwidth part ID, respectively. If the value of an S field 29-00 is 1, the corresponding MAC-CE may indicate one separate TCI state set and have a length of only up to the third Octet. If the value of the S field 29-00 is 0, the MAC-CE may include information on two or more separate TCI state sets and activate each separate TCI state set included in the MAC-CE for each codepoint of the TCI state field of DCI (e.g., DCI format 1_1, 1_2) up to 8 separate TCI state sets.

A C$_0$ field 29-15 may be a field indicating which separate TCI states are included in the indicated separate TCI state set. For example, if the value of the C$_0$ field 29-15 is "00", it may refer, for example, to reserve, "01" may refer, for example, to one DL TCI state being indicated, "10" may refer, for example, to one UL TCI state being indicated, and "11" may refer, for example,t o one DL TCI state and one UL TCI state being indicated. A TCI state ID$_{U,0}$ field 29-20 and a TCI state ID$_{D,0}$ field 29-25 may indicate a UL TCI state and a DL TCI state, which may be included and indicated within the 0th separate TCI state set, respectively. If the value of the C$_0$ field 29-15 is "01", the TCI state ID$_{D,0}$ field 29-25 may indicate a DL TCI state, and the TCI state ID$_{U,0}$ field 29-20 may be ignored. In addition, if the value of the C$_0$ field 29-15 is "10", the third Octet may be ignored, and the TCI state ID$_{U,0}$ field 29-20 may indicate a UL TCI state. Additionally, if the value of the C$_0$ field 29-15 is "11", the TCI state ID$_{D,0}$ field 29-25 may indicate the DL TCI state, and the TCI state ID$_{U,0}$ field 29-20 may indicate the UL TCI state.

FIG. 29 may refer to an example case where the UL TCI state of the separate TCI states uses a higher layer signaling structure different from the DL TCI state of the separate TCI states and the joint TCI state, and thus the length of the TCI state ID$_{D,0}$ field 29-20 may use 7 bits to express up to 128 TCI states, and the length of the TCI state ID$_{U,0}$ field 29-25 may use 6 bits to express up to 64 TCI states.

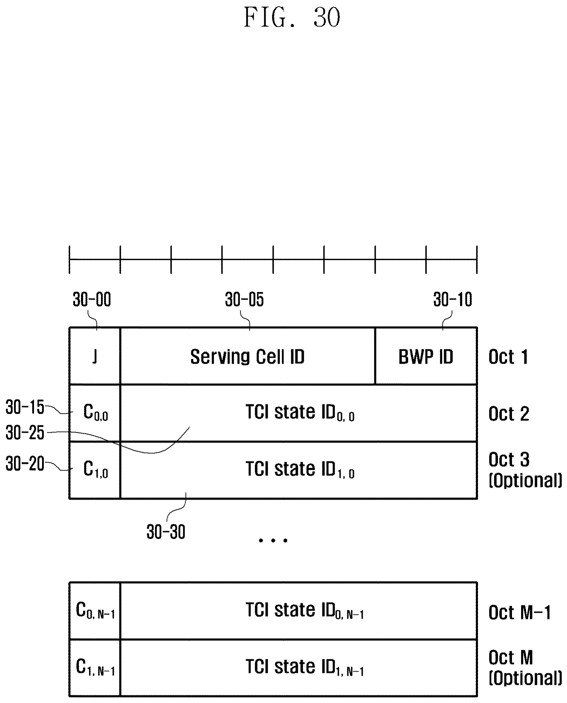

FIG. 30 is a diagram illustrating an example MAC-CE structure for joint and separate TCI state activation and indication in a wireless communication system according to various embodiments.

In FIG. 30, a serving cell ID field 30-05 and a BWP ID field 30-10 may indicate a serving cell ID and a bandwidth part ID, respectively. If the value of a J field 30-00 is 1, the MAC-CE may indicate a joint TCI state, and if it is 0, it may indicate a separate TCI state set.

- If the MAC-CE indicates the joint TCI state, all odd Octets (third, fifth, ⋯) except the first Octet may be ignored. A C$_{0,0}$ field 30-15 may indicate whether the MAC-CE indicates one joint TCI state or whether the MAC-CE may include two or more joint TCI states and activate each TCI state in each codepoint of the TCI state field of the DCI (e.g., DCI format 1_1, 1_2). If the value of the C$_{0,0}$ field 30-15 is 1, the MAC-CE may indicate one joint TCI state, and Octets from the third Octet may not exist. If the value of the C$_{0,0}$ field 30-15 is 0, the MAC-CE may activate two or more joint TCI states in each codepoint of the TCI state field of the DCI. TCI state ID $_{0,0}$ may refer, for example, to the first joint TCI state indicated.

- If the MAC-CE indicates the separate TCI state set, the C$_{0,0}$ field 30-15 may have a meaning of distinguishing whether the TCI state indicated by a TCI state ID$_{0,0}$ field 30-25 is a DL TCI state or a UL TCI state. If the value of the C$_{0,0}$ field 30-15 is 1, it indicates the DL TCI state, and the DL TCI state may be indicated through the TCI state ID$_{0,0}$ field 30-25, and the third Octet may be present. In this case, if the value of a C$_{1,0}$ field 30-20 is 1, the UL TCI state may be indicated through a TCI state ID$_{1,0}$ field 30-30, and if the value of the C$_{1,0}$ field 30-20 is 0, the TCI state ID$_{1,0}$ field 30-30 may be ignored.

If the value of the C$_{0,0}$ field 30-15 is 0, the UL TCI state may be indicated through the TCI state ID$_{0,0}$ field 30-25, and the third Octet may not exist.

FIG. 30 may refer to an example case where the UL TCI state of the separate TCI states uses the same higher layer signaling structure as the DL TCI state of the separate TCI states and the joint TCI state, and thus the length of the TCI state ID$_{0,0}$ field 30-25 and the TCI state ID$_{1,0}$ field 30-30 may use 7 bits to express up to 128 TCI states. In addition, FIG. 30 may refer, for example, to the case where the UL TCI state of the separate TCI states uses a higher layer signaling structure different from the DL TCI state of the separate TCI states and the joint TCI state, and thus the TCI state ID$_{0,0}$ field 30-25 may use 7 bits to express both 6 bits that can express up to 64 UL TCI states and 7 bits that can express up to 128 DL TCI states. If the value of the C$_{1,0}$ field 30-20 is 1 and thus the TCI state ID$_{1,0}$ field 30-30 indicates the UL TCI state, then the first bit of the TCI state ID$_{1,0}$ field 30-30 may be fixed to 0 or 1, and only a total of 6 bits from the second to the seventh bits representing the actual UL TCI state can have meaning.

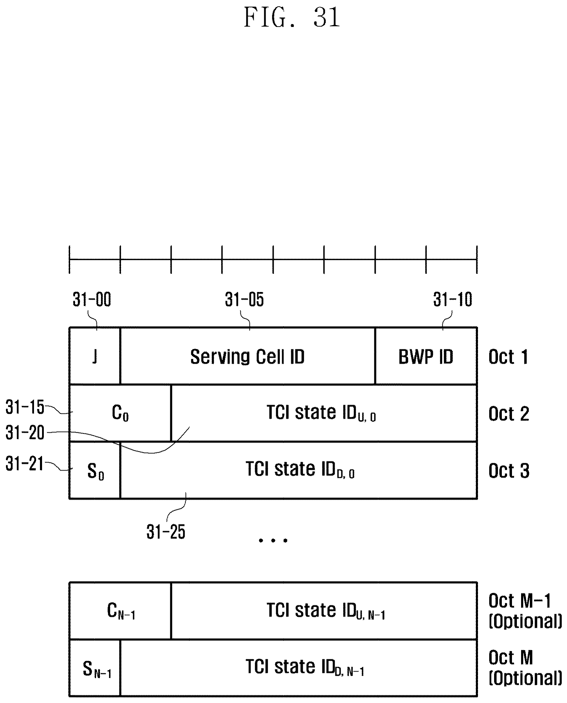

FIG. 31 is a diagram illustrating an example MAC-CE structure for joint and separate TCI state activation and indication in a wireless communication system according to various embodiments.

In FIG. 31, a serving cell ID field 31-05 and a BWP ID field 31-10 may indicate a serving cell ID and a bandwidth part ID, respectively. If the value of a J field 31-00 is 1, the MAC-CE may indicate a joint TCI state, and if it is 0, it may indicate a separate TCI state set.

- If the MAC-CE indicates the joint TCI state, all even-numbered Octets (second, fourth, ⋯) except the first Octet may be ignored. An S field 31-21 may indicate whether the MAC-CE indicates one joint TCI state or whether the MAC-CE activates two or more joint TCI states in each codepoint of the TCI state field of the DCI (e.g., DCI format 1_1, 1_2). If the value of the S field 31-21 is 1, the MAC-CE may indicate one joint TCI state, and Octets from the third Octet may not exist. If the value of the S field 31-21 is 0, the MAC-CE may include information of two or more joint TCI states and activate each joint TCI state included in the MAC-CE for each codepoint of the TCI state field of DCI format 1_1, 1_2. TCI state $ID_{D,0}$ may refer, for example, to the first joint TCI state indicated.

- If the MAC-CE indicates the separate TCI state set, a $C_0$ field 31-15 may be a field indicating which separate TCI states are included in the indicated separate TCI state set. For example, if the value of the $C_0$ field 31-15 is "00", it may refer, for example, to reserve, "01" may refer, for example, to one DL TCI state being indicated, "10" may refer, for example, to one UL TCI state being indicated, and "11" may refer, for example, to one DL TCI state and one UL TCI state being indicated. A TCI state $ID_{U,0}$ field 31-20 and a TCI state $ID_{D,0}$ field 31-25 may indicate the UL TCI state and the DL TCI state, which may be included and indicated within the 0th separate TCI state set, respectively. If the value of the $C_0$ field 31-15 is "01", the TCI state $ID_{D,0}$ field 31-25 may indicate the DL TCI state, and the TCI state $ID_{U,0}$ field 31-20 may be ignored. In addition, if the value of the $C_0$ field 31-15 is "10", the TCI state $ID_{U,0}$ field 31-20 may indicate the UL TCI state, and if the value of the $C_0$ field 31-15 is "11", the TCI state $ID_{D,0}$ field 31-25 may indicate the DL TCI state, and the TCI state $ID_{U,0}$ field 31-20 may indicate the UL TCI state.

If the value of the $S_0$ field 31-21 is 1, the MAC-CE indicates one separate TCI state set, and Octets from the fourth Octet may not exist. In addition, if the value of the $S_0$ field 31-21 is 0, the MAC-CE may include information on two or more separate TCI state sets, and activate each separate TCI state set included in the MAC-CE for each codepoint of the TCI state field of the DCI (e.g., DCI format 1_1, 1_2) up to 8 separate TCI state sets. If the value of the $S_0$ field 31-21 is 0, and if the values of $C_1, \cdots, C_{N-1}$ fields are "10", it refer, for example to only the UL TCI state being indicated, and therefore, the fifth, seventh, ⋯, Mth Octets may be ignored.

FIG. 31 may refer, for example, to a case where the UL TCI state of the separate TCI states uses a higher layer signaling structure different from the DL TCI state of the separate TCI states and the joint TCI state, and thus the length of the TCI state $ID_{U,0}$ field 31-20 may use 7 bits to express up to 128 TCI states, and the length of the TCI state $ID_{D,0}$ field 31-25 may use 6 bits to express up to 64 TCI states.

If the UE receives a transmit/receive beam related indication using the joint TCI state scheme or separate TCI state scheme configured via a higher layer signaling, the UE may receive a PDSCH including a MAC-CE indicating a TCI state from the base station and apply the TCI state to transmit/receive beams. If there are two or more joint TCI states or separate TCI state sets included in the MAC-CE, the UE may activate plural joint TCI states indicated by the MAC-CE for each codepoint of the TCI state field of the DCI (e.g., DCI format 1_1, 1_2) starting from 3 ms after transmission of a PUCCH including HARQ-ACK information indicating whether the corresponding PDSCH has been received successful, as described above. Thereafter, the UE may receive the DCI and apply the TCI state to the uplink transmit and downlink receive beams using one joint TCI state or separate TCI state set indicated by the TCI state field in the DCI. At this time, DCI format 1_1 or 1_2 may include downlink data channel scheduling information (with DL assignment) or may not include it (without DL assignment).

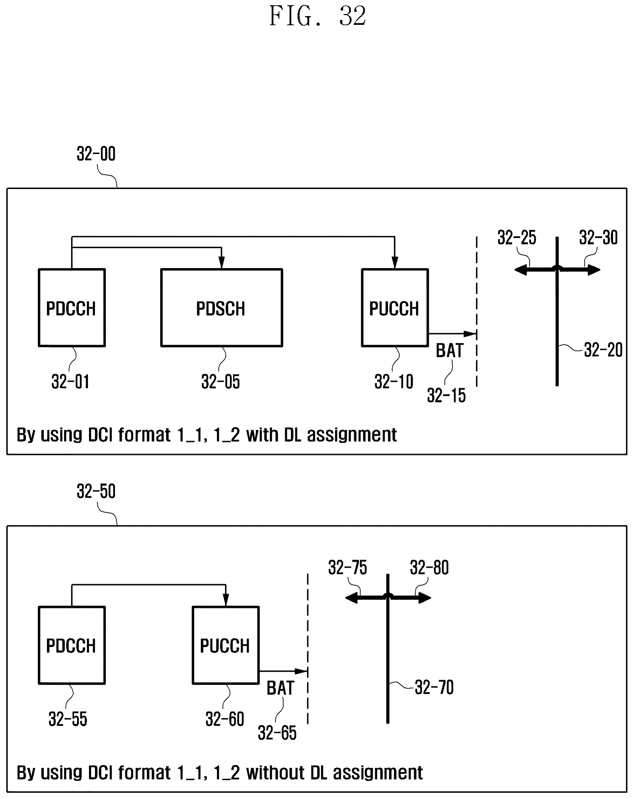

FIG. 32 is a diagram illustrating an example beam application time considerable in case of using a unified TCI scheme in a wireless communication system according to various embodiments.

As described above, the UE may receive DCI (e.g., DCI format 1_1 or 1_2) from the base station, including (with DL assignment) or not including (without DL assignment) downlink data channel scheduling information. The UE may apply the TCI state to the uplink transmit and downlink receive beams using one joint TCI state or a separate TCI state set indicated by the TCI state field in the DCI.

- DCI format 1_1, 1_2 with DL assignment 32-00: If the UE receives DCI 32-01 including downlink data channel scheduling information from the base station, and a single joint TCI state or separate TCI state set based on the unified TCI scheme is indicated, the UE may receive a PDSCH 32-05 scheduled based on the DCI, and transmit a PUCCH 32-10 including a HARQ-ACK indicating whether the DCI and the PDSCH have been received successfully. At this time, the HARQ-ACK may include whether both the DCI and the PDSCH have been received successfully. If at least one of the DCI and the PDSCH is not received, the UE may transmit a NACK, and if reception of the DCI and the PDSCH is successful, the UE may transmit an ACK.

- DCI format 1_1, 1_2 without DL assignment 32-50: If the UE receives, from the base station, DCI 32-55 that does not include downlink data channel scheduling information, and a single joint TCI state or separate TCI state set based on the unified TCI scheme is indicated, the UE may assume the followings for the DCI.

- CRC scrambled using CS-RNTI is included.
- All bits assigned to all fields used as a redundancy version (RV) field are 1.
- All bits assigned to all fields used as a modulation and coding scheme (MCS) field are 1.
- All bits assigned to all fields used as a new data indication (NDI) field are 0.
- In the case of frequency domain resource allocation (FDRA) Type 0, all bits assigned to the FDRA field are 0, in the case of FDRA Type 1, all bits assigned to the FDRA field are 1, and in the case where the FDRA scheme is dynamicSwitch, all bits assigned to the FDRA field are 0.

The UE may transmit a PUCCH 32-60 including a HARQ-ACK indicating whether reception of DCI for which the above-described matters are assumed is successful.

- For both DCI formats 1_1, 1_2 with DL assignment 32-00 and without DL assignment 32-50, if a new TCI state indicated through the DCI 32-01 or 32-55 is the same as a TCI state that was previously indicated and applied to the uplink transmit and downlink receive beams, the UE may maintain the previously applied TCI state. If the new TCI state is different from the previously indicated TCI state, the UE may determine an application time of the joint TCI state or separate TCI state set, which can be indicated from the TCI state field included in the DCI, as a time 32-30 or 32-80 after the first slot 32-20 or 32-70 after a beam application time (BAT) 32-15 or 32-65 has elapsed from PUCCH transmission, and may use the previously indicated TCI state at a time 32-25 or 32-75 before that slot 32-20 or 32-70.
- For both DCI format 1_1, 1_2 with DL assignment 32-00 and without DL assignment 32-50, the BAT may be configured via a higher layer signaling based on UE capability report information as a certain number of OFDM symbols, and the numerology for the BAT and the first slot after the BAT may be determined based on the smallest numerology among all cells to which the joint TCI state or separate TCI state set indicated through DCI is applied.

The UE may apply a single joint TCI state indicated through MAC-CE or DCI to reception of CORESETs connected to all UE-specific search spaces, PDSCH reception and PUSCH transmission scheduled by a PDCCH transmitted from the corresponding CORESET, and all PUCCH transmissions.

If a single separate TCI state set indicated via MAC-CE or DCI includes one DL TCI state, the UE may apply the single separate TCI state set to reception of CORESETs connected to all UE-specific search spaces, and PDSCH reception scheduled by a PDCCH transmitted from the corresponding CORESET, and apply the previously indicated UL TCI state to all PUSCH and PUCCH resources.

If a single separate TCI state set indicated via MAC-CE or DCI includes one DL TCI state, the UE may apply the single separate TCI state set to all PUSCH and PUCCH resources, and apply the previously indicated DL TCI state to reception of CORESETs connected to all UE-specific search spaces, and PDSCH reception scheduled by a PDCCH transmitted from the corresponding CORESET.

If a single separate TCI state set indicated via MAC-CE or DCI includes one DL TCI state and one UL TCI state, the UE may apply the DL TCI state to reception of CORESETs connected to all UE-specific search spaces, and PDSCH reception scheduled by a PDCCH transmitted from the corresponding CORESET, and apply the UL TCI state to all PUSCH and PUCCH resources.

< Multi-TCI state indication and activation method based on unified TCI scheme>

As an example embodiment of the disclosure, a multi-TCI state indication and activation method based on a unified TCI scheme is described. Compared to the first embodiment described above, the multi-TCI state indication and activation method may refer to the case where the number of indicated joint TCI states is expanded to two or more, and the case where each of DL TCI state and UL TCI state included in one separate TCI state set is expanded to two or more at most. If one separate TCI state set may contain at most two DL TCI states and two UL TCI states, the one separate TCI state set may have a total of eight possible combinations of DL TCI states and UL TCI states ({DL,UL} = {0,1}, {0,2}, {1,0}, {1,1}, {1,2}, {2,0}, {2,1}, {2,2}).

If the UE is indicated plural TCI states by the base station based on MAC-CE, the UE may receive two or more joint TCI states or one separate TCI state set from the base station through a MAC-CE. The base station may schedule reception of a PDSCH including the MAC-CE to the UE through a PDCCH, and the UE may determine an uplink transmit beam or transmit filter and a downlink receive beam or receive filter using two or more joint TCI states or one separate TCI state set indicated via MAC-CE, starting from 3 ms after transmitting a PUCCH including HARQ-ACK information indicating whether the PDSCH including the MAC-CE has been received successfully.

If the UE is indicated plural TCI states based on DCI (e.g., DCI format 1_1, 1_2) by the base station, each codepoint of one TCI state field in the DCI may refer to two or more joint TCI states or two or more separate TCI state sets included in a MAC-CE. At this time, the UE may receive the MAC-CE from the base station and activate two or more joint TCI states or two or more separate TCI state sets corresponding to each codepoint of one TCI state field in the DCI. The base station may schedule the reception of a PDSCH including the MAC-CE to the UE through a PDCCH, and the UE may activate TCI state information included in the MAC-CE from 3 ms after transmitting a PUCCH including HARQ-ACK information indicating whether the PDSCH including the MAC-CE has been received successfully.

If the UE is indicated plural TCI states based on DCI (DCI format 1_1, 1_2) by the base station, there may be two or more TCI state fields in the DCI (DCI format 1_1, 1_2), and one of two or more joint TCI states or two or more separate TCI state sets may be indicated based on each TCI state field. At this time, the UE may receive a MAC-CE from the base station and activate the joint TCI state or separate TCI state set corresponding to each codepoint of two or more TCI state fields in the DCI. The base station may schedule reception of a PDSCH including the MAC-CE to the UE through a PDCCH, and the UE may activate TCI state information included in the MAC-CE from 3 ms after transmitting a PUCCH including HARQ-ACK information indicating whether the PDSCH including the MAC-CE has been received successfully. The UE may be configured for the presence or not of one or more additional TCI state fields via a higher layer signaling, and a bit length of the additional TCI state fields may be the same as the existing TCI state fields, or its length may be adjusted based on a higher layer signaling.

The UE may receive a transmit/receive beam related indication in the unified TCI scheme using one of the joint TCI state and the separate TCI state configured by the base station. The UE may be configured by the base station through a higher layer signaling whether to use either the joint TCI state or the separate TCI state. For the separate TCI state indication, the UE may be configured to have a maximum bit length of 4 in the TCI state field in the DCI (DCI format 1_1, 1_2) through a higher layer signaling.

The above-described MAC-CE used to activate or indicate the plural joint TCI states and separate TCI states may exist for each of the joint and separate TCI state schemes. Using a single MAC-CE, the TCI state may be activated or indicated based on either the joint or separate TCI state scheme. The MAC-CEs used for the MAC-CE-based indication scheme and the MAC-CE-based activation scheme may share one MAC-CE structure or may use individual MAC-CE structures. Through the drawings described below, various MAC-CE structures for activating and indicating plural joint or separate TCI states may be considered. In the drawings described below, for convenience of explanation, the case where two TCI states are activated or indicated is considered, but the same may be applied to cases where three or more TCI states are activated or indicated.

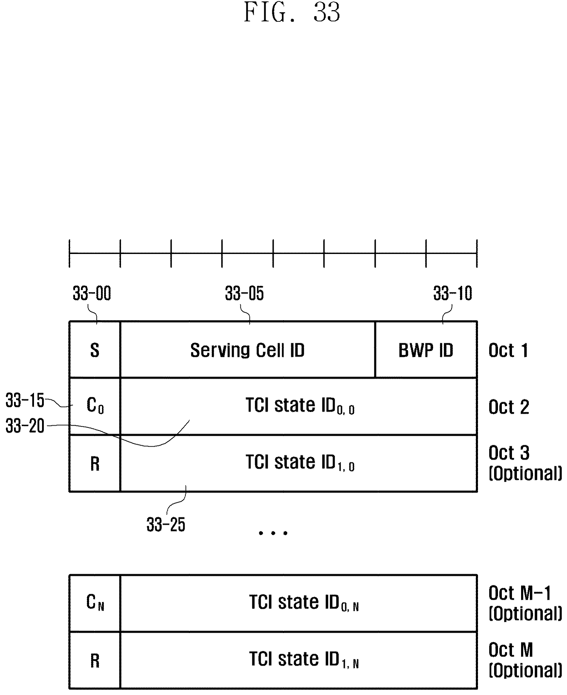

FIG. 33 is a diagram illustrating an example MAC-CE structure for activation and indication of a plurality of joint TCI states in a wireless communication system according to various embodiments.

In FIG. 33, a serving cell ID field 33-05 and a BWP ID field 33-10 may indicate a serving cell ID and a bandwidth part ID, respectively. If the value of an S field 33-00 is 1, the corresponding MAC-CE may indicate one or two joint TCI states and have a length only up to the third Octet.

If the value of a $C_0$ field 33-15 is 0, the third Octet does not exist, and one joint TCI state may be indicated through a TCI state $ID_{0,0}$ field 33-20. If the value of the $C_0$ field 33-15 is 1, the third Octet exists, and two joint TCI states may be indicated through the TCI state $ID_{0,0}$ field 33-20 and a TCI state $ID_{1,0}$ field 33-25, respectively.

If the value of the S field 33-00 is 0, the MAC-CE may activate one or two joint TCI states included in the MAC-CE for each codepoint of the TCI state field of the DCI (e.g., DCI format 1_1, 1_2), or activate one joint TCI state included in the MAC-CE for each codepoint of two TCI state fields of the DCI, up to eight codepoints.

If one or two joint TCI states are activated for one codepoint of one TCI state field, a TCI state $ID_{0,Y}$ field and a TCI state $ID_{1,Y}$ field may refer to the first and second joint TCI states of the two joint TCI states activated for the Yth codepoint of the TCI state field, respectively.

If one joint TCI state is activated for one codepoint of two TCI state fields, the TCI state $ID_{0,Y}$ field and the TCI state $ID_{1,Y}$ field may refer to each joint TCI state activated for the Yth codepoint of the first and second TCI state fields, respectively.

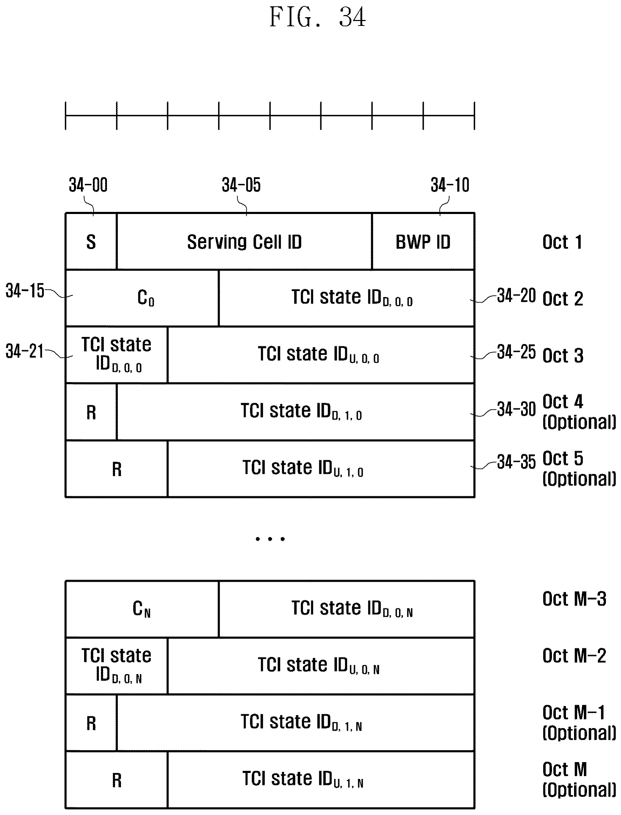

FIG. 34 is a diagram illustrating an example MAC-CE structure for activation and indication of a plurality of separate TCI states in a wireless communication system according to various embodiments.

In FIG. 34, a serving cell ID field 34-05 and a BWP ID field 34-10 may indicate a serving cell ID and a bandwidth part ID, respectively. If the value of an S field 34-00 is 1, the MAC-CE may indicate one separate TCI state set and have a length of only up to the fifth Octet.

If the value of the S field 34-00 is 0, the MAC-CE may include information on plural separate TCI state sets, and the MAC-CE may activate one separate TCI state set in each codepoint of the TCI state field of the DCI (e.g., format 1_1, 1_2), or activate one separate TCI state set in each codepoint of two TCI state fields of the DCI, up to 8 or 16 codepoints via a higher layer signaling as described above.

In the MAC-CE structure of FIG. 34, starting from the second Octet, every four Octets may correspond to one separate TCI state set. A $C_0$ field 34-15 may have a total of eight values from "000" to "111", and as described above, each may correspond to the eight cases that one separate TCI state set can have.

- If the $C_0$ field has a value of "000", may refer, for example, to one separate TCI state set containting one UL TCI state, and TCI state $ID_{D,0,0}$ fields 34-20 and 34-21 may be ignored, and a TCI state $ID_{U,0,0}$ field 34-25 may contain information about one UL TCI state. The fourth and fifth Octets may be ignored.

- If the $C_0$ field has a value of "001", may refer, for example, to one separate TCI state set containing two UL TCI states, and the TCI state $ID_{D,0,0}$ fields 34-20 and 34-21 may be ignored, and the TCI state $ID_{U,0,0}$ field 34-25 may contain information about the first UL TCI state of the two UL TCI states. Also, the fourth Octet may be ignored, and a TCI state $ID_{U,1,0}$ field 34-35 may contain information about the second UL TCI state of the two UL TCI states.
- If the $C_0$ field has the value "010", may refer, for example, to one separate TCI state set containing one DL TCI state, and the TCI state $ID_{D,0,0}$ fields 34-20 and 34-21 may contain information about one DL TCI state, and the TCI state $ID_{U,1,0}$ field 34-35 and the fourth and fifth Octets may be ignored.
- If the $C_0$ field has the value "011", may refer, for example, to one separate TCI state set containing one DL TCI state and one UL TCI state, and the TCI state $ID_{D,0,0}$ fields 34-20 and 34-21 may contain information about one DL TCI state, and the TCI state $ID_{U,0,0}$ field 34-25 may contain information about one UL TCI state. The fourth and fifth Octets may be ignored.
- If the $C_0$ field has a value of "100", may refer, for example, to one separate TCI state set containing one DL TCI state and two UL TCI states, and the TCI state $ID_{D,0,0}$ fields 34-20 and 34-21 may contain information about one DL TCI state, and the TCI state $ID_{U,0,0}$ field 34-25 may contain information about the first UL TCI state of the two UL TCI states. In addition, the fourth Octet may be ignored, and the TCI state $ID_{U,1,0}$ field 34-35 may contain information about the second UL TCI state of the two UL TCI states.
- If the $C_0$ field has the value of "101", may refer, for example, to one separate TCI state set including two DL TCI states, and the TCI state $ID_{D,0,0}$ fields 34-20 and 34-21 may include information about the first DL TCI state of the two DL TCI states, and the TCI state $ID_{U,0,0}$ field 34-25 and the fifth Octet may be ignored. A TCI state $ID_{D,1,0}$ field 34-30 may include information about the second DL TCI state of the two DL TCI states.
- If the $C_0$ field has a value of "110", may refer, for example, to one separate TCI state set including two DL TCI states and one UL TCI state, and the TCI state $ID_{D,0,0}$ fields 34-20 and 34-21 may include information about the first DL TCI state of the two DL TCI states, the TCI state $ID_{U,0,0}$ field 34-25 may include information about one UL TCI state, and the TCI state $ID_{D,1,0}$ field 34-30 may include information about the second DL TCI state of the two DL TCI states, and the fifth Octet may be ignored.
- If the $C_0$ field has a value of "111", it may refer, for example, to one separate TCI state set including two DL TCI states and two UL TCI states, and the TCI state $ID_{D,0,0}$ fields 34-20 and 34-21 may include information on the first DL TCI state of the two DL TCI states, the TCI state $ID_{U,0,0}$ field 34-25 may include information on the first UL TCI state of the two UL TCI states, the TCI state $ID_{D,1,0}$ field 34-30 may include information on the second DL TCI state of the two DL TCI states, and the TCI state $ID_{U,1,0}$ field 34-35 may include information on the second UL TCI state of the two UL TCI states.

FIG. 34 may refer to the case where the UL TCI state of the separate TCI states uses a higher layer signaling structure different from the DL TCI state of the separate TCI states and the joint TCI state. Accordingly, since the UL TCI state requires 6 bits that can express up to 64, the TCI state $ID_{D,0,0}$ to TCI state $ID_{D,1,N}$ fields expressing the DL TCI state may be expressed with 7 bits, whereas the TCI state $ID_{U,0,0}$ to TCI state $ID_{U,1,N}$ fields expressing the UL TCI state may be expressed with 6 bits.

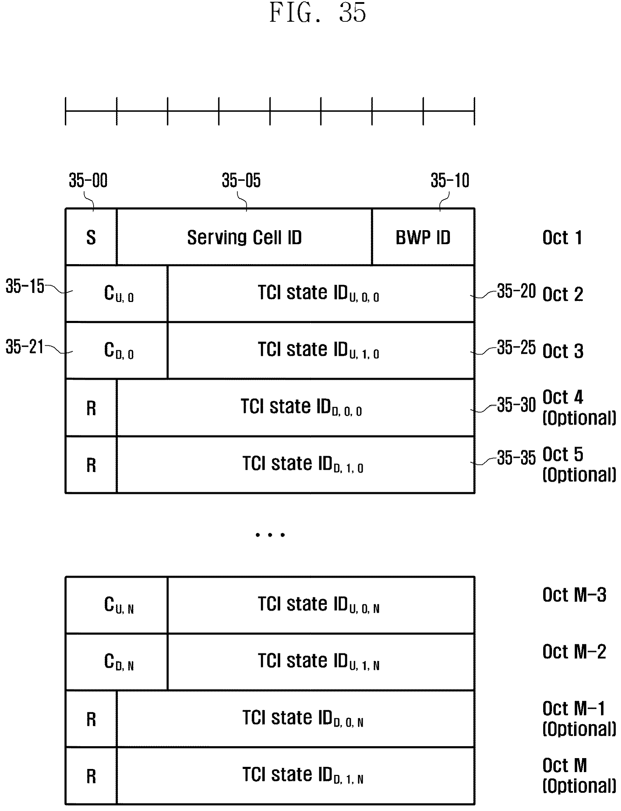

FIG. 35 is a diagram illustrating an example MAC-CE structure for activation and indication of a plurality of separate TCI states in a wireless communication system according to various embodiments.

In FIG. 35, a serving cell ID field 35-05 and a BWP ID field 35-10 may indicate a serving cell ID and a bandwidth part ID, respectively. If the value of an S field 35-00 is 1, the corresponding MAC-CE may indicate one separate TCI state set and may have a length of only up to the fifth Octet.

If the value of the S field 35-00 is 0, the MAC-CE may include information about plural separate TCI state sets, and the MAC-CE may activate one separate TCI state set included in the MAC-CE for each codepoint of the TCI state field of the DCI (e.g., format 1_1, 1_2), or activate one separate TCI state set included in the MAC-CE for each codepoint of the two TCI state fields of the DCI, up to 8 or 16 codepoints via a higher layer signaling as described above.

In the MAC-CE structure of FIG. 35, starting from the second Octet, every four Octets may correspond to one separate TCI state set. A $C_{U,0}$ field 35-15 and a $C_{D,0}$ field 35-21 denote the number of UL TCI states and the number of DL TCI states contained in one separate TCI state set, respectively, and may have meanings for each codepoint as follows.

- If the $C_{U,0}$ field has a value of "00", may refer, for example, to no UL TCI state being contained, so a TCI state $ID_{U,0,0}$ 35-20 and a TCI state $ID_{U,1,0}$ 35-25 may be ignored.
- If the $C_{U,0}$ field has a value of "01", may refer, for example, to one UL TCI state being contained, so the TCI state $ID_{U,0,0}$ 35-20 may contain information about one UL TCI state, and the TCI state $ID_{U,1,0}$ 35-25 may be ignored.
- If the $C_{U,0}$ field has a value of "10", may refer, for example, to two UL TCI states being contained, so the TCI state $ID_{U,0,0}$ 35-20 may contain information on the first UL TCI state of the two UL TCI states, and the TCI state $ID_{U,1,0}$ 35-25 may contain information on the second UL TCI state of the two UL TCI states.

- If the $C_{D,0}$ field has a value of "00", may refer, for example, to no DL TCI state being contained, so the fourth and fifth Octets may be ignored.
- If the $C_{D,0}$ field has a value of "01", may refer, for example, to one DL TCI state being contained, so a TCI state $ID_{D,0,0}$ 35-30 may contain information on one DL TCI state, and the fifth Octet may be ignored.
- If the $C_{D,0}$ field has a value of "10", may refer, for example, to two DL TCI states being contained, so the TCI state $ID_{D,0,0}$ 35-30 may contain information on the first DL TCI state of the two DL TCI states, and a TCI state $ID_{D,1,0}$ 35-35 may contain information on the second DL TCI state of the two DL TCI states.

FIG. 35 may refer to the case where the UL TCI state of the separate TCI states uses a higher layer signaling structure different from the DL TCI state of the separate TCI states and the joint TCI state. Accordingly, since the UL TCI state requires 6 bits that can express up to 64, the TCI state $ID_{D,0,0}$ to TCI state $ID_{D,1,N}$ fields expressing the DL TCI state may be expressed with 7 bits, while the TCI state $ID_{U,0,0}$ to TCI state $ID_{U,1,N}$ fields expressing the UL TCI state may be expressed with 6 bits.

< Method for determining a downlink control channel reception TCI state when plural TCI states are indicated>

In an embodiment of the disclosure, a method for determining a TCI state for receiving a downlink control channel is described in the case where plural TCI states are indicated or activated based on the unified TCI scheme. If the UE is indicated one joint TCI state or one separate TCI state set through MAC-CE or DCI, the UE may perform reception of a downlink control channel by applying the indicated TCI state to CORESETs connected to all UE-specific search spaces. If the UE is indicated plural joint TCI states or one separate TCI state set that may include plural DL TCI states or UL TCI states, the UE may group the configured CORESETs and apply each of the indicated plural TCI states to the CORESET in each group. A method for grouping the CORESETs is described through various methods to be mentioned below.

[Method 3-1] TCI state determination method based on higher layer signaling per CORESET

According to an embodiment of the disclosure, when the UE receives plural joint TCI states or one separate TCI state set that may include plural DL and UL TCI states indicated in the unified TCI scheme through a higher layer signaling for each CORESET from the base station, the UE may be configured as to which TCI state among the respective TCI states is to be applied to the corresponding CORESET. For example, if two TCI states are indicated (e.g., if a maximum of two joint TCI states or one separate TCI state set that may include a maximum of two DL TCI states and two UL TCI states is used for TCI state indication), information for each CORESET received via a higher layer signaling may be enablewhichTCI, and the value that this parameter may have may be one of enable1stTCI or enable2ndTCI. If any CORESET is configured with enable1stTCI as the value of enablewhichTCI, which is a higher layer signaling, the UE may receive a PDCCH by applying the first joint TCI state of the two joint TCI states or the first DL TCI state in the separate TCI state set that can include two DL TCI states, indicated through MAC-CE or DCI, to the corresponding CORESET. In addition, if enable2ndTCI is configured as the value of enablewhichTCI, which is a higher layer signaling, the UE may receive a PDCCH by applying the second joint TCI state of the two joint TCI states or the second DL TCI state in the separate TCI state set that can include two DL TCI states, indicated through MAC-CE or DCI, to the corresponding CORESET.

If the UE is configured with CORESETs having different values of CORESETPoolIndex through a higher layer signaling for a specific cell, the UE may not expect to be configured with the above-described higher layer signaling, enableWhichTCI.

If the UE is configured with sfnSchemeA or sfnSchemeB in relation to a PDCCH reception scheme for a higher layer signaling of a specific BWP, the UE may not expect to be configured with the above-described higher layer signaling, enableWhichTCI.

If a searchSpaceLinking value configured in a higher layer signaling of a search space set A is a search space set B, and if a searchSpaceLinking value configured in a higher layer signaling of the search space set B is the search space set A, the two search spaces A and B may be used for multi-TRP based PDCCH repetitive transmissions, and CORESET a connected to the search space set A and CORESET b connected to the search space set B may be configured with different values of enableWhichTCI which is a higher layer signaling.

[Method 3-2] TCI state determination method based on connected search space

According to an embodiment of the disclosure, the UE may be configured with two search space sets explicitly connected through a higher layer signaling for multi-TRP based PDCCH repetitive transmission from the base station. If the searchSpaceLinking value configured in a higher layer signaling of a search space set A is a search space set B, and the searchSpaceLinking value configured in a higher layer signaling of the search space set B is the search space set A, the UE may determine that the two search space sets are explicitly connected through a higher layer signaling. As described above, when the UE receives plural joint TCI states or one separate TCI state set that may include plural DL and UL TCI states, indicated in the unified TCI scheme, from the base station, based on the explicitly connected search space sets, the UE may determine which TCI state among the respective TCI states is to be applied to the corresponding CORESET.

If the UE receives plural joint TCI states or one separate TCI state set that may include plural DL and UL TCI states, and if there are search space sets explicitly connected via a higher layer signaling as described above, the UE may apply each TCI state to each of CORESETs respectively connected to the two search space sets. In this case, the UE may apply a first TCI state to the CORESET connected to the search space set with a lower index between the two connected search space sets, and apply a second TCI state to the CORESET connected to the search space set with a higher index between the two connected search space sets. Alternatively, the UE may apply a first TCI state to the CORESET with a lower index, and apply a second TCI state to the CORESET with a higher index, according to the indexes of CORESETs respectively connected to the two search space sets.

In the case of a CORESET connected to a search space for which there is no search space set explicitly connected via a higher layer signaling, e.g., in the case of a CORESET connected to a search space used for a single PDCCH transmission, the UE may apply and use the first TCI state of the two indicated TCI states for reception.

If there are CORESETs 1 and 2 respectively connected to search space sets 2 and 3 which are explicitly connected through a higher layer signaling, if the CORESET 2 is connected to a search space set 1 which does not have explicit connection, and if the UE receives joint TCI states 1 and 2, the UE may apply the joint TCI states 1 and 2 respectively to the CORESETs 1 and 2 respectively connected to the search space sets 2 and 3 which are explicitly connected according to the above-described scheme, and may apply the joint TCI state 1 which is the first TCI state of two TCI states to the CORESET 2 connected to the search space set 1 which does not have explicit connection. In this case, since the CORESET 2 should apply the joint TCI state 2 if it is based on a connected search space, and should apply the joint TCI state 1 if it is based on a search space without explicit connectivity, a conflict may occur in applying TCI states. In this case, the UE may consider a priority in applying the TCI state based on the lower index of the search space set, and as a result, it may apply the joint TCI state 1 based on the search space set 1 without explicit connectivity. Alternatively, applying the TCI state based on the search space set with explicit connectivity may be prioritized, and the UE may apply the joint TCI state 2.

[Method 3-3] TCI state determination method based on CORESETPoolIndex

According to the disclosure, the UE may determine which TCI state among each TCI state to apply to which CORESETPoolIndex when receiving a set of separate TCI states that may include plural joint TCI states or plural DL and UL TCI states in an unified TCI manner from a base station based on CORESETPoolIndex, which is a higher layer signaling that may be set for each control resource set. If the terminal receives two TCI states from the base station, the terminal may apply the first TCI state to all control resource sets where the CORESETPoolIndex value is set to 0, and may apply the second TCI state to all control resource sets where the CORESETPoolIndex value is set to 1. At this time, when the terminal is instructed of a TCI state from the base station through DCI, the DCI transmitted from the control resource set connected to a specific CORESETPoolIndex can only include one joint TCI state or one separate TCI state set that can include at most one DL TCI state. That is, when two TCI states are instructed, it can refer, for example, to different joint TCI states or different separate TCI state sets that can include at most one DL TCI state are received and applied through two DCIs transmitted from the control resource sets respectively connected to two different CORESETPoolIndexes.

[Method 3-4] TCI state determination method based on SFN PDCCH configuration

According to the disclosure, when the UE receives plural joint TCI states or one separate TCI state set including plural DL and UL TCI states, indicated in the unified TCI scheme, from the base station, based on sfnSchemeA or sfnSchemeB, which are higher layer signalings that can be configured in relation to a PDCCH reception scheme per BWP, the UE may determine which TCI state of respective TCI states is to be applied to which CORESET group. If the UE is configured with sfnSchemeA or sfnSchemeB, which is a higher layer signaling that can be configured in relation to a PDCCH reception scheme in the BWP, and the UE receives two TCI states, then the UE may apply both TCI states to CORESETs connected to all UE-specific search spaces within the bandwidth, and apply the first TCI state of the two TCI states to a CORESET connected to a common search space. If the UE is not configured with sfnSchemeA or sfnSchemeB, which is a higher layer signaling that can be configured in relation to a PDCCH reception scheme in the BWP, the UE may apply any other method than Method 3-4 in this embodiment.

[Method 3-5] TCI state determination method based on CORESET index

According to the disclosure, the UE may group CORESETs based on CORESET indexes, and when receiving plural joint TCI states or one separate TCI state set including plural DL and UL TCI states, indicated in the unified TCI scheme, from the base station, the UE may determine which TCI state of respective TCI states is to be applied to which CORESET group.

The UE may be configured with up to four BWPs in one cell, and a maximum of three CORESETs may be configured per BWP. Since the index of the CORESET is unique within a cell, a possible index of the CORESET in a cell may range from 0 to 11. Based on this, if the UE is indicated and applies two TCI states, the UE may divide CORESETs into two groups of even-numbered CORESETs and odd-numbered CORESETs, apply the first TCI state to the group of even-numbered CORESETs, and apply the second TCI state to the group of odd-numbered CORESETs. Alternatively, the UE may divide CORESETs into three groups based on the remainder when the index of each CORESET is divided by 3, considering modulo 3 used in the hashing function. If three TCI states are indicated and applied, the UE may apply one TCI state to each group, and if two TCI states are indicated and applied, the UE may apply the first TCI state to the groups whose remainders are 0 and 2, and apply the second TCI state to the group whose remainder is 1.

[Method 3-6] TCI state determination method based on search space group

According to the disclosure, the UE may group search space sets, and when receiving plural joint TCI states or one separate TCI state set including plural DL and UL TCI states, indicated in the unified TCI scheme, from the base station, the UE may determine which TCI state of respective TCI states is to be applied to which search space set group.

Similar to Method 3-5, the UE may divide the search spaces into two groups of even-numbered search spaces and odd-numbered search spaces, based on the index of the search space, apply the first TCI state to the group of CORESETs connected to the even-numbered search spaces, and apply the second TCI state to the group of CORESETs connected to the odd-numbered search spaces. If there is a CORESET connected to the search spaces included in the two groups, the UE may preferentially apply the first TCI state, preferentially apply the TCI state to be applied to the group including the search space with the lower index, or apply both the first and the second TCI states if a higher layer signaling sfnSchemeA or sfnSchemeB is configured for the corresponding BWP. Alternatively, two groups of search spaces may be configured via a higher layer signaling. For example, the UE may be configured with a set of arbitrary search spaces as one group via a higher layer signaling, be configured with another set of search spaces as another group via a higher layer signaling, and then apply each of the two indicated TCI states to the CORESET connected to each group.

[Method 3-7] TCI state determination method to minimize/reduce the number of beam changes in a slot

According to the disclosure, the UE may determine a TCI state of a CORESET to minimize/reduce the number of beam changes in a slot. When the UE receives TCI state activation and indication from the base station based on the unified TCI scheme, the UE may report the number of beam or TCI state changes possible within one slot to the base station as a UE capability report, and this report may vary by numerology, cell, FR, normal CP or extended CP. In addition, when the UE receives TCI state activation and indication from the base station based on the unified TCI scheme, the UE may report the minimum time required to change a beam or TCI state within one slot to the base station as a UE capability report. At this time, this report may reuse timeDurationForQCL, which is an existing UE capability report related to a beam change time, may reuse a UE capability report related to a beam application time required in the unified TCI scheme, or may define and use a new UE capability report separate from the two parameters. This UE capability report may be reported in terms of the number of OFDM symbols, and may vary by numerology, cell, FR, normal CP or extended CP.

If the UE is indicated two TCI states from the base station, the UE may apply the two TCI states to all CORESETs connected to the UE-specific search space. At this time, to minimize/reduce the number of beam changes within one slot by considering the UE's beam change time, the base station may adjust the transmit beam or TCI state for a CORESET so that the UE can receive one CORESET with different TCI states in different monitoring occasions.

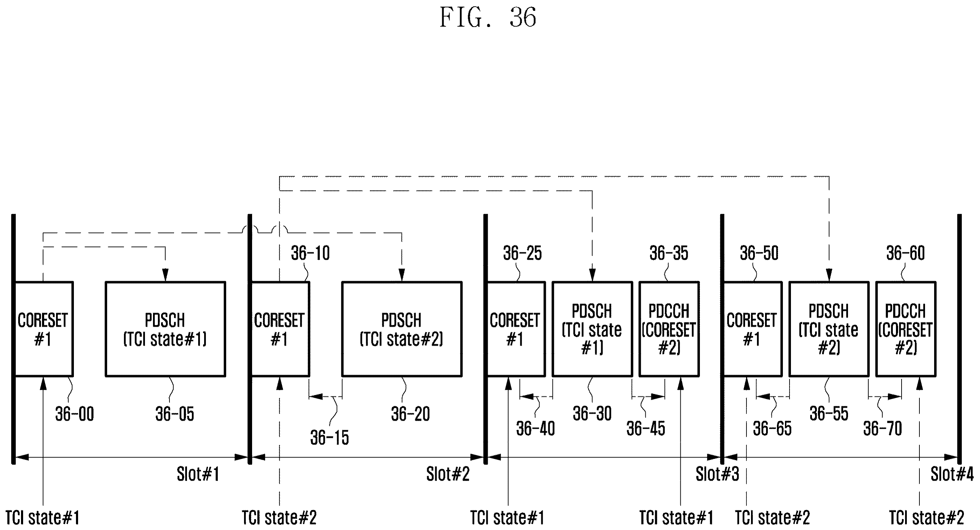

FIG. 36 is a diagram illustrating an example method for determining a TCI state of a downlink control channel to minimize/reduce the number of beam changes within a slot in a wireless communication system according to various embodiments.

Referring to FIG. 36, it may be assumed that the UE has been indicated joint TCI state#1, #2 from the base station before slot#1. In addition, the UE may apply TCI state#1, #2 to each of CORESET#1 and CORESET#2 for reception by considering one of the above-described Methods 3-1 to Methods 3-6. If there is no PDSCH scheduling in each slot, the UE may use the applied TCI state when receiving a CORESET. In addition, if there is PDSCH scheduling, the UE may determine a TCI state for receiving a CORESET by considering the beam change time before the first symbol and after the last symbol of the scheduled PDSCH. If there is the last symbol of the CORESET within the beam change time before the first symbol of the scheduled PDSCH, or if there is the first symbol of the CORESET within the beam change time after the last symbol of the scheduled PDSCH, the UE may change the beam or TCI state to be applied for receiving the CORESET to that of the scheduled PDSCH.

- The UE may receive CORESET#1 36-00 from the base station in slot#1 and be scheduled for inter-slot-based time division pluralxing (TDM) PDSCH repetition 36-05 and 36-20. Since there is no PDSCH scheduling in the corresponding slot at the time of receiving CORESET#1, the UE may receive CORESET#1 based on the previously applied TCI state#1. The UE may receive two PDSCHs 36-05 and 36-20 scheduled from CORESET#1 based on TCI state#1 and TCI state#2, respectively.
- Since there is scheduling for PDSCH in slot#2, the UE may determine the TCI state for receiving the CORESET by considering the beam change time before the first symbol and after the last symbol of the scheduled PDSCH 36-20. Since the last symbol of CORESET#1 36-10 exists within a beam change time 36-15 before the first symbol of the scheduled PDSCH 36-20, the UE may use TCI state#2 to receive CORESET#1 36-10 by considering that the receive beam or TCI state of CORESET#1 36-10 is the same as that of PDSCH.
- The UE may be scheduled for inter-slot based TDM PDSCH repetition 36-30 and 36-55 for slot#3 and slot#4 from CORESET#1 36-10 of slot#2. The UE may receive the two scheduled PDSCHs 36-30 and 36-55 based on TCI state#1 and TCI state#2, respectively. The UE may determine the TCI state for receiving the CORESET by considering the beam change time before the first symbol of the scheduled PDSCH 36-30 and after the last symbol in slot#3. Since the last symbol of the CORESET#1 36-25 exists within a beam change time 36-40 before the first symbol of the scheduled PDSCH 36-30, the UE may use TCI state#1 to receive CORESET#1 36-25 by considering that the receive beam or TCI state of CORESET#1 36-25 is the same as that of the PDSCH. Similarly, since the first symbol of CORESET#2 36-35 exists within a beam change time 36-45 after the last symbol of the scheduled PDSCH 36-30, the UE may use TCI state#1 to receive CORESET#2 36-35 by considering that the receive beam or TCI state of CORESET#2 36-35 is the same as that of the PDSCH.
- Since there is scheduling for PDSCH in slot#4, the UE may determine the TCI state for receiving the CORESET by considering the beam change time before the first symbol and after the last symbol of the scheduled PDSCH 36-55. Since the last symbol of CORESET#1 36-50 exists within a beam change time 36-65 before the first symbol of the scheduled PDSCH 36-55, the UE may use TCI state#2 to receive CORESET#1 36-50 by considering that the receive beam or TCI state of CORESET#1 36-50 is the same as that of the PDSCH 36-55. Similarly, since the first symbol of CORESET#2 36-60 exists within a beam change time 36-70 after the last symbol of the scheduled PDSCH 36-55, the UE may use TCI state#2 to receive CORESET#2 36-60 by considering that the receive beam or TCI state of CORESET#2 36-60 is the same as that of the PDSCH.
- As described above, considering the PDSCH scheduling situation in each slot and the beam change time, etc., a scenario may arise where the same CORESET is received using different TCI states per slot to minimize/reduce the number of beam switches.

Hereinafter, example embodiments will describe a method in which the UE applies a TCI state for receiving a CSI-RS to perform CSI reporting after a single or plural TCI states based on the unified TCI scheme are indicated via DCI (e.g., DCI format 1_1, DCI format 1_2) as described above.

In the higher layer configuration process, the UE may receive a higher layer parameter dl-OrJoint-TCIStateList including the unified TCI-state. The higher layer configuration parameter dl-OrJoint-TCIStateList, which is a parameter considering the unified TCI, may be configured in the form of a list including at least one TCI-State, and configured to a UE supporting release 17 or a later release UE. The at least one TCI-State included in dl-OrJoint-TCIStateList may be for unified TCI application.

In addition, the UE may configure the TCI states of DM-RS of PDSCH, DM-RS of PDCCH, and CSI-RS using TCI state related information indicated in a MAC CE message or DCI, based on the higher layer parameter dl-OrJoint-TCIStateList. The configured TCI states are based on QCL assumption information.

The CSI-RS may be classified into periodic, semi-persistent, or aperiodic CSI-RS, and related operations may be the same or different.

In an embodiment of the disclosure, when the UE identifies dl-OrJoint-TCIStateList in the higher layer configuration process described above so as to receive the periodic CSI-RS or the semi-persistent CSI-RS, the UE may apply the TCI state using the TCI state related information indicated in the MAC CE message for the unified TCI application.

In an embodiment, when the UE identifies dl-OrJoint-TCIStateList in the higher layer configuration process so as to receive the aperiodic CSI-RS, the UE may apply the TCI state using the TCI state related information indicated in the DCI information for the unified TCI application.

For example, the operation of the UE for aperiodic CSI-RS reception is as follows.

The UE may receive an RRC message from the base station. At this time, the RRC message may include the dl-OrJoint-TCIStateList field, and the dl-OrJoint-TCIStateList field may contain a list of at least one TCI-State. As described above, the base station may configure a list of TCI states for the unified TCI application to the UE. In addition, the RRC message may include a configuration for a CSI-RS resource set and a configuration for CSI-RS resources. The CSI-RS resource set may include at least one CSI-RS resource. In addition, the RRC message may include information for triggering an aperiodic CSI report (CSI-AperiodicTriggerStateList).

After that, the UE may receive DCI including a CSI request field requesting the aperiodic CSI-RS report. The RRC message may include a reportTriggerSize value, and the size of the CSI request field may be determined based on this.

The UE may identify a CSI-RS resource for the aperiodic CSI report indicated by a trigger state corresponding to the CSI request field, and may receive a CSI-RS from the CSI-RS resource for the aperiodic CSI report to report aperiodic CSI. At this time, the UE may receive an aperiodic CSI-RS based on the TCI state determined in the received TCI state list. Therefore, a method for determining the unified TCI state to be used for receiving the aperiodic CSI-RS is required. So, hereinafter, a method for determining the unified TCI state for reporting the aperiodic CSI will be described. For example, in an embodiment, a method for receiving an aperiodic CSI-RS with the unified TCI state applied in units of CORESET set by including the unified TCI state configuration in the configuration for a CSI-RS resource set, a method for receiving an aperiodic CSI-RS with the unified TCI state applied in units of CSI resource, etc. may be provided.

< CSI-RS configuration and trigger method based on unified TCI state in plural DCIs>

In the higher layer configuration process, the UE may receive a higher layer parameter including plural unified TCI-states (plural TCI state configuration using the unified TCI like the second embodiment). The higher layer configuration parameter is a parameter considering plural unified TCIs and may be configured in a UE supporting release 18 or a later release UE. The higher layer parameter including multiple unified TCI states may reuse the dl-OrJoint-TCIStateList described above or be configured as a separate distinct parameter.

When the UE receives the higher layer parameter including plural unified TCI state(s), it may perform a CSI-RS reception operation in plural DCI-based multiple-TRP operation. Here, the DCI transmitted through plural PDCCHs may refer, for example, to it being transmitted in different CORESETs corresponding to different CORESETPoolindexes.

[Example 4-1] Aperiodic CSI-RS for unified TCI configuration in plural DCI-based multiple-TRP operation

In the plural DCI-based multiple-TRP operation, the base station may indicate the UE a single TCI state for each CORESETpoolindex.

In an embodiment of the disclosure, if there is no separate RRC parameter configuration for the unified TCI-state configuration in the CSI-RS resource set configuration during the RRC configuration process, the UE may receive a PDCCH in a CORESET corresponding to the CORESETPoolindex, identify DCI information, and use the indicated single TCI state.

For example, when a specific CSI-RS resource set is triggered by a PDCCH within a CORESET having CORESETPoolindex 0, the UE may receive an aperiodic CSI-RS signal from a TRP corresponding to CORESETPoolindex 0 by identifying information of the unified TCI field indicated by the PDCCH so as to receive the aperiodic CSI-RS signal based on a CSI-RS resource included in the CSI-RS resource set.

In an embodiment, since the base station may trigger the aperiodic CSI-RS signal only in the TRP corresponding to each CORESETPoolindex, it cannot indicate an aperiodic CSI-RS based on cross-TRP, but additional RRC parameter configuration may be unnecessary.

[Example 4-2] Aperiodic CSI-RS configuration method 1 for unified TCI configuration in plural DCI-based multiple-TRP operation (RRC parameter in CSI-RS resource set level)

In the plural DCI-based multiple-TRP operation, the base station may indicate a single TCI state for each CORESETpoolindex to the UE.

In an embodiment of the disclosure, the base station may configure a parameter for the unified TCI-state configuration in the CSI-RS resource set configuration during the RRC configuration process of a specific UE. If the base station configures an additional RRC parameter for aperiodic CSI-RS configuration to the UE for CSI-RS resource set level operation, the base station may trigger a specific CSI-RS resource set using a PDCCH at a specific CORESETPoolindex and/or CORESET ID. That is, the base station may trigger cross-TRP based aperiodic CSI-RS as a result of associating the CORESETpoolindex and/or CORESET ID signaling the aperiodic CSI-RS. In addition, the UE may apply TCI state information to receive an aperiodic CSI-RS signal, based on the unified TCI state information indicated in the PDCCH and the triggered CSI-RS resource set information.

Referring to Table 34, for example, NZP-CSI-RS-ResourceSet may include CORESETPoolindex ID and/or ControlResourceSetId corresponding to a TRP transmitting an aperiodic CSI-RS. For example, the base station may configure the CORESETPoolindex ID value as 0 or 1. In another example, the ControlResourceSetId may be configured as a value (e.g., 0 to 11) less than maxNrofControlResourceSets (e.g., 12).

When the base station configures a resource set for aperiodic CSI-RS transmission as shown in Table 34, the base station and the UE may indicate plural TCI states in the plural DCI-based multiple-TRP operation without changing the CSI request operation defined before rel-17.

[Table 34]

```
-- ASN1START
-- TAG-NZP-CSI-RS-RESOURCESET-START
NZP-CSI-RS-ResourceSet ::=          SEQUENCE {
    nzp-CSI-ResourceSetId               NZP-CSI-RS-ResourceSetId,
    nzp-CSI-RS-Resources                SEQUENCE (SIZE (1..maxNrofNZP-CSI-RS-ResourcesPerSet)) OF NZP-
CSI-RS-ResourceId,
    repetition                          ENUMERATED { on, off }
    aperiodicTriggeringOffset       INTEGER(0..6)
    trs-Info                            ENUMERATED {true}

    ...,
    [[
    aperiodicTriggeringOffset-r16   INTEGER(0..31)
    ]],
    [[
    pdc-Info-r17                        ENUMERATED {true}
    cmrGroupingAndPairing-r17           CMRGroupingAndPairing-r17
    aperiodicTriggeringOffset-r17   INTEGER (0..124)
    aperiodicTriggeringOffsetL2-r17 INTEGER(0..31)
    coresetPoolIndex-r18                INTEGER (0..1)
    ControlResourceSetId-r18            INTEGER (0..11)
    ]]
}
```

[Example 4-3] Aperiodic CSI-RS configuration method 2 for unified TCI configuration in plural DCI-based multiple-TRP operation (RRC parameter in CSI-RS resource level (e.g. two CMR groups))

In the plural DCI-based multiple-TRP operation, the base station may configure multiple unified TCI states to transmit a single TCI state-based CSI-RS for each CORESETpoolindex to the UE.

In an embodiment of the disclosure, the base station may configure an additional RRC parameter for the unified TCI-state configuration in the CSI-RS resource configuration during the RRC configuration process of a specific UE. For the aperiodic CSI-RS configuration in the CSI-RS resource level, the base station may configure two channel measurement resources (CMR) groups. In addition, the two CMR groups may be configured in a single CSI-RS resource set.

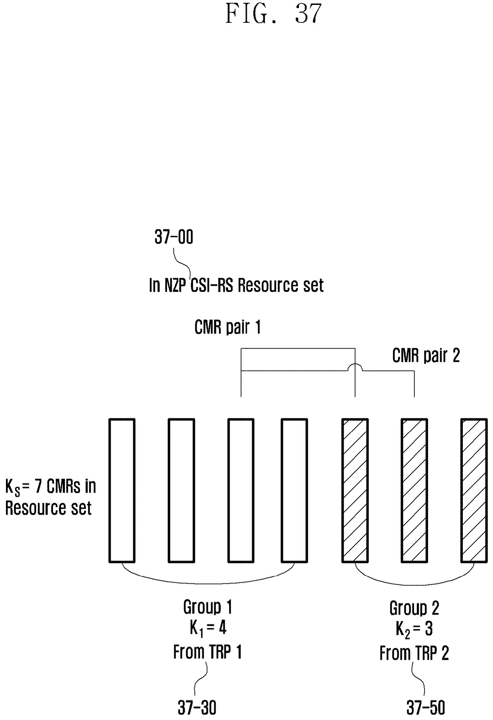

FIG. 37 is a diagram illustrating an example operation of configuring Ks CMRs in the NZP CSI-RS resource set corresponding to TRP1 and TRP2 according to various embodiments. For configuring Ks CMRs, the base station may configure groups (K1, K2 NZP CSI-RS resources) based on the CSI-RS resource(s) corresponding to each TRP. For example, the base station may configure CMR group1 37-30 corresponding to TRP1 to transmit CSI-RS in TRP1, and configure CMR group2 37-50 corresponding to TRP2 to transmit CSI-RS in TRP2.

In an embodiment of the disclosure, as in the first embodiment of Table 35, the base station may configure the CSI-RS resource and CORESETPoolindex corresponding to the TRP to be associated by configuring at least one of specific CORESETPoolindex, followUnifiedTCI-State, and cmrGroupingAndPairing in the NZP-CSI-RS-ResourceSet to the UE during the RRC configuration process. The cmrGroupingAndPairing may be referred to as a CMR group configuration or a configuration for a CSI-RS resource group.

For example, if the base station configures the value of nrofResourcesGroupl in cmrGroupingAndPairing to the UE, the preceding (first) CSI-RS resources equal to the number of values of nrofResourcesGroupl in a specific CSI-RS resource set may be configured as group1, and the remaining CSI-RS resource(s) may be configured as group2. In this case, the preceding (first) CSI-RS resources equal to the number of values of nrofResourcesGroupl may refer, for example, to CSI-RS resources as many as the number of values of nrofResourcesGroupl, starting from the CSI-RS resource with the lowest index.

The base station and the UE may implicitly assume that group1 corresponds to TRP1 and group2 corresponds to TRP2. In addition, the base station may configure pairlOfNZP-CSI-RS-r18 to pair aperiodic CSI-RS(s) of group1 and group2 so that they can be received simultaneously, and the base station may configure at least two pairlOfNZP-CSI-RS-r18 and pair2OfNZP-CSI-RS-r18. The pair1OFNZP-CSI-RS-r18 and pair2OfNZP-CSI-RS-r18 may be referred to as information for associating NZP CSI-RS resources for receiving aperiodic CSI-RS. In addition, the pairlOfNZP-CSI-RS-r18 and pair2OfNZP-CSI-RS-r18 may be defined as follows.

pairlOfNZP-CSI-RS-r18, pair2OfNZP-CSI-RS-r18: A pair of NZP CSI-RS resources. In one pair, one resource shall belong to group 1 and the other resource shall belong to group 2 as configured by nrofResourcesGroupl and nrofResourcesGroup2.

In addition, the above definition of pair1OfNZP-CSI-RS-r18 and pair2OfNZP-CSI-RS-r18 may be applied not only to this embodiment but also to all embodiments of the disclosure.

If there is no separate configuration for multiple unified TCI states, the base station and the UE may assume that group1 follows the first TCI state of the unified TCI states, and group2 follows the second TCI state of the unified TCI states.

[Table 35]

```
-- ASN1START
-- TAG-NZP-CSI-RS-RESOURCESET-START


NZP-CSI-RS-ResourceSet ::=              SEQUENCE {
    nzp-CSI-ResourceSetId              NZP-CSI-RS-ResourceSetId,
    nzp-CSI-RS-Resources               SEQUENCE (SIZE (1..maxNrofNZP-CSI-
RS-ResourcesPerSet)) OF NZP-CSI-RS-ResourceId,
    repetition                        ENUMERATED { on, off }
    aperiodicTriggeringOffset      INTEGER(0..6)
    trs-Info                          ENUMERATED {true}
    ...,
    [[
```

```
    aperiodicTriggeringOffset-r16        INTEGER(0..31)

    ]],

    [[

    pdc-Info-r17                              ENUMERATED {true}


//coresetPoolIndex-r18              INTEGER (0..1)


(first embodiment)
cmrGroupingAndPairing-r18                  CMRGroupingAndPairing-r18


//followUnifiedTCI-State-r18          ENUMERATED {first, second}


aperiodicTriggeringOffset-r17        INTEGER (0..124)
    aperiodicTriggeringOffsetL2-r17      INTEGER(0..31)


    ]]
}


CMRGroupingAndPairing-r18 ::=            SEQUENCE {
(second embodiment)
coresetPoolIndex-r18                      INTEGER (0..1)
(third embodiment)
followUnifiedTCI-State-r18                ENUMERATED {first, second} or {first, second,
both, none}
    nrofResourcesGroup1-r18                  INTEGER (1..7),
    pair1OfNZP-CSI-RS-r18                    NZP-CSI-RS-Pairing-r18
    pair2OfNZP-CSI-RS-r18                    NZP-CSI-RS-Pairing-r18
}


NZP-CSI-RS-Pairing-r18    ::=            SEQUENCE {
(third embodiment)
followUnifiedTCI-State-r18                ENUMERATED {first, second} or {first, second,
both, none}
```

```
nzp-CSI-RS-ResourceId1-r18          INTEGER (1..7),
      nzp-CSI-RS-ResourceId2-r18          INTEGER (1..7)

}
```

As another example, in the example embodiment of Table 35, the base station may configure CORESETpoolindex (e.g., 0 or 1) to the UE, and configure the value of nrofResourcesGroupl in cmrGroupingAndPairing, so that the preceding (first) CSI-RS resources are configured as group1 to be mapped to CORESETpoolindex (e.g., #0) as many as the number of values of nrofResourcesGroupl in a specific CSI-RS resource set. In this case, the UE may consider that the CSI-RS resource(s) are configured as group2 to be mapped to CORESETpoolindex (e.g., #1) as many as the remaining number. In this case, the preceding (first) CSI-RS resources equal to the number of values of nrofResourcesGroupl may refer, for example, to CSI-RS resources as many as the number of values of nrofResourcesGroupl, starting from the CSI-RS resource with the lowest index. That is, the base station and the UE may assume that group1 corresponds to TRP1 and group2 corresponds to TRP2. In addition, the base station may configure pairlOfNZP-CSI-RS-r18 to pair aperiodic CSI-RS(s) of group1 and group2 so that they can be received simultaneously, and the base station may configure at least two pairlOfNZP-CSI-RS-r18 and pair2OfNZP-CSI-RS-r18.

If there is no separate configuration for the unified TCI state that configures plural TCI states for AP-CSI-RS, the base station and the UE may assume that group1 corresponding to CORESETPoolindex (e.g., 0) follows the first TCI state of the unified TCI states, and group2 corresponding to CORESETPoolindex (e.g., 1) follows the second TCI state of the unified TCI states.

For another example, as in the example embodiment of Table 35, the base station may configure followUnifiedTCI-State-r18 as a parameter for the unified TCI state configuration for AP-CSI-RS to the UE, and this field may be configured as one of first and second. When followUnifiedTCI-State-r18 is configured as first or second for the AP-CSI-RS reception, the UE may apply the indicated first unified TCI or indicated second unified TIC among the activated unified TCI states. In addition, the followUnifiedTCI-State-r18 may be defined as follows.

followUnifiedTCI-State-r18: When followUnifiedTCI-State-r18 sets to "first" or "second", for AP-CSI-RS reception on this CORESET or CORESET group, the UE applies the "indicated" first or second unified TCI (e.g. DL only TCI or joint TCI) among activated unified TCI states.

The above definition of followUnifiedTCI-State-r18 may be applied not only to this embodiment but also to all embodiments included in the disclosure.

When the base station configures followUnifiedTCI-State-r18 as first for the unified TCI state configuration for AP-CSI-RS to the UE, the UE may apply the first TCI state of the unified TCI states to group1 corresponding to CORESETPoolindex (e.g., 0). In this case, the UE may assume that group2 corresponding to CORESETPoolindex (e.g., 1) follows the second TCI state of the unified TCI states.

When the base station configures followUnifiedTCI-State-r18 as second for the unified TCI state configuration for AP-CSI-RS to the UE, the UE may apply the second TCI state of the unified TCI states to group1 corresponding to CORESETPoolindex (e.g., 0). In this case, the UE may assume that group2 corresponding to CORESETPoolindex (e.g., 1) follows the first TCI state of the unified TCI states.

The positions of the parameters configured in the first to third embodiments of Table 35 described above are only an embodiment, may be variously modified or combined depending on the case, and are not limited to a particular example embodiment.

[Example 4-4] Aperiodic CSI-RS configuration method 3 for unified TCI configuration in plural DCI-based multiple-TRP operation (RRC parameter in CSI-AperiodicTriggerState or CSI-AssociatedReportConfigInfo)

In the plural DCI-based multiple-TRP operation, the base station may configure multiple unified TCI states to transmit a CSI-RS based on a single TCI state for each CORESETpoolindex to the UE.

In an embodiment of the disclosure, the base station may configure an additional RRC parameter for the unified TCI-state configuration in the CSI-RS resource configuration during the RRC configuration process of a specific UE. The base station may configure an additional parameter using at least one of CSI-AperiodicTriggerState and CSI-AssociatedReportConfigInfo during the RRC configuration process.

The base station may configure at least one of CORESETPoolindex and followUnifiedTCI-State, which are parameters for the unified TCI-state configuration in CSI-AperiodicTriggerStateList or CSI-AperiodicTriggerState, to the UE during the RRC configuration process, thereby associating the CSI-RS resource and the CORESETPoolindex corresponding to the TRP.

[Table 36]

***CSI-AperiodicTriggerStateList* information element**

-- ASN1START

-- TAG-CSI-APERIODICTRIGGERSTATELIST-START


CSI-AperiodicTriggerStateList ::= SEQUENCE (SIZE (1..maxNrOfCSI-AperiodicTriggers)) OF CSI-AperiodicTriggerState


CSI-AperiodicTriggerState ::= SEQUENCE {
    associatedReportConfigInfoList         SEQUENCE (SIZE(1..maxNrofReportConfigPerAperiodicTrigger)) OF CSI-AssociatedReportConfigInfo,

(first embodiment)

//coresetPoolIndex-r18         INTEGER (0..1)

//followUnifiedTCI-State-r18         ENUMERATED {first, second}


    ...,

    [[

    ap-CSI-MultiplexingMode-r17         ENUMERATED {enabled}

    ]]

}


CSI-AssociatedReportConfigInfo ::= SEQUENCE {
    reportConfigId         CSI-ReportConfigId,
    resourcesForChannel         CHOICE {
        nzp-CSI-RS         SEQUENCE {
            resourceSet         INTEGER (1..maxNrofNZP-CSI-RS-ResourceSetsPerConfig),
            qcl-info         SEQUENCE (SIZE(1..maxNrofAP-CSI-RS-ResourcesPerSet)) OF TCI-StateId

(second embodiment)

//coresetPoolIndex-r18         INTEGER (0..1)

(third embodiment)

```
//followUnifiedTCI-State-r18               ENUMERATED {first, second}

       },

           csi-SSB-ResourceSet                    INTEGER (1..maxNrofCSI-
SSB-ResourceSetsPerConfig)

       },

       csi-IM-ResourcesForInterference          INTEGER(1..maxNrofCSI-IM-
ResourceSetsPerConfig)

       nzp-CSI-RS-ResourcesForInterference  INTEGER (1..maxNrofNZP-CSI-RS-
ResourceSetsPerConfig)

       ...,

       [[

       resourcesForChannel2-r17          CHOICE {

           nzp-CSI-RS2-r17                         SEQUENCE {

               resourceSet2-r17                         INTEGER (1..maxNrofNZP-
CSI-RS-ResourceSetsPerConfig),

               qcl-info2-r17                                         SEQUENCE
(SIZE(1..maxNrofAP-CSI-RS-ResourcesPerSet)) OF TCI-StateId

(second embodiment)

//coresetPoolIndex-r18             INTEGER (0..1)

(third embodiment)

//followUnifiedTCI-State-r18              ENUMERATED {first, second}


       },

           csi-SSB-ResourceSet2-r17                INTEGER (1..maxNrofCSI-SSB-
ResourceSetsPerConfigExt)

       }

       csi-SSB-ResourceSetExt                   INTEGER (1..maxNrofCSI-SSB-
ResourceSetsPerConfigExt)

       ]]

}
```

For example, as in the example embodiment of Table 36, the base station may configure coresetPoolIndex-r18 corresponding to TRP1 and TRP2 in CSI-AperiodicTriggerState as 0 or 1 to the UE. In addition, the base station may select followUnifiedTCI-State-r18 as one of first and second to configure multiple unified TCI states in CSI-AperiodicTriggerState to the UE. If followUnifiedTCI-State-r18 is configured as first, the UE may apply the value of qcl-info or TCI-stateId of the NZP-CSI-RS resource set configured in resourcesForChannel within CSI-AssociatedReportConfigInfo. If followUnifiedTCI-State-r18 is configured as second, the UE may apply the value of qcl-info or TCI-stateId of the NZP-CSI-RS resource set configured in resourcesForChannel2 within CSI-AssociatedReportConfigInfo.

For another example, as in the example embodiment of Table 36, the base station may configure coresetPoolIndex-r18 corresponding to TRP1 and TRP2 in CSI-AssociatedReportConfigInfo as 0 or 1 to the UE. For example, the base station may configure coresetPoolIndex-r18 in resourcesForChannel within CSI-AssociatedReportConfigInfo as 0 to the UE and configure coresetPoolIndex-r18 in resourcesForChannel2 within CSI-AssociatedReportConfigInfo as 1 to the UE. Through the above configuration process, the UE may determine that the aperiodic CSI-RS resource configuration is configured in resource set units.

For another example, as in the third embodiment of Table 36, the base station may configure followUnifiedTCI-State-r18 in CSI-AssociatedReportConfigInfo as first or second to the UE. For example, the base station may configure followUnifiedTCI-State-r18 in resourcesForChannel within CSI-AssociatedReportConfigInfo as first to the UE, and configure followUnifiedTCI-State-r18 in resourcesForChannel2 within CSI-AssociatedReportConfigInfo as second to the UE. Through the above configuration process, the UE may determine that the aperiodic CSI-RS resource configuration is configured in resource set units, resourceset and qcl-info are configured as the first resource of the multiple unified TCI states, and resourceset2 and qcl-info2 are configured as the second resource of the multiple unified TCI states.

The above example embodiments may be combined with each other.

After the RRC configuration process described above, the base station may indicate the UE an aperiodic CSI request using a CSI request field of DCI (e.g., DCI format 0_1/0_2) through a PDCCH channel. The UE may receive a reportTriggerSize value during the RRC configuration process and identify the size of the CSI request field. In addition, the UE may identify configuration information in CSI-AperiodicTriggerState, CSI-AssociatedReportConfigInfo, reportCon-figId, resourceSetI, and resourceSet2 described above in various embodiments and thereby identify CSI-RS resource information for aperiodic CSI reporting.

In addition, the UE may receive a MAC CE message for AP-CSI Trigger state subselection from the base station after the RRC configuration process. Here, the MAC CE message may be configured to be mapped in association with a DCI codepoint value indicated in DCI (e.g., format 0_1/0_2). The AP-CSI Trigger State subslection MAC CE message may include a BWP ID, a Serving Cell ID, and/or trigger state information (Ti). Here, if the size of the CSI request field is N bits, up to $2^N$ Ti values are set to 1, and the remaining Ti are set to 0. For example, if the size of the CSI request field is 3 bits, up to 8 Ti values are set to 1, and the remaining Ti are set to 0.

The UE may identify the MAC CE message and the CSI request field information of the DCI to measure and report the aperiodic CSI-RS.

In an embodiment of the disclosure, when the base station transmits reportTriggerSize = 3 bits in RRC configuration, T0=T2=T3=T7=T10=T11=T14=T15=1 in MAC CE, and 000 among 000 to 111 in CSI-reqeust field of PDCCH to the UE, the UE may identify T0=1 among T0, T2, T3, T7, T10, T11, T14, T15 values of MAC CE, and apply the TCI state based on CSI-RS resource (set), CORESETpoolindex, followUnifiedTCI-State, and QCL-info indicated by the first trigger state among the first, third, fourth, eighth, twelfth, fifteenth, and sixteenth trigger states of aperiodicTrigger-StateList in the configured BWP ID and Serving Cell ID.

For example, when RRC is configured as in embodiment 4-2 and the MAC CE and the DCI information are received, the UE may identify CSI-ReportConfig, ResourceConfigId and NZP-CSI-RS-ResourceSetId, and based on the configured CORESETpoolindex (e.g., 0), may receive an aperiodic CSI RS in resource set units transmitted by a TRP (e.g., TRP1) corresponding to the CORESETpoolindex among multiple unified TCI states.

For example, when RRC is configured as in embodiment 4-3 and the MAC CE and the DCI information are received, the UE may identify CSI-ReportConfig, ResourceConfigId, NZP-CSI-RS-ResourceSetId and cmrGroupingAnd-Pairing, and based on the configured CORESETpoolindex (e.g., CORESETpoolindex=0 or followUnifiedTCI-State=first, CORESETpoolindex=1 or followUnifiedTCI-State=second), may receive an aperiodic CSI RS in resource units transmitted by a TRP (e.g., TRP1) corresponding to CORESETpoolindex among multiple unified TCI states.

For example, when RRC is configured as in embodiment 4-4 and the MAC CE and the DCI information are received, the UE may identify CSI-ReportConfig, ResourceConfigId, NZP-CSI-RS-ResourceSetId and CSI-Aperiodic-TriggerStateList or CSI-AssociatedReportConfigInfo, and based on the configured CORESETpoolindex (e.g., CORESETpoolindex=0 or followUnifiedTCI-State=first, CORESETpoolindex=1 or followUnifiedTCI-State=second), may receive an aperiodic CSI RS in resource units transmitted by a TRP (e.g., TRP1) corresponding to CORESETpoolindex among multiple unified TCI states.

In the plural DCI-based multiple-TRP operation, the base station may indicate the UE plural (e.g., two) TCI states for each CORESETpoolindex or indicate the UE a cross-TRP-based TCI state. To this end, the base station and the UE may configure an additional RRC parameter for aperiodic CSI-RS configuration. Here, the additional RRC parameter is configured to select at least one TCI among the plural TCI state(s). For example, the base station may configure to determine the TCI state by order (e.g., follow1stTCIstate, follow2ndTCIstate, etc.) or to determine the TCI state based on ID (e.g., TCI state ID #0, 1, 2, etc.).

< CSI-RS configuration and trigger method based on unified TCI in a single DCI>

In the higher layer configuration process, the UE may receive a higher layer parameter dl-OrJoint-TCIStateList including plural unified TCI-states. The higher layer configuration parameter dl-OrJoint-TCIStateList is a parameter that considers the unified TCI, and may be configured in a UE supporting release 17 or a later release UE.

In addition, the UE may configure the TCI states of DM-RS of PDSCH, DM-RS of PDCCH, and CSI-RS using the TCI state related information indicated in a MAC CE message or DCI, based on the higher layer parameter dl-OrJoint-TCIStateList. The configured TCI states are based on the QCL assumption information.

The CSI-RS may be classified into periodic, semi-persistent, or aperiodic CSI-RS, and related operations may be the same or different.

In an embodiment of the disclosure, if the UE identifies dl-OrJoint-TCIStateList in the higher layer configuration process described above so as to receive the periodic CSI-RS or the semi-persistent CSI-RS, the UE may configure the TCI state using the TCI state related information indicated in the MAC CE message for the unified TCI application.

In an embodiment, if the UE identifies dl-OrJoint-TCIStateList in the higher layer configuration process so as to receive the aperiodic CSI-RS reception, the UE may configure the TCI state using TCI state related information indicated in the DCI information for the unified TCI application.

The UE may receive a higher layer parameter including plural unified TCI-states in the higher layer configuration process. The higher layer configuration parameter is a parameter that considers plural unified TCIs, and may be configured in a UE supporting release 18 or a later release UE. The higher layer parameter containing multiple unified TCI states may reuse the dl-OrJoint-TCIStateList described above or may be configured as a separate distinct parameter.

When the UE receives a higher layer parameter including plural unified TCI state(s), the UE may perform CSI-RS operation in a single DCI-based multiple-TRP operation. DCI transmitted through a single PDCCH may refer, for example, to it being transmitted in a specific CORESET by a new or existing RRC parameter configured in that CORSET. The RRC parameter may be configured so that among the multiple unified TCI states, the TCI state indicated by the DCI is set to the first TCI state and/or the second TCI state, or unsupported.

In the single DCI-based multiple-TRP operation based on the unified TCI scheme, the base station and the UE may consider various scenarios to indicate a joint or DL TCI state. First, considering PDCCH repetition, the base station and the UE may configure two CORESETs to be connected to and associated with a search space, in which one TCI is configured in one CORESET. Second, considering PDCCH SFN, the base station and the UE may configure two TCIs in one CORESET.

The base station may configure single or plural joint/DL TCI states for at least one CORESET or CORESET group (e.g., CORESETpoolindex or plural CORESETs) using RRC configuration among the various scenarios above.

For example, after RRC configuration, the base station may transmit MAC CE and/or DCI information to the UE to indicate applying both joint/DL TCI states (e.g., TCI #1, TCI #2), and may select and indicate the first TCI state (e.g., TCI #1) or the second TCI state (e.g., TCI #1) between the two joint/DL TCI states. For another example, the base station may transmit MAC CE message information to the UE after RRC configuration, and configure the TCI state (e.g., MAC CE activation) regardless of DCI information.

Hereinafter, an example method for supporting the unified TCI in a single DCI-based multiple-TRP operation according to various RRC parameter configuration methods will be described in greater detail.

[Example 5-1] Aperiodic CSI-RS for unified TCI configuration in single DCI-based multiple-TRP operation

In the single DCI-based multiple-TRP operation, the base station may configure a single or multiple unified TCI state to transmit a single or plural TCI state-based CSI-RS per CORESET or CORESET group to the UE.

In an embodiment of the disclosure, if there is no separate RRC parameter configuration for unified TCI-state configuration within the CSI-RS resource set configuration in the RRC configuration, the UE may operate to follow the TCI state indicated to correspond to the parameter per CORESET or per CORESET group using a new RRC parameter.

For example, the base station may configure follow1stTCI and follow2ndTCI, using a new RRC parameter in the RRC configuration. If the new RRC parameter value is configured as follow1stTCI, the UE may determine that the first TCI state of the multiple unified TCI states is configured for triggered aperiodic CSI-RS reception. Or, if the new RRC parameter value is configured as follow2ndTCI, the UE may determine that the second TCI state of the multiple unified TCI states is configured for triggered aperiodic CSI-RS reception.

In another example, the base station may configure followbothTCI, using a new RRC parameter in the RRC configuration. If the new RRC parameter value is configured as followbothTCI, the UE may operate differently depending on the base station configuration state, for triggered aperiodic CSI-RS reception. For example, if the base station configures PDCCH repetition to the UE through RRC configuration, and a new RRC parameter value is configured as followbothTCI, the UE may determine that the first TCI state of the multiple unified TCI states is configured when the CORESET ID or CORESETgroup ID value is an odd number, and that the second TCI state of the multiple unified TCI states is configured when the CORESET ID or CORESETgroup ID value is an even number. In other words, the base station and the UE may indicate a single TCI state for each CORESET or CORESET group.

In another example, if the base station configures the PDCCH SFN to operate in RRC configuration to the UE, and a new RRC parameter value is configured as followbothTCI, the UE may determine that two multiple unified TCI states are configured in a specific CORESET ID or CORESETgroup. In other words, the base station and the UE may indicate multiple TCI states for each CORESET or CORESET group.

In another example, the base station may configure follownoneTCI, using a new RRC parameter in the RRC configuration. When the new RRC parameter value is configured as follownoneTCI, the UE may determine that periodic or semi-persistent CSI-RS reception is indicated instead of the triggered aperiodic CSI-RS reception operation.

In an embodiment, since the base station may trigger the aperiodic CSI-RS signal only in the TRP corresponding to each CORESETPoolindex, it cannot indicate an aperiodic CSI-RS based on cross-TRP, but additional RRC parameter configuration may be unnecessary.

[Example 5-2] Aperiodic CSI-RS configuration method 1 for unified TCI configuration in single DCI-based multiple-TRP operation (RRC parameter in CSI-RS resource set level)

In the single DCI-based multiple-TRP operation, the base station may configure a single or plural unified TCI state to transmit a single or plural TCI state-based CSI-RS per CORESET or CORESET group to the UE.

In an embodiment of the disclosure, the base station may configure an additional RRC parameter for unified TCI-state configuration within the CSI-RS resource set configuration during the RRC configuration process of a specific UE. If the base station configures an additional RRC parameter for aperiodic CSI-RS configuration to the UE for CSI-RS resource set level operation, the base station may trigger a specific CSI-RS resource set using a PDCCH in a specific CORESET and/or CORESET group. That is, the base station may trigger cross-TRP based aperiodic CSI-RS as a result of associating the CORESET ID and/or CORESET group ID that signal the aperiodic CSI-RS. In addition, the UE may apply the TCI state information to receive an aperiodic CSI-RS signal, based on the unified TCI state information indicated in the PDCCH and the triggered CSI-RS resource set information.

Table 37 may specifically include ControlResourceSetId and/or CORESET group ID corresponding to a TRP transmitting an aperiodic CSI-RS within NZP-CSI-RS-ResourceSet. For example, the base station may configure the CORESET group ID (or CORESETPoolindex) value as 0 or 1. In another example, the ControlResourceSetId may be configured as a value (e.g., 0 to 11) smaller than maxNrofControlResourceSets (e.g., 12).

When the base station configures a resource set for aperiodic CSI-RS transmission as shown in Table 37, the base station and the UE may indicate plural TCI states in the single DCI-based multiple-TRP operation without changing the CSI request operation defined before rel-17.

[Table 37]

```
-- ASN1START
-- TAG-NZP-CSI-RS-RESOURCESET-START
NZP-CSI-RS-ResourceSet ::=                SEQUENCE {
    nzp-CSI-ResourceSetId                 NZP-CSI-RS-ResourceSetId,
    nzp-CSI-RS-Resources                  SEQUENCE (SIZE (1..maxNrofNZP-CSI-RS-ResourcesPerSet)) OF
NZP-CSI-RS-ResourceId,
    repetition                            ENUMERATED { on, off }
    aperiodicTriggeringOffset             INTEGER(0..6)
    trs-Info                              ENUMERATED {true}

    ...,
    [[
    aperiodicTriggeringOffset-r16         INTEGER(0..31)
    ]],
    [[
    pdc-Info-r17                          ENUMERATED {true}
    cmrGroupingAndPairing-r17             CMRGroupingAndPairing-r17
    aperiodicTriggeringOffset-r17         INTEGER (0..124)
    aperiodicTriggeringOffsetL2-r17       INTEGER(0..31)
    CORESETgroupID-r18                    INTEGER (0..1)
    ControlResourceSetId-r18              INTEGER (0..11)
    ]]
}
```

[Example 5-3] Aperiodic CSI-RS configuration method 2 for unified TCI configuration in single DCI-based multiple-TRP operation (RRC parameter in CSI-RS resource level (e.g. two CMR groups))

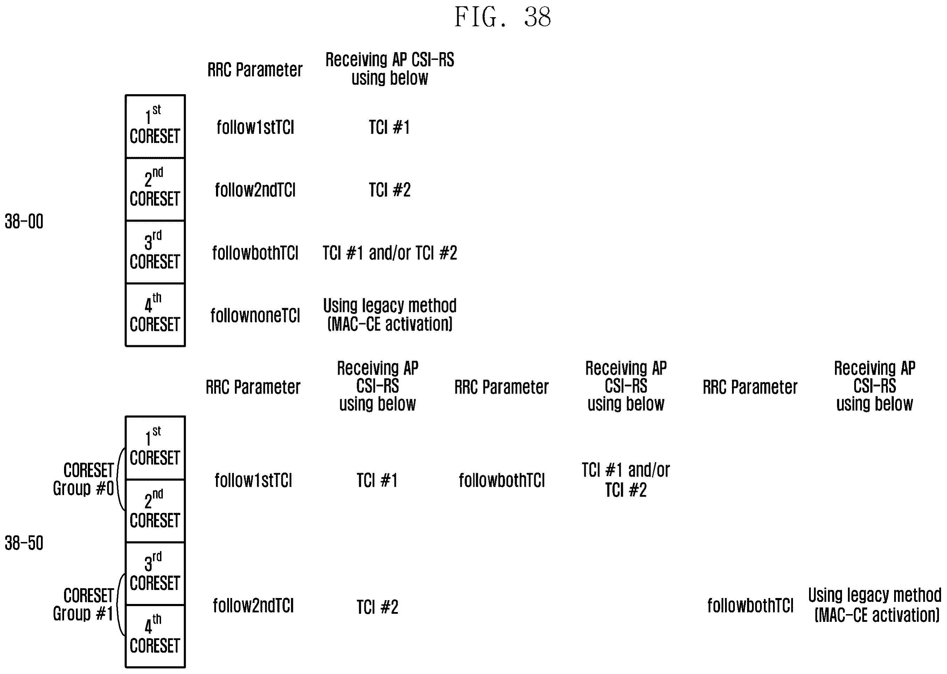

Referring to FIG. 38, in the single DCI-based multiple-TRP operation, the base station may configure a single or plural unified TCI state to transmit a single or plural TCI state-based CSI-RS per CORESET 38-00 or CORESET group 38-50 to the UE.

In an embodiment of the disclosure, the base station may configure an additional RRC parameter for the unified TCI-state configuration within the CSI-RS resource configuration during the RRC configuration process of a specific UE. For the aperiodic CSI-RS configuration in the CSI-RS resource level, the base station may configure two channel measurement resources (CMR) groups. In addition, the two CMR groups may be configured in a single CSI-RS resource set. The details of a CMR group configuration method are the same as those described in FIG. 37, so they are omitted below.

For example, as in the first embodiment of Table 38, the base station may configure the CSI-RS resource and CORESET ID/CORESET group ID corresponding to the TRP to be associated by configuring at least one of specific CORESET ID/CORESET group ID, followUnifiedTCI-State, and cmrGroupingAndPairing in the NZP-CSI-RS-ResourceSet, using a new RRC parameter in the RRC configuration to the UE.

For example, if the base station configures the value of nrofResourcesGroup1 in cmrGroupingAndPairing to the UE, the preceding (first) CSI-RS resources equal to the number of values of nrofResourcesGroup1 in a specific CSI-RS resource set may be configured as group1, and the remaining CSI-RS resource(s) may be configured as group2. In this case, the preceding (first) CSI-RS resources equal to the number of values of nrofResourcesGroup1 may refer, for example, to CSI-RS resources as many as the number of values of nrofResourcesGroup1, starting from the CSI-RS resource with the lowest index.

The base station and the UE may implicitly assume that group1 corresponds to TRP1 and group2 corresponds to TRP2. In addition, the base station may configure pairIOfNZP-CSI-RS-r18 to pair aperiodic CSI-RS(s) of group1 and group2 so that they can be received simultaneously, and the base station may configure at least two pairIOfNZP-CSI-RS-r18 and pair2OfNZP-CSI-RS-r18. The pair1OfNZP-CSI-RS-r18 and pair2OfNZP-CSI-RS-r18 may be referred to as information for associating NZP CSI-RS resources for receiving aperiodic CSI-RS. In addition, the pair1OfNZP-CSI-RS-r18 and pair2OfNZP-CSI-RS-r18 may be defined as follows.

pair1OfNZP-CSI-RS-r18, pair2OfNZP-CSI-RS-r18: A pair of NZP CSI-RS resources. In one pair, one resource shall belong to group 1 and the other resource shall belong to group 2 as configured by nrofResourcesGroup1 and nrofResourcesGroup2.

If there is no separate configuration for multiple unified TCI states, the base station and the UE may assume that group1 follows the first TCI state of the unified TCI states, and group2 follows the second TCI state of the unified TCI states.

[843]    [Table 38]

```
-- ASN1START

-- TAG-NZP-CSI-RS-RESOURCESET-START


NZP-CSI-RS-ResourceSet ::=              SEQUENCE {
       nzp-CSI-ResourceSetId              NZP-CSI-RS-ResourceSetId,
       nzp-CSI-RS-Resources               SEQUENCE (SIZE (1..maxNrofNZP-CSI-
RS-ResourcesPerSet)) OF NZP-CSI-RS-ResourceId,
       repetition                          ENUMERATED { on, off }
       aperiodicTriggeringOffset          INTEGER(0..6)
       trs-Info                            ENUMERATED {true}

       ...,
       [[
       aperiodicTriggeringOffset-r16       INTEGER(0..31)
       ]],
       [[
       pdc-Info-r17                        ENUMERATED {true}


//CORESETgroupID-r18                    INTEGER (0..1)


(first embodiment)
cmrGroupingAndPairing-r18              CMRGroupingAndPairing-r18
//followUnifiedTCI-State-r18           ENUMERATED {first, second}


aperiodicTriggeringOffset-r17      INTEGER (0..124)
       aperiodicTriggeringOffsetL2-r17      INTEGER(0..31)
```

```
        ]]

    }

    CMRGroupingAndPairing-r18 ::=          SEQUENCE {
    (second embodiment}

    CORESETgroupID-r18                     INTEGER (0..1)
    (third embodiment)

    followUnifiedTCI-State-r18             ENUMERATED {first, second} or {first, second,
    both, none}

        nrofResourcesGroup1-r18               INTEGER (1..7),
        pair1OfNZP-CSI-RS-r18                 NZP-CSI-RS-Pairing-r18
        pair2OfNZP-CSI-RS-r18                 NZP-CSI-RS-Pairing-r18

    }


    NZP-CSI-RS-Pairing-r18   ::=           SEQUENCE {
    (third embodiment)

    followUnifiedTCI-State-r18             ENUMERATED {follow1stTCI, follow2ndTCI}
    or {follow1stTCI, follow2ndTCI, followbothTCI, follownoneTCI}

    nzp-CSI-RS-ResourceId1-r18             INTEGER (1..7),
        nzp-CSI-RS-ResourceId2-r18            INTEGER (1..7)

    }
```

As another example, in the example embodiment of Table 38, the base station may configure CORESETpoolindex (e.g., 0 or 1) to the UE, and configure the value of nrofResourcesGroup1 in cmrGroupingAndPairing, so that the preceding (first) CSI-RS resources are configured as group1 to be mapped to CORESET ID/CORESET group ID (e.g., #0) as many as the number of values of nrofResourcesGroup1 in a specific CSI-RS resource set. In this case, the UE may consider that the CSI-RS resource(s) are configured as group2 to be mapped to CORESET ID/CORESET group ID (e.g., #1) as many as the remaining number. In this case, the preceding (first) CSI-RS resources equal to the number of values of nrofResourcesGroup1 may refer, for example, to CSI-RS resources as many as the number of values of nrofResourcesGroup1, starting from the CSI-RS resource with the lowest index. For example, the base station and the UE may assume that group1 corresponds to TRP1 and group2 corresponds to TRP2. In addition, the base station may configure pairlOfNZP-CSI-RS-r18 to pair aperiodic CSI-RS(s) of group1 and group2 so that they can be received simultaneously, and the base station may configure at least two pairlOfNZP-CSI-RS-r18 and pair2OfNZP-CSI-RS-r18.

If there is no separate configuration for the unified TCI state that configures a single or plural TCI states for AP-CSI-RS, the base station and the UE may assume that groupl corresponding to CORESET ID/CORESET group ID (e.g., 0) follows the first TCI state of the unified TCI states, and group2 corresponding to CORESET ID/CORESET group ID (e.g., 1) follows the second TCI state of the unified TCI states.

For another example, as in the third embodiment of Table 38, the base station may configure followUnifiedTCI-State-r18 as one of follow 1stTCI and follow2ndTCI as a parameter for the unified TCI state configuration for AP-CSI-RS to the UE. When followUnifiedTCI-State-r18 is configured as follow1stTCI or follow2ndTCI for AP-CSI-RS reception, the UE may apply the indicated first unified TCI or indicated second unified TCI among the activated unified TCI states. In addition, the followUnifiedTCI-State-r18 may be defined as follows.

followUnifiedTCI-State-r18: When followUnifiedTCI-State-r18 sets to "follow1ndTCI " or "follow2ndTCI", for AP-CSI-RS reception on this CORESET or CORESET group, the UE applies the "indicated" first or second unified TCI (e.g. DL only TCI or joint TCI) among activated unified TCI sataes.

If followUnifiedTCI-State-r18 is configured as one of follow1stTCI, follow2ndTCI, followbothTCI, and follownoneTCI, the above definition may be changed accordingly. In addition, the above definition of followUnifiedTCI-State-r18 may be applied not only to this example but also to all examples included in the disclosure.

In FIGS. 38-50, if the base station configures followUnifiedTCI-State-r18 as follow1stTCI for the unified TCI state configuration for AP-CSI-RS to the UE, the UE may apply the first TCI state of the unified TCI states to group1 corresponding to the CORESET group ID (e.g., 0). In this case, the UE may assume that group2 corresponding to the CORESET group ID (e.g., 1) follows the second TCI state of the unified TCI states.

When the base station configures followUnifiedTCI-State-r18 as follow2ndTCI for the unified TCI state configuration for AP-CSI-RS to the UE, the UE may apply the second TCI state of the unified TCI states to group1 corresponding to the CORESET group ID (e.g., 0). In this case, the UE may assume that group2 corresponding to the CORESET group ID (e.g., 1) follows the first TCI state of the unified TCI states.

For example, if the base station configures followUnifiedTCI-State-r18 as followbothTCI to the UE for the unified TCI state configuration for AP-CSI-RS, the UE may determine that follow1stTCI is applied to nzp-CSI-RS-ResouredId1 and follow2ndTCI is applied to nzp-CSI-RS-ResouredId2 in pair1 and pair2 within group1 corresponding to the CORESET group ID (e.g., 0).

In another example, if the base station configures followUnifiedTCI-State-r18 as follownoneTCI to the UE for the unified TCI state configuration for AP-CSI-RS, the UE may determine that the unified TCI state corresponding to the CORESET group ID (e.g., 0) based on a MAC CE activation message is applied.

In another example, if followUnifiedTCI-State-r18 is configured as follownoneTCI for at least one CORESET group ID (e.g., 0) for the unified TCI state configuration for AP-CSI-RS, the UE may determine that the unified TCI state corresponding to the CORESET group ID (e.g., 0) based on a MAC CE activation message is applied even in the remaining CORESET group IDs (e.g., 1).

In another example, the UE may not consider that followUnifiedTCI-State-r18 is configured as followbothTCI for at least one CORESET group ID (e.g., 0) and as follownoneTCI for the remaining CORESET group IDs (e.g., 1) for the unified TCI state configuration for AP-CSI-RS.

In the above-described example embodiments, the configurations of follow1stTCI, follow2ndTCI, followbothTCI, and follownoneTCI may or may not be supported depending on the UE capability. In particular, the configuration of followbothTCI is supported in UEs after rel-18, and follownoneTCI may be supported even in UEs before rel-17.

The positions of the parameters configured in the above-described examples embodiments are simply examples, may be variously modified or combined depending on the case, and are not limited to a specific embodiment.

[Example 5-4] Aperiodic CSI-RS configuration method 3 for unified TCI configuration in single DCI-based multiple-TRP operation (RRC parameter in CSI-AperiodicTriggerState or CSI-AssociatedReportConfigInfo)

In the single DCI-based multiple-TRP operation, the base station may configure a single or plural unified TCI state to transmit a single or plural TCI state-based CSI-RS per CORESET or CORESET group to the UE.

In an embodiment of the disclosure, the base station may configure an additional RRC parameter for the unified TCI-state configuration in the CSI-RS resource configuration during the RRC configuration process of a specific UE. The base station may configure an additional parameter using at least one of CSI-AperiodicTriggerState and CSI-AssociatedReportConfigInfo during the RRC configuration process.

The base station may configure at least one of CORESET group ID and followUnifiedTCI-State, which are parameters for the unified TCI-state configuration in CSI-AperiodicTriggerStateList or CSI-AperiodicTriggerState, to the UE during the RRC configuration process, thereby associating the CSI-RS resource and the CORESETPoolindex corresponding to the TRP.

[Table 39]

***CSI-AperiodicTriggerStateList*** **information element**

-- ASN1START

-- TAG-CSI-APERIODICTRIGGERSTATELIST-START


CSI-AperiodicTriggerStateList    ::=            SEQUENCE    (SIZE    (1..maxNrOfCSI-AperiodicTriggers)) OF CSI-AperiodicTriggerState


CSI-AperiodicTriggerState ::=            SEQUENCE {
    associatedReportConfigInfoList                                SEQUENCE (SIZE(1..maxNrofReportConfigPerAperiodicTrigger))            OF            CSI-AssociatedReportConfigInfo,
(first embodiment)
//CORESETgroupID-r18                    INTEGER (0..1)
//followUnifiedTCI-State-r18                    ENUMERATED {follow1stTCI, follow2ndTCI}

    ...,
    [[
    ap-CSI-MultiplexingMode-r17                    ENUMERATED {enabled}
    ]]
}

```
CSI-AssociatedReportConfigInfo ::=    SEQUENCE {
        reportConfigId                          CSI-ReportConfigId,
        resourcesForChannel                     CHOICE {
            nzp-CSI-RS                              SEQUENCE {
                resourceSet                             INTEGER (1..maxNrofNZP-
CSI-RS-ResourceSetsPerConfig),
                qcl-info                                                  SEQUENCE
(SIZE(1..maxNrofAP-CSI-RS-ResourcesPerSet)) OF TCI-StateId
(second embodiment)
//CORESETgroupID-r18                INTEGER (0..1)
(third embodiment)
//followUnifiedTCI-State-r18        ENUMERATED {follow1stTCI, follow2ndTCI}
            },
            csi-SSB-ResourceSet                     INTEGER (1..maxNrofCSI-SSB-
ResourceSetsPerConfig)
        },
        csi-IM-ResourcesForInterference         INTEGER(1..maxNrofCSI-IM-
ResourceSetsPerConfig)
        nzp-CSI-RS-ResourcesForInterference    INTEGER    (1..maxNrofNZP-CSI-RS-
ResourceSetsPerConfig)
        ...,
        [[
        resourcesForChannel2-r17    CHOICE {
            nzp-CSI-RS2-r17                 SEQUENCE {
                resourceSet2-r17                        INTEGER (1..maxNrofNZP-CSI-RS-
ResourceSetsPerConfig),
                qcl-info2-r17                           SEQUENCE (SIZE(1..maxNrofAP-
CSI-RS-ResourcesPerSet)) OF TCI-StateId
(second embodiment)
//coresetPoolIndex-r18              INTEGER (0..1)
(third embodiment)
//followUnifiedTCI-State-r18        ENUMERATED {follow1stTCI, follow2ndTCI}
```

```
        },
            csi-SSB-ResourceSet2-r17                    INTEGER   (1..maxNrofCSI-SSB-
ResourceSetsPerConfigExt)
        }
        csi-SSB-ResourceSetExt                          INTEGER   (1..maxNrofCSI-SSB-
ResourceSetsPerConfigExt)
        ]]
    }
```

For example, in the example embodiment of Table 39, the base station may configure CORESET group ID corresponding to TRP1 and TRP2 in CSI-AperiodicTriggerState as 0 or 1 to the UE. In addition, the base station may select followUnifiedTCI-State-r18 as one of follow1stTCI and follow2ndTCI to configure multiple unified TCI states in CSI-AperiodicTriggerState to the UE. If followUnifiedTCI-State-r18 is configured as follow1stTCI, the UE may apply the value of qcl-info or TCI-stateId of the NZP-CSI-RS resource set configured in resourcesForChannel within CSI-AssociatedReportConfigInfo. If followUnifiedTCI-State-r18 is configured as o follow2ndTCI, the UE may apply the value of qcl-info or TCI-stateId of the NZP-CSI-RS resource set configured in resourcesForChannel2 within CSI-AssociatedReportConfigInfo.

For another example, in the second embodiment of Table 39, the base station may configure CORESET group ID corresponding to TRP1 and TRP2 in CSI-AssociatedReportConfigInfo as 0 or 1 to the UE. For example, the base station may configure CORESET group ID in resourcesForChannel within CSI-AssociatedReportConfigInfo as 0 to the UE and configure CORESET group ID in resourcesForChannel2 within CSI-AssociatedReportConfigInfo as 1 to the UE. Through the above configuration process, the UE may determine that the aperiodic CSI-RS resource configuration is configured in resource set units.

For another example, similar to the third embodiment of Table 39, the base station may configure followUnifiedTCI-State-r18 in CSI-AssociatedReportConfigInfo as follow1stTCI or follow2ndTCI to the UE. For example, the base station may configure followUnifiedTCI-State-r18 in resourcesForChannel within CSI-AssociatedReportConfigInfo as follow1stTCI to the UE, and configure followUnifiedTCI-State-r18 in resourcesForChannel2 within CSI-AssociatedReportConfigInfo as follow2ndTCI to the UE. Through the above configuration process, the UE may determine that the aperiodic CSI-RS resource configuration is configured in resource set units, resourceset and qcl-info are configured as the first resource of the multiple unified TCI states, and resourceset2 and qcl-info2 are configured as the second resource of the multiple unified TCI states.

The above example embodiments may be combined with each other, and the disclosure is not limited.

After the RRC configuration process, the base station may indicate the UE an aperiodic CSI request using a CSI request field of DCI (e.g., DCI format 0_1/0_2) through a PDCCH channel. The UE may receive a reportTriggerSize value during the RRC configuration process and identify the size of the CSI request field. In addition, the UE may identify configuration information in CSI-AperiodicTriggerState, CSI-AssociatedReportConfigInfo, reportConfigId, resourceSet1, and resourceSet2 described above in various embodiments and thereby identify CSI-RS resource information for aperiodic CSI reporting.

In addition, the UE may receive a MAC CE message for AP-CSI Trigger state subselection from the base station after the RRC configuration process. Here, the MAC CE message may be configured to be mapped in association with a DCI codepoint value indicated in DCI (e.g., format 0_1/0_2). The UE may identify the MAC CE message and the CSI request field information of the DCI to measure and report the aperiodic CSI-RS. Since the details are similar to those described above, they are omitted below.

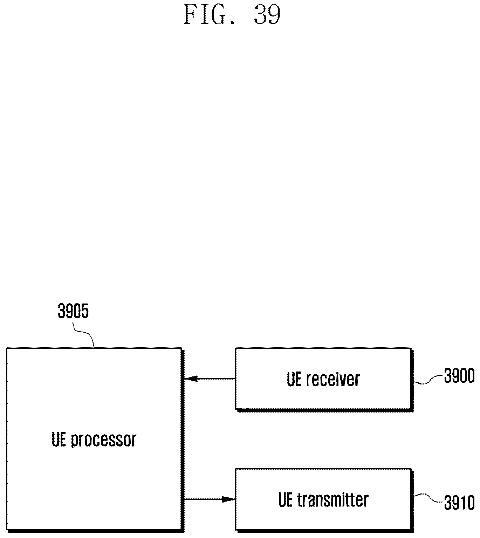

FIG. 39 is a block diagram illustrating an example configuration of a UE in a wireless communication system according to various embodiments.

Referring to FIG. 39, the UE may include a transceiver referring to a UE receiver 3900 and a UE transmitter 3910, a memory (not shown), and a UE processor (e.g., including processing circuitry) 3905 (or a controller or processor). According to the communication method of the UE as described above, the UE transceiver 3900 and 3910, the memory, and the UE processor 3905 may operate. However, the elements of the UE are not limited to the above-described example. For example, the UE may include more or fewer elements than the aforementioned elements. In addition, the transceiver, the memory, and the processor may be implemented in the form of a single chip.

The transceiver may transmit/receive a signal to/from a base station. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an example of the transceiver, and elements of the transceiver are not limited to the RF transmitter and the RF receiver.

In addition, the transceiver may receive a signal through a wireless channel and output the received signal to the processor, and may transmit a signal output from the processor through the wireless channel.

The memory may store programs and data required for the operation of the UE. In addition, the memory may store control information or data included in a signal transmitted and received by the UE. The memory may include a storage medium such as a ROM, a RAM, a hard disk, a CD-ROM, and a DVD, or a combination of storage media. In addition, plural memories may exist.

In addition, the processor 3905 may include various processing circuitry and control a series of processes so that the UE may operate according to the above-described embodiment. For example, the processor may control elements of the UE so as to receive DCI configured by two layers and simultaneously receive plural PDSCHs. Plural processors may exist, and the processor may perform an operation of controlling the elements of the UE by executing programs stored in the memory. Thus, the processor 3905 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

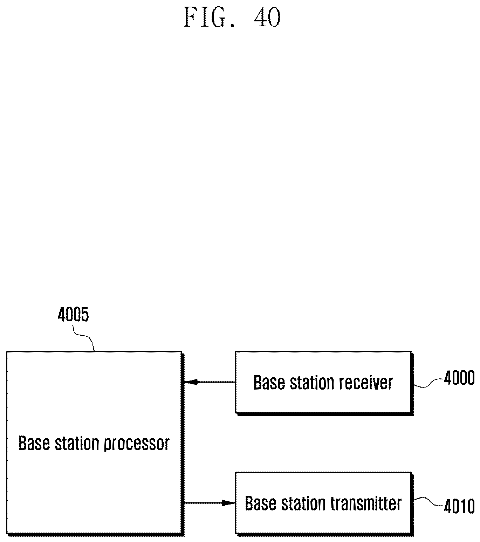

FIG. 40 is a block diagram illustrating an example configuratoin of a base station in a wireless communication system according to various embodiments.

Referring to FIG. 40, the base station may include a transceiver referring to a base station receiver 4000 and a base station transmitter 4010, a memory (not shown), and a base station processor (e.g., including processing circuitry) 4005 (or a base station controller or processor). According to the communication method of the base station as described above, the base station transceiver 4000 and 4010, the memory, and the base station processor 4005 may operate. However, the elements of the base station are not limited to the above-described example. For example, the base station may include more or fewer elements than the aforementioned elements. In addition, the transceiver, the memory, and the processor may be implemented in the form of a single chip.

The transceiver may transmit/receive a signal to/from a UE. Here, the signal may include control information and data. To this end, the transceiver may include an RF transmitter for up-converting and amplifying a frequency of a transmitted signal, and an RF receiver for low-noise amplifying a received signal and down-converting a frequency of the received signal. However, this is only an example of the transceiver, and elements of the transceiver are not limited to the RF transmitter and the RF receiver.

In addition, the transceiver may receive a signal through a wireless channel and output the signal to the processor, and may transmit the signal output from the processor through the wireless channel.

The memory may store programs and data necessary for the operation of the base station. In addition, the memory may store control information or data included in a signal transmitted and received by the base station. The memory may include a storage medium such as a ROM, a RAM, a hard disk, a CD-ROM, and a DVD, or a combination of storage media. In addition, plural memories may exist.

The processor 4005 may include various processing circuitry and control a series of processes so that the base station may operate according to the above-described embodiment. For example, the processor may control elements of the base station so as to configure DCI of two layers including allocation information regarding plural PDSCHs and transmit the configured DCI. Plural processors may exist, and the processor may perform an operation of controlling the elements of the base station by executing programs stored in the memory. Thus, the processor 4005 may include various processing circuitry and/or multiple processors. For example, as used herein, including the claims, the term "processor" may include various processing circuitry, including at least one processor, wherein one or more of at least one processor, individually and/or collectively in a distributed manner, may be configured to perform various functions described herein. As used herein, when "a processor", "at least one processor", and "one or more processors" are described as being configured to perform numerous functions, these terms cover situations, for example and without limitation, in which one processor performs some of recited functions and another processor(s) performs other of recited functions, and also situations in which a single processor may perform all recited functions. Additionally, the at least one processor may include a combination of processors performing various of the recited /disclosed functions, e.g., in a distributed manner. At least one processor may execute program instructions to achieve or perform various functions.

The methods according to embodiments described herein may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program may include instructions that cause the electronic device to perform the methods according to various embodiments as defined by the appended claims and/or disclosed herein.

The programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, the programs may be stored in a memory including any combination of some or all of them. Further, a plurality of such memories may be included.

In addition, the programs may be stored in an attachable storage device which may access the electronic device through communication networks such as the Internet, Intranet, Local Area Network (LAN), Wide LAN (WLAN), and Storage Area Network (SAN) or a combination thereof. Such a storage device may access the electronic device via an external port. Further, a separate storage device on the communication network may access the device that performs embodiments of the disclosure.

In the above-described example embodiments, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include plural elements.

The various example embodiments described herein are merely examples that have been presented to easily explain the technical contents of the disclosure and help understanding of the disclosure, and are not intended to limit the scope of the disclosure. It will be apparent to those skilled in the art that other variants based on the technical idea of the disclosure may be implemented. Further, the above respective embodiments may be employed in combination, as necessary. For example, an embodiment of the disclosure may be partially combined with another embodiment to operate a base station and a UE. As an example, embodiments of the disclosure may be partially combined to operate a base station and a UE. Further, although the above embodiments have been described by way of the FDD LTE system, other variants based on the technical idea of the various embodiments may be implemented in other systems such as TDD LTE and 5G or NR systems.

In the drawings in which methods of the disclosure are described, the order of description does not necessarily correspond to the order of execution, and the order of precedence may be changed or the steps may be executed in parallel.

In the drawings in which methods of the disclosure are described, some elements may be omitted and only some elements may be included therein without departing from the essential spirit and scope of the disclosure.

Furthermore, in methods of the disclosure, some or all of the contents of each embodiment may be implemented in combination without departing from the essential spirit and scope of the disclosure.

Various embodiments of the disclosure have been described. The above description of the disclosure is merely for the purpose of illustration, and is not intended to limit the disclosure to the various example embodiments set forth herein. Those skilled in the art will appreciate that other specific modifications and changes may be easily made thereto without changing the technical idea or essential features of the disclosure. All changes and modifications derived from the meaning and scope of the claims and equivalent concepts thereof shall be construed as falling within the scope of the disclosure.

**Claims**

1. A method performed by a terminal in a wireless communication system, the method comprising:

   receiving a radio resource control (RRC) message including a configuration for a channel state information-reference signal (CSI-RS) resource set, a CSI-RS configuration, a configuration for an aperiodic CSI trigger state, and a unified TCI state list;
   receiving a downlink control information (DCI) including a CSI request for triggering an aperiodic CSI report;
   receiving an aperiodic CSI-RS based on a TCI state determined from the unified TCI state list, in a CSI-RS resource set indicated by an aperiodic CSI trigger state corresponding to the CSI request; and
   transmitting, to a base station, a CSI report generated based on the aperiodic CSI-RS.

2. The method of claim 1, wherein the configuration for the CSI-RS resource set includes a parameter for configuring the unified TCI state, and
wherein the aperiodic CSI-RS is received based on a TCI state determined according to the parameter for configuring the unified TCI state in the unified TCI state list.

3. The method of claim 1, wherein the configuration for the CSI-RS resource set includes a configuration for a CSI-RS resource group and a parameter for configuring the unified TCI state, and
wherein the aperiodic CSI-RS is received based on a TCI state determined according to the parameter for configuring the unified TCI state in the unified TCI state list for each CSI-RS resource group.

4. The method of claim 1, wherein the configuration for the aperiodic CSI trigger state includes a parameter for configuring the unified TCI state, and
wherein the aperiodic CSI-RS is received based on a parameter for configuring a unified TCI indicated by the aperiodic CSI trigger state corresponding to the CSI request in the unified TCI state list.

5. A method performed by a base station in a wireless communication system, the method comprising:

transmitting a radio resource control (RRC) message including a configuration for a channel state information-reference signal (CSI-RS) resource set, a CSI-RS configuration, a configuration for an aperiodic CSI trigger state, and a unified TCI state list;
transmitting a downlink control information (DCI) including a CSI request for triggering an aperiodic CSI report;
transmitting an aperiodic CSI-RS in a CSI-RS resource set indicated by an aperiodic CSI trigger state corresponding to the CSI request, wherein a TCI state determined from the unified TCI state list is applied to the aperiodic CSI-RS; and
receiving a CSI report generated based on the aperiodic CSI-RS.

6. The method of claim 5, wherein the configuration for the CSI-RS resource set includes a parameter for configuring the unified TCI state, and
wherein the TCI state determined based on the parameter for configuring the unified TCI state in the unified TCI state list is applied to the aperiodic CSI-RS.

7. The method of claim 5, wherein the configuration for the CSI-RS resource set includes a configuration for a CSI-RS resource group and a parameter for configuring the unified TCI state, and
wherein the TCI state determined based on the parameter for configuring the unified TCI state in the unified TCI state list for each CSI-RS resource group is applied to the aperiodic CSI-RS.

8. The method of claim 5, wherein the configuration for the aperiodic CSI trigger state includes a parameter for configuring the unified TCI state, and
wherein the TCI state determined based on a parameter for configuring a unified TCI indicated by the aperiodic CSI trigger state corresponding to the CSI request in the unified TCI state list is applied to the aperiodic CSI-RS.

9. A terminal in a wireless communication system, the terminal comprising:

a transceiver; and
a controller coupled with the transceiver,
the controller configured to:

receive a radio resource control (RRC) message including a configuration for a channel state information-reference signal (CSI-RS) resource set, a CSI-RS configuration, a configuration for an aperiodic CSI trigger state, and a unified TCI state list,
receive a downlink control information (DCI) including a CSI request for triggering an aperiodic CSI report,
receive an aperiodic CSI-RS based on a TCI state determined from the unified TCI state list, in a CSI-RS resource set indicated by an aperiodic CSI trigger state corresponding to the CSI request, and
transmit, to a base station, a CSI report generated based on the aperiodic CSI-RS to a base station.

10. The terminal of claim 9, wherein the configuration for the CSI-RS resource set includes a parameter for configuring the unified TCI state, and
wherein the aperiodic CSI-RS is received based on a TCI state determined according to the parameter for configuring the unified TCI state in the unified TCI state list.

11. The terminal of claim 9, wherein the configuration for the CSI-RS resource set includes a configuration for a CSI-RS resource group and a parameter for configuring the unified TCI state, and
wherein the aperiodic CSI-RS is received based on a TCI state determined according to the parameter for configuring the unified TCI state in the unified TCI state list for each CSI-RS resource group.

12. The terminal of claim 9, wherein the configuration for the aperiodic CSI trigger state includes a parameter for configuring the unified TCI state, and
wherein the aperiodic CSI-RS is received based on a parameter for configuring a unified TCI indicated by the aperiodic CSI trigger state corresponding to the CSI request in the unified TCI state list.

13. A base station in a wireless communication system, the base station comprising:

    a transceiver;
    a controller coupled with the transceiver and configured to:

        transmit a radio resource control (RRC) message including a configuration for a channel state information-reference signal (CSI-RS) resource set, a CSI-RS configuration, a configuration for an aperiodic CSI trigger state, and a unified TCI state list;
        transmit a downlink control information (DCI) including a CSI request for triggering an aperiodic CSI report;
        transmit an aperiodic CSI-RS in a CSI-RS resource set indicated by an aperiodic CSI trigger state corresponding to the CSI request, wherein a TCI state determined from the unified TCI state list is applied to the aperiodic CSI-RS; and
        receive a CSI report generated based on the aperiodic CSI-RS.

14. The base station of claim 13, wherein the configuration for the CSI-RS resource set includes a parameter for configuring the unified TCI state, and
wherein the TCI state determined based on the parameter for configuring the unified TCI state in the unified TCI state list is applied to the aperiodic CSI-RS.

15. The base station of claim 13, wherein the configuration for the CSI-RS resource set includes a configuration for a CSI-RS resource group and a parameter for configuring the unified TCI state,

    wherein the TCI state determined based on the parameter for configuring the unified TCI state in the unified TCI state list for each CSI-RS resource group is applied to the aperiodic CSI-RS,
    wherein the configuration for the aperiodic CSI trigger state includes a parameter for configuring the unified TCI state, and
    wherein the TCI state determined based on a parameter for configuring a unified TCI indicated by the aperiodic CSI trigger state corresponding to the CSI request in the unified TCI state list is applied to the aperiodic CSI-RS.

# FIG. 1

One subframe [110]

$N_{symb}^{subframe,\mu}$ OFDM symbols

1 OFDM symbols [102]

1 subcarrier [103]

$K=N_{RB,x}^{max,\mu}\,N_{sc}^{RB}-1$

Resource element [k,l] [101]

$N_{RB}^{\mu}\,N_{sc}^{RB}$ subcarriers

Resource block $N_{sc}^{RB}$ subcarriers [104]

Frequency

$K=0$

$\bar{l}=0$

$\bar{l}=14 \cdot 2^{\mu}-1$

Time

# FIG. 2

1 frame (200)

1 subframe (201)

μ=0 (204)

| 0 | 1 | 2 | 3 | 4 | 5 | 6 | 7 | 8 | 9 |

slot (202)

μ=1 (205)

| 0 | 1 | 2 | 3 | 4 | 5 | 6 | 7 | 8 | 9 | 10 | 11 | 12 | 13 | 14 | 15 | 16 | 17 | 18 | 19 |

slot (203)

EP 4 654 718 A1

FIG. 3

BWP#1
(301)

BWP#2
(302)

UE bandwidth
(300)

Frequency

FIG. 4

Duration (404)

Frequecy resources (403)

UE bandwidth part (410)

Slot (420)

Control resource set#1 [401]

Control resource set#2 [402]

Time

Frequency

# FIG. 5A

FIG. 5B

1 slot = 14 OFDM symbols

| 0 | 1 | 2 | 3 | 4 | 5 | 6 | 7 | 8 | 9 | 10 | 11 | 12 | 13 |

(5-1-00)
[X,Y] = (7,3)

X=7
Y=3
Y=3

(5-1-05)
[X,Y] = (4,3)

X=4
X'= 5 > X
X'= 5 > X
Y=3
Y=3
Y=3

(5-1-10)
[X,Y] = (2,2)

X=2    X=2    X=2    X=2    X=2    X=2    X=2
Y=2    Y=2    Y=2    Y=2    Y=2    Y=2    Y=2

Search Space 1

Search Space 2

Search Space 3

EP 4 654 718 A1

# FIG. 6

Receive PDCCH indicating new
UL transmission or DL transmission (630)

605    610    605    610    605    610    605    610    605

drx-onDurationTimer
(615)

Start or restart
drx-InactivityTimer (620)

615    615    615

drx-LongCycle (625)    625    625    625

Active time (605)

EP 4 654 718 A1

FIG. 7

TCI state #0
(700)

TCI state #1
(705)

TCI state #2
(710)

# FIG. 8

RRC configured TCI states (800)

| TCI #0 (805) | TCI #1 (810) | TCI #2 (815) | • • • • • | TCI #N (820) |

A list of TCI states for a CORESET (825)

| TCI #a (830) | TCI #b (835) | • • • • • | TCI #n (840) |

TCI indication via MAC CE (845)

FIG. 9

| Serving Cell ID (915) | | CORESET ID (920) | Oct 1 (900) |
|---|---|---|---|
| CORE SET ID | TCI state ID (925) | | Oct 2 (905) |

FIG. 10

# FIG. 11

Periodicity (1105)

Rate matching resource (1102)

Frequency-domain
allocation (1104)

PDSCH (1101)

Time-domain
allocation (1103)

Frequency

Time

slot #0          slot #1          slot #2

EP 4 654 718 A1

FIG. 12

**PDCCH monitoring occasion [1210]**

CORESET #1 [Ref: CSI-RS#1/Cell#1/BWP#1 with QCL-TypeD] — 1215

CORESET #1 [Ref: CSI-RS#1/Cell#1/BWP#1 with QCL-TypeD] — 1220

CORESET #2 [Ref: CSI-RS#1/Cell#2/BWP#1 with QCL-TypeD] — 1225

CSS#1 / CSS#2 / USS#1 — BWP#1 [Active] on Cell#1 [1200]

CSS#1 / USS#2 / USS#2 — BWP#1 [Active] on Cell#2 [1205]

**PDCCH monitoring occasion [1240]**

CORESET #1 [Ref: CSI-RS#1/Cell#1/BWP#1 with QCL-TypeD] — 1245

CORESET #2 [Ref: CSI-RS#1/Cell#1/BWP#1 with QCL-TypeD] — 1250

CORESET #1 [Ref: CSI-RS#1/Cell#2/BWP#1 with QCL-TypeD] — 1255

CORESET #2 [Ref: CSI-RS#2/Cell#2/BWP#1 with QCL-TypeD] — 1260

USS#1 / USS#2 / USS#3 — Active BWP on Cell#1 [1230]

USS#1 / USS#2 / USS#3 — Active BWP on Cell#2 [1235]

FIG. 13

EP 4 654 718 A1

| RA type 0 (13-00) | Bitmap 13-15 |
|---|---|

| RA type 1 (13-05) | Starting VRB 13-20 | Length 13-25 |
|---|---|---|

| Both RA type 0 & 1 (13-10) | 1 bit for RA type indication 13-30 | Max (payload for RA type 0, payload for RA type 1) 13-35 |
|---|---|---|

# FIG. 14

S
(14-00)

L (14-05)

| 0 | 1 | 2 | 3 | 4 | 5 | 6 | 7 | 8 | 9 | 10 | 11 | 12 | 13 |

OFDM symbol

$$\text{Slot} \left\lfloor n \cdot \frac{2^{\mu_{PDSCH}}}{2^{\mu_{PDCCH}}} \right\rfloor + K_0 \ (14\text{-}10)$$

EP 4 654 718 A1

# FIG. 15

EP 4 654 718 A1

# FIG. 16

RRC configured TCI states

16-00

| TCI #0 | TCI #1 | TCI #2 | TCI #3 | · · · | TCI #M-1 |

MAC-CE activated TCI states for PDSCH

16-20

| TCI #0' | TCI #1' | TCI #2' | · · · | TCI #K-1 |

MAC CE based beam indication

TCI state for PDSCH

16-40

TCI #1 —— DCI based beam selection

MAC-CE structure

| | | | | | | | | |
|---|---|---|---|---|---|---|---|---|
| 16-55 — CORESET Pool ID | Serving Cell ID | | | | | | BWP ID | | Oct 1 |
| 16-50 | $T_7$ | $T_6$ | $T_5$ | $T_4$ | $T_3$ | $T_2$ | $T_1$ | $T_0$ | Oct 2 |
| | $T_{15}$ | $T_{14}$ | $T_{13}$ | $T_{12}$ | $T_{11}$ | $T_{10}$ | $T_9$ | $T_8$ | Oct 3 |

· · ·

| $T_{(N-2) \times 8+7}$ | $T_{(N-2) \times 8+6}$ | $T_{(N-2) \times 8+5}$ | $T_{(N-2) \times 8+4}$ | $T_{(N-2) \times 8+3}$ | $T_{(N-2) \times 8+2}$ | $T_{(N-2) \times 8+1}$ | $T_{(N-2) \times 8}$ | Oct N |

# FIG. 17

EP 4 654 718 A1

# FIG. 18

**Single cell LTE/NR (S00)**

gNB
- SDAP (S25)
- PDCP (S30)
- RLC (S35)
- MAC (S40)
- PHY (S45)

UE
- PHY (S50)
- MAC (S55)
- RLC (S60)
- PDCP (S65)
- SDAP (S70)

**Carrier aggregation (S10)**

gNB
- SDAP
- PDCP
- RLC
- MAC
- PHY ... PHY

UE
- PHY ... PHY
- MAC
- RLC
- PDCP
- SDAP

**Dual connectivity (S20)**

MgNB
- SDAP
- PDCP
- RLC
- MAC
- PHY

SgNB
- RLC
- MAC
- PHY

UE
- PHY
- MAC
- RLC
- PDCP
- SDAP

SgNB (UE)
- PHY
- MAC
- RLC

EP 4 654 718 A1

FIG. 19

EP 4 654 718 A1

# FIG. 20

| Control information for TRP #0 | — | DCI #0 |

| Control information for TRP #1 | — | DCI #1 |

⋮ ⋮

| Control information for TRP #(N-1) | — | DCI #(N-1) |

Case #1 (N100)

| Control information for TRP #0 | — | DCI #0 |

| Control information for TRP #1 | — | sDCI #0 |

⋮ ⋮

| Control information for TRP #(N-1) | — | sDCI #(N-2) |

Case #2 (N105)

| Control information for TRP #0 | — | DCI |

| Control information for TRP #1 | — | sDCI |

⋮ ⋮

| Control information for TRP #(N-1) |

Case #3 (N110)

| Control information for TRP #0 |

| Control information for TRP #1 | — | Long DCI |

⋮ ⋮

| Control information for TRP #(N-1) |

Case #4 (N115)

EP 4 654 718 A1

# FIG. 21

| | | | | | | | |
|---|---|---|---|---|---|---|---|

| R | Serving Cell ID | BWP ID | Oct 1 |
|---|---|---|---|

21-05 — $C_0$ | TCI state $ID_{0,1}$ | Oct 2

21-10 —

R | TCI state $ID_{0,2}$ | Oct 3 (Optional)

21-15 —

. . .

| $C_N$ | TCI state $ID_{N,1}$ | Oct M-1 |
|---|---|---|
| R | TCI state $ID_{N,2}$ | Oct M (Optional) |

# FIG. 22

SS set#1 — 22-01 — Periodicity: sl1

SS set#2 — 22-02 — Periodicity: sl4

SS set#3 — 22-03 — Periodicity: sl1

SS set#4 — 22-04 — Periodicity: sl10

CORESET#1 — 22-05 — TCI state: {QCL-TypeA (SP CSI-RS#1) [22-08], QCL-TypeD (SP CSI-RS#1) [22-09]}

CORESET#2 — 22-06 — TCI state: {QCL-TypeA (P CSI-RS#2)} [22-10]

CORESET#3 — 22-07 — TCI state: {QCL-TypeA (P CSI-RS#3) [22-11], QCL-TypeD (P CSI-RS#4) [22-12]}

22-13 Selected RLM RS: P CSI-RS#2, P CSI-RS#4

EP 4 654 718 A1

# FIG. 23

| 23-00 | 23-05 | 23-10 | |
|---|---|---|---|
| S | Serving Cell ID | BWP ID | Oct 1 |
| R | TCI state $ID_0$ | | Oct 2 |
| R | TCI state $ID_1$ | | Oct 3 (Optional) |

23-15

. . .

| R | TCI state $ID_{N-1}$ | Oct N (Optional) |
|---|---|---|

23-25

FIG. 24

| R | Serving Cell ID | | | | | BWP ID | | Oct 1 |
|---|---|---|---|---|---|---|---|---|
| $T_7$ | $T_6$ | $T_5$ | $T_4$ | $T_3$ | $T_2$ | $T_1$ | $T_0$ | Oct 2 |
| $T_{15}$ | $T_{14}$ | $T_{13}$ | $T_{12}$ | $T_{11}$ | $T_{10}$ | $T_9$ | $T_8$ | Oct 3 |

. . .

| $T_{(N-2)\times8+7}$ | $T_{(N-2)\times8+6}$ | $T_{(N-2)\times8+5}$ | $T_{(N-2)\times8+4}$ | $T_{(N-2)\times8+3}$ | $T_{(N-2)\times8+2}$ | $T_{(N-2)\times8+1}$ | $T_{(N-2)\times8}$ | Oct N |

24-00  24-05  24-10  24-15

# FIG. 25

| S | Serving Cell ID | | | | BWP ID | | | Oct 1 |
|---|---|---|---|---|---|---|---|---|
| R | TCI state ID$_0$ | | | | | | | Oct 2 (Optional) |
| T$_7$ | T$_6$ | T$_5$ | T$_4$ | T$_3$ | T$_2$ | T$_1$ | T$_0$ | Oct 3 (Optional) |
| T$_{15}$ | T$_{14}$ | T$_{13}$ | T$_{12}$ | T$_{11}$ | T$_{10}$ | T$_9$ | T$_8$ | Oct 4 (Optional) |

25-00    25-05    25-10

25-15    25-20    25-25

$\cdot\ \cdot\ \cdot$

| T$_{(N-2)\times8+7}$ | T$_{(N-2)\times8+6}$ | T$_{(N-2)\times8+5}$ | T$_{(N-2)\times8+4}$ | T$_{(N-2)\times8+3}$ | T$_{(N-2)\times8+2}$ | T$_{(N-2)\times8+1}$ | T$_{(N-2)\times8}$ | Oct N+1 (Optional) |

# FIG. 26

| 26-00 | 26-05 | 26-10 | |
| S | Serving Cell ID | BWP ID | Oct 1 |
| $C_0$ | TCI state $ID_{D,0}$ | | Oct 2 |
| TCI state $ID_{D,0}$ | TCI state $ID_{U,0}$ | | Oct 3 |

26-15
26-20
26-21

26-25  . . .

| $C_{N-1}$ | TCI state $ID_{D,N-1}$ | Oct M-1 (Optional) |
| TCI state $ID_{D,N-1}$ | TCI state $ID_{U,N-1}$ | Oct M (Optional) |

# FIG. 27

| | | | | |
|---|---|---|---|---|
| 27-00 | | 27-05 | | 27-10 |
| S | Serving Cell ID | | BWP ID | Oct 1 |
| $C_{D,0}$ | TCI state $ID_{D,0}$ | | | Oct 2 |
| $C_{U,0}$ | TCI state $ID_{U,0}$ | | | Oct 3 |

27-15
27-25
27-20
27-30

. . .

| | | | |
|---|---|---|---|
| $C_{D,N-1}$ | TCI state $ID_{D,N-1}$ | | Oct M-1 (Optional) |
| $C_{U,N-1}$ | TCI state $ID_{U,N-1}$ | | Oct M (Optional) |

# FIG. 28

| S | Serving Cell ID | BWP ID | Oct 1 |
|---|---|---|---|
| $C_{0,0}$ | TCI state $ID_{0,0}$ | | Oct 2 |
| $C_{1,0}$ | TCI state $ID_{1,0}$ | | Oct 3 (Optional) |

28-00  28-05  28-10

28-15  28-25  28-20  28-30

. . .

| $C_{0,N-1}$ | TCI state $ID_{0,N-1}$ | Oct M-1 (Optional) |
|---|---|---|
| $C_{1,N-1}$ | TCI state $ID_{1,N-1}$ | Oct M (Optional) |

# FIG. 29

# FIG. 30

| | | |
|---|---|---|
| J | Serving Cell ID | BWP ID |

Oct 1

30-00    30-05    30-10

| | |
|---|---|
| $C_{0,0}$ | TCI state $ID_{0,0}$ |

Oct 2

30-15
30-25

| | |
|---|---|
| $C_{1,0}$ | TCI state $ID_{1,0}$ |

Oct 3
(Optional)

30-20

30-30

. . .

| | |
|---|---|
| $C_{0,N-1}$ | TCI state $ID_{0,N-1}$ |

Oct M-1

| | |
|---|---|
| $C_{1,N-1}$ | TCI state $ID_{1,N-1}$ |

Oct M
(Optional)

# FIG. 31

| J | Serving Cell ID | BWP ID | Oct 1 |
|---|---|---|---|
| $C_0$ | TCI state $ID_{U,0}$ | | Oct 2 |
| $S_0$ | TCI state $ID_{D,0}$ | | Oct 3 |

31-00    31-05    31-10

31-15
31-20
31-21

31-25    . . .

| $C_{N-1}$ | TCI state $ID_{U,N-1}$ | Oct M-1 (Optional) |
|---|---|---|
| $S_{N-1}$ | TCI state $ID_{D,N-1}$ | Oct M (Optional) |

# FIG. 32

32-00

PDCCH
32-01

PDSCH
32-05

PUCCH
32-10

BAT
32-15

32-25    32-30

32-20

By using DCI format 1_1, 1_2 with DL assignment

32-50

PDCCH
32-55

PUCCH
32-60

BAT
32-65

32-75    32-80

32-70

By using DCI format 1_1, 1_2 without DL assignment

# FIG. 33

| | | |
|---|---|---|
| S | Serving Cell ID | BWP ID | Oct 1 |
| $C_0$ | TCI state $ID_{0,0}$ | | Oct 2 |
| R | TCI state $ID_{1,0}$ | | Oct 3 (Optional) |

33-00    33-05    33-10

33-15
33-20

33-25        . . .

| | | |
|---|---|---|
| $C_N$ | TCI state $ID_{0,N}$ | Oct M-1 (Optional) |
| R | TCI state $ID_{1,N}$ | Oct M (Optional) |

# FIG. 34

| S | Serving Cell ID | BWP ID | | Oct 1 |
|---|---|---|---|---|
| $C_0$ | | TCI state $ID_{D,0,0}$ | | Oct 2 |
| TCI state $ID_{D,0,0}$ | TCI state $ID_{U,0,0}$ | | | Oct 3 |
| R | TCI state $ID_{D,1,0}$ | | | Oct 4 (Optional) |
| R | TCI state $ID_{U,1,0}$ | | | Oct 5 (Optional) |

34-00  34-05  34-10  34-15  34-20  34-21  34-25  34-30  34-35

. . .

| $C_N$ | TCI state $ID_{D,0,N}$ | | Oct M-3 |
|---|---|---|---|
| TCI state $ID_{D,0,N}$ | TCI state $ID_{U,0,N}$ | | Oct M-2 |
| R | TCI state $ID_{D,1,N}$ | | Oct M-1 (Optional) |
| R | TCI state $ID_{U,1,N}$ | | Oct M (Optional) |

# FIG. 35

| S | Serving Cell ID | BWP ID | Oct 1 |
| $C_{U,0}$ | TCI state $ID_{U,0,0}$ | | Oct 2 |
| $C_{D,0}$ | TCI state $ID_{U,1,0}$ | | Oct 3 |
| R | TCI state $ID_{D,0,0}$ | | Oct 4 (Optional) |
| R | TCI state $ID_{D,1,0}$ | | Oct 5 (Optional) |

. . .

| $C_{U,N}$ | TCI state $ID_{U,0,N}$ | Oct M-3 |
| $C_{D,N}$ | TCI state $ID_{U,1,N}$ | Oct M-2 |
| R | TCI state $ID_{D,0,N}$ | Oct M-1 (Optional) |
| R | TCI state $ID_{D,1,N}$ | Oct M (Optional) |

FIG. 36

EP 4 654 718 A1

# FIG. 37

37-00

In NZP CSI-RS Resource set

CMR pair 1

CMR pair 2

$K_s$ = 7 CMRs in
Resource set

Group 1
$K_1$ = 4
From TRP 1

37-30

Group 2
$K_2$ = 3
From TRP 2

37-50

# FIG. 38

38-00

| | RRC Parameter | Receiving AP CSI-RS using below |
|---|---|---|
| 1st CORESET | follow1stTCI | TCI #1 |
| 2nd CORESET | follow2ndTCI | TCI #2 |
| 3rd CORESET | followbothTCI | TCI #1 and/or TCI #2 |
| 4th CORESET | follownoneTCI | Using legacy method (MAC-CE activation) |

38-50

| | | RRC Parameter | Receiving AP CSI-RS using below | RRC Parameter | Receiving AP CSI-RS using below | RRC Parameter | Receiving AP CSI-RS using below |
|---|---|---|---|---|---|---|---|
| CORESET Group #0 | 1st CORESET / 2nd CORESET | follow1stTCI | TCI #1 | followbothTCI | TCI #1 and/or TCI #2 | | |
| CORESET Group #1 | 3rd CORESET / 4th CORESET | follow2ndTCI | TCI #2 | | | followbothTCI | Using legacy method (MAC-CE activation) |

EP 4 654 718 A1

FIG. 39

3905

UE processor

UE receiver — 3900

UE transmitter — 3910

FIG. 40

4005

Base station processor

Base station receiver 4000

Base station transmitter 4010

## INTERNATIONAL SEARCH REPORT

| International application No. |
| --- |
| **PCT/KR2024/001996** |

**A. CLASSIFICATION OF SUBJECT MATTER**

**H04W 72/21**(2023.01)i; **H04W 72/23**(2023.01)i; **H04B 7/06**(2006.01)i; **H04L 5/00**(2006.01)i; **H04W 24/10**(2009.01)i

According to International Patent Classification (IPC) or to both national classification and IPC

**B. FIELDS SEARCHED**

Minimum documentation searched (classification system followed by classification symbols)

H04W 72/21(2023.01); H04B 7/06(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: aperiodic, CSI-RS, unified TCI state, RRC, dl-OrJoint-TCIstateList, CSI-AperiodicTr
iggerStateList, tci state list, CSI-RS resource set, CSI-RS configuration, DCI, CSI report

**C. DOCUMENTS CONSIDERED TO BE RELEVANT**

| Category* | Citation of document, with indication, where appropriate, of the relevant passages | Relevant to claim No. |
| --- | --- | --- |
| Y | KR 10-2020-0052920 A (TELEFONAKTIEBOLAGET LM ERICSSON (PUBL)) 15 May 2020 (2020-05-15)<br>See paragraphs [0290]-[0343]; and table 6. | 1,5,9,13 |
| A | | 2-4,6-8,10-12,14-15 |
| Y | APPLE INC. Clarification of aperiodic CSI report with dormant BWP. R1-2209557, 3GPP TSG RAN WG1 #110bis-e, e-Meeting. 30 September 2022.<br>See section 2.2. | 1,5,9,13 |
| A | LENOVO. Discussion of unified TCI framework for multi-TRP. R1-2211290, 3GPP TSG RAN WG1#110bis. Toulouse, France. 07 November 2022.<br>See section 2. | 1-15 |
| A | HUAWEI et al. Discussion on unified TCI framework extension for multi-TRP. R1-2210911, 3GPP TSG-RAN WG1 Meeting #111. Toulouse, France. 07 November 2022.<br>See section 2. | 1-15 |

[✓] Further documents are listed in the continuation of Box C.    [✓] See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **17 May 2024** | **17 May 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/001996** |

### C. DOCUMENTS CONSIDERED TO BE RELEVANT

| Category* | Citation of document, with indication, where appropriate, of the relevant passages | Relevant to claim No. |
| --- | --- | --- |
| A | WO 2020-209597 A1 (LG ELECTRONICS INC.) 15 October 2020 (2020-10-15) See paragraphs [0498]-[0546]; and figures 14-15. | 1-15 |

Form PCT/ISA/210 (second sheet) (July 2022)

## INTERNATIONAL SEARCH REPORT
### Information on patent family members

International application No.

**PCT/KR2024/001996**

| Patent document cited in search report | | | Publication date (day/month/year) | Patent family member(s) | | | Publication date (day/month/year) |
|---|---|---|---|---|---|---|---|
| KR | 10-2020-0052920 | A | 15 May 2020 | CN | 111357230 | A | 30 June 2020 |
| | | | | CN | 111357230 | B | 02 June 2023 |
| | | | | EP | 3682582 | A1 | 22 July 2020 |
| | | | | JP | 2020-533896 | A | 19 November 2020 |
| | | | | JP | 7038201 | B2 | 17 March 2022 |
| | | | | KR | 10-2542351 | B1 | 14 June 2023 |
| | | | | US | 11637666 | B2 | 25 April 2023 |
| | | | | US | 2020-0280409 | A1 | 03 September 2020 |
| | | | | US | 2023-0231673 | A1 | 20 July 2023 |
| | | | | WO | 2019-049096 | A1 | 14 March 2019 |
| WO | 2020-209597 | A1 | 15 October 2020 | US | 2022-0166468 | A1 | 26 May 2022 |

Form PCT/ISA/210 (patent family annex) (July 2022)